# EUROPÄISCHE PATENTANMELDUNG

(11) **EP 1 958 509 A1**
(43) Veröffentlichungstag der Anmeldung: **20.08.2008**
(21) Anmeldenummer: 07003390.7
(22) Anmeldetag: 19.02.2007
(51) Int. Cl.: A01P 13/00, A01N 47/36, A01N 43/68, A01N 43/70

(54) **Herbizid-Kombination**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft eine Herbizid-Kombination, enthaltend Komponenten (A) und (B), wobei
(A) ein oder mehrere Herbizide aus der Gruppe der Verbindungen der Formel (I) oder deren Salzen bedeutet, 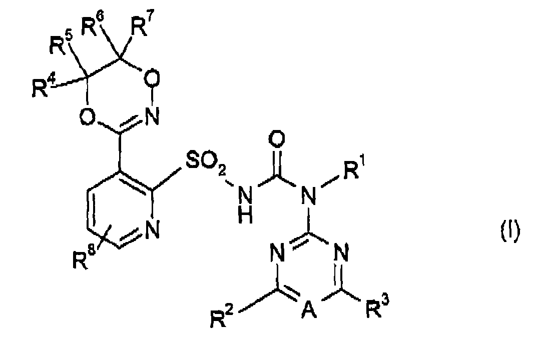 worin R¹, R², R³, R⁴, R⁵, R⁶, R⁷, R⁸ und A wie in Anspruch 1 definiert sind; und
(B) eine oder mehrere Herbizide aus der Gruppe der 2,4-Diamino-s-triazine, welche an einer Aminogruppe mit einer (Hatero)aryl(hetero)alkylgruppe N-substituiert sind

und deren Verwendung zur nicht-selektiven Bekämpfung von unerwünschtem Pflanzenwuchs in Plantagenkulturen, in Forstpflanzungen, an Wegrändern, Plätzen, Industrieanlagen, Flugplätzen oder Eisenbahnanlagen, oder zur sogenannten Bum-Down-Anwendung

## Beschreibung

Die vorliegende Erfindung liegt auf dem technischen Gebiet der Pflanzenschutzmittel, die gegen unerwünschten Pflanzenwuchs, z.B. in Plantagenkulturen, in Forstpflanzungen, an Wegrändern, auf Plätzen und Industrieanlagen, Flugplätzen oder Eisenbahnanlagen, oder zur sogenannten Burn-Down-Anwendung eingesetzt werden können. Im Besonderen betrifft die Erfindung eine Herbizid-Kombination, enthaltend mindestens zwei Herbizide und deren Anwendung zur Bekämpfung unerwünschten Pflanzenwuchses.

Aus der Druckschrift US 5,476,936 sind bestimmte herbizid wirksame Sulfonylhamstoffe bekannt. Die Wirksamkeit dieser Herbizide gegen Schadpflanzen liegt auf einem hohen Niveau, hängt jedoch im allgemeinen von der Aufwandmenge, der Jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt. Aus WO 2005/092104 ist auch bereits die nicht-selektive Verwendung einiger der in US 5,476,963 beschriebenenen herbizid wirksamen N-Azinyl-N'-(Het)arylsulfonylharnstoffe bekannt.

Die Aufgabe der vorliegenden Erfindung bestand darin, ein verbessertes Pflanzenschutzmittel zur Verfügung zu stellen.

Verbindungen aus der Gruppe der 2,4-Diamino-s-triazine, welche an einer Aminogruppe mit einer (Hetero)aryl(hetero)alkylgruppe N-substituiert sind, sind bereits als herbizide Wirkstoffe für die Bekämpfung von unerwünschtem Pflanzenwachstum, beispielsweise von Schadpflanzen in Pflanzenkulturen, Plantagen oder auf Nichtkulturland bekannt; siehe beispielsweise WO-A-97/08156, WO-A-97/31904, WO-A-98/15536, WO-A-98/15537, WO-A-98/15539 sowie auch WO-A-99/65882, WO-A-00/16627, WO-A-01/43546 WO-A-03/070710, WO-A-04/069814 und die in den Druckschriften zitierte Literatur.

Überraschenderweise wurde nun gefunden, daß Herbizide aus der Gruppe der in der Druckschrift US 5,476,936 beschriebenen N-Azinyl-N'-(Het)arylsulfonylharnstoffe oder deren Salze in Kombination mit sich von diesen strukturell vollständig unterscheidenden Herbiziden aus der Gruppe der 2,4-Diamino-s-triazine, welche an einer Aminogruppe mit einer (Hetero)aryl(hetero)alkylgruppe N-substituiert sind, in besonders günstiger Weise zusammenwirken, z.B. wenn sie zur Bekämpfung von unerwünschtem Pflanzenwuchs in Plantagenkulturen, in Forstpflanzungen, an Wegrändern, auf Plätzen und Industrieanlagen, Flugplätzen oder Eisenbahnanlagen, oder zur sogenannten Burn-Down-Anwendung eingesetzt werden.

Gegenstand der vorliegenden Erfindung ist somit eine Herbizid-Kombination enthaltend Herbizide (A) und (B), wobei
(A) ein oder mehrere Herbizide aus der Gruppe Verbindungen der Formel (I) oder deren Salze bedeutet, 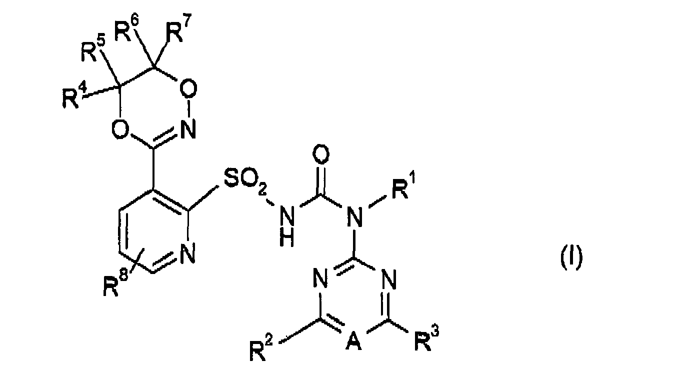 worin
   - A: für Stickstoff oder eine CR¹¹-Gruppierung steht,
   wobei
   R¹¹ für Wasserstoff, Alkyl, Halogen und Haloalkyl steht,
   - R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
   - R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
   - R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
   - R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
   - R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
   wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können; und
(B) ein oder mehrere Herbizide aus der Gruppe der 2,4-Diamino-s-triazine, welche an einer Aminogruppe mit einer (Hetero)aryl(hetero)alkylgruppe N-substituiert sind

Als Herbizid (A) bevorzugt sind Verbindungen der Formel (I) und deren Salze,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴- R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Als Herbizid (A) ebenfalls bevorzugt sind Salze, die man aus Verbindungen der Formel (I) und Basen, wie z.B. Natrium-, Kalium- oder Calcium-hydroxid, -hydrid, - amid und -carbonat, Natrium- oder Kalium-C₁-C₄-alkanotaten, Ammoniak, C₁-C₄-Alkylaminen, Di-(C₁-C₄-alkyl)-aminen oder Tri-(C₁-C₄-alkyl)-aminen, nach üblichen Verfahren erhält.

Als Herbizid (A) besonders bevorzugt sind Verbindungen der Formel (I) und deren Salze,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise Wasserstoff.

Als Herbizid (A) besonders bevorzugt sind Verbindungen der Formel (I) und deren Salze, insbesondere deren Alkalimetallsalze,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Als Herbizid (A) ebenfalls besonders bevorzugt sind Verbindungen der Formel (I) und deren Salze, insbesondere deren Alkalimetallsalze,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴-R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Aus den Verbindungen der allgemeinen Formel (I) können gegebenenfalls Salze hergestellt werden, z.B. Metallsalze wie Alkali (z.B. Na, K) -Salze oder Erdalkali (z.B. Mg, Ca) -Salze oder Ammonium- oder Aminsalze. Man erhält solche Salze in einfacher Weise nach üblichen Salzbildungsmethoden, beispielsweise durch Lösen oder Dispergieren einer Verbindung der Formel (I) in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Beispiele für als Herbizid (A) verwendete Verbindungen sind in der nachfolgenden Tabelle A genannt, worin folgende Abkürzungen verwendet werden:
Smp.: **=** Schmelzpunkt
Zers. oder Z. = unter Zersetzung
⁽⁺⁾ = Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle A: Beispiele für Verbindungen der Formel (I) mit R⁴ = R⁵ = R⁶= R⁷ = R⁸ = H:**

| Bsp.- Nr. | R¹ | A | R² | R³ | Smp. (° C) |
|---|---|---|---|---|---|
| A-1 | H | CH | OCH₃ | OC₂H₅ | 154 |
| A-2 | H | CH | OCH₃ | CH₃ | |
| A-3 | H | CH | OHC₃ | CH₃ | 180-181⁽⁺⁾ |
| A-4 | H | CH | OCH₃ | C₂H₅ | |
| A-5 | H | CH | OCH₃ | CF₃ | |
| A-6 | H | CH | OCH₃ | OCF₂H | |
| A-7 | H | CH | OCH₃ | NHCH₃ | |
| A-8 | H | CH | OCH₃ | N(CH₃)₂ | 199.5 |
| A-9 | H | CH | OCH₃ | Cl | 110-111 |
| A-10 | H | CH | OCH₃ | Cl | 175-178⁽⁺⁾ |
| A-11 | H | CH | OCH₃ | OCH₃ | 167-168 |
| A-12 | H | CH | OCH₃ | OCH₃ | 171-172⁽⁺⁾ |
| A-13 | H | CH | OC₂H₅ | OC₂H₅ | |
| A-14 | H | CH | OC₂H₅ | OC₂H₅ | 152-154⁽⁺⁾ |
| A-15 | H | CH | OC₂H₅ | CH₃ | |
| A-16 | H | CH | OC₂H₅ | C₂H₅ | |
| A-17 | H | CH | OC₂H₅ | CF₃ | |
| A-18 | H | CH | OC₂H₅ | OCF₂H | |
| A-19 | H | CH | OC₂H₅ | NHCH₃ | |
| A-20 | H | CH | OC₂H₅ | N(CH₃)₂ | |
| A-21 | H | CH | OC₂H₅ | Cl | 158-159 |
| A-22 | H | CH | OC₂H₅ | Cl | 213⁽⁺⁾ |
| A-23 | H | CH | CH₃ | CH₃ | 153 |
| A-24 | H | CH | CH₃ | C₂H₅ | |
| A-25 | H | CH | CH₃ | CF₃ | |
| A-26 | H | CH | CH₃ | OCF₂H | |
| A-27 | H | CH | CH₃ | NHCH₃ | |
| A-28 | H | CH | CH₃ | N(CH₃)₂ | |
| A-29 | H | CH | CH₃ | Cl | 108-109 |
| A-30 | H | CH | CH₃ | Cl | >300⁽⁺⁾ |
| A-31 | H | CH | C₂H₅ | C₂H₅ | |
| A-32 | H | CH | C₂H₅ | CF₃ | |
| A-33 | H | CH | C₂H₅ | OCF₂H | |
| A-34 | H | CH | C₂H₅ | NHCH₃ | |
| A-35 | H | CH | C₂H₅ | Cl | |
| A-36 | H | CH | CF₃ | CF₃ | |
| A-37 | H | CH | CF₃ | OCF₂H | |
| A-38 | H | CH | CF₃ | NHCH₃ | |
| A-39 | H | CH | CF₃ | N(CH₃)₂ | |
| A-40 | H | CH | CF₃ | Cl | |
| A-41 | H | CH | OCF₂H | OCF₂H | |
| A-42 | H | CH | OCF₂H | NHCH₃ | |
| A-43 | H | CH | OCF₂H | N(CH₃)₂ | |
| A-44 | H | CH | OCF₂H | Cl | |
| A-45 | H | CH | NHCH₃ | NHCH₃ | |
| A-46 | H | CH | NHCH₃ | N(CH₃)₂ | |
| A-47 | H | CH | NHCH₃ | Cl | |
| A-48 | H | CH | N(CH₃)₂ | N(CH₃)₂ | |
| A-49 | H | CH | N(CH₃)₂ | Cl | |
| A-50 | H | CH | Cl | Cl | |
| A-51 | H | N | OCH₃ | OCH₃ | 255 |
| A-52 | H | N | OCH₃ | OCH₃ | 159-162⁽⁺⁾ |
| A-53 | H | N | OCH₃ | OC₂H₅ | |
| A-54 | H | N | OCH₃ | CH₃ | |
| A-55 | H | N | OCH₃ | C₂H₅ | |
| A-56 | H | N | OCH₃ | CF₃ | |
| A-57 | H | N | OCH₃ | OCF₂H | |
| A-58 | H | N | OCH₃ | NHCH₃ | |
| A-59 | H | N | OCH₃ | N(CH₃)₂ | |
| A-60 | H | N | OCH₃ | N(CH₃)₂ | 156⁽⁺⁾ |
| A-61 | H | N | OCH₃ | Cl | |
| A-62 | H | N | OC₂H₅ | OC₂H₅ | |
| A-63 | H | N | OC₂H₅ | CH₃ | |
| A-64 | H | N | OC₂H₅ | C₂H₅ | |
| A-65 | H | N | OC₂H₅ | CF₃ | |
| A-66 | H | N | OC₂H₅ | OCF₂H | |
| A-67 | H | N | OC₂H₅ | NHCH₃ | |
| A-68 | H | N | OC₂H₅ | N(CH₃)₂ | |
| A-69 | H | N | OC₂H₅ | Cl | |
| A-70 | H | N | OC₂H₅ | Cl | 213⁽⁺⁾ |
| A-71 | H | N | CH₃ | CH₃ | |
| A-72 | H | N | CH₃ | C₂H₅ | |
| A-73 | H | N | CH₃ | CF₃ | |
| A-74 | H | N | CH₃ | OCF₂H | |
| A-75 | H | N | CH₃ | NHCH₃ | |
| A-76 | H | N | CH₃ | N(CH₃)₂ | |
| A-77 | H | N | CH₃ | Cl | |
| A-78 | H | N | C₂H₅ | C₂H₅ | |
| A-79 | H | N | C₂H₅ | CF₃ | |
| A-80 | H | N | C₂H₅ | OCF₂H | |
| A-81 | H | N | C₂H₅ | NHCH₃ | |
| A-82 | H | N | C₂H₅ | Cl | |
| A-83 | H | N | CF₃ | CF₃ | |
| A-84 | H | N | CF₃ | OCF₂H | |
| A-85 | H | N | CF₃ | NHCH₃ | |
| A-86 | H | N | CF₃ | N(CH₃)₂ | |
| A-87 | H | N | CF₃ | Cl | |
| A-88 | H | N | OCF₂H | OCF₂H | |
| A-89 | H | N | OCF₂H | NHCH₃ | |
| A-90 | H | N | OCF₂H | N(CH₃)₂ | |
| A-91 | H | N | OCF₂H | Cl | |
| A-92 | H | N | NHCH₃ | NHCH₃ | |
| A-93 | H | N | NHCH₃ | N(CH₃)₂ | |
| A-94 | H | N | NHCH₃ | Cl | |
| A-95 | H | N | N(CH₃)₂ | N(CH₃)₂ | |
| A-96 | H | N | N(CH₃)₂ | Cl | |
| A-97 | H | N | Cl | Cl | |
| A-98 | CH₃ | N | OCH₃ | OCH₃ | |
| A-99 | CH₃ | N | OCH₃ | OC₂H₅ | |
| A-100 | CH₃ | N | OCH₃ | CH₃ | |
| A-101 | CH₃ | N | OCH₃ | C₂H₅ | |
| A-102 | CH₃ | N | OCH₃ | CF₃ | |
| A-103 | CH₃ | N | OCH₃ | OCF₂H | |
| A-104 | CH₃ | N | OCH₃ | NHCH₃ | |
| A-105 | CH₃ | N | OCH₃ | N(CH₃)₂ | |
| A-106 | CH₃ | N | OCH₃ | Cl | |
| A-107 | CH₃ | N | OC₂H₅ | OC₂H₅ | |
| A-108 | CH₃ | N | OC₂H₅ | CH₃ | |
| A-109 | CH₃ | N | OC₂H₅ | C₂H₅ | |
| A-110 | CH₃ | N | OC₂H₅ | CF₃ | |
| A-111 | CH₃ | N | OC₂H₅ | OCF₂H | |
| A-112 | CH₃ | N | OC₂H₅ | NHCH₃ | |
| A-113 | CH₃ | N | OC₂H₅ | N(CH₃)₂ | |
| A-114 | CH₃ | N | OC₂H₅ | Cl | |
| A-115 | CH₃ | N | CH₃ | CH₃ | |
| A-116 | CH₃ | N | CH₃ | C₂H₅ | |
| A-117 | CH₃ | N | CH₃ | CF₃ | |
| A-118 | CH₃ | N | CH₃ | OCF₂H | |
| A-119 | CH₃ | N | CH₃ | NHCH₃ | |
| A-120 | CH₃ | N | CH₃ | N(CH₃)₂ | |
| A-121 | CH₃ | N | CH₃ | Cl | |
| A-122 | CH₃ | N | C₂H₅ | C₂H₅ | |
| A-123 | CH₃ | N | C₂H₅ | CF₃ | |
| A-124 | CH₃ | N | C₂H₅ | OCF₂H | |
| A-125 | CH₃ | N | C₂H₅ | NHCH₃ | |
| A-126 | CH₃ | N | C₂H₅ | Cl | |
| A-127 | CH₃ | N | CF₃ | CF₃ | |
| A-128 | CH₃ | N | CF₃ | OCF₂H | |
| A-129 | CH₃ | N | CF₃ | NHCH₃ | |
| A-130 | CH₃ | N | CF₃ | N(CH₃)₂ | |
| A-131 | CH₃ | N | CF₃ | Cl | |
| A-132 | CH₃ | N | OCF₂H | OCF₂H | |
| A-133 | CH₃ | N | OCF₂H | NHCH₃ | |
| A-134 | CH₃ | N | OCF₂H | N(CH₃)₂ | |
| A-135 | CH₃ | N | OCF₂H | Cl | |
| A-136 | CH₃ | N | NHCH₃ | NHCH₃ | |
| A-137 | CH₃ | N | NHCH₃ | N(CH₃)₂ | |
| A-138 | CH₃ | N | NHCH₃ | Cl | |
| A-139 | CH₃ | N | N(CH₃)₂ | N(CH₃)₂ | |
| A-140 | CH₃ | N | N(CH₃)₂ | Cl | |
| A-141 | CH₃ | N | Cl | Cl | |
| A-142 | H | N | N(CH₃)₂ | OCH₂CF₃ | 158 |
| A-143 | H | CH | Cl | OCH₂CF₃ | 204-205 |
| A-144 | H | CH | Cl | OCH₂CF₃ | |
| A-145 | H | CH | Cl | OCH₂CF₃ | 207⁽⁺⁾ |

Geeignete Verbindungen der Gruppe (B), d.h. der 2,4-Diamino-s-triazine, sind die aus den bereits zuvor zitierten Patentveröffentlichungen bekannten Wirkstoffe, insbesondere 2,4-Diamino-6-(halo)(cyclo)alkyl-s-triazinverbindungen, welche an einer Aminogruppe mit Arylalkyl-, Heteroarylalkyl-, Aryloxyalkyl-, Heteroaryloxyalkyl-, Arylalkoxyalkyl-, Heteroarylalkoxyalkyl-Resten oder bicyclischen Resten, vorzugsweise dabei bicyclischen Resten, worin der der Bindungsstelle ferner stehende Cyclus aromatisch oder heteroaromatisch ist, substituiert sind.

Bevorzugte Verbindungen der Gruppe (B) sind ein oder mehrere 2,4-Diamino-s-triazine bestehend aus Verbindungen mit den nachstehend genannten Formeln (II), (III), (IV) und (V), oder deren Salze, d.h.
1. Verbindungen der Formel (II) oder deren Salze, 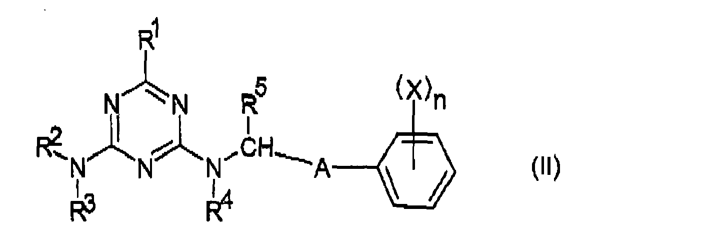 worin
   - R¹: (C₁-C₆)Alkyl,
   das unsubstituiert oder durch einen oder mehrere Reste aus der Gruppe Halogen, Cyano, Nitro, Thiocyanato, (C₁-C₄)Alkoxy, (C₁-C₄)Alkylthio, (C₁-C₄)Alkylsulfinyl, (C₁-C₄)Alkylsulfonyl, (C₂-C₄)Alkenyl, (C₂-C₄)Alkinyl, Phenyl, das unsubstituiert oder substituiert ist, und Heterocyclyl mit 3 bis 6 Ringatomen und 1 bis 3 Heteroringatomen aus der Gruppe N, O und S, wobei der Ring unsubstituiert oder substituiert ist, substituiert ist,
   - R² und R³: jeweils unabhängig voneinander Wasserstoff, Amino oder Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
   R² und R³ gemeinsam mit dem Stickstoffatom der Gruppe NR²R³ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
   - R⁴: Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
   - R⁵: Wasserstoff, Halogen, Nitro, Cyano, Thiocyanato oder einen Rest der Formel -B¹-Y¹, wobei B¹ und Y¹ wie unten definiert sind,
   - A: einen Alkylenrest mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiacyanato und einen Rest der Formel -B²-Y² substituiert ist,
   - (X)ₙ: n Substituenten X und dabei X jeweils unabhängig voneinander Halogen, (C₁-C₆)Alkyl, (C₂-C₆)Alkenyl, (C₂-C₆)Alkinyl, (C₁-C₆)Alkoxy, (C₂-C₆)Alkenyloxy, (C₂-C₆)Alkinyloxy, [(C₁-C₄)Alkyl]-carbonyl, [(C₁-C₄)Alkoxy]-carbonyl oder [(C₁-C₄)Alkylthio]-carbonyl, wobei die kohlenwasserstoffhaltigen Teile in den letztgenannten 9 Resten unsubstituiert oder substituiert sind, oder einen Rest der Formel -B°-R°, wobei B° wie unten definiert und R° einen aromatischen, gesättigten oder teilgesättigten carbocyclischen oder heterocyclischen Rest bedeutet, wobei der cyclische Rest substituiert oder unsubstituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
   - n: 0, 1, 2, 3, 4 oder 5,
   - B⁰, B¹, B²: jeweils unabhängig voneinander eine direkte Bindung oder eine divalente Gruppe der Formel -O-, -S(O)ₚ-, -S(O)ₚ-O-, -O-S(O)ₚ-, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
   - Y¹, Y²: jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N, O und S, wobei jeder der drei letztgenannten Reste unsubstituiert oder substituiert ist,
   bedeuten;
2. Verbindungen der Formel (III) oder deren Salze, 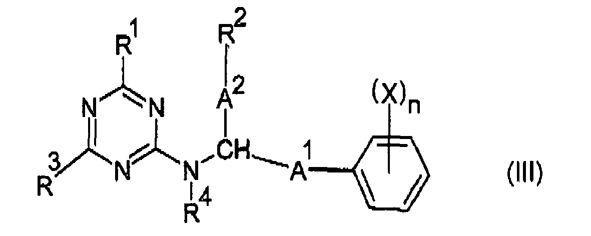 worin
   - R¹: Aryl, das unsubstituiert oder substituiert ist, oder (C₃-C₉)Cycloalkyl, das unsubstituiert oder substituiert ist, oder Heterocyclyl, das substituiert oder unsubstituiert ist, oder
   (C₁-C₆)Alkyl, (C₂-C₆)Alkenyl oder (C₂-C₆)Alkinyl,
   wobei jeder der letztgenannten 3 Reste unsubstituiert oder durch einen oder mehrere Reste aus der Gruppe Halogen, Hydroxy, Cyano, Nitro, Thiocyanato, (C₁-C₄)Alkoxy, (C₁-C₄)Haloalkoxy, (C₂-C₄)Alkenyloxy, (C₂-C₄)Haloalkenyloxy, (C₁-C₄)Alkylthio, (C₁-C₄)Alkylsulfinyl, (C₁-C₄)Alkylsulfonyl, (C₁-C₄)Haloalkylsulfinyl, (C₁-C₄)Haloalkylsulfonyl und (C₃-C₉)Cycloalkyl, das unsubstituiert oder substituiert ist, und Phenyl, das unsubstituiert oder substituiert Ist, und Heterocyclyl, das unsubstituiert oder substituiert ist, und Reste der Formeln R'-C(=Z')-, R'-C(=Z')-Z-, R'-Z-C(=Z')-, R'R"N-C(=Z')-. R'-Z-C(=Z')-O-, R'R"N-C(=Z')-Z-, R'-C(=Z')-NR"-und R'R'N-C(=Z')-NR"', worin R', R" und R"', jeweils unabhängig voneinander (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, bedeuten und worin Z und Z' unabhängig voneinander jeweils ein Sauerstoff- oder Schwefelatom sind, substituiert ist,
   - R²: (C₃-C₉)Cycloalkyl, das unsubstituiert oder substituiert ist, (C₄-C₉)Cycloalkenyl, das unsubstituiert oder substituiert ist, Heterocyclyl, das unsubstituiert oder substituiert ist, oder Phenyl, das unsubstituiert oder substituiert ist, oder
   - R³: einen Rest der Formel -N(B¹-D¹)(B²-D²) oder-NR'-N(B¹-D¹)(B²-D²), worin jeweils B¹, B², D¹ und D² wie unten definiert sind und R' Wasserstoff, (C₁-C₆)Alkyl oder [(C₁-C₄)Alkyl]-carbonyl bedeutet,
   - R⁴: einen Rest der Formel -B³-D³, wobei B³ und D³ wie unten definiert sind,
   - A¹: geradkettiges Alkylen mit 1 bis 5 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁴-D⁴ substituiert ist, wobei B⁴ und D⁴ wie unten definiert sind,
   - A²: eine direkte Bindung oder geradkettiges Alkylen mit 1 bis 4 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁵-D⁵ substituiert ist, oder einen divalenten Rest der Formel VI¹ VI², VI³, VI⁴ oder VI⁵,

   -CR⁶R⁷-W*-CR⁸R⁹- (VI¹)

   -CR¹⁰R¹¹-W*-CR¹²R¹³-CR¹⁴R¹⁶- (VI²)

   -CR¹⁶R¹⁷-CR¹⁸R¹⁹-W*-CR²⁰R²¹- (VI³)

   -CR²²R²³-CR²⁴R²⁵-W*- (VI⁴)

   -CR²⁶R²⁷-W*- (VI⁵)

   wobei jeder der Reste R⁶ bis R²⁷ jeweils unabhängig voneinander Wasserstoff, Halogen, Nitro, Cyano, Thiocyanato oder einen Rest der Formel -B⁶-D⁶ ist,
   W^{*} jeweils ein Sauerstoffatom, ein Schwefelatom oder eine Gruppe der Formel N(B⁷-D⁷) ist und
   - B⁵, B⁶, B⁷, D⁵, D⁶ und D⁷: wie unten definiert sind,
   - B¹, B², B³ und B⁷: jeweils unabhängig voneinander eine direkte Bindung oder eine divalente Gruppe der Formeln -C(=Z*)-, -C(=Z*)-Z**-, -C(=Z*)-NH- oder -C(=Z*)-NR*-, wobei Z* = ein Sauerstoff- oder Schwefelatom, Z** = ein Sauerstoff- oder Schwefelatom und R* = (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist,
   - B⁴, B⁵ und B⁶: jeweils unabhängig voneinander eine direkte Bindung oder eine divalente Gruppe der Formeln -O-, -S(O)ₚ-, -S(O)ₚ-O-, -O -S(O)ₚ-, -CO-, -O-CO-, -CO-O-, -S-CO-, -CO-S-, -S-CS-, -CS-S-, -O-CO-O-, -NR^{o} -, -O-NR^{o}-, -NR^{o}-O-, -NR^{o}-CO-, CO-NR^{o}-, -O-CO-NR^{o}- oder -NR^{o}-CO-O-, wobei p die ganze Zahl 0, 1 oder 2 ist und R^{o} Wasserstoff, (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, bedeutet,
   - D¹, D², D³, D⁴, D⁵, D⁶ und D⁷: jeweils unabhängig voneinander Wasserstoff, (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, oder jeweils zwei Reste D⁵ von an einem C-Atom gebundenen zwei Gruppen -B⁵-D⁵ miteinander verbunden sind und eine Alkylengruppe mit 2 bis 4 C-Atomen ergeben, die unsubstituiert oder durch einen oder mehrere Reste aus der Gruppe (C₁-C₄)alkyl und (C₁-C₄)alkoxy substituiert ist,
   - (X)ₙ: n Substituenten X und dabei X jeweils unabhängig voneinander Halogen, Hydroxy, Amino, Nitro, Formyl, Carboxy, Cyano, Thiocyanato, Aminocarbonyl oder (C₁-C₆)Alkyl, (C₁-C₆)Alkoxy, (C₁-C₆)Alkylthio, Mono(C₁-C₆)alkylamino, Di(C₁-C₄)alkylamino, (C₂-C₆)Alkenyl, (C₂-C₆)Alkinyl, ((C₁-C₆)Alkyl]carbonyl, [(C₁-C₆)Alkoxy]carbonyl, Mono(C₁-C₆)alkylamino-carbonyl Di(C₁-C₄)alkylamirio-carbonyl, N-(C₁-C₆)Alkanoyl-amino oder N-(C₁-C₄)Alkanoyl-N-(C₁-C₄)alkyl-amlno, wobei jeder der letztgenannten 13 Reste unsubstituiert oder substituiert ist, vorzugsweise unsubstituiert oder durch einen oder mehrere Reste aus der Gruppe Halogen, Hydroxy, Amino, Nitro, Formyl, Carboxy, Cyano, Thiocyanato, (C₁-C₄)Alkoxy, (C₁-C₄)Haloalkoxy, (C₁-C₄)Alkylthio, (C₁-C₄)Haloalkylthio, Mono(C₁-C₄)alkylamino, Di(C₁-C₄)alkylamino, (C₃-C₉)Cycloalkyl, (C₃-C₉)Cycloalkyl-amino, [(C₁-C₄)Alkyl]carbonyl, [(C₁-C₄)Alkoxy]carbonyl, Aminocarbonyl, Mono(C₁-C₄)alkylamino-carbonyl, Di(C₁-C₄)alkylaminocarbonyl, Phenyl, Phenoxy, Phenylthio, Phenylcarbonyl, Heterocyclyl, Heterocyclyloxy, Heterocyclylthio und Heterocyclylamino, wobei jeder der letztgenannten 8 Reste unsubstituiert Ist oder einen oder mehrere Substituenten aus der Gruppe Halogen, Nitro, Cyano, (C₁-C₄)Alkyl, (C₁-C₄)Alkoxy, (C₁-C₄)Alkylthio, (C₁-C₄)Haloalkyl, (C₁-C₄)Haloalkoxy, Formyl, (C₁-C₄)Alkyl-carbony und (C₁-C₄)Alkoxy-carbonyl aufweist, substituiert ist, oder (C₃-C₉)Cycloalkyl, (C₃-C₉)Cycloalkoxy, (C₃-C₉)Cycloalkylamino, Phenyl, Phenoxy, Phenylthio, Phenylcarbonyl, Heterocyclyl, Heterocyclyloxy, Heterocyclylthio oder Heterocyclylamino, wobei jeder der letztgenannten 11 Reste unsubstituiert oder substituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
   - n: 0, 1, 3, 4 oder 5 und
   "Heterocyclyl" in den vorstehend genannten Resten unabhängig voneinander jeweils einen heterocyclischen Rest mit 3 bis 7 Ringatomen und 1 bis 3 Heteroatomen aus der Gruppe N, O und S
   bedeuten, wobei vorzugsweise
   a) die Gesamtsumme der C-Atome in den Resten A¹ und A²-R² mindestens 6 C-Atome beträgt oder
   b) die Gesamtsumme der C-Atome in den Resten A¹ und A²-R² 5 C-Atome beträgt und A¹ = eine Gruppe der Formel -CH₂- oder -CH₂CH₂- bedeutet sowie R¹ = (C₁-C₄)Alkyl, (C₁-C₄)Haloalkyl, (C₂-C₆)Haloalkenyl oder (C₃-C₉)Cycloalkyl, das unsubstituiert oder substituiert ist, bedeutet;
3. Verbindungen der Formel (IV) oder deren Salze, 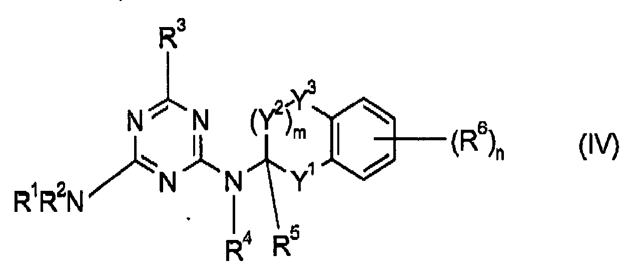 worin
   - R¹ und R²: jeweils unabhängig voneinander Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest, Heterocyclylthiorest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
   - R¹ und R²: gemeinsam mit dem Stickstoffatom der Gruppe NR¹R² einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
   - R³: Halogen, Cyano, Thiocyanato, Nitro oder einen Rest der Formel -Z¹-R⁷,
   - R⁴: Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
   - R⁵: Halogen, Cyano, Thiocyanato, Nitro oder einen Rest der Formel -Z²-R⁸,
   - R⁶,: wenn n=1, oder die Reste R⁶ jeweils unabhängig voneinander, wenn n größer als 1 ist, Halogen, Cyano, Thiocyanato, Nitro oder eine Gruppe der Formel -Z³-R⁹,
   - R⁷, R⁸, R⁹: jeweils unabhängig voneinander
   - Wasserstoff oder
   - einen acyclischen Kohlenwasserstoffrest, wobei in der Kette Kohlenstoffatome durch Heteroatome aus der Gruppe N, O und S substituiert sein können, oder
   - einen cyclischen Kohlenwasserstoffrest oder
   - einen heterocyclischen Rest,
   wobei jeder der letztgenannten 3 Reste unsubstituiert oder substituiert ist,
   - Z¹, Z², Z³: jeweils unabhängig voneinander
   - eine direkte Bindung oder
   - eine divalente Gruppe der Formel -O-, -S(O)ₚ-, -S(O)ₚ-O-, -O-S(O)ₚ-, -CO-, -CS-, -S-CO-, -CO-S-, -O-CS-, -CS-O-, -S-CS-, -CS-S-, -OCO-, -CO-O-, -NR'-, -O-NR'-, -NR'-O-, -NR'-CO- oder -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
   - Y¹,Y², Y³ und weitere Gruppen Y²,: wenn m 2, 3 oder 4 ist, jeweils unabhängig voneinander
   - eine divalente Gruppe der Formel CR^{a}R^{b}, wobei R^{a} und R^{b} gleich oder verschieden sind und jeweils einen Rest aus der Gruppe der für R⁷ bis R⁹ möglichen Reste bedeuten, oder
   - eine divalente Gruppe der Formel -O-, -CO-, -C(=NR*)-, S(O)_{q}-, -NR'-oder -N(O)-, wobei q = 0, 1 oder 2 ist und R* Wasserstoff oder Alkyl mit 1 bis 4 C-Atomen ist, oder
   - Y¹ oder Y³ eine direkte Bindung,
   wobei zwei Sauerstoffatome der Gruppen Y² und Y³ nicht benachbart sind,
   - m: 1, 2, 3 oder 4,
   - n: 0, 1, 2, 3 oder 4
   bedeuten;
4. Substituierte 2,4-Diamino-1,3,5-triazine der allgemeinen Formel (V), 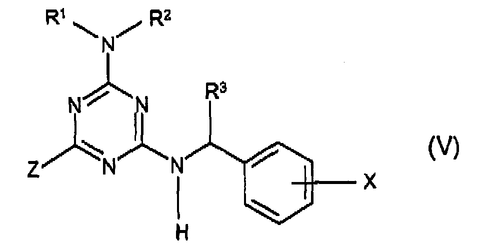 In welcher
   - R¹: für Wasserstoff oder für gegebenenfalls durch Hydroxy, Cyano, Halogen oder C₁-C₄-Alkoxy substituiertes Alkyl mit 1 bis 6 Kohlenstoffatomen steht,
   - R²: für Wasserstoff, für Formyl, für jeweils gegebenenfalls durch Cyano, Halogen oder C₁-C₄-Alkoxy substituiertes Alkyl, Alkylcarbonyl, Alkoxycarbonyl oder Alkylsulfonyl mit jeweils 1 bis 6 Kohlenstoffatomen in den Alkylgruppen, oder für jeweils gegebenenfalls durch Cyano, Halogen-C₁-C₄-alkyl, C₁-C₄-Alkoxy, Halogen-C₁-C₄-alkoxy oder C₁-C₄-Alkoxy-carbonyl substituiertes Phenylcarbonyl, Naphthylcarbonyl, Phenylsulfonyl oder Naphthylsulfonyl steht,
   - R³: für gegebenenfalls durch Cyano, Halogen oder C₁-C₄-Alkoxy substituiertes Alkyl mit 1 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht,
   - X: für einen Substituenten aus folgender Gruppe steht: Hydroxy, Cyano, Nitro, Halogen, jeweils gegebenenfalls durch Hydroxy, Cyano oder Halogen substituiertes Alkyl oder Alkoxy mit jeweils 1 bis 6 Kohlenstoffatomen, jeweils gegebenenfalls durch Halogen substituiertes Alkylcarbonyl, Alkoxycarbonyl, Alkylthio, Alkylsulfinyl oder Alkylsulfonyl mit jeweils 1 bis 6 Kohlenstoffatomen in den Alkylgruppen, jeweils gegebenenfalls durch Hydroxy, Cyano, Nitro, Halogen, C₁-C₄-Alkyl, C₁-C₄-Halogenalkyl, C₁-C₄-Alkoxy oder C₁-C₄-Halogenalkoxy substituiertes Phenyl oder Phenoxy, und
   - Z: für Wasserstoff, Hydroxy, Halogen, für jeweils gegebenenfalls durch Hydroxy, Cyano, Nitro, Halogen, C₁-C₄-Alkoxy, C₁-C₄-Alkylcarbonyl, C₁-C₄-Alkoxy-carbonyl, C₁-C₄-Alkyfthio, C₁-C₄-Alkylsulfinyl oder C₁-C₄-Alkylsulfonyl substituiertes Alkyl, Alkoxy, Alkylcarbonyl, Alkoxycarbonyl, Alkylthio, Alkylsulfinyl oder Alkylsulfonyl, mit jeweils 1 bis 6 Kohlenstoffatomen in den Alkylgruppen, für jeweils gegebenenfalls durch Halogen substituiertes Alkenyl oder Alkinyl mit jeweils 2 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht.

Besonders bevorzugte Verbindungen der Gruppe (B) sind die genannten 2,4-Diamino-s-triazine der Formeln (II) bis (V), die in Position 6 am Triazinring mit Resten aus der Gruppe Wasserstoff, (C₁-C₆)-Alkyl, (C₁-C₆)-Haloalkyl, (C₃-C₆)-Cycloalkyl und (C₃-C₆)-Cyoloalkyl-(C₁-C₄)-alkyl, vorzugsweise (C₁-C₄)-Alkyl und (C₁-C₄)-Haloalkyl substituiert sind.

Durch Halogen substituiertes Alkyl (= Haloalkyl) bedeutet dabei Alkyl, das durch ein oder mehrere Halogenatome aus der Gruppe Fluor, Chlor, Brom und lod, vorzugsweise aus der Gruppe Fluor, Chlor und Brom, insbesondere aus der Gruppe Fluor und Chlor substituiert ist.

Weiter bevorzugt sind auch Verbindungen der Formeln (II) bis (V), worin die eine Aminogruppe unsubstituiert ist, d.h. NH₂ bedeutet, und die andere Aminogruppe ein Wasserstoffatom und den (Hetero)aryl(hetero)alkylrest trägt.

Ebenso bevorzugt als Wirkstoffe sind beispielsweise 2,4-Diamino-s-triazine der Formel (IIa) 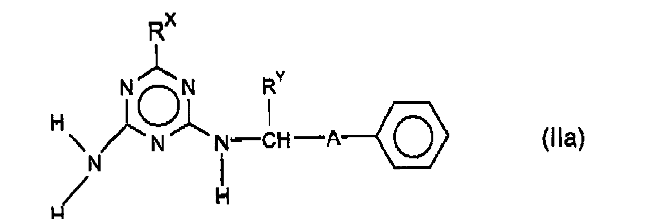 worin
- R^{X}: (C₁-C₄)-Alkyl oder (C₁-C₄)-Haloalkyl;
- R^{Y}: (C₁-C₄)Alkyl, (C₃-C₆)-Cycloalkyl oder (C₃-C₆)-Cycloalkyl-(C₁-C₄)-Alkyl und
- A: -CH₂-, -CH₂CH₂-, -CH₂CH₂-CH₂, -O-, -CH₂-CH₂-O-, -CH₂-CH₂-CH₂-O-.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Bevorzugt sind auch Verbindungen der Formel (IV) mit bicyclischen Resten, wie sie aus WO-A-97131904 oder WO-A-04/069814 bekannt sind, insbesondere wie sie in nachstehender Tabelle B benannt sind:

Bevorzugte Wirkstoffe aus der Gruppe der 2,4-Diamino-s-triazine sind beispielsweise in der folgenden Tabelle B aufgeführt.

**Tabelle B:**

| Nr. | Chemischer Name |
|---|---|
| B-1 | (*RS*)-2-Amino-4-(4-phenyl-1-cyclopropyl-butylamino)-6-(1-fluor-1-methylethyl)-1,3,5-triazin, |
| B-2 | (*R*)-2-Amino-4-(4-phenyl-1-cyclopropyl-butylamino)-6-(1-fluor-1-methylethyl)-1,3,5-triazin, |
| B-3 | 2-Amino-4-[(1*RS*)-phenyl-1-cyclopropyl-butylamino]-6-[(1*RS*)-1-fluorethyl]-1,3,5-triazin, |
| B-4 | 2-Amino-4-[(1*R*)-4-phenyl-1-cyclopropyl-butylamino]-6-[(1*RS*)-1-fluorethyl]-1,3,5-triazin, |
| B-5 | 2-Amino-4-[(1*RS*)-3-phenyl-1-cyclobutyl-propylamino]-6-[(1*RS*)-1-fluorethyl]-1,3,5-triazin, |
| B-6 | 2-Amino-4-[(1*R*)-3-phenyl-1-cyclobutyl-propylaminol-6-[(1*RS*)-1-fluorethyl]-1,3,5-triazin, |
| B-7 | 2-Amino-4-[(1*R*)-3-phenyl-1-cyclobutyl-propylamino]-6-[(1*R*)-1-fluorethyl]-1,3,5-triazin, |
| B-8 | (*RS*)-2-Amino-6-(1-fluor-1-methyl-ethyl)-4-[1-(3,5-dimethylphenoxy)-prop-2-ylamino)-1,3,5-triazin, |
| B-9 | (*R*)-2-Amino-4-(3-phenyl-1-cyclobutyl-propylamino)-6-(1-fluor-1-methylethyl)-1,3,5-triazin, |
| B-10 | 2-Amino-4-[(4*RS*)-chroman-4-ylamino]-6-(1-fluor-1-methylethyl)-1,3,5-triazin, |
| B-11 | 2-Amino-4[(4*R*)-chroman-4-ylamino]-6-(1-fluor-1-methylethyl)-1,3,5-triazin, |
| B-12 | 2-Amino-4-[(4*R*)-chroman-4-ylamino]-6-[(1*RS*)-1-fluor-ethyl]-1,3,5-triazin, |
| B-13 | 2-Amino-4-[(4*R*)-chroman-4-ylamino]-6-[(1*R*)-1-fluor-ethyl]-1,3,5-triazin, |
| B-14 | 2-Amino-4-[(4*R*)-chroman-4-ylamino]-6-[(1*S*)-1-fluor-ethyl]-1,3,5-triazin, |
| B-15 | 2-Amino-4-[(4*RS*)-7,8-dimethylchroman-4-ylamino]-6-(1-fluor-1-methylethyl)-1,3,5-triazin, |
| B-16 | 2-Amino-4-[(4*R*)-7,8-dimethyl-chroman-4-ylamino]-6-(1-fluor-1-methylethyl)-1,3,5-triazin, |
| B-17 | 2-Amino-4-[(1*RS*)-indan-1-ylamino]-6-(1-fluor-1-methylethyl]-1,3,5-triazin, |
| B-18 | 2-Amino-4-[(1*R*)-Indan-1-ylamino]-6-(1-fluor-1-methylethyl]-1,3,5-triazin, |
| B-19 | 2-Amino-4-[(1*RS*)-6-methyl-indan-1-ylamino]-6-(1-methylethyl]-1,3,5-triazin, |
| B-20 | 2-Amino-4-[(1*RS*)-6-methyl-indan-1-ylamino]-6-[(1*RS*)-1-fluor-ethyl]-1,3,5-triazin, |
| B-21 | 2-Amino-4-[(1*R*)-6-methyl-indan-1-ylamino]-6-[(1*RS*)-1-fluor-ethyl]-1,3,5-triazin, |
| B-22 | 2-Amino-4-[(1*R*)-6-methyl-indan-1-ylamino]-6-[(1*R*)-1-fluor-ethyl]-1,3,5-triazin, |
| B-23 | 2-Amino-4-[(1*R*)-6-methyl-indan-1-ylamino]-6-[(1*S*)-1-fluor-ethyl]-1,3,5-triazin, |
| B-24 | 2-Amino-4-[(1*R*)-6-methyl-indan-1-ylamino]-6-(1-methylethyl]-1,3,5-triazin, |
| B-25 | 2-Amino-4-[(1*RS*)-6-fluor-indan-1-ylamino]-6-(1-fluor-1-methylethyl]-1,3,5-triazin, |
| B-26 | 2-Amino-4-[(1*R*)-6-fluor-indan-1-ylamino]-6-(1-fluor-1-methylethyl]-1,3,5-triazin, |
| B-27 | 2-Amlno-4-[(1*RS*,2*RS*)-2-methyl-indan-1-ylamino]-6-(1-fluor-1-methylethyl]-1,3,5-triazin, |
| B-28 | 2-Amino-4-[(1*R*,2*RS*)-2-methyl-indan-1-ylamino]-6-(1-fluor-1-methylethyl]-1,3,5-triazin, |
| B-29 | 2-Amino-4-[(1*R*,2*S*)-2-methyl-indan-1-ylamino]-6-(1-fluor-1-methylethyl]-1,3,5-triazin, |
| B-30 | 2-Amino-4-[(1*R*,2*R*)-2-methyl-indan-1-ylamino]-6-(1-fluor-1-methylethyl]-1,3,5-triazin, |
| B-31 | 2-Amino-4-[(1*RS*,2*RS*)-2,6-dimethyl-indan-1-ylaminol-6-(1-fluor-1-methylethyl]-1,3,5-triazin, |
| B-32 | 2-Amino-4-[(1*R*,2*S*)-2,6-dimethyl-indan-1-ylamino]-6-(1-fluor-1-methylethyl]-1,3,5-triazin, |
| B-33 | 2-Amino-4-[(1*R*,2*R*)-2,6-dimethyl-indan-1-ylamino]-6-(1-fluor-1-methylethyl)-1,3,5-triazin, |
| B-34 | 2-Amino-4-[(1*RS*,2*RS*)-6-fluor-2-methyl-indan-1-ylamino]-6-(1-fluor-1-methylethyl]-1,3,5-triazin, |
| B-35 | 2-Amino-4-[(1*R*,2*S*)-6-fluor-2-methyl-indan-1-ylamino]-6-(1-fluor-1-methylethyl]-1,3,6-triazin, |
| B-36 | 2-Amino-4-[(1*R*,2*R*)-6-fluor-2-methyl-indan-1-ylamino]-6-(1-fluor-1-methylethyl]-1,3,5-triazin, |
| B-37 | 2-Amino-4-[(1*RS*,2*RS*)-6-fluor-2-methyl-indan-1-ylamino]-6-[(1*RS*)-1-fluor-ethyl]-1,3,5-triazin, |
| B-38 | 2-Amino-4-[(1*R*,2*S*)-6-fluor-2-methyl-indan-1-ylamino]-6-[(1*RS*)-1-fluor-ethyl]-1,3,5-triazin, |
| B-39 | 2-Amino-4-[(1*R*,2*R*)-6-fluor-2-methyl-indan-1-ylamino]-6-[(1*RS*)-1-fluorethyl]-1,3,5-triazin, |
| B-40 | 2-Amino-4-[(1*R*,2*S*)-6-fluor-2-methyl-indan-1-ylamino]-6-[(1*R*)-1-fluorethyl]-1,3,5-triazin, |
| B-41 | 2-Amino-4-[(1*R*,2*R*)-6-fluor-2-methyl-indan-1-ylamino]-6-[(1*R*)-1-fluorethyl]-1,3,5-triazin, |
| B-42 | 2-Amino-4-[(1*R*,2*S*)-6-fluor-2-methyl-indan-1-ylamino]-6-[(1S)-1-fluorethyl]-1,3,5-triazin, |
| B-43 | 2-Amino-4-[(1*R*,2*R*)-6-fluor-2-methyl-indan-1-ylamino]-6-[(1*S*)-1-fluorethyl]-1,3,5-triazin, |
| B-44 | 2-Amino-4-[(1*RS*,2*RS*)-2,6-dimethyl-indan-1-ylamino ]-6-[(1*RS*)-1-fluorethyl]-1,3,5-triazin, |
| B-45 | 2-Amino-4-[(1*R*,2*S*)-2,6-dimethyl-indan-1-ylamino]-6-[(1*RS*)-fluorethyl]-1,3,5-triazin, |
| B-46 | 2-Amino-4-[(1*R,*2*R)-*2*,*6-dimethyl-indan-1-ylamino]-6-[(1*RS*)-1-fluorethyl]-1,3,5-triazin, |
| B-47 | 2-Amino-4-[(1*R*,2*S*)-2,6-dimethyl-indan-1-ylamino]-6-[(1*R*)-1-fluor-ethyl]-1,3,5-triazin, |
| B-48 | 2-Amino-4-[(1*R*,2*R*)-2,6-dimethyl-indan-1-ylamino]-6-[(1*R*)-1-fluor-ethyl]-1,3,5-triazin, |
| B-49 | 2-Amino-4-[(1*R*,2*S*)-2,6-dimethyl-indan-1-ylamino]-6-[(1*S*)-1-fluor-ethyl]-1,3,5-triazin, |
| B-50 | 2-Amino-4-[(1*R*,2*R*)-2,6-dimethyl-indan-1-ylamino]-6-[(1S)-1-fluor-ethyl]-1,3,5-triazin, |
| B-51 | 2-Amino-4-[(1*RS*)-4,6-dimethyl-indan-1-ylamlno]-6-(1-fluor-1-methylethyl)-1,3,5-triazin, |
| B-52 | 2-Amino-4-[(1*R*)-4,6-dimethyl-indan-1-ylamino]-6-(1-fluor-1-methylethyl)-1,3,5-triazin, |
| B-53 | 2-Amino-4-[(1*RS*)-4,6-dimethyl-indan-1-ylamino]-6-[(1*RS*)-1-fluorethyl]-1,3,5-triazin, |
| B-54 | 2-Amino-4-[(1*R*)-4,6-dimethyl-)ndan-1-ylamino]-6-[(1*RS*)-1-fluorethyl]-1,3,5-triazin, |
| B-55 | 2-Amino-4-[(1*R*)-4,6-dimethyl-indan-1-ylamino]-6-[(1*R*)-1-fluorethyl]-1,3,5-triazin, |
| B-56 | 2-Amino-4-[(1*R*)-4,6-dimethyl-indan-1-ylamino]-6-[(1*S*)-1-fluor-ethyl]-1,3,5-triazin, |
| B-57 | 2-Amino-4-[(1*RS*)-5,6-dimethyl-indan-1-ylamino]-6-(1-fluor-1-methylethyl)-1,3,5-triazin, |
| B-58 | 2-Amino-4-[(1*R*)-5,6-dimethyl-indan-1-ylamino]-6-(1-fluor-1-methylethyl)-1,3,5-triazin, |
| B-59 | 2-Amino-4-[(1*RS*)-5,6-dimethyl-indan-1-ylamino]-6-[(1*RS*)-1-fluorethyl]-1,3,5-triazin, |
| B-60 | 2-Amino-4-[(1*R*)-5,6-dimethyl-indan-1-ylamino]-6-[(1*RS*)-1-fluorethyl]-1,3,5-triazin, |
| B-61 | 2-Amino-4-[(1*R*)-5,6-dimethyl-indan-1-ylamino]-8-[(1*R*)-1-fluorethyl]-1,3,5-triazin, |
| B-62 | 2-Amino-4-[(1 *R*)-5, 6-dimethyl-indan-1-ylamino]-6-[(1*S*)-1-fluor-ethyl]-1,3,5-triazin, |
| B-63 | 2-Amino-4-[(1*RS*)-indan-1-ylamino]-1,3,5-triazin, |
| B-64 | 2-Amino-4-[(1*R*)-indan-1-ylamino]-1,3,5-triazin, |
| B-65 | 2-Amino-4-[(1*RS*)-6-methylindan-1-ylamino]-1,3,5-triazin, |
| B-66 | 2-Amino-4-[(1*R*)-6-methylindan-1-ylamino]-1,3,5-triazin, |
| B-67 | 2-Amino-4-[(1*RS*)-6-fluorindan-1-ylamino]-1,3,5-triazin, |
| B-68 | 2-Amino-4-[(1*R*)-6-fluorindan-1-ylamino]-1,3,5-triazin, |
| B-69 | 2-Amino-4-[(1*RS*,2*RS*)-2-methyl-indan-1-ylamino]-1,3,6-triazin, |
| B-70 | 2-Amino-4-[(1*RS*,2*RS*)-2,6-dimethyl-indan-1-ylamino]-1,3,5-triazin, |
| B-71 | 2-Amino-4-[(1*RS*)-5,6-dimethylindan-1-ylamino)-1,3,5-triazin, |
| B-72 | 2-Amino-4-[(1*RS*)-4,6-dimethylindan-1-ylamino]-1,3,5-triazin, |
| B-73 | 2-Amino-4-[(1*RS*)-5-fluor-6-methylindan-1-ylamino]-1,3,5-triazin, |
| B-74 | 2-Amino-4-[(1*RS*)-1,2,3,4-tetrahydronaphthalin-1-ylamino]-6-(1-fluor-1-methylethyl)-1,3,5-triazin, |
| B-75 | 2-Amino-4-[(1*RS*)-1,2,3,4-tetrahydronaphthalin-1-ylamino]-6-[(1*RS*)-1-fluorethyl]-1,3,5-triazin, |
| B-76 | 2-Amino-4-[(1*RS*,2*RS*)-2-methy)-1,2,3,4-tetrahydronaphthalin-1-ylamino]-6-(1-fluor-1-methylethyl)-1,3,5-triazin, |
| B-77 | 2-Amino-4-[(1*RS*,2*RS*)-2-methyl-1,2,3,4-tetrahydronaphthalin-1-ylamino]-6-[(1*RS*)-1-fluorethyl]-1,3,5-triazin, |
| B-78 | 2-Amino-4-[(1*RS*,2*RS*)-2,6-dimethyl-1,2,3,4-tetrahydronaphthalin-1-ylamino]-6-(1-fluor-1-methylethyl)-1,3,5-triazin, |
| B-79 | 2-Amino-4-[(1*RS*)-1,2,3,4-tetrahydronaphthalin-1-ylamino]-6-ethyl-1,3,5-triazin, |
| B-80 | 2-Amino+[(1*RS*)-1,2,3,4-tetrahydronaphthalin-1-ylamino]-1,3,5-triazin, |

Aus den Verbindungen der allgemeinen Formeln (I)-(V) können gegebenenfalls Salze hergestellt werden, z.B. Metallsalze wie Alkali (z.B. Na, K) -Salze oder Erdalkali (z.B. Mg, Ca) -Salze oder Ammonium- oder Aminsalze. Man erhält solche Salze in einfacher Weise nach üblichen Salzbildungsmethoden, beispielsweise durch Lösen oder Dispergieren einer Verbindung der Formeln (I)-(V) in einem geeigneten Verdünnungsmittel, wie z.B. Methylenchlorid. Aceton, tert.-Butylmethylether oder Toluol, und Zugabe einer geeigneten Base. Die Salze können dann - gegebenenfalls nach längerem Rühren - durch Einengen oder Absaugen isoliert werden.

Die erfindungsgemäßen Herbizid-Kombinationen können zusätzliche weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

In bevorzugter Ausführungsform enthalten die erfindungsgemäßen Herbizid-Kombinationen die Herbizide (A) und (B) in einem wirksamen Gehalt und/oder weisen synergistische Wirkungen auf. Die synergistischen Wirkungen können z.B. bei gemeinsamer Ausbringung der Herbizide (A) und (B) beispielsweise als Co-Formulierung oder als Tank-Mischung beobachtet werden, sie können jedoch auch bei zeitlich versetzter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die synergistischen Effekte erlauben eine Reduktion der Aufwandmengen der Einzelherbizide, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus Herbiziden (A)+(B) synergistische Wirkungssteigerungen möglich, die weit und in unerwarteter Weise über die Wirkungen hinausgehen, die mit den Einzelherbiziden (A) und (B) erreicht werden.

Die genannte Formel (I) umfaßt alle Stereoisomeren und deren Gemische, insbesondere auch racemische Gemische, und - soweit Enantiomere möglich sind - das jeweils biologisch wirksame Enantiomere.

Die Verbindungen der Formel (I) und deren Salze sind bekannt, ebenso wie deren Herstellung, z.B. aus US 5,476,936, die hiermit in die vorliegende Beschreibung aufgenommen wird.

Die Verbindungen der Formeln (II) - (V) und deren Salze sind bekannt, ebenso wie deren Herstelllung, siehe beispielsweise WO-A-97108156, WO-A-97131904, WO-A-98/15536, WO-A-98/15537, WO-A-98/15539 sowie auch WO-A-99/65882, WO-A-00/16627, WO-A-01/43546 WO-A-03/070710, WO-A-04/069814 und die in den Druckschriften zitierte Literatur, die hiermit in die vorliegende Beschreibung aufgenommen werden.

Die Herbizide der Gruppe (A) hemmen das Enzym Acetolactatsynthase (ALS) und damit die Proteinsynthese in Pflanzen. Die Aufwandmenge der Herbizide (A) kann in einem weiten Bereich variieren, beispielsweise zwischen 0,001 g und 500 g AS/ha (AS/ha bedeutet dabei im folgenden "Aktivsubstanz pro Hektar" = bezogen auf 100%Igen Wirkstoff). Bei Anwendungen mit Aufwandmengen von 0,01 g bis 200 g AS/ha der Herbizide (A), vorzugsweise der Verbindungen A-1 bis A-145, wird im Vor- und Nachauflaufverfahren ein relativ breites Spektrum an Schadpflanzen bekämpft, z.B. an annuellen und perennierenden, mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 100 g AS/ha, vorzugsweise 0,005 g bis 50 g AS/ha, besonders bevorzugt 0,01 g bis 9 g AS/ha.

Die Herbizide der Gruppe (B) beeinflussen Biosynthes der Cellulose in Pflanzen, wobei auch die die Zellwandbildung unterdrückt wird und eignen sich sowohl für einen Einsatz im Vorauflauf wie auch im Nachauflauf. Die Aufwandmenge der Herbizide (B) kann in einem weiten Bereich variieren, beispielsweise zwischen 0,001 g und 500 g AS/ha (AS/ha bedeutet dabei im folgenden "Aktivsubstanz pro Hektar" = bezogen auf 100%igen Wirkstoff). Bei Anwendungen mit Aufwandmengen von 0,01 g bis 200 g AS/ha der Herbizide (A), vorzugsweise der Verbindungen B-1 bis B-80, wird im Vor- und Nachauflaufverfahren ein relativ breites Spektrum an Schadpflanzen bekämpft, z.B. an annuellen und perennierenden, mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 100 g AS/ha, vorzugsweise 0,005 g bis 50 g AS/ha, besonders bevorzugt 0,01 g bis 25 g AS/ha.

Die Herbizide (A) sowie die Herbizide (B) können nicht-selektiv zur Bekämpfung unerwünschten Pflanzenwuchses eingesetzt werden, z.B. in Dauer- und Plantagenkulturen, wie beispielsweise wie Kern- und Steinobst-, Beerenobst-, Wein-, Hevea-, Bananen-, Zuckerrohr-, Kaffee-, Tee-, Citrus-, Nussplantagen, in Forstpflanzungen, an Wegrändern, Plätzen, Industrieanlagen, Flugplätzen oder Eisenbahnanlagen, oder zur sogenannten Burn-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel.

Bevorzugt sind Herbizid-Kombinationen aus einem oder mehreren Herbiziden (A) mit einem oder mehreren Herbiziden (B). Weiter bevorzugt sind Kombinationen von Herbiziden (A) mit einem oder mehreren Herbiziden (B) nach dem Schema: (A1) + (B1), (A1) + (B2), (A1) + (B3), (A1) + (B4), (A2) + (B1), (A2) + (B2), (A2) + (B3), oder (A2) + (B4).

Dabei sind auch solche Kombinationen erfindungsgemäß, die noch ein oder mehrere weitere von Herbiziden (A) und (B) verschiedene agrochemische Wirkstoffe, die ebenfalls die Funktion eines nicht-selektiven Herbizids aufweisen, enthalten.

Für Kombinationen mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind.

Bereiche für geeignete Mengenverhältnisse der Verbindungen (A) und (B) ergeben sich z.B. aus den genannten Aufwandmengen für die Einzelstoffe, in den erfindungsgemäßen Kombinationen können die Aufwandmengen in der Regel reduziert werden. Bevorzugte Mischungsverhältnisse (A):(B), für die erfindungsgemäßen Kombinationen sind im folgenden aufgeführt: (A) : (B) = 10 ; 1 bis 1 : 100, vorzugsweise 6 : 1 bis 1 : 50.

Von besonderem Interesse ist die Anwendung von herbiziden Mitteln mit einem Gehalt an folgenden Verbindungen (A) + (B):
(A-1) + (B-1), (A-1) + (B.2), (A-1) + (B-3), (A-1) + (B-4), (A-1) + (B-5), (A-1) + (B-6), (A-1) + (B-7), (A-1) + (B-8), (A-1) + (B-9), (A-1) + (B-10), (A-1) + (B-11), (A-1) + (B-12), (A-1) + (B-13), (A-1) + (B-14), (A-1) + (B-15), (A-1) + (B-16), (A-1) + (B-17), (A-1) + (B-18), (A-1) + (B-19), (A-1) + (B-20), (A-1) + (B-21), (A-1) + (B-22), (A-1) + (B-23), (A-1) + (B-24), (A-1) + (B-25), (A-1) + (B-26), (A-1) + (B-27), (A-1) + (B-28), (A-1) + (B-29), (A-1) + (B-30), (A-1) + (B-31), (A-1) + (B-32), (A-1) + (B-33), (A-1) + (B-34), (A-1) + (B-35), (A-1) + (B-36), (A-1) + (B-37), (A-1) + (B-38), (A-1) + (B-39), (A-1) + (B-40), (A-1) + (B-41), (A-1) + (B-42), (A-1) + (B-43), (A-1) + (B-44), (A-1) + (B-45), (A-1) + (B-46), (A-1) + (B-47), (A-1) + (B-48), (A-1) + (B-49), (A-1) + (B-50), (A-1) + (B-51), (A-1) + (B-52), (A-1) + (B-53), (A-1) + (B-54), (A-1) + (B-55), (A-1) + (B-56), (A-1) + (B-57), (A-1) + (B-58), (A-1) + (B-59), (A-1) + (B-60), (A-1) + (B-61), (A-1) + (B-62), (A-1) + (B-63), (A-1) + (B-64), (A-1) + (B-65), (A-1) + (B-66), (A-1) + (B-67), (A-1) + (B-68), (A-1) + (B-69), (A-1) + (B-70), (A-1) + (B-71), (A-1) + (B-72), (A-1) + (B-73), (A-1) + (B-74), (A-1) + (B-75), (A-1) + (B-76), (A-1) + (B-77), (Al-1) + (B-78), (A-1) + (B-79), (A-1) + (B-80).
(A-2) + (B-1), (A-2) + (B-2), (A-2) + (B-3), (A-2) + (B-4), (A-2) + (B-5), (A-2) + (B-6), (A-2) + (B-7), (A-2) + (B-8), (A-2) + (B-9), (A-2) + (8-10), (A-2) + (B-11), (A-2) + (B-12), (A-2) + (B-13), (A-2) + (B-14), (A-2) + (B-15), (A-2) + (B-16), (A-2) + (B-17), (A-2) + (B-18), (A-2) + (B-19), (A-2) + (B-20), (A-2) + (B-21), (A-2) + (B-22), (A-2) + (B-23), (A-2) + (B-24), (A-2) + (B-25), (A-2) + (B-26), (A-2) + (B-27), (A-2) + (B-28), (A-2) + (B-29), (A-2) + (B-30), (A-2) + (B-31), (A-2) + (B-32), (A-2) + (B-33), (A-2) + (B-34), (A-2) + (B-35), (A-2) + (B-36), (A-2) + (B-37), (A-2) + (B-38), (A-2) + (B-39), (A-2) + (B-40), (A-2) + (B-41), (A-2) + (B.42), (A-2) + (B-43), (A-2) + (B-44), (A-2) + (B-45), (A-2) + (B-46), (A-2) + (B-47), (A-2) + (B-48), (A-2) + (B-49), (A-2) + (B-50), (A-2) + (B-51), (A-2) + (B-52), (A-2) + (B-53), (A-2) + (B-54), (A-2) + (B-55), (A-2) + (B-56), (A-2) + (B-57), (A-2) + (B-58), (A-2) + (B-59), (A-2) + (B-60), (A-2) + (B-61), (A-2) + (B-62), (A-2) + (B-63), (A-2) + (B-64), (A-2) + (B-65), (A-2) + (B-66), (A-2) + (B-67), (A-2) + (B-68), (A-2) + (B-69), (A-2) + (B-70), (A-2) + (B-71), (A-2) + (B-72), (A-2) + (B-73), (A-2) + (B-74), (A-2) + (B-75), (A-2) + (B-76), (A-2) + (B-77), (Al-1) + (B-78), (A-2) + (B-79), (A-2) + (B-80).
(A-3) + (B-1), (A-3) + (B-2), (A-3) + (B-3), (A-3) + (B-4), (A-3) + (B-5), (A-3) + (B-6), (A-3) + (B-7), (A-3) + (B-8), (A-3) + (B-9), (A-3) + (B-10), (A-3) + (B-11), (A-3) + (B-12), (A-3) + (B-13), (A-3) + (B-14), (A-3) + (B-15), (A-3) + (B-16), (A-3) + (B-17), (A-3) + (B-18), (A-3) + (B-19), (A-3) + (B-20), (A-3) + (B-21), (A-3) + (B-22), (A-3) + (B-23), (A-3) + (B-24), (A-3) + (B-25), (A-3) + (B-26), (A-3) + (B-27), (A-3) + (B-28), (A-3) + (B-29), (A-3) + (B-30), (A-3) + (B-31), (A-3) + (B-32), (A-3) + (B-33), (A-3) + (B-34), (A-3) + (B-35), (A-3) + (B-36), (A-3) + (B-37), (A-3) + (B-38), (A-3) + (B-39), (A-3) + (B-40), (A-3) + (B-41), (A-3) + (B-42), (A-3) + (B-43), (A-3) + (B-44), (A-3) + (B-45), (A-3) + (B-46), (A-3) + (B-47), (A-3) + (B-48), (A-3) + (B-49), (A-3) + (B-50), (A-3) + (B-51), (A-3) + (B-52), (A-3) + (B-53), (A-3) + (B-54), (A-3) + (B-55), (A-3) + (B-56), (A-3) + (B-57), (A-3) + (B-58), (A-3) + (B-59), (A-3) + (B-60), (A-3) + (B-61), (A-3) + (B-62), (A-3) + (B-63), (A-3) + (B-64), (A-3) + (B-65), (A-3)+ (B-66), (A-3) + (B-67), (A-3) + (B-68), (A-3) + (B-69), (A-3) + (B-70), (A-3) + (B-71), (A-3) + (B-72), (A-3) + (B-73), (A-3) + (B-74), (A-3) + (B-75), (A-3) + (B-76), (A-3) + (B-77), (Al-1) + (B-78), (A-3) + (B-79), (A-3) + (B-80).
(A-4) + (B-1), (A-4) + (B-2), (A-4) + (B-3), (A-4) + (B-4), (A-4) + (B-5), (A-4) + (B-6), (A-4) + (B-7), (A-4) + B-8), (A-4) + (B-9), (A-4) + (B-10), (A-4) + (B-11), (A-4) + (B-12), (A-4) + (B-13), (A-4) + (B-14), (A-4) + (B-15), (A-4) + (B-16), (A-4) + (B-17), (A-4) + (B-18), (A-4) + (B-19), (A-4) + (B-20), (A-4) + (B-21), (A-4) + (B-22), (A-4) + (B-23), (A-4) + (B-24), (A-4) + (B-25), (A-4) + (B-26), (A-4) + (B-27), (A-4) + (B-28), (A-4) + (B-29), (A-4) + (B-30), (A-4) + (B-31), (A-4) + (B-32), (A-4) + (B-33), (A-4) + (B-34), (A-4) + (B-35), (A-4) + (B-36), (A-4) + (B-37), (A-4) + (B-38), (A-4) + (B-39), (A-4) + (B-40), (A-4) + (B-41), (A-4) + (B-42), (A-4) + (B-43), (A-4) + (B-44), (A-4) + (B-45), (A-4) + (B-46), (A-4) + (B-47), (A-4) + (B-48), (A-4) + (B-49), (A-4) + (B-50), (A-4) + (B-51), (A-4) + (B-52), (A-4) + (B-53), (A-4) + (B-54), (A-4) + (B-56), (A-4) + (B-56), (A-4) + (B-57), (A-4) + (B-58), (A-4) + (B-59), (A-4) + (B-60), (A-4) + (B-61), (A-4) + (B-62), (A-4) + (B-63), (A-4) + (B-64), (A-4) + (B-65), (A-4) + (B-66), (A-4) + (B-67), (A-4) + (B-68), (A-4) + (B-69), (A-4) + (B-70), (A-4) + (B-71), (A-4) + (B-72), (A-4) + (B-73), (A-4) + (B-74), (A-4) + (B-75), (A-4) + (B-76), (A-4) + (B-77), (AI-1) + (B-78), (A-4) + (B-79), (A-4) + (B-80).
(A-5) + (B-1), (A-5) + (B-2), (A-5) + (B-3), (A-5) + (B-4), (A-5) + (B-6), (A-5) + (B-6), (A-5) + (B-7), (A-5) + (B-8), (A-5) + (B-9), (A-5) + (B-10), (A-5) + (B-11), (A-5) + (B-12), (A-5) + (B-13), (A-6) + (B-14), (A-5) + (B-15), (A-5) + (B-16), (A-6) + (B-17), (A-5) + (B-18), (A-5) + (B-19), (A-5) + (B-20), (A-5) + (B-21), (A-5) + (B-22), (A-5) + (B-23), (A-5) + (B-24), (A-5) + (B-25), (A-5) + (B-26), (A-5) + (B-27), (A-5) + (B-28), (A-5) + (B-29), (A-5) + (B-30), (A-5) + (B-31), (A-5) + (B-32), (A-5) + (B-33), (A-5) + (B-34), (A-5) + (B-35), (A-5) + (B-36), (A-5) + (B-37), (A-5) + (B-38), (A-5) + (B-39), (A-5) + (B-40), (A-5) + (B-41), (A-5) + (B-42), (A-5) + (B-43), (A-5) + (B-44), (A-5) + (B-45), (A-5) + (B-46), (A-5) + (B-47), (A-5) + (B-48), (A-5) + (B-49), (A-5) + (B-50), (A-5) + (B-51), (A-5) + (B-52), (A-5) + (B-53), (A-5) + (B-54), (A-5) + (B-55), (A-5) + (B-56), (A-5) + (B-57), (A-5) + (B-58), (A-5) + (B-59), (A-5) + (B-60), (A-5) + (B-61), (A-5) + (B-62), (A-5) + (B-63), (A-5) + (B-64), (A-5) + (B-65), (A-5) + (B-66), (A-5) + (B-67), (A-5) + (B-68), (A-5) + (B-69), (A-5) + (B-70), (A-5) + (B-71), (A-5) + (B-72), (A-5) + (B-73), (A-5) + (B-74), (A-5) + (B-75), (A-5) + (B-76), (A-5) + (B-77), (Al-1) + (B-78), (A-5) + (B-79), (A-5) + (B-80).
(A-6) + (B-1), (A-6) + (B-2), (A-6) + (B-3), (A-6) + (B-4), (A-6) + (B-5), (A-6) + (B-6), (A-6) + (B-7), (A-6) + (B-8), (A-6) + (B-9), (A-6) + (B-10), (A-6) + (B-11), (A-6) + (B-12), (A-6) + (B-13), (A-6) + (B-14), (A-6) + (B-15), (A-6) + (B-16), (A-6) + (B-17), (A-6) + (B-18), (A-6) + (B-19), (A-6) + (B-20), (A-6) + (B-21), (A-6) + (B-22), (A-6) + (B-23), (A-6) + (B-24), (A-6) + (B-25), (A-6) + (B-26), (A-6) + (B-27), (A-6) + (B-28), (A-6) + (B-29), (A-6) + (B-30), (A-6) + (B-31), (A-6) + (B-32), (A-6) + (B-33), (A-6) + (B-34), (A-6) + (B-35), (A-6) + (B-36), (A-6) + (B-37), (A-6) + (B-38), (A-6) + (B-39), (A-6) + (B-40), (A-6) + (B-41), (A-6) + (B-42), (A-6) + (B-43), (A-6) + (B-44), (A-6) + (B-45), (A-6) + (B-46), (A-6) + (B-47), (A-6) + (B-48), (A-6) + (B-49), (A-6) + (B-50), (A-6) + (B-51), (A-6) + (B-52), (A-6) + (B-53), (A-6) + (B-54), (A-6) + (B-55), (A-6) + (B-56), (A-6) + (B-57), (A-6) + (B-58), (A-6) + (B-59), (A-6) + (B-60), (A-6) + (B-61), (A-6) + (B-62), (A-6) + (B-63), (A-6) + (B-64), (A-6) + (B-65), (A-6) + (B-66), (A-6) + (B-67), (A-6) + (B-68), (A-6) + (B-69), (A-6) + (B-70), (A-6) + (B-71), (A-6) + (B-72), (A-6) + (B-73), (A-6) + (B-74), (A-6) + (B-75), (A-6) + (B-76), (A-6) + (B-77), (Al-1) + (B-78), (A-6) + (B-79), (A-6) + (B-80).
(A-7) + (B-1), (A-7) + (B-2), (A-7) + (B-3), (A-7) + (B-4), (A-7) + (B-5), (A-7) + (B-6), (A-7) + (B-7), (A-7) + (B-8), (A-7) + (B-9), (A-7) + (B-10), (A-7) + (B-11), (A-7) + (B-12), (A-7) + (B-13), (A-7) + (B-14), (A-7) + (B-15), (A-7) + (B-16), (A-7) + (B-17), (A-7) + (B-18), (A-7) + (B-19), (A-7) + (B-20), (A-7) + (B-21), (A-7) + (B-22), (A-7) + (B-23), (A-7) + (B-24), (A-7) + (B-25), (A-7) + (B-26), (A-7) + (B-27), (A-7) + (B-28), (A-7) + (B-29), (A-7) + (B-30), (A-7) + (B-31), (A-7) + (B-32), (A-7) + (B-33), (A-7) + (B-34), (A-7) + (B-35), (A-7) + (B-36), (A-7) + (B-37), (A-7) + (B-38), (A-7) + (B-39), (A-7) + (B-40), (A-7) + (B-41), (A-7) + (B-42), (A-7) + (B-43), (A-7) + (B-44), (A-7) + (B-45), (A-7) + (B-46), (A-7) + (B-47), (A-7) + (B-48), (A-7) + (B-49), (A-7) + (B-50), (A-7) + (B-51), (A-7) + (B-52), (A-7) + (B-53), (A-7) + (B-54), (A-7) + (B-55), (A-7) + (B-56), (A-7) + (B-57), (A-7) + (B-58), (A-7) + (B-59), (A-7) + (B-60), (A-7) + (B-61), (A-7) + (B-62), (A-7) + (B-63), (A-7) + (B-64), (A-7) + (B-65), (A-7) + (B-66), (A-7) + (B-67), (A-7) + (B-68), (A-7) + (B-69), (A-7) + (B-70), (A-7) + (B-71), (A-7) + (B-72), (A-7) + (B-73), (A-7) + (B-74), (A-7) + (B-75), (A-7) + (B-76), (A-7) + (B-77), (Al-1) + (B-78), (A-7) + (B-79), (A-7) + (B-80).
(A-8) + (B-1), (A-8) + (B-2), (A-8) + (B-3), (A-8) + (B-4), (A-8) + (B-5), (A-8) + (B-6), (A-8) + (B-7), (A-8) + (B-8), (A-8) + (B-9), (A-8) + (B-10), (A-8) + (B-11), (A-8) + (B-12), (A-8) + (B-13), (A-8) + (B-14), (A-8) + (B-15), (A-8) + (B-16), (A-8) + (B-17), (A-8) + (B-18), (A-8) + (B-19), (A-8) + (B-20), (A-8) + (B-21), (A-8) + (B-22), (A-8) + (B-23), (A-8) + (B-24), (A-8) + (B-25), (A-8) + (B-26), (A-8) + (B-27), (A-8) + (B-28), (A-8) + (B-29), (A-8) + (B-30), (A-8) + (B-31), (A-8) + (B-32), (A-8) + (B-33), (A-8) + (B-34), (A-8) + (B-35), (A-8) + (B-36), (A-8) + (B-37), (A-8) + (B-38), (A-8) + (B-39), (A-8) + (B-40), (A-8) + (B-41), (A-8) + (8-42), (A-8) + (B-43), (A-8) + (B-44), (A-8) + (B-45), (A-8) + (B-46), (A-8) + (B-47), (A-8) + (B-48), (A-8) + (B-49), (A-8) + (B-60), (A-8) + (B-51), (A-8) + (B-52), (A-8) + (B-53), (A-8) + (B-54), (A-8) + (B-55), (A-8) + (B-56), (A-8) + (B-57), (A-8) + (B-68), (A-8) + (B-59), (A-8) + (B-60), (A-8) + (B-61), (A-8) + (B-62), (A-8) + (B-63), (A-8) + (B-64), (A-8) + (B-65), (A-8) + (B-66), (A-8) + (B-67), (A-8) + (B-68), (A-8) + (B-69), (A-8) + (B-70), (A-8) + (B-71), (A-8) + (B-72), (A-8) + (B-73), (A-8) + (B-74), (A-8) + (B-75), (A-8) + (B-76), (A-8) + (B-77), (Al-1) + (B-78), (A-8) + (B-79), (A-8) + (B-80).
(A-9) + (B-1), (A-9) + (B-2), (A-9) + (B-3), (A-9) + (B-4), (A-9) + (B-5), (A-9) + (B-6), (A-9) + (B-7), (A-9) + (B-8), (A-9) + (B-9), (A-9) + (B-10), (A-9) + (B-11), (A-9) + (B-12), (A-9) + (B-13), (A-9) + (B-14), (A-9) + (B-15), (A-9) + (B-16), (A-9) + (B-17), (A-9) + (B-18), (A-9) + (B-19), (A-9) + (B-20), (A-9) + (B-21), (A-9) + (B-22), (A-9) + (B-23), (A-9) + (B-24), (A-9) + (B-25), (A-9) + (B-26), (A-9) + (B-27), (A-9) + (B-28), (A-9) + (B-29), (A-9) + (B-30), (A-9) + (B-31), (A-9) + (B-32), (A-9) + (B-33), (A-9) + (B-34), (A-9) + (B-35), (A-9) + (B-36), (A-9) + (B-37), (A-9) + (B-38), (A-9) + (B-39), (A-9) + (B-40), (A-9) + (B-41), (A-9) + (B-42), (A-9) + (B-43), (A-9) + (B-44), (A-9) + (B-45), (A-9) + (B-46), (A-9) + (B-47), (A-9) + (B-48), (A-9) + (B-49), (A-9) + (B-50), (A-9) + (B-51), (A-9) + (B-52), (A-9) + (B-53), (A-9) + (B-54), (A-9) + (B-55), (A-9) + (B-56), (A-9) + (B-57), (A-9) + (B-58), (A-9) + (B-59), (A-9) + (B-60), (A-9) + (B-61), (A-9) + (B-62), (A-9) + (B-63), (A-9) + (B-64), (A-9) + (B-65), (A-9) + (B-66), (A-9) + (B-67), (A-9) + (B-68), (A-9) + (B-69), (A-9) + (B-70), (A-9) + (B-71), (A-9) + (B-72), (A-9) + (B-73), (A-9) + (B-74), (A-9) + (B-75), (A-9) + (B-76), (A-9) + (B-77), (Al-1) + (B-78), (A-9) + (B-79), (A-9) + (B-80).
(A-10) + (B-1), (A-10) + (B-2), (A-10) + (B-3), (A-10) + (B-4), (A-1 0) + (B-5), (A-10) + (B-6), (A-10) + (B-7), (A-10) + (B-8), (A-10) + (B-9), (A-10) + (B-10), (A-10) + (B-11), (A-10) + (B-12), (A-10) + (B-13), (A-10) + (B-14), (A-10) + (B-15), (A-10) + (B-16), (A-10) + (B-17), (A-10) + (B-18), (A-10) + (B-19), (A-10) + (B-20), (A-10) + (B-21), (A-10) + (B-22), (A-10) + (B-23), (A-10) + (B-24), (A-10) + (B-25), (A-10) + (B-26), (A-10) + (B-27), (A-10) + (B-28), (A-10) + (B-29), (A-10) + (B-30), (A-10) + (B-31), (A-10) + (B-32), (A-10) + (B-33), (A-10) + (B-34), (A-10) + (B-35), (A-10) + (B-36), (A-10) + (B-37), (A-10) + (B-38), (A-10) + (B-39), (A-10) + (B-40), (A-10) + (B-41), (A-10) + (B-42), (A-10) + (B-43), (A-10) + (B-44), (A-10) + (B-45), (A-10) + (B-46), (A-10) + (B-47), (A-10) + (B-48), (A-10) + (B-49), (A-10) + (B-50), (A-10) + (B-51), (A-10) + (B-52), (A-10) + (B-53), (A-10) + (B-54), (A-10) + (B-55), (A-10) + (B-56), (A-10) + (B-57), (A-10) + (B-58), (A-10) + (B-59), (A-10) + (B-60), (A-10) + (B-61), (A-10) + (B-62), (A-10) + (B-63), (A-10) + (B-64), (A-10) + (B-65), (A-10) + (B-66), (A-10) + (B-67), (A-10) + (B-68), (A-10) + (B-69), (A-10) + (B-70), (A-10) + (B-71), (A-10) + (B-72), (A-10) + (B-73), (A-10) + (B-74), (A-10) + (B-75), (A-10) + (B-76), (A-10) + (B-77), (Al-1) + (B-78), (A-10) + (B-79), (A-10) + (B-80).
(A-11) + (B-1), (A-11) + (B-2), (A-11) + (B-3), (A-11) + (B-4), (A-11) + (B-5), (A-11) + (B-6), (A-11) + (B-7), (A-11) + (B-8), (A-11) + (B-9), (A-11) + (B-10), (A-11) + (B-11), (A-11) + (B-12), (A-11) + (B-13), (A-11) + (B-14), (A-11) + (B-15), (A-11) + (B-16), (A-11) + (B-17), (A-11) + (B-18), (A-11) + (B-19), (A-11) + (B-20), (A-11) + (B-21), (A-11) + (B-22), (A-11) + (B-23), (A-11) + (B-24), (A-11) + (B-25), (A-11) + (B-26), (A-11) + (B-27), (A-11) + (B-28), (A-11) + (B-29), (A-11) + (B-30), (A-11) + (B-31), (A-11) + (B-32), (A-11) + (B-33), (A-11) + (B-34), (A-11) + (B-35), (A-11) + (B-36), (A-11) + (B-37), (A-11) + (B-38), (A-11) + (B-39), (A-11) + (B-40), (A-11) + (B-41), (A-11) + (B-42), (A-11) + (B-43), (A-11) + (B-44), (A-11) + (B-45), (A-11) + (B-46), (A-11) + (B-47), (A-11) + (B-48), (A-11) + (B-49), (A-11) + (B-50), (A-11) + (B-51), (A-11) + (B-52), (A-11) + (B-53), (A-11) + (B-54), (A-11) + (B-55), (A-11) + (B-56), (A-11) + (B-57), (A-11) + (B-58), (A-11) + (B-59), (A-11) + (B-60), (A-11) + (B-61), (A-11) + (B-62), (A-11) + (B-63), (A-11) + (B-64), (A-11) + (B-65), (A-11) + (B-66), (A-11) + (B-67), (A-11) + (B-68), (A-11) + (B-69), (A-11) + (B-70), (A-11) + (B-71), (A-11) + (B-72), (A-11) + (B-73), (A-11) + (B-74), (A-11) + (B-75), (A-11) + (B-76), (A-11) + (B-77), (Al-1) + (B-78), (A-11) + (B-79), (A-11) + (B-80).
(A-12) + (B-1), (A-12) + (B-2), (A-12) + (B-3), (A-12) + (B-4), (A-12) + (B-5), (A-12) + (B-6), (A-12) + (B-7), (A-12) + (B-8), (A-12) + (B-9), (A-12) + (B-10), (A-12) + (B-11), (A-12) + (B-12), (A-12) + (B-13), (A-12) + (B-14), (A-12) + (B-15), (A-12) + (B-16), (A-12) + (B-17), (A-12) + (B-18), (A-12) + (B-19), (A-12) + (B-20), (A-12) + (B-21), (A-12) + (B-22), (A-12) + (B-23), (A-12) + (B-24), (A-12) + (B-25), (A-12) + (B-26), (A-12) + (B-27), (A-12) + (B-28), (A-12) + (B-29), (A-12) + (B-30), (A-12) + (B-31), (A-12) + (B-32), (A-12) + (B-33), (A-12) + (B-34), (A-12) + (B-35), (A-12) + (B-36), (A-12) + (B-37), (A-12) + (B-38), (A-12) + (B-39), (A-12) + (B-40), (A-12) + (B-41), (A-12) + (B-42), (A-12) + (B-43), (A-12) + (B-44), (A-12) + (B-45), (A-12) + (B-46), (A-12) + (B-47), (A-12) + (B-48), (A-12) + (B-49), (A-12) + (B-50), (A-12) + (B-51), (A-12) + (B-52), (A-12) + (B-53), (A-12) + (B-54), (A-12) + (B-55), (A-12) + (B-56), (A-12) + (B-57), (A-12) + (B-58), (A-12) + (B-59), (A-12) + (B-60), (A-12) + (B-61), (A-12) + (B-62), (A-12) + (B-63), (A-12) + (B-64), (A-12) + (B-65), (A-12) + (B-66), (A-12) + (B-67), (A-12) + (B-68), (A-12) + (B-69), (A-12) + (B-70), (A-12) + (B-71), (A-12) + (B-72), (A-12) + (B-73), (A-12) + (B-74), (A-12) + (B-75), (A-12) + (B-76), (A-12) + (B-77), (Al-1) + (B-78), (A-12) + (B-79), (A-12) + (B-80).
(A-13) + (B-1), (A-13) + (B-2), (A-13) + (B-3), (A-13) + (B-4), (A-13) + (B-5), (A-13) + (B-6), (A-13) + (B-7), (A-13) + (B-8), (A-13) + (B-9), (A-13) + (B-10), (A-13) + (B-11), (A-13) + (B-12), (A-13) + (B-13), (A-13) + (B-14), (A-13) + (B-15), (A-13) + (B-16), (A-13) + (B-17), (A-13) + (B-18), (A-13) + (B-19), (A-13) + (B-20), (A-13) + (B-21), (A-13) + (B-22), (A-13) + (B-23), (A-13) + (B-24), (A-13) + (B-25), (A-13) + (B-26), (A-13) + (B-27), (A-13) + (B-28), (A-13) + (B-29), (A-13) + (B-30), (A-13) + (B-31), (A-13) + (B-32), (A-13) + (B-33), (A-13) + (B-34), (A-13) + (B-35), (A-13) + (B-36), (A-13) + (B-37), (A-13) + (B-38), (A-13) + (B-39), (A-13) + (B-40), (A-13) + (B-41), (A-13) + (B-42), (A-13) + (B-43), (A-13) + (B-44), (A-13) + (B-45), (A-13) + (B-46), (A-13) + (B-47), (A-13) + (B-48), (A-13) + (B-49), (A-13) + (B-50), (A-13) + (B-51), (A-13) + (B-52), (A-13) + (B-53), (A-13) + (B-54), (A-13) + (B-55), (A-13) + (B-56), (A-13) + (B-57), (A-13) + (B-58), (A-13) + (B-59), (A-13) + (B-60), (A-13) + (B-61), (A-13) + (B-62), (A-13) + (B-63), (A-13) + (B-64), (A-13) + (B-65), (A-13) + (B-66), (A-13) + (B-67), (A-13) + (B-68), (A-13) + (B-69), (A-13) + (B-70), (A-13) + (B-71), (A-13) + (B-72), (A-13) + (B-73), (A-13) + (B-74), (A-13) + (B-75), (A-13) + (B-76), (A-13) + (B-77), (Al-1) + (B-78), (A-13) + (B-79), (A-13) + (B-80).
(A-14) + (B-1), (A-14) + (B-2), (A-14) + (B-3), (A-14) + (B-4), (A-14) + (B-5), (A-14) + (B-6), (A-14) + (B-7), (A-14) + (B-8), (A-14) + (B-9), (A-14) + (B-10), (A-14) + (B-11), (A-14) + (B-12), (A-14) + (B-13), (A-14) + (B-14), (A-14) + (B-15), (A-14) + (B-16), (A-14) + (B-17), (A-14) + (B-18), (A-14) + (B-19), (A-14) + (B-20), (A-14) + (B-21), (A-14) + (B-22), (A-14) + (B-23), (A-14) + (B-24), (A-14) + (B-25), (A-14) + (B-26), (A-14) + (B-27), (A-14) + (B-28), (A-14) + (B-29), (A-14) + (B-30), (A-14) + (B-31), (A-14) + (B-32), (A-14) + (B-33), (A-14) + (B-34), (A-14) + (B-35), (A-14) + (B-36), (A-14) + (B-37), (A-14) + (B-38), (A-14) + (B-39), (A-14) + (B-40), (A-14) + (B-41), (A-14) + (B-42), (A-14) + (B-43), (A-14) + (B-44), (A-14) + (B-45), (A-14) + (B-46), (A-14) + (B-47), (A-14) + (B-48), (A-14) + (B-49), (A-14) + (B-50), (A-14) + (B-51), (A-14) + (B-52), (A-14) + (B-53), (A-14) + (B-54), (A-14) + (B-55), (A-14) + (B-56), (A-14) + (B-57), (A-14) + (B-68), (A-14) + (B-59), (A-14) + (B-60), (A-14) + (B-61), (A-14) + (B-62), (A-14) + (B-63), (A-1 4) + (B-64), (A-14) + (B-65), (A-1 4) + (B-66), (A-14) + (B-67), (A-14) + (B-68), (A-14) + (B-69), (A-14) + (B-70), (A-14) + (B-71), (A-14) + (B-72), (A-14) + (B-73), (A-14) + (B-74), (A-1 4) + (B-75), (A-14) + (B-76), (A-14) + (B-77), (Al-1) + (B-78), (A-14) + (B-79), (A-14) + (B-80),
(A-15) + (B-1), (A-15) + (B-2), (A-15) + (B-3), (A-15) + (B-4), (A-15) + (B-5), (A-15) + (B-6), (A-15) + (B-7), (A-15) + (B-8), (A-15) + (B-9), (A-15) + (B-10), (A-15) + (B-11), (A-15) + (B-12), (A-15) + (B-13), (A-15) + (B-14), (A-15) + (B-15), (A-15) + (B-16), (A-15) + (B-17), (A-15) + (B-18), (A-15) + (B-19), (A-15) + (B-20), (A-15) + (B-21), (A-15) + (B-22), (A-15) + (B-23), (A-15) + (B-24), (A-15) + (B-25), (A-15) + (B-26), (A-15) + (B-27), (A-15) + (B-28), (A-15) + (B-29), (A-15) + (B-30), (A-15) + (B-31), (A-15) + (B-32), (A-15) + (B-33), (A-15) + (B-34), (A-15) + (B-35), (A-15) + (B-36), (A-15) + (B-37), (A-15) + (B-38), (A-15) + (B-39), (A-15) + (B-40), (A-15) + (B-41), (A-15) + (B-42), (A-15) + (B-43), (A-15) + (B-44), (A-15) + (B-45), (A-15) + (B-46), (A-15) + (B-47), (A-15) + (B-48), (A-15) + (B-49), (A-15) + (B-50), (A-15) + (B-51), (A-15) + (B-52), (A-15) + (B-53), (A-15) + (B-54), (A-15) + (B-55), (A-15) + (B-56), (A-15) + (B-57), (A-15) + (B-58), (A-15) + (B-59), (A-15) + (B-60), (A-15) + (B-61), (A-15) + (B-62), (A-15) + (B-63), (A-15) + (B-64), (A-15) + (B-65), (A-15) + (B-66), (A-15) + (B-67), (A-15) + (B-68), (A-15) + (B-69), (A-15) + (B-70), (A-15) + (B-71), (A-15) + (B-72), (A-15) + (B-73), (A-15) + (B-74), (A-15) + (B-75), (A-15) + (B-76), (A-15) + (B-77), (Al-1) + (B-78), (A-15) + (B-79), (A-15) + (B-80).
(A-16) + (B-1), (A-16) + (B-2), (A-16) + (B-3), (A-16) + (B-4), (A-16) + (B-5), (A-16) + (B-6), (A-16) + (B-7), (A-16) + (B-8), (A-16) + (B-9), (A-16) + (B-10), (A-16) + (B-11), (A-16) + (B-12), (A-16) + (B-13), (A-1 6) + (B-14), (A-1 6) + (B-15), (A-16) + (B-16), (A-16) + (B-17), (A-16) + (B-18), (A-16) + (B-19), (A-16) + (B-20), (A-16) + (B-21), (A-16) + (B-22), (A-16) + (B-23), (A-16) + (B-24), (A-16) + (B-25), (A-16) + (B-26), (A-16) + (B-27), (A-16) + (B-28), (A-16) + (B-29), (A-16) + (B-30), (A-16) + (B-31), (A-16) + (B-32), (A-16) + (B-33), (A-16) + (B-34), (A-16) + (B-35), (A-16) + (B-36), (A-16) + (B-37), (A-16) + (B-38), (A-16) + (B-39), (A-16) + (B-40), (A-16) + (B-41), (A-16) + (B-42), (A-16) + (B-43), (A-16) + (B-44), (A-16) + (B-46), (A-16) + (B-46), (A-16) + (B-47), (A-16) + (B-48), (A-16) + (B-49), (A-16) + (B-50), (A-16) + (B-51), (A-16) + (B-52), (A-16) + (B-53), (A-16) + (B-54), (A-16) + (B-55), (A-16) + (B-56), (A-16) + (B-57), (A-16) + (B-58), (A-16) + (B-59), (A-16) + (B-60), (A-16) + (B-61), (A-16) + (B-62), (A-16) + (B-63), (A-16) + (B-64), (A-16) + (B-65), (A-16) + (B-66), (A-16) + (B-67), (A-16) + (B-68), (A-16) + (B-69), (A-16) + (B-70), (A-16) + (B-71), (A-16) + (B-72), (A-16) + (B-73), (A-16) + (B-74), (A-16) + (B-75), (A-16) + (B-76), (A-16) + (B-77), (Al-1) + (B-78), (A-16) + (B-79), (A-16) + (B-80).
(A-17) + (B-1), (A-17) + (B-2), (A-17) + (B-3), (A-17) + (B-4), (A-17) + (B-5), (A-17) + (B-6), (A-17) + (B-7), (A-17) + (B-8), (A-17) + (B-9), (A-17) + (B-10), (A-17) + (B-11), (A-17) + (B-12), (A-17) + (B-13), (A-17) + (B-14), (A-17) + (B-15), (A-17) + (B-16), (A-17) + (B-17), (A-17) + (B-18), (A-17) + (B-19), (A-17) + (B-20), (A-17) + (B-21), (A-17) + (B-22), (A-17) + (B-23), (A-17) + (B-24), (A-17) + (B-25), (A-17) + (B-26), (A-17) + (B-27), (A-17) + (B-28), (A-17) + (B-29), (A-17) + (B-30), (A-17) + (B-31), (A-17) + (B-32), (A-17) + (B-33), (A-17) + (B-34), (A-17) + (B-35), (A-17) + (B-36), (A-17) + (B-37), (A-17) + (B-38), (A-17) + (B-39), (A-17) + (B-40), (A-17) + (B-41), (A-17) + (B-42), (A-17) + (B-43), (A-17) + (B-44), (A-17) + (B-45), (A-17) + (B-46), (A-17) + (B-47), (A-17) + (B-48), (A-17) + (B-49), (A-17) + (B-50), (A-17) + (B-51), (A-17) + (B-52), (A-17) + (B-53), (A-17) + (B-54), (A-17) + (B-55), (A-17) + (B-56), (A-17) + (B-57), (A-17) + (B-58), (A-17) + (B-59), (A-17) + (B-60), (A-17) + (B-61), (A-17) + (B-62), (A-17) + (B-63), (A-17) + (B-64), (A-17) + (B-65), (A-17) + (B-66), (A-17) + (B-67), (A-17) + (B-68), (A-17) + (B-69), (A-17) + (B-70), (A-17) + (B-71), (A-17) + (B-72), (A-17) + (B-73), (A-17) + (B-74), (A-17) + (B-75), (A-17) + (B-76), (A-17) + (B-77), (AI-1) + (B-78), (A-17) + (B-79), (A-17) + (B-80).
(A-18) + (B-1), (A-18) + (B-2), (A-18) + (B-3), (A-18) + (B-4), (A-18) + (B-5), (A-18) + (B-6), (A-18) + (B-7), (A-18) + (B-8), (A-18) + (B-9), (A-18) + (B-10), (A-18) + (B-11), (A-18) + (B-12), (A-18) + (B-13), (A-18) + (B-14), (A-18) + (B-15), (A-18) + (B-16), (A-18) + (B-17), (A-18) + (B-18), (A-18) + (B-19), (A-18) + (B-20), (A-18) + (B-21), (A-18) + (B-22), (A-18) + (B-23), (A-18) + (B-24), (A-18) + (B-25), (A-18) + (B-26), (A-18) + (B-27), (A-18) + (B-28), (A-18) + (B-29), (A-18) + (B-30), (A-18) + (B-31), (A-18) + (B-32), (A-18) + (B-33), (A-18) + (B-34), (A-18) + (B-35), (A-18) + (B-36), (A-18) + (B-37), (A-18) + (B-38), (A-18) + (B-39), (A-18) + (B-40), (A-18) + (B-41), (A-18) + (B-42), (A-18) + (B-43), (A-18) + (B-44), (A-18) + (B-45), (A-18) + (B-46), (A-18) + (B-47), (A-18) + (B-48), (A-18) + (B-49), (A-18) + (B-50), (A-18) + (B-51), (A-18) + (B-52), (A-18) + (B-53), (A-18) + (B-54), (A-18) + (B-55), (A-18) + (B-56), (A-18) + (B-57), (A-18) + (B-58), (A-18) + (B-59), (A-18) + (B-60), (A-18) + (B-61), (A-18) + (B-62), (A-18) + (B-63), (A-18) + (B-64), (A-18) + (B-65), (A-18) + (B-66), (A-18) + (B-67), (A-18) + (B-68), (A-18) + (B-69), (A-18) + (B-70), (A-18) + (B-71), (A-18) + (B-72), (A-18) + (B-73), (A-18) + (B-74), (A-18) + (B-75), (A-18) + (B-76), (A-18) + (B-77), (Al-1) + (B-78), (A-18) + (B-79), (A-18) + (B-80).
(A-19) + (B-1), (A-19) + (B-2), (A-19) + (B-3), (A-19) + (B-4), (A-19) + (B-5), (A-19) + (B-6), (A-19) + (B-7), (A-19) + (B-8), (A-19) + (B-9), (A-19) + (B-10), (A-19) + (B-11), (A-19) + (B-12), (A-19) + (B-13), (A-19) + (B-14), (A-19) + (B-15), (A-19) + (B-16), (A-19) + (B-17), (A-19) + (B-18), (A-19) + (B-19), (A-19) + (B-20), (A-19) + (B-21), (A-19) + (B-22), (A-19) + (B-23), (A-19) + (B-24), (A-19) + (B-25), (A-19) + (B-26), (A-19) + (B-27), (A-19) + (B-28), (A-19) + (B-29), (A-19) + (B-30), (A-19) + (B-31), (A-19) + (B-32), (A-19) + (B-33), (A-19) + (B-34), (A-19) + (B-35), (A-19) + (B-36), (A-19) + (B-37), (A-19) + (B-38), (A-19) + (B-39), (A-19) + (B-40), (A-19) + (B-41), (A-19) + (B-42), (A-19) + (B-43), (A-19) + (B-44), (A-19) + (B-45), (A-19) + (B-46), (A-19) + (B-47), (A-19) + (B-48), (A-19) + (B-49), (A-19) + (B-50), (A-19) + (B-51), (A-19) + (B-52), (A-19) + (B-53), (A-19) + (B-54), (A-19) + (B-55), (A-19) + (B-56), (A-19) + (B-57), (A-19) + (B-58), (A-19) + (B-59), (A-19) + (B-60), (A-19) + (B-61), (A-19) + (B-62), (A-19) + (B-63), (A-19) + (B-64), (A-19) + (B-65), (A-19) + (B-66), (A-19) + (B-67), (A-19) + (B-68), (A-19) + (B-69), (A-19) + (B-70), (A-19) + (B-71), (A-19) + (B-72), (A-19) + (B-73), (A-19) + (B-74), (A-19) + (B-75), (A-19) + (B-76), (A-19) + (B-77), (AI-1) + (B-78), (A-19) + (B-79), (A-19) + (B-80).
(A-20) + (B-1), (A-20) + (B-2), (A-20) + (B-3), (A-20) + (B-4), (A-20) + (B-5), (A-20) + (B-6), (A-20) + (B-7), (A-20) + (B-8), (A-20) + (B-9), (A-20) + (B-10), (A-20) + (B-11), (A-20) + (B-12), (A-20) + (B-13), (A-20) + (B-14), (A-20) + (B-15), (A-20) + (B-16), (A-20) + (B-17), (A-20) + (B-18), (A-20) + (B-19), (A-20) + (B-20), (A-20) + (B-21), (A-20) + (B-22), (A-20) + (B-23), (A-20) + (B-24), (A-20) + (B-25), (A-20) + (B-26), (A-20) + (B-27), (A-20) + (B-28), (A-20) + (B-29), (A-20) + (B-30), (A-20) + (B-31), (A-20) + (B-32), (A-20) + (B-33), (A-20) + (B-34), (A-20) + (B-35), (A-20) + (B-36), (A-20) + (B-37), (A-20) + (B-38), (A-20) + (B-39), (A-20) + (B-40), (A-20) + (B-41), (A-20) + (B-42), (A-20) + (B-43), (A-20) + (B-44), (A-20) + (B-45), (A-20) + (B-46), (A-20) + (B-47), (A-20) + (B-48), (A-20) + (B-49), (A-20) + (B-50), (A-20) + (B-51), (A-20) + (B-52), (A-20) + (B-53), (A-20) + (B-54), (A-20) + (B-55), (A-20) + (B-56), (A-20) + (B-57), (A-20) + (B-58), (A-20) + (B-59), (A-20) + (B-60), (A-20) + (B-61), (A-20) + (B-62), (A-20) + (B-63), (A-20) + (B-64), (A-20) + (B-65), (A-20) + (B-66), (A-20) + (B-67), (A-20) + (B-68), (A-20) + (B-69), (A-20) + (B-70), (A-20) + (B-71), (A-20) + (B-72), (A-20) + (B-73), (A-20) + (B-74), (A-20) + (B-75), (A-20) + (B-76), (A-20) + (B-77), (Al-1) + (B-78), (A-20) + (B-79), (A-20) + (B-80).
(A-21) + (B-1), (A-21) + (B-2), (A-21) + (B-3), (A-21) + (B-4), (A-21) + (B-5), (A-21) + (B-6), (A-21) + (B-7), (A-21) + (B-8), (A-21) + (B-9), (A-21) + (B-10), (A-21) + (B-11), (A-21) + (B-12), (A-21) + (B-13), (A-21) + (B-14), (A-21) + (B-15), (A-21) + (B-16), (A-21) + (B-17), (A-21) + (B-18), (A-21) + (B-19), (A-21) + (B-20), (A-21) + (B-21), (A-21) + (B-22), (A-21) + (B-23), (A-21) + (B-24), (A-21) + (B-25), (A-21) + (B-26), (A-21) + (B-27), (A-21) + (B-28), (A-21) + (B-29), (A-21) + (B-30), (A-21) + (B-31), (A-21) + (B-32), (A-21) + (B-33), (A-21) + (B-34), (A-21) + (B-35), (A-21) + (B-36), (A-21) + (B-37), (A-21) + (B-38), (A-21) + (B-39), (A-21) + (B-40), (A-21) + (B-41), (A-21) + (B-42), (A-21) + (B-43), (A-21) + (B-44), (A-21) + (B-45), (A-21) + (B-46), (A-21) + (B-47), (A-21) + (B-48), (A-21) + (B-49), (A-21) + (B-50), (A-21) + (B-51), (A-21) + (B-52), (A-21) + (B-53), (A-21) + (B-54), (A-21) + (B-55), (A-21) + (B-56), (A-21) + (B-57), (A-21) + (B-58), (A-21) + (B-59), (A-21) + (B-60), (A-21) + (B-61), (A-21) + (B-62), (A-21) + (B-63), (A-21) + (B-64), (A-21) + (B-65), (A-21) + (B-66), (A-21) + (B-67), (A-21) + (B-68), (A-21) + (B-69), (A-21) + (B-70), (A-21) + (B-71), (A-21) + (B-72), (A-21) + (B-73), (A-21) + (B-74), (A-21) + (B-75), (A-21) + (B-76), (A-21) + (B-77), (Al-1) + (B-78), (A-21) + (B-79), (A-21) + (B-80).
(A-22) + (B-1), (A-22) + (B-2), (A-22) + (B-3), (A-22) + (B-4), (A-22) + (B-5), (A-22) + (B-6), (A-22) + (B-7), (A-22) + (B-8), (A-22) + (B-9), (A-22) + (B-10), (A-22) + (B-11), (A-22) + (B-12), (A-22) + (B-13), (A-22) + (B-14), (A-22) + (B-15), (A-22) + (B-16), (A-22) + (B-17), (A-22) + (B-18), (A-22) + (B-19), (A-22) + (B-20), (A-22) + (B-21), (A-22) + (B-22), (A-22) + (B-23), (A-22) + (B-24), (A-22) + (B-25), (A-22) + (B-26), (A-22) + (B-27), (A-22) + (B-28), (A-22) + (B-29), (A-22) + (B-30), (A-22) + (B-31), (A-22) + (B-32), (A-22) + (B-33), (A-22) + (B-34), (A-22) + (B-35), (A-22) + (B-36), (A-22) + (B-37), (A-22) + (B-38), (A-22) + (B-39), (A-22) + (B-40), (A-22) + (B-41), (A-22) + (B-42), (A-22) + (B-43), (A-22) + (B-44), (A-22) + (B-45), (A-22) + (B-46), (A-22) + (B-47), (A-22) + (B-48), (A-22) + (B-49), (A-22) + (B-50), (A-22) + (B-51), (A-22) + (B-52), (A-22) + (B-53), (A-22) + (B-54), (A-22) + (B-55), (A-22) + (B-56), (A-22) + (B-57), (A-22) + (B-58), (A-22) + (B-59), (A-22) + (B-60), (A-22) + (B-61), (A-22) + (B-62), (A-22) + (B-63), (A-22) + (B-64), (A-22) + (B-65), (A-22) + (B-66), (A-22) + (B-67), (A-22) + (B-68), (A-22) + (B-69), (A-22) + (B-70), (A-22) + (B-71), (A-22) + (B-72), (A-22) + (B-73), (A-22) + (B-74), (A-22) + (B-75), (A-22) + (B-76), (A-22) + (B-77), (Al-1) + (B-78), (A-22) + (B-79), (A-22) + (B-80).
(A-23) + (B-1), (A-23) + (B-2), (A-23) + (B-3), (A-23) + (B-4), (A-23) + (B-6), (A-23) + (B-6), (A-23) + (B-7), (A-23) + (B-8), (A-23) + (B-9), (A-23) + (B-10), (A-23) + (B-11), (A-23) + (B-12), (A-23) + (B-13), (A-23) + (B-14), (A-23) + (B-15), (A-23) + (B-16), (A-23) + (B-17), (A-23) + (B-18), (A-23) + (B-19), (A-23) + (B-20), (A-23) + (B-21), (A-23) + (B-22), (A-23) + (B-23), (A-23) + (B-24), (A-23) + (B-25), (A-23) + (B-26), (A-23) + (B-27), (A-23) + (B-28), (A-23) + (B-29), (A-23) + (B-30), (A-23) + (B-31), (A-23) + (B-32), (A-23) + (B-33), (A-23) + (B-34), (A-23) + (B-36), (A-23) + (B-36), (A-23) + (B-37), (A-23) + (B-38), (A-23) + (B-39), (A-23) + (B-40), (A-23) + (B-41), (A-23) + (B-42), (A-23) + (B-43). (A-23) + (B-44), (A-23) + (B-45), (A-23) + (B-46), (A-23) + (B-47), (A-23) + (B-48), (A-23) + (B-49), (A-23) + (B-50), (A-23) + (B-51), (A-23) + (B-52), (A-23) + (B-53), (A-23) + (B-54), (A-23) + (B-55), (A-23) + (B-56), (A-23) + (B-57), (A-23) + (B-58), (A-23) + (B-59), (A-23) + (B-60), (A-23) + (B-61), (A-23) + (B-62), (A-23) + (B-63), (A-23) + (B-64), (A-23) + (B-65), (A-23) + (B-66), (A-23) + (B-67), (A-23) + (B-68), (A-23) + (B-69), (A-23) + (B-70), (A-23) + (B-71), (A-23) + (B-72), (A-23) + (B-73), (A-23) + (B-74), (A-23) + (B-75), (A-23) + (B-76), (A-23) + (B-77), (AI-1) + (B-78), (A-23) + (B-79), (A-23) + (B-80).
(A-24) + (B-1), (A-24) + (B-2), (A-24) + (B-3), (A-24) + (B-4), (A-24) + (B-5), (A-24) + (B-6), (A-24) + (B-7), (A-24) + (B-8), (A-24) + (B-9), (A-24) + (8-10), (A-24) + (B-11), (A-24) + (8-12), (A-24) + (B-13), (A-24) + (B-14), (A-24) + (B-15), (A-24) + (B-16), (A-24) + (B-17), (A-24) + (B-18), (A-24) + (B-19), (A-24) + (B-20), (A-24) + (B-21), (A-24) + (B-22), (A-24) + (B-23), (A-24) + (B-24), (A-24) + (B-25), (A-24) + (B-26), (A-24) + (B-27), (A-24) + (B-28), (A-24) + (B-29), (A-24) + (B-30), (A-24) + (B-31), (A-24) + (B-32), (A-24) + (B-33), (A-24) + (B-34), (A-24) + (B-35), (A-24) + (B-36), (A-24) + (B-37), (A-24) + (B-38), (A-24) + (B-39), (A-24) + (B-40), (A-24) + (B-41), (A-24) + (B-42), (A-24) + (B-43), (A-24) + (B-44), (A-24) + (B-45), (A-24) + (B-46), (A-24) + (B-47), (A-24) + (B-48), (A-24) + (B-49), (A-24) + (B-50), (A-24) + (B-51), (A-24) + (B-52), (A-24) + (B-53), (A-24) + (B-54), (A-24) + (B-55), (A-24) + (B-56), (A-24) + (B-57), (A-24) + (B-58), (A-24) + (B-59), (A-24) + (B-60), (A-24) + (B-61), (A-24) + (B-62), (A-24) + (B-63), (A-24) + (B-64), (A-24) + (B-65), (A-24) + (B-66), (A-24) + (B-67), (A-24) + (B-68), (A-24) + (B-69), (A-24) + (B-70), (A-24) + (B-71), (A-24) + (B-72), (A-24) + (B-73). (A-24) + (B-74), (A-24) + (B-15), (A-24) + (B-76), (A-24) + (B-77), (A1-1) + (B-78), (A-24) + (B-79). (A-24) + (B-80).
(A-25) + (B-1), (A-25) + (B-2), (A-25) + (B-3), (A-25) + (B-4), (A-25) + (B-5), (A-25) + (B-6), (A-25) + (B-7), (A-25) + (B-8), (A-25) + (B-9), (A-25) + (B-10), (A-25) + (B-11), (A-25) + (B-12), (A-25) + (B-13), (A.25) + (B-14), (A-25) + (B-15), (A-25) + (B-16), (A-25) + (B-17), (A-25) + (B-18), (A-25) + (B-19). (A-25) + (B-20), (A-25) + (B-21), (A-25) + (B-22), (A-25) + (B-23), (A-25) + (B-24), (A-25) + (B-25), (A-25) + (B-26), (A-25) + (B-27), (A-25) + (B-28), (A-25) + (B-29), (A-25) + (B-30), (A-25) + (B-31), (A-25) + (B-32), (A-25) + (B-33), (A-25) + (B-34), (A-25) + (B-35), (A-25) + (B-36), (A-25) + (B-37), (A-25) + (B-38), (A-25) + (B-39), (A-25) + (B-40), (A-25) + (B-41), (A-25) + (B-42), (A-25) + (B-43), (A-25) + (B-44), (A-25) + (B-45), (A-25) + (B-46), (A-25) + (B-47), (A-25) + (B-48), (A-25) + (B-49), (A-25) + (B-50), (A-25) + (B-51), (A-25) + (B-52), (A-25) + (B-53), (A-25) + (B-54), (A-25) + (B-55), (A-25) + (B-56), (A-25) + (B-57), (A-25) + (B-58), (A-25) + (B-59), (A-25) + (B-60), (A-25) + (B-61), (A-25) + (B-62), (A-25) + (B-63), (A-25) + (B-64), (A-25) + (B-65), (A-25) + (B-66), (A-25) + (B-67), (A-25) + (B-68), (A-25) + (B-69), (A-25) + (B-70), (A-25) + (B-71), (A-25) + (8-72), (A-25) + (B-73), (A-25) + (B-74), (A-25) + (B-75), (A-25) + (B-76), (A-25) + (B-77), (AI-1) + (B-78), (A-25) + (B-79), (A-25) + (B-80).
(A-26) + (B-1), (A-26) + (B-2), (A-26) + (B-3), (A-26) + (B-4), (A-26) + (B-5), (A-26) + (B-6), (A-26) + (B-7), (A-26) + (B-8), (A-26) + (B-9), (A-26) + (B-10), (A-26) + (B-11), (A-26) + (B-12), (A-26) + (B-13), (A-26) + (B-14), (A-26) + (B-15), (A-26) + (B-16), (A-26) + (B-17), (A-26) + (B-18), (A-26) + (B-19), (A-26) + (B-20), (A-26) + (B-21), (A-26) + (B-22), (A-26) + (B-23), (A-26) + (B-24), (A-26) + (B-25), (A-26) + (8-26), (A-26) + (B-27), (A-26) + (B-28), (A-26) + (B-29), (A-26) + (B-30), (A-26) + (B-31), (A-26) + (B-32), (A-26) + (B-33), (A-26) + (B-34), (A-26) + (B-35), (A-26) + (B-36), (A-26) + (B-37), (A-26) + (B-38), (A-26) + (B-39), (A-26) + (B-40), (A-26) + (B-41), (A-26) + (B-42), (A-26) + (B-43), (A-26) + (B-44), (A-26) + (B-45), (A-26) + (B-46), (A-26) + (B-47), (A-26) + (B-48), (A-26) + (B-49), (A-26) + (B-50), (A-26) + (B-51), (A-26) + (B-52), (A-26) + (B-53), (A-26) + (B-54), (A-26) + (B-55), (A-26) + (B-56), (A-26) + (B-57), (A-26) + (B-58), (A-26) + (B-59), (A-26) + (B-60), (A-26) + (B-61), (A-26) + (B-62), (A-26) + (B-63), (A-26) + (B-64), (A-26) + (B-65), (A-26) + (B-66), (A-26) + (B-67), (A-26) + (B-68), (A-26) + (B-69), (A-28) + (B-70), (A-26) + (B-71), (A-26) + (B-72), (A-26) + (B-73), (A-26) + (B-74), (A-26) + (B-75), (A-26)+ (B-76), (A-26) + (B-77), (Al-1) + (B-78), (A-26) + (B-79), (A-26) + (B-80).
(A-27) + (B-1), (A-27) + (B-2), (A-27) + (B-3), (A-27) + (B-4), (A-27) + (B-5), (A-27) + (B-6), (A-27) + (B-7), (A-27) + (B-8), (A-27) + (B-9), (A-27) + (B-10), (A-27) + (B-11), (A-27) + (B-12), (A-27) + (B-13), (A-27) + (B-14), (A-27) + (B-15), (A-27) + (B-16), (A-27) + (B-17), (A-27) + (B-18), (A-27) + (B-19), (A-27) + (B-20), (A-27) + (B-21), (A-27) + (B-22), (A-27) + (B-23), (A-27) + (B-24), (A-27) + (B-25), (A-27) + (B-26), (A-27) + (B-27), (A-27) + (B-28), (A-27) + (B-29), (A-27) + (B-30), (A-27) + (B-31), (A-27) + (B-32), (A-27) + (B-33), (A-27) + (B-34), (A-27) + (B-35), (A-27) + (B-36), (A-27) + (B-37), (A-27) + (B-38), (A-27) + (B-39), (A-27) + (B-40), (A-27) + (B-41), (A-27) + (B-42), (A-27) + (B-43), (A-27) + (B-44), (A-27) + (B-45), (A-27) + (B-46), (A-27) + (B-47), (A-27) + (B-48), (A-27) + (B-49), (A-27) + (B-50), (A-27) + (B-51), (A-27) + (B-52), (A-27) + (B-53), (A-27) + (B-54), (A-27) + (B-55), (A-27) + (B-56), (A-27) + (B-57), (A-27) + (B-58), (A-27) + (B-59), (A-27) + (B-60), (A-27) + (B-61), (A-27) + (B-62), (A-27) + (B-63), (A-27) + (B-64), (A-27) + (B-65), (A-27) + (B-66), (A-27) + (B-67), (A-27) + (B-68), (A-27) + (B-69), (A-27) + (B-70), (A-27) + (B-71), (A-27) + (B-72), (A-27) + (B-73), (A-27) + (B-74), (A-27) + (B-75), (A-27) + (B-76), (A-27) + (B-77), (Al-1) + (B-78), (A-27) + (B-79), (A-27) + (B-80).
(A-28) + (B-1), (A-28) + (B-2), (A-28) + (B-3), (A-28) + (B-4), (A-28) + (B-5), (A-28) + (B-6), (A-28) + (B-7), (A-28) + (B-8), (A-28) + (B-9), (A-28) + (B-10), (A-28) + (B-11), (A-28) + (B-12), (A-28) + (B-13), (A-28) + (B-14), (A-28) + (B-15), (A-28) + (B-16), (A-28) + (B-17), (A-28) + (B-18), (A-28) + (B-19), (A-28) + (B-20), (A-28) + (B-21), (A-28) + (B-22), (A-28) + (B-23), (A-28) + (B-24), (A-28) + (B-25), (A-28) + (B-26), (A-28) + (B-27), (A-28) + (B-28), (A-28) + (B-29), (A-28) + (B-30), (A-28) + (B-31), (A-28) + (B-32), (A-28) + (B-33), (A-28) + (B-34), (A-28) + (B-35), (A-28) + (B-36), (A-28) + (B-37), (A-28) + (B-38), (A-28) + (B-39), (A-28) + (B-40), (A-28) + (B-41), (A-28) + (B-42), (A-28) + (B-43), (A-28) + (B-44), (A-28) + (B-45), (A-28) + (B-46), (A-28) + (B-47), (A-28) + (B-48), (A-28) + (B-49), (A-28) + (B-50), (A-28) + (B-51), (A-28) + (B-52), (A-28) + (B-53), (A-28) + (B-54), (A-28) + (B-55), (A-28) + (B-56), (A-28) + (B-57), (A-28) + (B-58), (A-28) + (B-59), (A-28) + (B-60), (A-28) + (B-61), (A-28) + (B-62), (A-28) + (B-63), (A-28) + (B-64), (A-28) + (B-65), (A-28) + (B-66), (A-28) + (B-67), (A-28) + (B-68), (A-28) + (B-69), (A-28) + (B-70), (A-28) + (B-71), (A-28) + (B-72), (A-28) + (B-73), (A-28) + (B-74), (A-28) + (B-75), (A-28) + (B-76), (A-28) + (B-77), (Al-1) + (B-78), (A-28) + (B-79), (A-28) + (B-80).
(A-29) + (B-1), (A-29) + (B-2), (A-29) + (B-3), (A-29) + (B-4), (A-29) + (B-5), (A-29) + (B-6), (A-29) + (B-7), (A-29) + (B-8), (A-29) + (B-9), (A-29) + (B-10), (A-29) + (B-11), (A-29) + (B-12), (A-29) + (B-13), (A-29) + (B-14), (A-29) + (B-15), (A-29) + (B-16), (A-29) + (B-17), (A-29) + (B-18), (A-29) + (B-19), (A-29) + (B-20), (A-29) + (B-21), (A-29) + (B-22), (A-29) + (B-23), (A-29) + (B-24), (A-29) + (B-25), (A-29) + (B-26), (A-29) + (B-27), (A-29) + (B-28), (A-29) + (B-29), (A-29) + (B-30), (A-29) + (B-31), (A-29) + (B-32), (A-29) + (B-33), (A-29) + (B-34), (A-29) + (B-35), (A-29) + (B-36), (A-29) + (B-37), (A-29) + (B-38), (A-29) + (B-39), (A-29) + (B-40), (A-29) + (B-41), (A-29) + (B-42), (A-29) + (B-43), (A-29) + (B-44), (A-29) + (B-45), (A-29) + (B-46), (A-29) + (B-47), (A-29) + (B-48), (A-29) + (B-49), (A-29) + (B-50), (A-29) + (B-51), (A-29) + (B-52), (A-29) + (B-53), (A-29) + (B-54), (A-29) + (B-55), (A-29) + (B-56), (A-29) + (B-57), (A-29) + (B-68), (A-29) + (B-59), (A-29) + (B-60), (A-29) + (B-61), (A-29) + (B-62), (A-29) + (B-63), (A-29) + (B-64), (A-29) + (B-65), (A-29) + (B-66), (A-29) + (B-67), (A-29) + (B-68), (A-29) + (B-69), (A-29) + (B-70), (A-29) + (B-71), (A-29) + (B-72), (A-29) + (B-73), (A-29) + (B-74), (A-29) + (B-75), (A-29) + (B-76), (A-29) + (B-77), (AI-1) + (B-78), (A-29) + (B-79), (A-29) + (B-80).
(A-30) + (B-1), (A-30) + (B-2), (A-30) + (B-3), (A-30) + (B-4), (A-30) + (B-5), (A-30) + (B-6), (A-30) + (B-7), (A-30) + (B-8), (A-30) + (B-9), (A-30) + (B-10), (A-30) + (B-11), (A-30) + (B-12), (A-30) + (B-13), (A-30) + (B-14), (A-30) + (B-15), (A-30) + (B-16), (A-30) + (B-17), (A-30) + (B-18), (A-30) + (B-19), (A-30) + (B-20), (A-30) + (B-21), (A-30) + (B-22), (A-30) + (B-23), (A-30) + (B-24), (A-30) + (B-25), (A-30) + (B-26), (A-30) + (B-27), (A-30) + (B-28), (A-30) + (B-29), (A-30) + (B-30), (A-30) + (B-31), (A-30) + (B-32), (A-30) + (B-33), (A-30) + (B-34), (A-30) + (B-35), (A-30) + (B-36), (A-30) + (B-37), (A-30) + (B-38), (A-30) + (B-39), (A-30) + (B-40), (A-30) + (B-41), (A-30) + (B-42), (A-30) + (B-43), (A-30) + (B-44), (A-30) + (B-45), (A-30) + (B-46), (A-30) + (B-47), (A-30) + (B-48), (A-30) + (B-49), (A-30) + (B-50), (A-30) + (B-51), (A-30) + (B-52), (A-30) + (B-53), (A-30) + (B-54), (A-30) + (B-55), (A-30) + (B-56), (A-30) + (B-57), (A-30) + (B-58), (A-30) + (B-59), (A-30) + (B-60), (A-30) + (B-61), (A-30) + (B-62), (A-30) + (B-63), (A-30) + (B-64), (A-30) + (B-65), (A-30) + (B-66), (A-30) + (B-67), (A-30) + (B-68), (A-30) + (B-69), (A-30) + (B-70), (A-30) + (B-71), (A-30) + (B-72), (A-30) + (B-73), (A-30) + (B-74), (A-30) + (B-75), (A-30) + (B-76), (A-30) + (B-77), (Al-1) + (B-78), (A-30) + (B-79), (A-30) + (B-80),
(A-31) + (B-1), (A-31) + (B-2), (A-31) + (B-3), (A-31) + (B-4), (A-31) + (B-5), (A-31) + (B-6), (A-31) + (B-7), (A-31) + (B-8), (A-31) + (B-9), (A-31) + (B-10), (A-31) + (B-11), (A-31) + (B-12), (A-31) + (B-13), (A-31) + (B-14), (A-31) + (B-15), (A-31) + (B-16), (A-31) + (B-17), (A-31) + (B-18), (A-31) + (B-19), (A-31) + (B-20), (A-31) + (B-21), (A-31) + (B-22), (A-31) + (B-23), (A-31) + (B-24), (A-31) + (B-25), (A-31) + (B-26), (A-31) + (B-27), (A-31) + (B-28), (A-31) + (B-29), (A-31) + (B-30), (A-31) + (B-31), (A-31) + (B-32), (A-31) + (B-33), (A-31) + (B-34), (A-31) + (B-35), (A-31) + (B-36), (A-31) + (B-37), (A-31) + (B-38), (A-31) + (B-39), (A-31) + (B-40), (A-31) + (B-41), (A-31) + (B-42), (A-31) + (B-43), (A-31) + (B-44), (A-31) + (B-45), (A-31) + (B-46), (A-31) + (B-47), (A-31) + (B-48), (A-31) + (B-49), (A-31) + (B-50), (A-31) + (B-51), (A-31) + (B-52), (A-31) + (B-53), (A-31) + (B-54), (A-31) + (B-55), (A-31) + (B-56), (A-31) + (B-57), (A-31) + (B-68), (A-31) + (B-59), (A-31) + (9-60), (A-31) + (B-61), (A-31) + (B-62), (A-31) + (B-63), (A-31) + (B-64), (A-31) + (B-65), (A-31) + (B-66), (A-31) + (B-67), (A-31) + (B-68), (A-31) + (B-69), (A-31) + (B-70), (A-31) + (B-71), (A-31) + (B-72), (A-31) + (B-73), (A-31) + (B-74), (A-31) + (B-75), (A-31) + (8-76), (A-31) + (B-77), (Al-1) + (B-78), (A-31) + (B-79), (A-31) + (B-80).
(A-32) + (B-1), (A-32) + (B-2), (A-32) + (B-3), (A-32) + (B-4), (A-32) + (B-5), (A-32) + (B-6), (A-32) + (B-7), (A-32) + (B-8), (A-32) + (B-9), (A-32) + (B-10), (A-32) + (B-11), (A-32) + (B-12), (A-32) + (B-13), (A-32) + (B-14), (A-32) + (B-15), (A-32) + (B-16), (A-32) + (B-17), (A-32) + (B-18), (A-32) + (B-19), (A-32) + (B-20), (A-32) + (B-21), (A-32) + (B-22), (A-32) + (B-23), (A-32) + (B-24), (A-32) + (B-25), (A-32) + (B-26), (A-32) + (9-27), (A-32) + (B-28), (A-32) + (B-29), (A-32) + (B-30), (A-32) + (B-31), (A-32) + (B-32), (A-32) + (B-33), (A-32) + (B-34), (A-32) + (B-35), (A-32) + (B-36), (A-32) + (B-37), (A-32) + (B-38), (A-32) + (B-39), (A-32) + (B-40), (A-32) + (B-41), (A-32) + (B-42), (A-32) + (B-43), (A-32) + (B-44), (A-32) + (B-45), (A-32) + (B-46), (A-32) + (B-47), (A-32) + (B-48), (A-32) + (B-49), (A-32) + (B-50), (A-32) + (B-51), (A-32) + (B-52), (A-32) + (B-53), (A-32) + (B-54), (A-32) + (B-55), (A-32) + (B-56), (A-32) + (B-57), (A-32) + (B-58), (A-32) + (B-59), (A-32) + (B-60), (A-32) + (B-61), (A-32) + (B-62), (A-32) + (B-63), (A-32) + (B-64), (A-32) + (B-65), (A-32) + (B-66), (A-32) + (B-67), (A-32) + (B-68), (A-32) + (B-69), (A-32) + (B-70), (A-32) + (B-71), (A-32) + (B-72), (A-32) + (B-73), (A-32) + (B-74), (A-32) + (B-75), (A-32) + (B-76), (A-32) + (B-77), (Al-1) + (B-78), (A-32) + (B-79), (A-32) + (B-80).
(A-33) + (B-1), (A-33) + (B-2), (A-33) + (B-3), (A-33) + (B-4), (A-33) + (B-5), (A-33) + (B-6), (A-33) + (B-7), (A-33) + (B-8), (A-33) + (B-9), (A-33) + (B-10), (A-33) + (B-11), (A-33) + (B-12), (A-33) + (B-13), (A-33) + (B-14), (A-33) + (B-15), (A-33) + (B-16), (A-33) + (B-17), (A-33) + (B-18), (A-33) + (B-19), (A-33) + (B-20), (A-33) + (B-21), (A-33) + (B-22), (A-33) + (B-23), (A-33) + (B-24), (A-33) + (B-25), (A-33) + (B-26), (A-33) + (B-27), (A-33) + (B-28), (A-33) + (B-29), (A-33) + (B-30), (A-33) + (B-31), (A-33) + (B-32), (A-33) + (B-33), (A-33) + (B-34), (A-33) + (B-35), (A-33) + (B-36), (A-33) + (B-37), (A-33) + (B-38), (A-33) + (B-39), (A-33) + (B-40), (A-33) + (B-41), (A-33) + (B-42), (A-33) + (B-43), (A-33) + (B-44), (A-33) + (B-45), (A-33) + (B-46), (A-33) + (B-47), (A-33) + (B-48), (A-33) + (B-49), (A-33) + (B-50), (A-33) + (8-51), (A-33) + (B-52), (A-33) + (B-53), (A-33) + (B-54), (A-33) + (B-55), (A-33) + (B-56), (A-33) + (B-57), (A-33) + (B-58), (A-33) + (B-59), (A-33) + (B-60), (A-33) + (B-61), (A-33) + (B-62), (A-33) + (B-63), (A-33) + (B-64), (A-33) + (B-65), (A-33) + (B-66), (A-33) + (8-67), (A-33) + (B-68), (A-33) + (B-69), (A-33) + (B-70), (A-33) + (B-71), (A-33) + (B-72), (A-33) + (B-73), (A-33) + (B-74), (A-33) + (B-75), (A-33) + (B-76), (A-33) + (B-77), (AI-1) + (B-78), (A-33) + (B-79), (A-33) + (B-80).
(A-34) + (B-1). (A-34) + (B-2), (A-34) + (B-3), (A-34) + (B-4), (A-34) + (B-5), (A-34) + (B-6), (A-34) + (B-7), (A-34) + (B-8), (A-34) + (B-9), (A-34) + (B-10), (A-34) + (B-11), (A-34) + (B-12), (A-34) + (B-13), (A-34) + (B-14), (A-34) + (B-15), (A-34) + (B-16), (A-34) + (B-17), (A-34) + (B-18), (A-34) + (B-19), (A-34) + (B-20), (A-34) + (B-21), (A-34) + (B-22), (A-34) + (B-23), (A-34) + (B-24), (A-34) + (B-25), (A-34) + (B-26), (A-34) + (B-27), (A-34) + (B-28), (A-34) + (B-29), (A-34) + (B-30), (A-34) + (B-31), (A-34) + (B-32), (A-34) + (B-33), (A-34) + (B-34), (A-34) + (B-35), (A-34) + (B-36), (A-34) + (B-37), (A-34) + (B-38), (A-34) + (B-39), (A-34) + (B-40), (A-34) + (B-41), (A-34) + (B-42), (A-34) + (B-43), (A-34) + (B-44), (A-34) + (B-45), (A-34) + (B-46), (A-34) + (B-47), (A-34) + (B-48), (A-34) + (B-49), (A-34) + (8-50), (A-34) + (B-51), (A-34) + (B-52), (A-34) + (B-53), (A-34) + (B-54), (A-34) + (B-55), (A-34) + (B-56), (A-34) + (B-57), (A-34) + (B-58), (A-34) + (B-59), (A-34) + (B-60), (A-34) + (B-61), (A-34) + (B-62), (A-34) + (B-63), (A-34) + (B-64), (A-34) + (B-65), (A-34) + (B-66), (A-34) + (B-67), (A-34) + (B-68), (A-34) + (B-69), (A-34) + (B-70), (A-34) + (B-71), (A-34) + (B-72), (A-34) + (B-73), (A-34) + (B-74), (A-34) + (B-75), (A-34) + (B-76), (A-34) + (B-77), (AI-1) + (B-78), (A-34) + (B-79), (A-34) + (B-80).
(A-36) + (B-1), (A-35) + (B-2), (A-35) + (B-3), (A-35) + (B-4), (A-35) + (B-5), (A-35) + (B-6), (A-35) + (B-7), (A-35) + (B-8), (A-35) + (B-9), (A-35) + (B-10), (A-35) + (B-11), (A-35) + (B-12), (A-35) + (B-13), (A-35) + (B-14), (A-35) + (B-15), (A-35) + (B-16), (A-35) + (B-17), (A-35) + (B-18), (A-35) + (B-19), (A-35) + (B-20), (A-35) + (B-21), (A-35) + (B-22), (A-35) + (B-23), (A-35) + (B-24), (A-35) + (B-25), (A-35) + (B-26), (A-35) + (B-27), (A-35) + (B-28), (A-35) + (B-29), (A-35) + (B-30), (A-35) + (B-31), (A-35) + (B-32), (A-35) + (B-33), (A-35) + (B-34), (A-35) + (B-35), (A-35) + (B-36), (A-35) + (B-37), (A-35) + (B-38), (A-35) + (B-39), (A-35) + (B-40), (A-35) + (B-41), (A-35) + (B-42), (A-35) + (B-43), (A-35) + (B-44), (A-35) + (B-45), (A-35) + (B-46), (A-35) + (B-47), (A-35) + (B-48), (A-35) + (B-49), (A-35) + (B-50), (A-35) + (B-51), (A-35) + (B-52), (A-35) + (B-53), (A-35) + (B-64), (A-35) + (B-55), (A-35) + (B-56), (A-35) + (B-57), (A-35) + (B-58), (A-35) + (B-59), (A-35) + (B-60), (A-35) + (B-61), (A-35) + (B-62), (A-35) + (B-63), (A-35) + (B-64), (A-35) + (B-65), (A-35) + (B-66), (A-35) + (B-67), (A-35) + (B-68), (A-35) + (B-69), (A-35) + (B-70), (A-35) + (B-71), (A-35) + (B-72), (A-35) + (B-73), (A-35) + (B-74), (A-35) + (B-75), (A-35) + (B-76), (A-35) + (B-77), (AI-1) + (B-78), (A-35) + (B-79), (A-35) + (B-80).
(A-36) + (B-1), (A-36) + (B-2), (A-36) + (B-3), (A-36) + (B-4), (A-36) + (B-5), (A-36) + (B-6), (A-36) + (B-7), (A-36) + (B-8), (A-36) + (B-9), (A-36) + (B-10), (A-36) + (B-11), (A-36) + (B-12), (A-36) + (B-13), (A-36) + (B-14), (A-36) + (B-15), (A-36) + (B-16), (A-36) + (B-17), (A-36) + (B-18), (A-36) + (B-19), (A-36) + (B-20), (A-36) + (B-21), (A-36) + (B-22), (A-36) + (B-23), (A-36) + (B-24), (A-36) + (B-25), (A-36) + (B-26), (A-36) + (B-27), (A-36) + (B-28), (A-36) + (B-29), (A-36) + (B-30), (A-36) + (B-31), (A-36) + (B-32), (A-36) + (B-33), (A-36) + (B-34), (A-36) + (B-35), (A-36) + (B-36), (A-36) + (B-37), (A-36) + (B-38), (A-36) + (B-39), (A-36) + (B-40), (A-36) + (B-41), (A-36) + (B-42), (A-36) + (B-43), (A-36) + (B-44), (A-36) + (B-45), (A-36) + (B-46), (A-36) + (B-47), (A-36) + (B-48), (A-36) + (B-49), (A-36) + (B-50), (A-36) + (B-51), (A-36) + (B-52), (A-36) + (B-53), (A-36) + (B-54), (A-36) + (B-55), (A-36) + (B-56), (A-36) + (B-57), (A-36) + (B-58), (A-36) + (B-59), (A-36) + (B-60), (A-36) + (B-61), (A-36) + (B-62), (A-36) + (B-63), (A-36) + (B-64), (A-36) + (B-65), (A-36) + (B-66), (A-36) + (B-67), (A-36) + (B-68), (A-36) + (B-69), (A-36) + (B-70), (A-36) + (B-71), (A-36) + (B-72), (A-36) + (B-73), (A-36) + (B-74), (A-36) + (B-76), (A-36) + (B-76), (A-36) + (B-77), (A1-1) + (B-78), (A-36) + (B-79), (A-36) + (B-80),
(A-37) + (B-1), (A-37) + (B-2), (A-37) + (B-3), (A-37) + (B-4), (A-37) + (B-5), (A-37) + (B-6), (A-37) + (B-7), (A-37) + (B-8), (A-37) + (B-9), (A-37) + (B-10), (A-37) + (B-11), (A-37) + (B-12), (A-37) + (B-13), (A-37) + (B-14), (A-37) + (B-15), (A-37) + (B-16), (A-37) + (B-17), (A-37) + (B-18), (A-37) + (B-19), (A-37) + (B-20), (A-37) + (B-21), (A-37) + (B-22), (A-37) + (B-23), (A-37) + (B-24), (A-37) + (B-25), (A-37) + (B-26), (A-37) + (B-27), (A-37) + (B-28), (A-37) + (B-29), (A-37) + (B-30), (A-37) + (B-31), (A-37) + (B-32), (A-37) + (B-33), (A-37) + (B-34), (A-37) + (B-35), (A-37) + (B-36), (A-37) + (B-37), (A-37) + (B-38), (A-37) + (B-39), (A-37) + (B-40), (A-37) + (B-41), (A-37) + (B-42), (A-37) + (B-43), (A-37) + (B-44), (A-37) + (B-45), (A-37) + (B-46), (A-37) + (B-47), (A-37) + (B-48), (A-37) + (B-49), (A-37) + (B-50), (A-37) + (B-51), (A-37) + (B-52), (A-37) + (B-53), (A-37) + (B-54), (A-37) + (B-55), (A-37) + (B-56), (A-37) + (B-57), (A-37) + (B-58), (A-37) + (B-59), (A-37) + (B-60), (A-37) + (B-61), (A-37) + (B-62), (A-37) + (B-63), (A-37) + (B-64), (A-37) + (B-65), (A-37) + (B-66), (A-37) + (B-67), (A-37) + (B-68), (A-37) + (B-69), (A-37) + (B-70), (A-37) + (B-71), (A-37) + (B-72), (A-37) + (B-73), (A-37) + (B-74), (A-37) + (B-75), (A-37) + (B-76), (A-37) + (B-77), (AI-1) + (B-78), (A-37) + (B-79), (A-37) + (B-80).
(A-38) + (B-1), (A-38) + (B-2), (A-38) + (B-3), (A-38) + (B-4), (A-38) + (B-5), (A-38) + (B-6), (A-38) + (B-7), (A-38) + (B-8), (A-38) + (8-9), (A-38) + (B-10), (A-38) + (B-11), (A-38) + (B-12), (A-38) + (B-13), (A-38) + (B-14), (A-38) + (B-15), (A-38) + (B-16), (A-38) + (B-17), (A-38) + (B-18), (A-38) + (B-19), (A-38) + (B-20), (A-38) + (B-21), (A-38) + (B-22), (A-38) + (B-23), (A-38) + (B-24), (A-38) + (B-25), (A-38) + (B-26), (A-38) + (B-27), (A-38) + (B-28), (A-38) + (B-29), (A-38) + (B-30), (A-38) + (B-31), (A-38) + (B-32), (A-38) + (B-33), (A-38) + (B-34), (A-38) + (B-35), (A-38) + (B-36), (A-38) + (B-37), (A-38) + (B-38), (A-38) + (B-39), (A-38) + (B-40), (A-38) + (B-41), (A-38) + (B-42), (A-38) + (B-43), (A-38) + (B-44), (A-38) + (B-46), (A-38) + (B-46), (A-38) + (B-47), (A-38) + (B-48), (A-38) + (B-49), (A-38) + (B-50), (A-38) + (B-51), (A-38) + (B-52), (A-38) + (B-53), (A-38) + (B-54), (A-38) + (B-55), (A-38) + (B-56), (A-38) + (B-57), (A-38) + (B-58), (A-38) + (B-59), (A-38) + (B-60), (A-38) + (B-61), (A-38) + (B-62), (A-38) + (B-63), (A-38) + (B-64), (A-38) + (8-65), (A-38) + (B-66), (A-38) + (B-67), (A-38) + (B-68), (A-38) + (B-69), (A-38) + (B-70), (A-38) + (B-71), (A-38) + (B-72), (A-38) + (B-73), (A-38) + (B-74), (A-38) + (B-75), (A-38) + (B-76), (A-38) + (B-77), (Al-1) + (B-78), (A-38) + (B-79), (A-38) + (B-80).
(A-39) + (B-1), (A-39) + (B-2), (A-39) + (B-3), (A-39) + (B-4), (A-39) + (B-5), (A-39) + (B-6), (A-39) + (B-7), (A-39) + (B-8), (A-39) + (B-9), (A-39) + (B-10), (A-39) + (B-11), (A-39) + (B-12), (A-39) + (B-13), (A-39) + (B-14), (A-39) + (B-15), (A-39) + (B-16), (A-39) + (B-17), (A-39) + (B-18), (A-39) + (B-19), (A-39) + (B-20), (A-39) + (B-21), (A-39) + (B-22), (A-39) + (B.23), (A-39) + (B-24), (A-39) + (B-25), (A-39) + (B-26), (A-39) + (B-27), (A-39) + (B-28), (A-39) + (B-29), (A-39) + (B-30), (A-39) + (B-31), (A-39) + (B-32), (A-39) + (B-33), (A-39) + (B-34), (A-39) + (B-35), (A-39) + (B-36), (A-39) + (B-37), (A-39) + (B-38), (A-39) + (B-39), (A-39) + (B-40), (A-39) + (B-41), (A-39) + (B-42), (A-39) + (B-43), (A-39) + (B-44), (A-39) + (B-45), (A-39) + (B-46), (A-39) + (B-47), (A-39) + (B-48), (A-39) + (B-49), (A-39) + (B-50), (A-39) + (B-51), (A-39) + (B-52), (A-39) + (B-53), (A-39) + (B-54), (A-39) + (B-55), (A-39) + (B-56), (A-39) + (B-57), (A-39) + (B-68), (A-39) + (B-59), (A-39) + (B-60), (A-39) + (B-61), (A-39) + (B-62), (A-39) + (B-83), (A-39) + (B-64), (A-39) + (B-66), (A-39) + (B-66), (A-39) + (B-67), (A-39) + (B-68), (A-39) + (B-69), (A-39) + (B-70), (A-39) + (B-71), (A-39) + (B-72), (A-39) + (B-73), (A-39) + (B-74), (A-39) + (B-75), (A-39) + (B-76), (A-39) + (B-77), (AI-1) + (B-78), (A-39) + (B-79), (A-39) + (B-80).
(A-40) + (B-1), (A-40) + (B-2), (A-40) + (B-3), (A-40) + (B-4), (A-40) + (B-5), (A-40) + (B-6), (A-40) + (B-7), (A-40) + (B-8), (A-40) + (B-9), (A-40) + (B-10), (A-40) + (B-11), (A-40) + (B-12), (A-40) + (B-13), (A-40) + (B-14), (A-40) + (B-15), (A-40) + (B-16), (A-40) + (B-17), (A-40) + (B-18), (A-40) + (B-19), (A-40) + (B-20), (A-40) + (B-21), (A-40) + (B-22), (A-40) + (B-23), (A-40) + (B-24), (A-40) + (B-25), (A-40) + (B-26), (A-40) + (B-27), (A-40) + (B-28), (A-40) + (B-29), (A-40) + (B-30), (A-40) + (B-31), (A-40) + (B-32), (A-40) + (B-33), (A-40) + (B-34), (A-40) + (B-35), (A-40) + (B-36), (A-40) + (B-37), (A-40) + (B-38), (A-40) + (B-39), (A-40) + (B-40), (A-40) + (B-41), (A-40) + (B-42), (A-40) + (B-43), (A-40) + (B-44), (A-40) + (B-45), (A-40) + (B-46), (A-40) + (B-47), (A-40) + (B-48), (A-40) + (B-49), (A-40) + (B-50), (A-40) + (B-51), (A-40) + (B-52), (A-40) + (B-53), (A-40) + (B-54), (A-40) + (B-55), (A-40) + (B-56), (A-40) + (B-57), (A-40) + (B-58), (A-40) + (B-59), (A-40) + (B-60), (A-40) + (B-61), (A-40) + (B-62), (A-40) + (B-63), (A-40) + (9-64), (A-40) + (B-65), (A-40) + (B-66), (A-40) + (B-67), (A-40) + (B-68), (A-40) + (B-69), (A-40) + (B-70), (A-40) + (B-71), (A-40) + (B-72), (A-40) + (B-73), (A-40) + (B-74), (A-40) + (B-75), (A-40) + (B-76), (A-40) + (B-77), (AI-1) + (B-78), (A-40) + (B-79), (A-40) + (B-80),
(A-41) + (B-1), (A-41) + (B-2), (A-41) + (B-3), (A-41) + (B-4), (A-41) + (B-5), (A-41) + (B-6), (A-41) + (B-7), (A-41) + (B-8), (A-41) + (B-9), (A-41) + (B-10), (A-41) + (8-11), (A-41) + (B-12), (A-41) + (B-13), (A-41) + (B-14), (A-41) + (B-15), (A-41) + (B-16), (A-41) + (B-17), (A-41) + (B-18), (A-41) + (B-19), (A-41) + (B-20), (A-41) + (B-21), (A-41) + (B-22), (A-41) + (B-23), (A-41) + (B-24), (A-41) + (B-26), (A-41) + (B-26), (A-41) + (B-27), (A-41) + (B-28), (A-41) + (B-29), (A-41) + (B-30), (A-41) + (B-31), (A-41) + (B-32), (A-41) + (B-33), (A-41) + (B-34), (A-41) + (B-35), (A-41) + (B-36), (A-41) + (B-37), (A-41) + (B-38), (A-41) + (B-39), (A-41) + (B-40), (A-41) + (B-41), (A-41) + (B-42), (A-41) + (B-43), (A-41) + (B-44), (A-41) + (B-45), (A-41) + (B-46), (A-41) + (B-47), (A-41) + (B-48), (A-41) + (B-49), (A-41) + (B-50), (A-41) + (B-51), (A-41) + (B-52), (A-41) + (B-53), (A-41) + (B-54), (A-41) + (B-55), (A-41) + (B-56), (A-41) + (B-57), (A-41) + (B-58), (A-41) + (B-59), (A-41) + (B-60), (A-41) + (B-61), (A-41) + (B-62), (A-41) + (B-63), (A-41) + (B-64), (A-41) + (B-65), (A-41) + (B-66), (A-41) + (B-67), (A-41) + (B-68), (A-41) + (B-69), (A-41) + (B-70), (A-41) + (B-71), (A-41) + (B-72), (A-41) + (B-73), (A-41) + (B-74), (A-41) + (B-75), (A-41) + (B-76), (A-41) + (B-77), (Al-1) + (B-78), (A-41) + (B-79), (A-41) + (B-80).
(A-42) + (B-1), (A-42) + (B-2), (A-42) + (B-3), (A-42) + (B-4), (A-42) + (B-5), (A-42) + (B-6), (A-42) + (B-7), (A-42) + (B-8), (A-42) + (B-9), (A-42) + (B-10), (A-42) + (B-11), (A-42) + (B-12), (A-42) + (B-13), (A-42) + (B-14), (A-42) + (B-15), (A-42) + (B-16), (A-42) + (B-17), (A-42) + (B-18), (A-42) + (B-19), (A-42) + (B-20), (A-42) + (B-21), (A-42) + (B-22), (A-42) + (B-23), (A-42) + (B-24), (A-42) + (B-25), (A-42) + (B-26), (A-42) + (B-27), (A-42) + (B-28), (A-42) + (B-29), (A-42) + (B-30), (A.42) + (B-31), (A-42) + (B-32), (A-42) + (B-33), (A-42) + (B-34), (A-42) + (B-35), (A-42) + (B-36), (A-42) + (B-37), (A-42) + (B-38), (A-42) + (B-39), (A-42) + (B-40), (A-42) + (B-41), (A-42) + (B-42), (A-42) + (B-43), (A-42) + (B-44), (A-42) + (B-45), (A-42) + (B-46), (A-42) + (B-47), (A-42) + (B-48), (A-42) + (B-49), (A-42) + (B-50), (A-42) + (B-51), (A-42) + (B-52), (A-42) + (B-53), (A-42) + (B-54), (A-42) + (B-65), (A-42) + (B-56), (A-42) + (B-57), (A-42) + (B-58), (A-42) + (B-59), (A-42) + (B-60), (A-42) + (B-61), (A-42) + (B-62), (A-42) + (B-63), (A-42) + (B-64), (A-42) + (B-65), (A-42) + (B-66), (A-42) + (B-67), (A-42) + (B-68), (A-42) + (B-69), (A-42) + (B-70), (A-42) + (B-71), (A-42) + (B-72), (A-42) + (B-73), (A-42) + (B-74), (A-42) + (B-75), (A-42) + (B-76), (A-42) + (B-77), (Al-1) + (B-78), (A-42) + (B-79), (A-42) + (B-80).
(A-43) + (B-1), (A-43) + (B-2), (A-43) + (B-3), (A-43) + (B-4), (A-43) + (B-5), (A-43) + (B-6), (A-43) + (B-7), (A-43) + (B-8), (A-43) + (B-9), (A-43) + (B-10), (A-43) + (B-11), (A-43) + (B-12), (A-43) + (B-13), (A-43) + (B-14), (A-43) + (B-15), (A-43) + (B-16), (A-43) + (B-17), (A-43) + (B-18), (A-43) + (B-19), (A-43) + (B-20), (A-43) + (B-21), (A-43) + (B-22), (A-43) + (B-23), (A-43) + (B-24), (A-43) + (B-25), (A-43) + (B-26), (A-43) + (B-27), (A-43) + (B-28), (A-43) + (B-29), (A-43) + (B-30), (A-43) + (B-31), (A-43) + (B-32), (A-43) + (B-33), (A-43) + (B-34), (A-43) + (B-35), (A-43) + (B-36), (A-43) + (B-37), (A-43) + (B-38), (A-43) + (B-39), (A-43) + (B-40), (A-43) + (B-41), (A-43) + (B-42), (A-43) + (B-43), (A-43) + (B-44), (A-43) + (B-45), (A-43) + (B-46), (A-43) + (B-47), (A-43) + (B-48), (A-43) + (B-49), (A-43) + (B-50), (A-43) + (B-51), (A-43) + (B-52), (A-43) + (B-53), (A-43) + (B-54), (A-43) + (B-55), (A-43) + (B-56), (A-43) + (B-57), (A-43) + (9-58), (A-43) + (B-59), (A-43) + (B-60), (A-43) + (B-61), (A-43) + (B-62), (A-43) + (B-63), (A-43) + (B-64), (A-43) + (B-65), (A-43) + (B-66), (A-43) + (B-67), (A-43) + (B-68), (A-43) + (B-69), (A-43) + (B-70), (A-43) + (B-71), (A-43) + (B-72), (A-43) + (B-73), (A-43) + (B-74), (A-43) + (B-75), (A-43) + (B-76), (A-43) + (B-77), (AI-1) + (B-78), (A-43) + (B-79), (A-43) + (B-80).
(A-44) + (B-1), (A-44) + (B-2), (A-44) + (B-3), (A-44) + (B-4), (A-44) + (B-5), (A-44) + (B-6), (A-44) + (B-7), (A-44) + (B-8), (A-44) + (B-9), (A-44) + (B-10), (A-44) + (B-11), (A-44) + (B-12), (A-44) + (B-13), (A-44) + (B-14), (A-44) + (B-15), (A-44) + (B-16), (A-44) + (B-17), (A-44) + (B-18), (A-44) + (B-19), (A-44) + (B-20), (A-44) + (B-21), (A-44) + (B-22), (A-44) + (B-23), (A-44) + (B-24), (A-44) + (B-25), (A-44) + (B-26), (A-44) + (B-27), (A-44) + (B-28), (A-44) + (B-29), (A-44) + (B-30), (A-44) + (B-31), (A-44) + (B-32), (A-44) + (B-33), (A-44) + (B-34), (A-44) + (B-35), (A-44) + (B-36), (A-44) + (B-37), (A-44) + (B-38), (A-44) + (B-39), (A-44) + (B-40), (A-44) + (B-41), (A-44) + (B-42), (A-44) + (B-43), (A-44) + (B-44), (A-44) + (B-45), (A-44) + (B-46), (A-44) + (B-47), (A-44) + (B-48), (A-44) + (B-49), (A-44) + (B-50), (A-44) + (B-51), (A-44) + (B-52), (A-44) + (B-53), (A-44) + (B-54), (A-44) + (B-55), (A-44) + (B-56), (A-44) + (B-57), (A-44) + (B-58), (A-44) + (B-59), (A-44) + (B-60), (A-44) + (B-61), (A-44) + (B-62), (A-44) + (B-63), (A-44) + (B-64), (A-44) + (B-65), (A-44) + (B-66), (A-44) + (B-67), (A-44) + (B-68), (A-44) + (B-69), (A-44) + (B-70), (A-44) + (B-71), (A-44) + (B-72), (A-44) + (B-73), (A-44) + (B-74), (A-44) + (B-75), (A-44) + (B-76), (A-44) + (B-77), (Al-1) + (B-78), (A-44) + (B-79), (A-44) + (B-80).
(A-45) + (B-1), (A-45) + (B-2), (A-45) + (B-3), (A-45) + (B-4), (A-45) + (B-5), (A-45) + (B-6), (A-45) + (B-7), (A-45) + (B-8), (A-45) + (B-9), (A-45) + (B-10), (A-45) + (B-11), (A-45) + (B-12), (A-45) + (B-13), (A-45) + (B-14), (A-45) + (B-15), (A-45) + (B-16), (A-45) + (B-17), (A-45) + (B-18), (A-45) + (B-19), (A-45) + (B-20), (A-45) + (B-21), (A-45) + (B-22), (A-45) + (B-23), (A-45) + (B-24), (A-45) + (B-25), (A-45) + (B-26), (A-45) + (B-27), (A-45) + (B-28), (A-45) + (B-29), (A-45) + (B-30), (A-45) + (B-31), (A-45) + (B-32), (A-45) + (B-33), (A-45) + (B-34), (A-45) + (B-35), (A-45) + (B-36), (A-45) + (B-37), (A-45) + (B-38), (A-45) + (B-39), (A-45) + (B-40), (A-45) + (B-41), (A-45) + (B-42), (A-45) + (B-43), (A-45) + (B-44), (A-45) + (B-45), (A-45) + (B-46), (A-45) + (B-47), (A-45) + (B-48), (A-45) + (B-49), (A-45) + (B-50), (A-45) + (B-51), (A-45) + (B-52), (A-45) + (B-53), (A-45) + (B-54), (A-45) + (B-55), (A-45) + (B-56), (A-45) + (B-67), (A-45) + (B-58), (A-45) + (B-59), (A-45) + (B-60), (A-45) + (B-61), (A-45) + (B-62), (A-45) + (B-63), (A-45) + (B-64), (A-45) + (B-65), (A-45) + (B-66), (A-45) + (B-67), (A-45) + (B-68), (A-45) + (B-69), (A-45) + (B-70), (A-45) + (B-71), (A-45) + (B-72), (A-45) + (B-73), (A-45) + (B-74), (A-45) + (B-75), (A-45) + (B-76), (A-45) + (B-77), (AI-1) + (B-78), (A-45) + (B-79), (A-45) + (B-80).
(A-46) + (B-1), (A-46) + (B-2), (A-46) + (B-3), (A-46) + (B-4), (A-46) + (B-5), (A-46) + (B-6), (A-46) + (B-7), (A-46) + (B-8), (A-46) + (B-9), (A-46) + (B-10), (A-46) + (B-11), (A-46) + (B-12), (A-46) + (B-13), (A-46) + (B-14), (A-46) + (B-15), (A-46) + (B-16), (A-46) + (B-17), (A-46) + (B-18), (A-46) + (B-19), (A-46) + (B-20), (A-46) + (B-21), (A-46) + (B-22), (A-46) + (B-23), (A-46) + (B-24), (A-46) + (B-25), (A-46) + (B-26), (A-46) + (B-27), (A-46) + (B-28), (A-46) + (B-29), (A-46) + (B-30), (A-46) + (B-31), (A-46) + (B-32), (A-46) + (B-33), (A-46) + (B-34), (A-46) + (B-35), (A-46) + (B-36), (A-46) + (B-37), (A-46) + (B-38), (A-46) + (B-39), (A-46) + (B-40), (A-46) + (B-41), (A-46) + (B-42), (A-46) + (B-43), (A-46) + (B-44), (A-46) + (B-45), (A-46) + (B-46), (A-46) + (B-47), (A-46) + (B-48), (A-46) + (B-49), (A-46) + (B-50), (A-46) + (B-51), (A-46) + (B-52), (A-46) + (B-53), (A-46) + (B-54), (A-46) + (B-55), (A-46) + (B-56), (A-46) + (B-57), (A-46) + (B-58), (A-46) + (B-59), (A-46) + (B-60), (A-46) + (B-61), (A-46) + (B-62), (A-46) + (B-63), (A-46) + (B-64), (A-46) + (B-65), (A-46) + (B-66), (A-46) + (B-67), (A-46) + (B-68), (A-46) + (B-69), (A-46) + (B-70), (A-46) + (B-71), (A-46) + (B-72), (A-46) + (B-73), (A-46) + (B-74), (A-46) + (B-75), (A-46) + (B-76), (A-46) + (B-77), (Al-1) + (B-78), (A-46) + (B-79), (A-46) + (B-80).
(A-47) + (B-1), (A-47) + (B-2), (A-47) + (B-3), (A-47) + (B-4), (A-47) + (B-6), (A-47) + (B-6), (A-47) + (B-7), (A-47) + (B-8), (A-47) + (B-9), (A-47) + (B-10), (A-47) + (B-11), (A-47) + (B-12), (A-47) + (B-13), (A-47) + (B-14), (A-47) + (B-15), (A-47) + (B-1 6), (A-47) + (B-17), (A-47) + (B-18), (A-47) + (B-19), (A-47) + (B-20), (A-47) + (B-21), (A-47) + (B-22), (A-47) + (B-23), (A-47) + (B-24), (A-47) + (B-25), (A-47) + (B-26), (A-47) + (B-27), (A-47) + (B-28), (A-47) + (B-29), (A-47) + (B-30), (A-47) + (B-31), (A-47) + (B-32), (A-47) + (B-33), (A-47) + (B-34), (A-47) + (B-35), (A-47) + (B-36), (A-47) + (B-37), (A-47) + (B-38), (A-47) + (B-39), (A-47) + (B-40), (A-47) + (B-41), (A-47) + (B-42), (A-47) + (B-43), (A-47) + (B-44), (A-47) + (B-45), (A-47) + (B-46), (A-47) + (B-47), (A-47) + (B-48), (A-47) + (B-49), (A-47) + (B-50), (A-47) + (B-51), (A-47) + (B-62), (A-47) + (B-53), (A-47) + (B-54), (A-47) + (B-55), (A-47) + (B-56), (A-47) + (B-57), (A-47) + (B-58), (A-47) + (B-59), (A-47) + (B-60), (A-47) + (B-61), (A-47) + (B-62), (A-47) + (B-63), (A-47) + (B-64), (A-47) + (B-65), (A-47) + (B-66), (A-47) + (B-67), (A-47) + (B-68), (A-47) + (B-69), (A-47) + (B-70), (A-47) + (B-71), (A-47) + (B-72), (A-47) + (B-73), (A-47) + (B-74), (A-47) + (B-75), (A-47) + (B-76), (A-47) + (B-77), (Al-1) + (B-78), (A-47) + (B-79), (A-47) + (B-80).
(A-48) + (B-1), (A-48) + (B-2), (A-48) + (B-3), (A-48) + (B-4), (A-48) + (B-5), (A-48) + (B-6), (A-48) + (B-7), (A-48) + (B-8), (A-48) + (B-9), (A-48) + (B-10), (A-48) + (B-11), (A-48) + (B-12), (A-48) + (B-13), (A-48) + (B-14), (A-48) + (B-15), (A-48) + (B-16), (A-48) + (B-17), (A-48) + (B-18), (A-48) + (B-19), (A-48) + (B-20), (A-48) + (B-21), (A-48) + (B-22), (A-48) + (B-23), (A-48) + (B-24), (A-48) + (B-25), (A-48)+ (B-26), (A-48) + (B-27), (A-48) + (B-28), (A-48) + (B-29), (A-48) + (B-30), (A-48) + (B-31), (A-48) + (B-32), (A-48) + (B-33), (A-48) + (B-34), (A-48) + (B-35), (A-48) + (B-36), (A-48) + (B-37), (A-48) + (B-38), (A-48) + (B-39), (A-48) + (B-40), (A-48) + (B-41), (A-48) + (B-42), (A-48) + (B-43), (A-48) + (B-44), (A-48) + (B-45), (A-48) + (B-46), (A-48) + (B-47), (A-48) + (B-48), (A-48) + (B-49), (A-48) + (B-50), (A-48) + (B-51), (A-48) + (B-52), (A-48) + (B-53), (A-48) + (B-54), (A-48) + (B-55), (A-48) + (B-56), (A-48) + (B-57), (A-48) + (B-58), (A-48) + (B-59), (A-48) + (B-60), (A-48) + (B-61), (A-48) + (B-62), (A-48) + (B-63), (A-48) + (B-64), (A-48) + (B-65), (A-48) + (B-66), (A-48) + (B-67), (A-48) + (B-68), (A-48) + (B-69), (A-48) + (B-70), (A-48) + (B.71), (A-48) + (B-72), (A-48) + (B-73), (A-48) + (B-74), (A-48) + (B-75), (A-48) + (B-76), (A-48) + (B-77), (Al-1) + (B-78), (A-48) + (B-79), (A-48) + (B-80).
(A-49) + (B-1), (A-49) + (B-2), (A-49) + (B-3), (A-49) + (B-4), (A-49) + (B-5), (A-49) + (B-6), (A-49) + (B-7), (A-49) + (B-8), (A-49) + (B-9), (A-49) + (B-10), (A-49) + (B-11), (A-49) + (B-12), (A-49) + (B-13), (A-49) + (B-14), (A-49) + (B-15), (A-49) + (B-16), (A-49) + (B-17), (A-49) + (B-18), (A-49) + (B-19), (A-49) + (B-20), (A-49) + (B-21), (A-49) + (B-22), (A-49) + (B-23), (A-49) + (B-24), (A-49) + (B-25), (A-49) + (B-26), (A-49) + (B-27), (A-49) + (B-28), (A-49) + (B-29), (A-49) + (9-30), (A-49) + (B-31), (A-49) + (B-32), (A-49) + (B-33), (A-49) + (B-34), (A-49) + (B-35), (A-49) + (B-36), (A-49) + (B-37), (A-49) + (B-38), (A-49) + (B-39), (A-49) + (B-40), (A-49) + (B-41), (A-49) + (B-42), (A-49) + (B-43), (A-49) + (B-44), (A-49) + (B-45), (A-49) + (B-46), (A-49) + (B-47), (A-49) + (B-48), (A-49) + (B-49), (A-49) + (B-50), (A-49) + (B-51), (A-49) + (B-52), (A-49) + (B-53), (A-49) + (B-54), (A-49) + (B-55), (A-49) + (B-56), (A-49) + (B-57), (A-49) + (B-58), (A-49) + (B-69), (A-49) + (B-60), (A-49) + (B-61), (A-49) + (B-62), (A-49) + (B-63), (A-49) + (B-64), (A-49) + (B-65), (A-49) + (B-66), (A-49) + (B-67), (A-49) + (B-68), (A-49) + (B-69), (A-49) + (B-70), (A-49) + (B-71), (A-49) + (B-72), (A-49) + (B-73), (A-49) + (B-74), (A-49) + (B-75), (A-49) + (B-76), (A-49) + (B-77), (A1-1) + (B-78), (A-49) + (B-79), (A-49) + (B-80).
(A-50) + (B-1), (A-50) + (B-2), (A-50) + (B-3), (A-50) + (B-4), (A-50) + (B-5), (A-50) + (B-6), (A-50) + (B-7), (A-50) + (B-8), (A-50) + (B-9), (A-50) + (B-10), (A-50) + (B-11), (A-50) + (B-12), (A-50) + (B-13), (A-50) + (B-14), (A-50) + (B-15), (A-50) + (B-16), (A-50) + (B-17), (A-50) + (B-18), (A-50) + (B-19), (A-50) + (B-20), (A-50) + (B-21), (A-50) + (B-22), (A-50) + (B-23), (A-50) + (B-24), (A-50) + (B-25), (A-50) + (B-26), (A-50) + (B-27), (A-50) + (B-28), (A-50) + (B-29), (A-50) + (B-30), (A-50) + (B-31), (A-50) + (B-32), (A-50) + (B-33), (A-50) + (B-34), (A-50) + (B-35), (A-50) + (B-36), (A-50) + (B-37), (A-50) + (B-38), (A-50) + (B-39), (A-50) + (B-40), (A-50) + (B-41), (A-50) + (B-42), (A-50) + (B-43), (A-50) + (B-44), (A-50) + (B-45), (A-50) + (B-46), (A-50) + (B-47), (A-50) + (B-48), (A-50) + (8-49), (A-50) + (B-50), (A-50) + (B-51), (A-50) + (B-52), (A-50) + (B-53), (A-50) + (B-54), (A-50) + (B-55), (A-50) + (B-56), (A-50) + (B-57), (A-50) + (B-58), (A-50) + (B-59), (A-50) + (B-60), (A-50) + (B-61), (A-50) + (B-62), (A-50) + (B-63), (A-50) + (B-64), (A-50) + (B-65), (A-50) + (B-66), (A-50) + (B-67), (A-50) + (B-68), (A-50) + (B-69), (A-50) + (B-70), (A-50) + (B-71), (A-50) + (B-72), (A-50) + (B-73), (A-50) + (B-74), (A-50) + (B-75), (A-50) + (B-76), (A-50) + (B-77), (Al-1) + (B-78), (A-50) + (B-79), (A-50) + (B-80).
(A-51) + (B-1), (A-51) + (B-2), (A-51) + (B-3), (A-51) + (B-4), (A-51) + (B-5), (A-51) + (B-6), (A-51) + (B-7), (A-51) + (B-8), (A-51) + (B-9), (A-51) + (B-10), (A-51) + (B-11), (A-51) + (B-12), (A-51) + (B-13), (A-51) + (B-14), (A-51) + (B-15), (A-51) + (B-16), (A-51) + (B-17), (A-51) + (B-18), (A-51) + (B-19), (A-51) + (B-20), (A-51) + (B-21), (A-51) + (B-22), (A-51) + (B-23), (A-51) + (B-24), (A-51) + (B-25), (A-51) + (B-26), (A-51) + (B-27), (A-51) + (B-28), (A-51) + (B-29), (A-51) + (B-30), (A-51) + (B-31), (A-51) + (B-32), (A-51) + (B-33), (A-51) + (B-34), (A-51) + (B-35), (A-51) + (B-36), (A-51) + (B-37), (A-51) + (B-38), (A-51) + (B-39), (A-51) + (B-40), (A-51) + (B-41), (A-51) + (B-42), (A-51) + (B-43), (A-51) + (B-44), (A-51) + (B-45), (A-51) + (B-46), (A-51) + (B-47), (A-51) + (B-48), (A-51) + (B-49), (A-51) + (B-50), (A-51) + (B-51), (A-51) + (B-52), (A-51) + (B-53), (A-51) + (B-54), (A-51) + (B-55), (A-51) + (B-56), (A-51) + (B-67), (A-51) + (B-58), (A-51) + (B-59), (A-51) + (B-60), (A-51) + (B-61), (A-51) + (B-62), (A-51) + (B-63), (A-51) + (B-64), (A-51) + (B-65), (A-51) + (B-66), (A-51) + (B-67), (A-51) + (B-68), (A-51) + (B-69), (A-51) + (B-70), (A-51) + (B-71), (A-51) + (B-72), (A-51) + (B-73), (A-51) + (8-74), (A-51) + (B-75), (A-51) + (B-76), (A-51) + (B-77), (Al-1) + (B-78), (A-51) + (B-79), (A-51) + (B-80).
(A-52) + (B-1), (A-52) + (B-2), (A-52) + (B-3), (A-52) + (B-4), (A-52) + (B-6), (A-52) + (B-6), (A-52) + (B-7), (A-52) + (B-8), (A-52) + (B-9), (A-52) + (B-10), (A-52) + (B-11), (A-52) + (B-12), (A-52) + (B-13), (A-52) + (B-14), (A-52) + (B-15), (A-52) + (B-16), (A-52) + (B-17), (A-52) + (B-18), (A-52) + (B-19), (A-52) + (B-20), (A-52) + (B-21), (A-52) + (B-22), (A-52) + (B-23), (A-52) + (B-24), (A-52) + (B-26), (A-52) + (B-26), (A-52) + (B-27), (A-52) + (B-28), (A-52) + (B-29), (A-52) + (B-30), (A-52) + (B-31), (A-52) + (B-32), (A-52) + (B-33), (A-52) + (B-34), (A-52) + (B-35), (A-52) + (B-36), (A-52) + (B-37), (A-52) + (B-38), (A-52) + (B-39), (A-52) + (B-40), (A-52) + (B-41), (A-52) + (B-42), (A-52) + (B-43), (A-52) + (B-44), (A-52) + (B-45), (A-52) + (B-46), (A-52) + (B-47), (A-52) + (B-48), (A-52) + (B-49), (A-52) + (B-50), (A-52) + (B-51), (A-52) + (B-52), (A-52) + (B-53), (A-52) + (B-54), (A-52) + (B-55), (A-52) + (B-56), (A-52) + (B-57), (A-52) + (B-58), (A-52) + (B-59), (A-52) + (B-60), (A-52) + (B-61), (A-52) + (B-62), (A-52) + (B-63), (A-52) + (B-64), (A-52) + (B-65), (A-52) + (B-66), (A-52) + (B-67), (A-52) + (B-68), (A-52) + (B-69), (A-52) + (B-70), (A-52) + (B-71), (A-52) + (B-72), (A-52) + (B-73), (A-52) + (B-74), (A-52) + (B-75), (A-52) + (B-76), (A-52) + (B-77), (Al-1) + (B-78), (A-52) + (B-79), (A-52) + (B-80).
(A-53) + (B-1), (A-53) + (B-2), (A-53) + (B-3), (A-53) + (B-4), (A-53) + (B-5), (A-53) + (B-6), (A-53) + (B-7), (A-53) + (B-8), (A-53) + (B-9), (A-53) + (B-10), (A-53) + (B-11), (A-53) + (B-12), (A-53) + (B-13), (A-53) + (B-14), (A-53) + (B-15), (A-53) + (B-16), (A-53) + (B-17), (A-53) + (B-18), (A-53) + (B-19), (A-53) + (B-20), (A-53) + (B-21), (A-53) + (B-22), (A-53) + (B-23), (A-53) + (B-24), (A-53) + (B-25), (A-53) + (B-26), (A-53) + (B-27), (A-53) + (B-28), (A-53) + (B-29), (A-53) + (B-30), (A-53) + (B-31), (A-53) + (B-32), (A-53) + (B-33), (A-53) + (B-34), (A-53) + (B-35), (A-53) + (B-36), (A-53) + (B-37), (A-53) + (B-38), (A-53) + (B-39), (A-53) + (B-40), (A-53) + (B-41), (A-53) + (B-42), (A-53) + (B-43), (A-53) + (B-44), (A-53) + (B-45), (A-53) + (B-46), (A-53) + (B-47), (A-53) + (B-48), (A-53) + (B-49), (A-53) + (B-50), (A-53) + (B-51), (A-53) + (B-52), (A-53) + (B-53), (A-53) + (B-54), (A-53) + (B-55), (A-53) + (B-56), (A-53) + (B-57), (A-53) + (B-58), (A-53) + (B-59), (A-53) + (B-60), (A-53) + (B-61), (A-53) + (B-62), (A-53) + (B-63), (A-53) + (B-64), (A-53) + (B-65), (A-53) + (B-66), (A-53) + (B-67), (A-53) + (B-68), (A-53) + (B-69), (A-53) + (B-70), (A-53) + (B-71), (A-53) + (B-72), (A-53) + (B-73), (A-53) + (B-74), (A-53) + (B-75), (A-53) + (B-76), (A-53) + (B-77), (Al-1) + (B-78), (A-53) + (B-79), (A-53) + (B-80).
(A-54) + (B-1), (A-54) + (B-2), (A-54) + (B-3), (A-54) + (B-4), (A-54) + (B-5), (A-54) + (B-6), (A-54) + (B-7), (A-54) + (B-8), (A-54) + (B-9), (A-54) + (B-10), (A-54) + (B-11), (A-54) + (B-12), (A-54) + (B-13), (A-54) + (B-14), (A-54) + (B-15), (A-54) + (B-16), (A-54) + (B-17), (A-54) + (B-18), (A-54) + (B-19), (A-54) + (B-20), (A-54) + (B-21), (A-54) + (B-22), (A-54) + (B-23), (A-54) + (B-24), (A-54) + (B-25), (A-54) + (B-26), (A-54) + (B-27), (A-54) + (B-28), (A-54) + (B-29), (A-54) + (B-30), (A-54) + (B-31), (A-54) + (B-32), (A-54) + (B-33), (A-54) + (B-34), (A-54) + (B-35), (A-54) + (B-36), (A-54) + (B-37), (A-54) + (B-38), (A-54) + (B-39), (A-54) + (B-40), (A-54) + (B-41), (A-54) + (B-42), (A-54) + (B-43), (A-54) + (B-44), (A-54) + (B-45), (A-54) + (B-46), (A-54) + (B-47), (A-54) + (B-48), (A-54) + (B-49), (A-54) + (B-50), (A-54) + (B-51). (A-54) + (B-52), (A-54) + (B-53), (A-54) + (B-54), (A-54) + (B-55), (A-54) + (B-56), (A-54) + (B-57), (A-54) + (B-58), (A-54) + (B-59), (A-54) + (B-60), (A-54) + (B-61), (A-54) + (B-62), (A-54) + (B-63), (A-54) + (B-64), (A-54) + (B-65), (A-54) + (B-66). (A-54) + (B-67), (A-54) + (B-68), (A-54) + (B-69), (A-54) + (B-70), (A-54) + (B-71), (A-54) + (B-72), (A-54) + (B-73), (A-54) + (B-74), (A-54) + (B-76), (A-54) + (B-76), (A-54) + (B-77), (AI-1) + (B-78), (A-54) + (B-79), (A-54) + (B-80).
(A-55) + (B-1), (A-55) + (B-2), (A-55) + (B-3), (A-55) + (B-4), (A-55) + (B-5), (A-55) + (B-6), (A-55) + (B-7), (A-55) + (B-8), (A-55) + (B-9), (A-55) + (B-10), (A-55) + (B-11), (A-55) + (B-12), (A-55) + (B-13), (A-55) + (B-14), (A-55) + (B-15), (A-55) + (B-16), (A-55) + (B-17), (A-55) + (B-18), (A-55) + (B-19), (A-55) + (B-20), (A-55) + (B-21), (A-55) + (B-22), (A-55) + (B-23), (A-55) + (B-24), (A-55) + (B-25), (A-55) + (B-26), (A-55) + (B-27), (A-55) + (B-28), (A-55) + (B-29), (A-55) + (B-30), (A-55) + (B-31), (A-55) + (B-32), (A-55) + (B-33), (A-55) + (B-34), (A-55) + (B-35), (A-55) + (B-36), (A-55) + (B-37), (A-55) + (B-36), (A-55) + (B-39), (A-55) + (B-40), (A-55) + (B-41), (A-55) + (B-42), (A-55) + (B-43), (A-55) + (B-44), (A-55) + (B-45), (A-55) + (B-46), (A-55) + (B-47), (A-55) + (B-48), (A-55) + (B-49), (A-55) + (B-50), (A-55) + (B-51), (A-55) + (B-52), (A-55) + (B-53), (A-55) + (B-54), (A-55) + (B-55), (A-55) + (B-56), (A-55) + (B-57), (A-55) + (B-58), (A-55) + (B-59), (A-55) + (B-60), (A-55) + (B-61), (A-55) + (B-62), (A-55) + (B-63), (A-55) + (B-64), (A-55) + (B-65), (A-55) + (B-66), (A-55) + (B-67), (A-55) + (B-68), (A-55) + (B-69), (A-55) + (B-70), (A-55) + (B-71), (A-55) + (B-72), (A-55) + (B-73), (A-55) + (B-74), (A-55) + (B-75), (A-55) + (B-76), (A-55) + (B-77), (AI-1) + (B-78), (A-55) + (B-79), (A-55) + (B-80).
(A-56) + (B-1), (A-56) + (B-2), (A-56) + (B-3), (A-56) + (B-4), (A-56) + (B-5), (A-56) + (B-6), (A-56) + (B-7), (A-56) + (B-8), (A-56) + (B-9), (A-56) + (B-10), (A-56) + (B-11), (A-56) + (B-12), (A-56) + (B-13), (A-56) + (B-14), (A-56) + (B-15), (A-56) + (B-16), (A-56) + (B-17), (A-56) + (B-18), (A-56) + (B-19), (A-56) + (B-20), (A-56) + (B-21), (A-56) + (B-22), (A-56) + (B-23), (A-56) + (B-24), (A-56) + (B-25), (A-56) + (B-26), (A-56) + (B-27), (A-56) + (B-28), (A-56) + (B-29), (A-56) + (B-30), (A-56) + (B-31), (A-56) + (B-32), (A-56) + (B-33), (A-56) + (B-34), (A-56) + (B-35), (A-56) + (B-36), (A-56) + (B-37), (A-56) + (B-38), (A-56) + (B-39), (A-56) + (B-40), (A-56) + (B-41), (A-56) + (B-42), (A-56) + (B-43), (A-56) + (B-44), (A-56) + (B-45), (A-56) + (B-46), (A-56) + (B-47), (A-56) + (B-48), (A-56) + (B-49), (A-56) + (B-50), (A-56) + (B-51), (A-56) + (B-52), (A-56) + (B-53), (A-56) + (B-54), (A-56) + (B-55), (A-56) + (B-56), (A-56) + (B-67), (A-56) + (B-58), (A-56) + (B-59), (A-56) + (B-60), (A-56) + (B-61), (A-56) + (B-62), (A-56) + (B-63), (A-56) + (B-64), (A-56) + (B-65), (A-56) + (B-66), (A-56) + (B-67), (A-56) + (B-68), (A-56) + (B-69), (A-56) + (B-70), (A-56) + (B-71), (A-56) + (B-72), (A-56) + (B-73), (A-56) + (B-74), (A-56) + (B-75), (A-56) + (B-76), (A-56) + (B-77), (Al-1) + (B-78), (A-56) + (B-79), (A-56) + (B-80).
(A-57) + (B-1), (A-57) + (B-2), (A-57) + (B-3), (A-57) + (B-4), (A-57) + (B-5), (A-57) + (8-6), (A-57) + (B-7), (A-57) + (B-8), (A-57) + (B-9), (A-57) + (B-10), (A-57) + (B-11), (A-57) + (B-12), (A-57) + (B-13), (A-57) + (B-14), (A-57) + (B-15), (A-57) + (B-16), (A-57) + (B-17), (A-57) + (B-18), (A-57) + (B-19), (A-57) + (B-20), (A-57) + (B-21), (A-57) + (B-22), (A-57) + (B-23), (A-57) + (B-24), (A-57) + (B-25), (A-57) + (B-26), (A-57) + (B-27), (A-57) + (B-28), (A-57) + (B-29), (A-57) + (B-30), (A-57) + (B-31), (A-57) + (B-32), (A-57) + (B-33), (A-57) + (B-34), (A-57) + (B-35), (A-57) + (B-36), (A-57) + (B-37), (A-57) + (B-38), (A-57) + (B-39), (A-57) + (B-40), (A-57) + (B-41), (A-57) + (B-42), (A-57) + (B-43), (A-57) + (B-44), (A-57) + (B-45), (A-57) + (B-46), (A-57) + (B-47), (A-57) + (B-48), (A-57) + (B-49), (A-57) + (B-50), (A-57) + (B-51), (A-57) + (B-52), (A-57) + (B-53), (A-57) + (B-54), (A-57) + (B-55), (A-57) + (B-56), (A-57) + (B-57), (A-57) + (B-58), (A-57) + (B-59), (A-57) + (B-60), (A-57) + (B-61), (A-57) + (B-62), (A-57) + (B-63), (A-57) + (B-64), (A-57) + (B-65), (A-57) + (B-66), (A-57) + (B-67), (A-57) + (B-68), (A-57) + (B-69), (A-57) + (B-70), (A-57) + (B-71), (A-57) + (B-72), (A-57) + (B-73), (A-57) + (B-74), (A-57) + (B-75), (A-57) + (B-76), (A-57) + (B-77), (Al-1) + (B-78), (A-57) + (B-79), (A-57) + (B-80).
(A-58) + (B-1), (A-58) + (B-2), (A-58) + (B-3), (A-58) + (B-4), (A-58) + (B-5), (A-58) + (B-6), (A-58) + (B-7), (A-58) + (B-8), (A-58) + (B-9), (A-58) + (B-10), (A-58) + (B-11), (A-58) + (B-12), (A-58) + (B-13), (A-58) + (B-14), (A-58)+ (B-15), (A-58) + (B-16), (A-58) + (B-17), (A-58) + (B-18), (A-58) + (B-19), (A-58) + (B-20), (A-58) + (B-21), (A-58) + (B-22), (A-58) + (B-23), (A-58) + (B-24), (A-58) + (B-25), (A-58) + (B-26), (A-58) + (B-27), (A-58) + (B-28), (A-58) + (B-29), (A-58) + (B-30), (A-58) + (B-31), (A-58) + (B-32), (A-58) + (B-33), (A-58) + (B-34), (A-58) + (B-35), (A-58) + (B-36), (A-58) + (B-37), (A-58) + (B-38), (A-58) + (B-39), (A-58) + (B-40), (A-58) + (B-41), (A-58) + (B-42), (A-58) + (B-43), (A-58) + (B-44), (A-58) + (B-45), (A-58) + (B-46), (A-58) + (B-47), (A-58) + (B-48), (A-58) + (B-49), (A-58) + (B-50), (A-58) + (B-51), (A-58) + (B-52), (A-58) + (B-53), (A-58) + (B-54), (A-58) + (B-55), (A-58) + (B-56), (A-58) + (B-57), (A-58) + (B-58), (A-58) + (B-69), (A-58) + (B-60), (A-58) + (B-61), (A-58) + (B-62), (A-58) + (B-63), (A-58) + (B-64), (A-58) + (B-65), (A-58) + (B-66), (A-58) + (B-67), (A-58) + (B-68), (A-58) + (B-69), (A-58) + (B-70), (A-58) + (B-71), (A-58) + (B-72), (A-58) + (B-73), (A-58) + (B-74), (A-58) + (B-75), (A-58) + (B-76), (A-58) + (B-77), (AI-1) + (B-78), (A-58) + (B-79), (A-58) + (B-80).
(A-59) + (B-1), (A-59) + (B-2), (A-59) + (B-3), (A-59) + (B-4), (A-59) + (B-5), (A-59) + (B-6), (A-59) + (B-7), (A-59) + (B-8), (A-59) + (B-9), (A-59) + (B-10), (A-59) + (B-11), (A-59) + (B-12), (A-59) + (B-13), (A-59) + (B-14), (A-59) + (B-15), (A-59) + (B-16), (A-59) + (B-17), (A-59) + (B-18), (A-59) + (B-19), (A-59) + (B-20), (A-59) + (B-21), (A-59) + (B-22), (A-59) + (B-23), (A-59) + (B-24), (A-59) + (B-25), (A-59) + (B-26), (A-59) + (B-27), (A-59) + (B-28), (A-59) + (B-29), (A-59) + (B-30), (A-59) + (B-31), (A-59) + (B-32), (A-59) + (B-33), (A-59) + (B-34), (A-59) + (B-35), (A-59) + (B-36), (A-59) + (B-37), (A-59) + (B-38), (A-59) + (B-39), (A-59) + (B-40), (A-59) + (B-41), (A-59) + (B-42), (A-59) + (B-43), (A-59) + (B-44), (A-59) + (B-45), (A-59) + (B-46), (A-59) + (B-47), (A-59) + (B-48), (A-59) + (B-49), (A-59) + (B-50), (A-59) + (B-51), (A-59) + (B-52), (A-59) + (B-53), (A-59) + (B-54), (A-59) + (B-55), (A-59) + (B-56), (A-59) + (B-57), (A-59) + (B-58), (A-59) + (B-59), (A-59) + (B-60), (A-59) + (B-61), (A-59) + (B-62), (A-59) + (B-63), (A-59) + (B-64), (A-59) + (B-66), (A-59) + (B-66), (A-59) + (B-67), (A-59) + (B-68), (A-59) + (B-69), (A-59) + (B-70), (A-59) + (B-71), (A-59) + (B-72), (A-59) + (B-73), (A-59) + (B-74), (A-59) + (B-75), (A-69) + (B-76), (A-59) + (B-77), (AI-1) + (B-78), (A-59) + (B-79), (A-59) + (B-80).
(A-60) + (B-1), (A-60) + (B-2), (A-60) + (B-3), (A-60) + (B-4), (A-60) + (B-5), (A-60) + (B-6), (A-60) + (B-7), (A-60) + (B-8), (A-60) + (B-9), (A-60) + (B-10), (A-60) + (B-11), (A-60) + (B-12), (A-60) + (B-13), (A-60) + (B-94), (A-60) + (B-15), (A-60) + (B-16), (A-60) + (B-17), (A-60) + (B-18), (A-60) + (B-19), (A-60) + (B-20), (A-60) + (B-21), (A-60) + (B-22), (A-60) + (B-23), (A-60) + (B-24), (A-60) + (B-25), (A-60) + (B-26), (A-60) + (B-27), (A-60) + (B-28), (A-60) + (B-29), (A-60) + (B-30), (A-60) + (B-31), (A-60) + (B-32), (A-60) + (B-33), (A-60) + (B-34), (A-60) + (B-35), (A-60) + (B-36), (A-60) + (B-37), (A-60) + (B-38), (A-60) + (B-39), (A-60) + (B-40), (A-60) + (B-41), (A-60) + (B-42), (A-60) + (B-43), (A-60) + (B-44), (A-60) + (B-45), (A-60) + (B-46), (A-60) + (B-47), (A-60) + (B-48), (A-60) + (B-49), (A-60) + (B-50), (A-60) + (B-51). (A-60) + (B-52), (A-60) + (B-53), (A-60) + (B-54), (A-60) + (B-55), (A-60) + (B-56), (A-60) + (B-57), (A-60) + (B-58), (A-60) + (B-59), (A-60) + (B-60), (A-60) + (B-61), (A-60) + (B-62), (A-60) + (B-63), (A-60) + (B-64), (A-60) + (B-65), (A-60) + (B-66), (A-60) + (B-67), (A-60) + (B-68), (A-60) + (B-69), (A-60) + (B-70), (A-60) + (B-71), (A-60) + (B-72), (A-60) + (B-73), (A-60) + (B-74), (A-60) + (B-75), (A-60) + (B-76), (A-60) + (B-77), (AI-1) + (B-78), (A-60) + (B-79), (A-60) + (B-80).
(A-61) + (B-1), (A-61) + (B-2), (A-61) + (B-3), (A-61) + (B-4), (A-61) + (B-5), (A-61) + (B-6), (A-61) + (B-7), (A-61) + (B-8), (A-61) + (B-9), (A-61) + (B-10), (A-61) + (B-11), (A-61) + (B-12), (A-61) + (B-13), (A-61) + (B-14), (A-61) + (B-15), (A-61) + (B-16), (A-61) + (B-17), (A-61) + (B-18), (A-61) + (B-19), (A-61) + (B-20), (A-61) + (B-21), (A-61) + (B-22), (A-61) + (B-23), (A-61) + (B-24), (A-61) + (B-25), (A-61) + (B-26), (A-61) + (B-27), (A-61) + (B-28), (A-61) + (B-29), (A-61) + (B-30), (A-61) + (B-31), (A-61) + (B-32), (A-61) + (B-33), (A-61) + (B-34), (A-61) + (B-35), (A-61) + (B-36), (A-61) + (B-37), (A-61) + (B-38), (A-61) + (B-39), (A-61) + (B-40), (A-61) + (B-41), (A-61) + (B-42), (A-61) + (B-43), (A-61) + (B-44), (A-61) + (B-45), (A-61) + (B-46), (A-61) + (B-47), (A-61) + (B-48), (A-61) + (B-49), (A-61) + (B-50), (A-61) + (B-51), (A-61) + (B-52), (A-61) + (B-53), (A-61) + (B-54), (A-61) + (B-55), (A-61) + (B-56), (A-61) + (B-57), (A-61) + (B-58), (A-61) + (B-59), (A-61) + (B-60), (A-61) + (B-61), (A-61) + (B-62), (A-61) + (B-63), (A-61)+ (B-64), (A-61) + (B-65), (A-61) + (B-66), (A-61) + (B-67), (A-61) + (B-68), (A-61) + (B-69), (A-61) + (B-70), (A-61) + (B-71), (A-61) + (B-72), (A-61) + (B-73), (A-61) + (B-74), (A-61) + (B-75), (A-61) + (B-76), (A-61) + (B-77), (Al-1) + (B-78), (A-61) + (B-79), (A-61) + (B-80).
(A-62) + (B-1), (A-62) + (B-2), (A-62) + (B-3), (A-62) + (B-4), (A-62) + (B-5), (A-62) + (B-6), (A-62) + (B-7), (A-62) + (B-8), (A-62) + (B-9), (A-62) + (B-10), (A-62) + (B-11), (A-62) + (B-12), (A-62) + (B-13), (A-62) + (B-14), (A-62) + (B-15), (A-62) + (B-16), (A-62) + (B-17), (A-62) + (B-18), (A-62) + (B-19), (A-62) + (B-20), (A-62) + (B-21), (A-62) + (B-22), (A-62) + (B-23), (A-62) + (B-24), (A-62) + (B-25), (A-62) + (B-26), (A-62) + (B-27), (A-62) + (B-28), (A-62) + (B-29), (A-62) + (B-30), (A-62) + (B-31), (A-62) + (B-32), (A-62) + (B-33), (A-62) + (B-34), (A-62) + (B-35), (A-62) + (B-36), (A-62) + (B-37), (A-62) + (B-38), (A-62) + (B-39), (A-62) + (B-40), (A-62) + (B-41), (A-62) + (B-42), (A-62) + (B-43), (A-62) + (B-44), (A-62) + (B-45), (A-62) + (B-46), (A-62) + (B-47), (A-62) + (B-48), (A-62) + (B-49), (A-62) + (B-50), (A-62) + (B-51), (A-62) + (B-52), (A-62) + (B-53), (A-62) + (B-54), (A-62) + (B-55), (A-62) + (B-56), (A-62) + (B-57), (A-62) + (B-58), (A-62) + (B-59), (A-62) + (B-60), (A-62) + (B-61), (A-62) + (B-62), (A-62) + (B-63), (A-62) + (B-64), (A-62) + (B-65), (A-62) + (B-66), (A-62) + (B-67), (A-62) + (B-68), (A-62) + (B-69), (A-62) + (B-70), (A-62) + (B-71), (A-62) + (B-72), (A-62) + (B-73), (A-62) + (B-74), (A-62) + (B-75), (A-62) + (B-76), (A-62) + (B-77), (Al-1) + (B-78), (A-62) + (B-79), (A-62) + (B-80).
(A-63) + (B-1), (A-63) + (B-2), (A-63) + (B-3), (A-63) + (B-4), (A-63) + (B-5), (A-63) + (B-6), (A-63) + (B-7), (A-63) + (B-8), (A-63) + (B-9), (A-63) + (B-10), (A-63) + (B-11), (A-63) + (B-12), (A-63) + (B-13), (A-63) + (B-14), (A-63) + (B-15), (A-63) + (B-16), (A-63) + (B-17), (A-63) + (B-18), (A-63) + (B-19), (A-63) + (B-20), (A-63) + (B-21), (A-63) + (B-22), (A-63) + (B-23), (A-63) + (B-24), (A-63) + (B-25), (A-63) + (B-26), (A-63) + (B-27), (A-63) + (B-28), (A-63) + (B-29), (A-63) + (B-30), (A-63) + (B-31), (A-63) + (B-32), (A-63) + (B-33), (A-63) + (B-34), (A-63) + (B-35), (A-63) + (B-36), (A-63) + (B-37), (A-63) + (B-38), (A-63) + (B-39), (A-63) + (B-40), (A-63) + (B-41), (A-63) + (B-42), (A-63) + (B-43), (A-63) + (B-44), (A-63) + (B-45), (A-63) + (B-46), (A-63) + (B-47), (A-63) + (B-48), (A-63) + (B-49), (A-63) + (B-50), (A-63) + (B-51), (A-63) + (B-52), (A-63) + (B-53), (A-63) + (B-54), (A-63) + (B-55), (A-63) + (B-56), (A-63) + (B-57), (A-63) + (B-58), (A-63) + (B-59), (A-63) + (B-60), (A-63) + (B-61), (A-63) + (B-62), (A-63) + (B-63), (A-63) + (B-64), (A-63) + (B-65), (A-63) + (B-66), (A-63) + (B-67), (A-63) + (B-68), (A-63) + (B-69), (A-63) + (B-70), (A-63) + (B-71), (A-63) + (B-72), (A-63) + (B-73), (A-63) + (B-74), (A-63) + (B-75), (A-63) + (B-76), (A-63) + (B-77), (Al-1) + (B-78), (A-63) + (B-79), (A-63) + (B-80).
(A-64) + (B-1), (A-64) + (B-2), (A-64) + (B-3), (A-64) + (B-4), (A-64) + (B-5), (A-64) + (B-6), (A-64) + (B-7), (A-64) + (B-8), (A-64) + (B-9), (A-64) + (B-10), (A-64) + (B-11), (A-64) + (B-12), (A-64) + (B-13), (A-64) + (B-14), (A-64) + (B-15), (A-64) + (B-16). (A-64) + (B-17), (A-64) + (B-18), (A-64) + (B-19), (A-64) + (B-20), (A-64) + (B-21), (A-64) + (B-22), (A-64) + (B-23), (A-64) + (B-24), (A-64) + (B-25), (A-64) + (B-26), (A-64) + (B-27), (A-64) + (B-28), (A-64) + (B-29), (A-64) + (B-30), (A-64) + (B-31), (A-64) + (B-32), (A-64) + (B-33), (A-64) + (B-34), (A-64) + (B-35), (A-64) + (B-36), (A-64) + (B-37), (A-64) + (B-38), (A-64) + (B-39), (A-64) + (B-40), (A-64) + (8-41), (A-64) + (B-42), (A-64) + (B-43), (A-64) + (B-44), (A-64) + (B-45), (A-64) + (B-46), (A-64) + (B-47), (A-64) + (B-48), (A-64) + (B-49), (A-64) + (B-50), (A-64) + (B-51), (A-64) + (B-52), (A-64) + (B-53), (A-64) + (B-54), (A-64) + (B-55), (A-64) + (B-56), (A-64) + (B-57), (A-64) + (B-58), (A-64) + (B-59), (A-64) + (B-60), (A-64) + (B-61), (A-64) + (B-62), (A-64)+ (B-63), (A-64) + (8-64), (A-64) + (B-65), (A-64) + (B-66), (A-64)+ (B-67), (A-64) + (B-68), (A-64) + (B-69), (A-64) + (B-70), (A-64) + (B-71), (A-64) + (B-72), (A-64) + (B-73), (A-64) + (B-74), (A-64) + (B-75), (A-64) + (B-76), (A-64) + (B-77), (Al-1) + (B-78), (A-64) + (B-79), (A-64) +(B-80).
(A-65) + (B-1), (A-65) + (B-2), (A-65) + (B-3), (A-65) + (B-4), (A-65) + (B-5), (A-65) + (B-6), (A-65) + (B-7), (A-65) + (B-8), (A-65) + (B-9), (A-65) + (B-10), (A-65) + (B-11), (A-65) + (B-12), (A-65) + (B-13), (A-65) + (B-14), (A-65) + (B-15), (A-65) + (B-16), (A-65) + (B-17), (A-65) + (B-18), (A-65) + (B-19), (A-65) + (B-20), (A-65) + (B-21), (A-65) + (B-22), (A-65) + (B-23), (A-65) + (B-24), (A-65) + (B-25), (A-65) + (B-26), (A-65) + (B-27), (A-65) + (B-28), (A-65) + (B-29), (A-65) + (B-30), (A-65) + (B-31), (A-65) + (B-32), (A-65) + (B-33), (A-65) + (B-34), (A-65) + (B-35), (A-65) + (B-36), (A-65) + (B-37), (A-65) + (B-38), (A-65) + (B-39), (A-65) + (B-40), (A-65) + (B-41). (A-65) + (B-42), (A-65) + (B-43), (A-65) + (B-44), (A-65) + (B-45), (A-65) + (B-46), (A-65) + (B-47), (A-65) + (B-48), (A-65) + (B-49), (A-65) + (B-50), (A-65) + (B-51), (A-65) + (B-52), (A-65) + (B-53), (A-65) + (B.54), (A-65) + (B-55), (A-65) + (B-56), (A-65) + (B-57), (A-65) + (B-58), (A-65) + (B-59), (A-65) + (B-60), (A-65) + (B-61), (A-65) + (B-62), (A-65) + (B-63), (A-65) + (B-64), (A-65) + (B-65), (A-65) + (B-66), (A-65) + (B-67), (A-65) + (B-68), (A-65) + (B-69), (A-65) + (B-70), (A-65) + (B-71), (A-65) + (B-72), (A-65) + (B-73), (A-65) + (B-74), (A-65) + (B-75), (A-65) + (B-76), (A-65) + (B-77), (A1-1) + (B-78), (A-65) + (B-79), (A-65) + (B-80).
(A-66) + (B-1), (A-66) + (B-2), (A-66) + (B-3), (A-66) + (B-4), (A-66) + (B-5), (A-66) + (B-6), (A-66) + (B-7), (A-66) + (B-8), (A-66) + (B-9), (A-66) + (B-10), (A-68) + (B-11), (A-66) + (B-12). (A-66) + (B-13), (A-66) + (B-14), (A-66) + (B-15), (A-66) + (B-16), (A-66) + (B-17), (A-66) + (B-18), (A-66) + (B-19). (A-66) + (B-20), (A-66) + (B-21), (A-66) + (B-22), (A-66) + (B-23), (A-66) + (B-24), (A-66) + (B-25), (A-66) + (B-26), (A-66) + (B-27), (A-66) + (B-28), (A-66) + (B-29), (A-66) + (B-30), (A-66) + (B.31). (A-66) + (B-32), (A-66) + (B-33), (A-66) + (B-34), (A-66) + (B-35), (A-66) + (B-36), (A-66) + (B-37), (A-66) + (B-38), (A-66) + (B-39), (A-66) + (B-40), (A-66) + (B-41), (A-66) + (B-42), (A-66) + (B-43), (A-66) + (B-44), (A-66) + (B-45), (A-66) + (B-46), (A-66) + (B-47), (A-66) + (B-48), (A-66) + (B-49), (A-66) + (B-50), (A-66) + (B-51), (A-66) + (B-52), (A-66) + (B-53), (A-66) + (B-54), (A-66) + (B-55), (A-66) + (B-56), (A-66) + (B-57), (A-66) + (B-58), (A-66) + (B-59), (A-66) + (B-60), (A-66) + (B-61), (A-66) + (B-62), (A-66) + (B-63), (A-66) + (B-64), (A-66) + (B-65), (A-66) + (B-66), (A-66) + (B-67), (A-66) + (B-68), (A-66) + (B-69), (A-66) + (B-70), (A-66) + (B-71), (A-66) + (B-72), (A-66) + (B-73), (A-66) + (B-74), (A-66) + (B-75), (A-66) + (B-76), (A-66) + (B-77), (Al-1) + (B-78), (A-66) + (B-79), (A-66) + (B-80).
(A-67) + (B-1), (A-67) + (B-2), (A-67) + (B-3), (A-67) + (B-4), (A-67) + (B-5), (A-67) + (8-6), (A-67) + (B-7), (A-67) + (B-8), (A-67) + (B-9), (A-67) + (B-10), (A-67) + (B-11), (A-67) + (B-12), (A-67) + (B-13), (A-67) + (B-14), (A-67) + (B-15), (A-67) + (B-16), (A-67) + (B-17), (A-67) + (B-18), (A-67) + (B-19), (A-67) + (B-20), (A-67) + (B-21), (A-67) + (B-22), (A-67) + (B-23), (A-67) + (B-24), (A-67) + (B-25), (A-67) + (B-26), (A-67) + (B-27), (A-67) + (B-28), (A-67) + (B-29), (A-67) + (B-30), (A-67) + (B-31), (A-67) + (B-32), (A-67) + (B-33), (A-67) + (B-34), (A-67) + (B-35), (A-67) + (B-36), (A-67) + (B-37), (A-67) + (B-38), (A-67) + (B-39), (A-67) + (B-40), (A-67) + (B-41), (A-67) + (B-42), (A-67) + (B-43), (A-67) + (B-44), (A-67) + (B-45), (A-67) + (B-46), (A-67) + (B-47), (A-67) + (B-48), (A-67) + (B-49), (A-67) + (B-50), (A-67) + (B-51), (A-67) + (B-52), (A-67) + (B-53), (A-67) + (B-54), (A-67) + (B-55), (A-67) + (B-56), (A-67) + (B-57), (A-67) + (B-58), (A-67) + (B-59), (A-67) + (B-60), (A-67) + (B-61), (A-67) + (B-62), (A-67) + (B-63), (A-67) + (B-64), (A-67) + (B-65), (A-67) + (B-66), (A-67) + (B-67), (A-67) + (B-68), (A-67) + (B-69), (A-67) + (B-70), (A-67) + (B-71), (A-67) + (B-72), (A-67) + (B-73), (A-67) + (B-74), (A-67) + (B-75), (A-67) + (B-76), (A-67) + (B-77), (Al-1) + (B-78), (A-67) + (B-79), (A-67) + (B-80).
(A-68) + (B-1), (A-68) + (B-2), (A-68) + (B-3), (A-68) + (B-4), (A-68) + (B-5), (A-68) + (B-6), (A-68) + (B-7), (A-68) + (B-8), (A-68) + (B-9), (A-68) + (B-10), (A-68) + (B-11), (A-68) + (B-12), (A-68) + (B-13), (A-68) + (B-14), (A-68) + (B-15), (A-68) + (B-16), (A-68) + (B-17), (A-68) + (B-18), (A-68) + (B-19), (A-68) + (B-20), (A-68) + (B-21), (A-68) + (B-22), (A-68) + (B-23), (A-68) + (B-24), (A-68) + (B-25), (A-68) + (B-26), (A-68) + (B-27), (A-68) + (B-28), (A-68) + (B-29), (A-68) + (B-30), (A-68) + (B-31), (A-68) + (B-32), (A-68) + (B-33), (A-68) + (B-34), (A-68) + (B-35), (A-68) + (B-36), (A-68) + (B-37), (A-68) + (B-38), (A-68) + (8-39), (A-68) + (B-40), (A-68) + (8-41), (A-68) + (B-42), (A-68) + (B-43), (A-68) + (B-44), (A-68) + (B-45), (A-68) + (B-46), (A-68) + (B-47), (A-68) + (B-48), (A-68) + (B-49), (A-68) + (B-50), (A-68) + (8-51), (A-68) + (B-52), (A-88) + (B-53), (A-68) + (B-54), (A-68) + (B-55), (A-68) + (B-58), (A-68) + (B-67), (A-68) + (B-58), (A-68) + (B-59), (A-68) + (B-60), (A-68) + (B-61), (A-68) + (B-62), (A-68) + (B-63), (A-68) + (B-64), (A-68) + (B-65), (A-68) + (B-66), (A-68) + (B-67), (A-68) + (B-68), (A-68) + (B-69), (A-68) + (B-70), (A-68) + (B-71), (A-68) + (8-72), (A-68) + (8-73), (A-68) + (B-74), (A-68) + (B-75), (A-68) + (B-76), (A-68) + (B-77), (Al-1) + (B-78), (A-68) + (B-79), (A-68) + (B-80),
(A-69) + (B-1), (A-69) + (B-2), (A-69) + (B-3), (A-69) + (B-4), (A-69) + (B-5), (A-69) + (B-6), (A-69) + (B-7), (A-69) + (B-8), (A-69) + (8-9), (A-69) + (B-10), (A-69) + (B-11), (A-69) + (B-12), (A-69) + (B-13), (A-69) + (B-14), (A-69) + (B-15), (A-69) + (B-16), (A-69) + (B-17), (A-69) + (B-18), (A-69) + (B-19), (A-69) + (B-20), (A-69) + (B-21), (A-69) + (B-22), (A-69) + (B-23), (A-69) + (B-24), (A-69) + (B-25), (A-69) + (B-26), (A-69) + (B-27), (A-69) + (B-28), (A-69) + (B-29), (A-69) + (B-30), (A-69) + (B-31), (A-69) + (B-32), (A-69) + (B-33), (A-69) + (B-34), (A-69) + (B-35), (A-69) + (B-36), (A-69) + (B-37), (A-69) + (B-38), (A-69) + (B-39), (A-69) + (B-40), (A-69) + (B-41), (A-69) + (B-42), (A-69) + (B-43), (A-69) + (B-44), (A-69) + (B-45), (A-69) + (B-46), (A-69) + (B-47), (A-69) + (B-48), (A-69) + (B-49), (A-69) + (B-50), (A-69) + (B-51), (A-69) + (B-52), (A-69) + (B-53), (A-69) + (B-54), (A-69) + (B-55), (A-69) + (B-56), (A-69) + (B-57), (A-69) + (B-58), (A-69) + (B-59), (A-69) + (B-60), (A-69) + (B-61), (A-69) + (B-62), (A-69) + (B-63), (A-69) + (B-64), (A-69) + (B-65), (A-69) + (B-66), (A-69) + (B-67), (A-69) + (B-68), (A-69) + (B-69), (A-69) + (B-70), (A-69) + (B-71), (A-69) + (B-72), (A-69) + (B-73), (A-69) + (B-74), (A-69) + (B-75), (A-69) + (B-76), (A-69) + (B-77), (Al-1) + (B-78), (A-69) + (B-79), (A-69) + (B-80).
(A-70) + (B-1), (A-70) + (B-2), (A-70) + (B-3), (A-70) + (B-4), (A-70) + (B-5), (A-70) + (B-6), (A-70) + (B-7), (A-70) + (B-8), (A-70) + (B-9), (A-70) + (B-10), (A-70) + (B-11), (A-70) + (B-12), (A-70) + (B-13), (A-70) + (B-14), (A-70) + (B-15), (A-70) + (B-16), (A-70) + (B-17), (A-70) + (B-18), (A-70) + (B-19), (A-70) + (B-20), (A-70) + (B-21), (A-70) + (B-22), (A-70) + (B-23), (A-70) + (B-24), (A-70) + (B-25), (A-70) + (B-26), (A-70) + (B-27), (A-70) + (B-28), (A-70) + (B-29), (A-70) + (B-30), (A-70) + (B-31), (A-70) + (B-32), (A-70) + (B-33), (A-70) + (B-34), (A-70) + (B-35), (A-70) + (B-36), (A-70) + (B-37), (A-70) + (B-38), (A-70) + (B-39), (A-70) + (B-40), (A-70) + (B-41), (A-70) + (B-42), (A-70) + (B-43), (A-70) + (B-44), (A-70) + (B-45), (A-70) + (B-46), (A-70) + (B-47), (A-70) + (B-48), (A-70) + (B-49), (A-70) + (B-60), (A-70) + (B-51), (A-70) + (B-52), (A-70) + (B-53), (A-70) + (B-54), (A-70) + (B-55), (A-70) + (B-56), (A-70) + (B-57), (A-70) + (B-58), (A-70) + (B-59), (A-70) + (B-60), (A-70) + (B-61), (A-70) + (B-62), (A-70) + (B-63), (A-70) + (B-64), (A-70) + (B-65), (A-70) + (B-66), (A-70) + (B-67), (A-70) + (B-68), (A-70) + (B-69), (A-70) + (B-70), (A-70) + (B-71), (A-70) + (B-72), (A-70) + (B-73), (A-70) + (B-74), (A-70) + (B-75), (A-70) + (B-76), (A-70) + (B-77), (AI-1) + (B-78), (A-70) + (B-79), (A-70) + (B-80).
(A-71) + (B-1), (A-71) + (B-2), (A-71) + (B-3), (A-71) + (B-4), (A-71) + (B-5), (A-71) + (B-6), (A-71) + (B-7), (A-71) + (B-8), (A-71) + (B-9), (A-71) + (B-10), (A-71) + (B-11), (A-71) + (B-12), (A-71) + (B-13), (A-71) + (B-14), (A-71) + (B-15), (A-71) + (B-16), (A-71) + (B-17), (A-71) + (B-18), (A-71) + (B-19), (A-71) + (B-20), (A-71) + (B-21), (A-71) + (B-22), (A-71) + (B-23), (A-71) + (B-24), (A-71) + (B-25), (A-71) + (B-26), (A-71) + (B-27), (A-71) + (B-28), (A-71) + (B-29), (A-71) + (B-30), (A-71) + (B-31), (A-71) + (B-32), (A-71) + (B-33), (A-71) + (B-34), (A-71) + (B-35), (A-71) + (B-36), (A-71) + (B-37), (A-71) + (B-38), (A-71) + (B-39), (A-71) + (B-40), (A-71) + (B-41), (A-71) + (B-42), (A-71) + (B-43), (A-71) + (B-44), (A-71) + (B-45), (A-71) + (B-46), (A-71) + (B-47), (A-71) + (B-48), (A-71) + (B-49), (A-71) + (B-50), (A-71) + (B-51), (A-71) + (B-52), (A-71) + (B-53), (A-71) + (B-54), (A-71) + (B-55), (A-71) + (B-56), (A-71) + (B-57), (A-71) + (B-68), (A-71) + (B-59), (A-71) + (B-60), (A-71) + (B-61), (A-71) + (B-62), (A-71) + (B-63), (A-71) + (B-64), (A-71) + (B-65), (A-71) + (B-66), (A-71) + (B-67), (A-79) + (B-68), (A-71) + (B-69), (A-71) + (B-70), (A-71) + (B-71), (A-71) + (B-72), (A-71) + (B-73), (A-71) + (B-74), (A-71) + (B-76), (A-71) + (B-76), (A-71) + (B-77), (Al-1) + (B-78), (A-71) + (B-79), (A-71) + (B-80).
(A-72) + (B-1), (A-72) + (B-2), (A-72) + (B-3), (A-72) + (B-4), (A-72) + (B-5), (A-72) + (B-6), (A-72) + (B-7), (A-72) + (B-8), (A-72) + (B-9), (A-72) + (B-10), (A-72) + (B-11), (A-72) + (B-12), (A-72) + (B-13), (A-72) + (B-14), (A-72) + (B-15), (A-72) + (B-16), (A-72) + (B-17), (A-72) + (B-18), (A-72) + (B-19), (A-72) + (B-20), (A-72) + (B-21), (A-72) + (B-22), (A-72) + (B-23), (A-72) + (B-24), (A-72) + (B-25), (A-72) + (B-26), (A-72) + (B-27), (A-72) + (B-28), (A-72) + (B-29), (A-72) + (B-30), (A-72) + (B-31), (A-72) + (B-32), (A-72) + (B-33), (A-72) + (B-34), (A-72) + (B-35), (A-72) + (B-36), (A-72) + (B-37), (A-72) + (B-38), (A-72) + (B-39), (A-72) + (B-40), (A-72) + (B-41), (A-72) + (B-42), (A-72) + (B-43), (A-72) + (B-44), (A-72) + (B-45), (A-72) + (B-46), (A-72) + (B-47), (A-72) + (B-48), (A-72) + (B-49), (A-72) + (B-50), (A-72) + (B-51), (A-72) + (B-52), (A-72) + (B-53), (A-72) + (B-54), (A-72) + (B-55), (A-72) + (B-66), (A-72) + (B-57), (A-72) + (B-58), (A-72) + (B-59), (A-72) + (B-60), (A-72) + (B-61), (A-72) + (B-62), (A-72) + (B-63), (A-72) + (B-64), (A-72) + (B-65), (A-72) + (B-66), (A-72) + (B-67), (A-72) + (B-68), (A-72) + (B-69), (A-72) + (B-70), (A-72) + (B-71), (A-72) + (B-72), (A-72) + (B-73), (A-72) + (B-74), (A-72) + (B-75), (A-72) + (B-76), (A-72) + (B-77), (Al-1) + (B-78), (A-72) + (B-79), (A-72) + (B-80).
(A-73) + (B-1), (A-73) + (B-2), (A-73) + (B-3), (A-73) + (B-4), (A-73) + (B-5), (A-73) + (B-6), (A-73) + (B-7), (A-73) + (B-8), (A-73) + (B-9), (A-73) + (B-10), (A-73) + (B-11), (A-73) + (B-12), (A-73) + (B-13), (A-73) + (B-14), (A-73) + (B-15), (A-73) + (B-16), (A-73) + (B-17), (A-73) + (B-18), (A-73) + (B-19), (A-73) + (B-20), (A-73) + (B-21), (A-73) + (B-22), (A-73) + (B-23), (A-73) + (B-24), (A-73) + (B-25), (A-73) + (B-26), (A-73) + (B-27), (A-73) + (B-28), (A-73) + (B-29), (A-73) + (B-30), (A-73) + (B-31), (A-73) + (B-32), (A-73) + (B-33), (A-73) + (B-34), (A-73) + (B-35), (A-73) + (B-36), (A-73) + (B-37), (A-73) + (B-38), (A-73) + (B-39), (A-73) + (B-40), (A-73) + (B-41), (A-73) + (B-42), (A-73) + (B-43), (A-73) + (B-44), (A-73) + (B-45), (A-73) + (B-46), (A-73) + (B-47), (A-73) + (B-48), (A-73) + (8-49), (A-73) + (B-50), (A-73) + (B-51), (A-73) + (B-52), (A-73) + (B-53), (A-73) + (B-54), (A-73) + (B-55), (A-73) + (B-56), (A-73) + (B-57), (A-73) + (B-58), (A-73) + (B-59), (A-73) + (B-60); (A-73) + (B-61), (A-73) + (8-62), (A-73) + (B-63), (A-73) + (B-64), (A-73) + (B-65), (A-73) + (B-66), (A-73) + (B-67), (A-73) + (B-68), (A-73) + (B-69), (A-73) + (B-70), (A-73) + (B-71), (A-73) + (B-72), (A-73) + (B-73), (A-73) + (B-74), (A-73) + (B-75), (A-73) + (B-76), (A-73) + (B-77), (Al-1) + (B-78), (A-73) + (B-79), (A-73) + (B-80).
(A-74) + (B-1), (A-74) + (B-2), (A-74) + (B-3), (A-74) + (B-4), (A-74) + (B-5), (A-74) + (B-6), (A-74) + (B-7), (A-74) + (B-8), (A-74) + (B-9), (A-74) + (B-10), (A-74) + (B-11), (A-74) + (B-12), (A-74) + (B-13), (A-74) + (B-14), (A-74) + (B-15), (A-74) + (B-16), (A-74) + (B-17), (A-74) + (B-18), (A-74) + (B-19), (A-74) + (B-20), (A-74) + (B-21), (A-74) + (B-22), (A-74) + (B-23), (A-74) + (B-24), (A-74) + (B-25), (A-74) + (B-26), (A-74) + (B-27), (A-74) + (B-28), (A-74) + (B-29), (A-74) + (B-30), (A-74) + (B-31), (A-74) + (B-32), (A-74) + (B-33), (A-74) + (B-34), (A-74) + (B-35), (A-74) + (B-36), (A-74) + (B-37), (A-74) + (B-38), (A-74) + (B-39), (A-74) + (B-40), (A-74) + (B-41), (A-74) + (B-42), (A-74) + (B-43), (A-74) + (B-44), (A-74) + (B-45), (A-74) + (B-46), (A-74) + (B-47), (A-74) + (B-48), (A-74) + (B-49), (A-74) + (B-50), (A-74) + (B-51), (A-74) + (B-52), (A-74) + (B-53), (A-74) + (B-54), (A-74) + (B-55), (A-74) + (B-56), (A-74) + (B-57), (A-74) + (B-58), (A-74) + (B-59), (A-74) + (B-60), (A-74) + (B-61), (A-74) + (B-62), (A-74) + (B-63), (A-74) + (B-64), (A-74) + (B-65), (A-74) + (B-66), (A-74) + (B-67), (A-74) + (B-68), (A-74) + (B-69), (A-74) + (B-70), (A-74) + (B-71), (A-74) + (B-72), (A-74) + (B-73), (A-74) + (B-74), (A-74) + (B-75), (A-74) + (B-76), (A-74) + (B-77), (AI-1) + (B-78), (A-74) + (B-79), (A-74) + (B-80).
(A-75) + (B-1), (A-75) + (B-2), (A-75) + (B-3), (A-75) + (B-4), (A-75) + (B-5), (A-75) + (B-6), (A-75) + (B-7), (A-75) + (B-8), (A-75) + (B-9), (A-75) + (B-10), (A-75) + (B-11). (A-75) + (B-12), (A-75) + (B-13), (A-75) + (B-14), (A-75) + (B-15), (A-75) + (B-16), (A-75) + (B-17), (A-75) + (B-18), (A-75) + (B-19), (A-75) + (B-20), (A-75) + (B-21), (A-75) + (B-22), (A-75) + (B-23), (A-75) + (B-24), (A-75) + (B-25), (A-75) + (B-26), (A-75) + (B-27), (A-75) + (B-28), (A-75) + (B-29), (A-75) + (B-30), (A-75) + (B-31), (A-75) + (B-32), (A-75) + (B-33), (A-75) + (B-34), (A-75) + (B-35), (A-75) + (B-36), (A-75) + (B-37), (A-75) + (B-38), (A-75) + (B-39), (A-75) + (B-40), (A-75) + (B-41), (A-75) + (B-42), (A-75) + (B-43), (A-75) + (B-44), (A-75) + (B-45), (A-75) + (B-46), (A-75) + (B-47), (A-75) + (B-48), (A-75) + (B-49), (A-75) + (B-50), (A-75) + (B-51), (A-75) + (B-52), (A-75) + (B-53), (A-75) + (B-54), (A-75) + (B-55), (A-75) + (B-56), (A-75) + (B-57), (A-75) + (B-58), (A-75) + (B-59), (A-75) + (B-60), (A-75) + (B-61), (A-75) + (B-62), (A-75) + (B-63), (A-75) + (B-64), (A-75) + (B-65), (A-75) + (B-66), (A-75) + (B-67), (A-75) + (B-68), (A-75) + (B-69), (A-75) + (B-70), (A-75) + (B-71), (A-75) + (B-72), (A-75) + (B-73), (A-75) + (B-74), (A-75) + (B-75), (A-75) + (B-76), (A-75) + (B-77), (Al-1) + (B-78), (A-75) + (B-79), (A-75) + (B-80).
(A-76) + (B-1), (A-76) + (B-2), (A-76) + (B-3), (A-76) + (B-4), (A-76) + (B-5), (A-76) + (B-6), (A-76) + (B-7), (A-76) + (B-8), (A-76) + (B-9), (A-76) + (B-10), (A-76) + (B-11), (A-76) + (B-12), (A-76)+ (B-13), (A-76) + (B-14), (A-76) + (B-15), (A-76) + (B-16), (A-76) + (B-17), (A-76) + (B-18), (A-76) + (B-19), (A-76) + (B-20), (A-76) + (B-21), (A-76) + (B-22), (A-76) + (B-23), (A-76) + (B-24), (A-76) + (B-25), (A-76) + (B-26), (A-76) + (B-27), (A-76) + (B-28), (A-76) + (B-29), (A-76) + (B-30), (A-76) + (B-31), (A-76) + (B-32), (A-76) + (B-33), (A-76) + (B-34), (A-76) + (B-35), (A-76) + (B-36), (A-76) + (B-37), (A-76) + (B-38), (A-76) + (B-39), (A-76) + (B-40), (A-76) + (B-41), (A-76) + (B-42), (A-76) + (B-43), (A-76) + (B-44), (A-76) + (B-45), (A-76) + (B-46), (A-76) + (B-47), (A-76) + (B-48), (A-76) + (B-49), (A-76) + (B-50), (A-76) + (B-51), (A-76) + (B-52), (A-76) + (B-53), (A-76) + (B-54), (A-76) + (8-55), (A-76) + (B-56), (A-76) + (B-57), (A-76) + (B-58), (A-76) + (B-59), (A-76) + (B-60), (A-76) + (B-61), (A-76) + (B-62), (A-76) + (B-63), (A-76) + (B-64), (A-76) + (B-65), (A-76) + (B-66), (A-76) + (B-67), (A-76) + (B-68), (A-76) + (B-69), (A-76) + (B-70), (A-76) + (B-71), (A-76) + (B-72), (A-76) + (B-73), (A-76) + (B-74), (A-76) + (B-75), (A-76) + (B-76), (A-76) + (B-77), (Al-1) + (B-78), (A-76) + (B-79), (A-76) + (B-80).
(A-77) + (B-1), (A-77) + (B-2), (A-77) + (B-3), (A-77) + (B-4), (A-77) + (B-5), (A-77) + (B-6), (A-77) + (B-7), (A-77) + (B-8), (A-77) + (B-9), (A-77) + (B-10), (A-77) + (8-11), (A-77) + (B-12), (A-77) + (B-13), (A-77) + (B-14), (A-77) + (B-15), (A-77) + (B-16), (A-77) + (B-17), (A-77) + (B-18), (A-77) + (B-19), (A-77) + (B-20), (A-77) + (B-21), (A-77) + (B-22), (A-77) + (8-23), (A-77) + (B-24), (A-77) + (B-25), (A-77) + (B-26), (A-77) + (B-27), (A-77) + (B-28), (A-77) + (B-29), (A-77) + (B-30), (A-77) + (B-31), (A-77) + (B-32), (A-77) + (B-33), (A-77) + (B-34), (A-77) + (B-35), (A-77) + (B-36), (A-77) + (B-37), (A-77) + (B-38), (A-77) + (B-39), (A-77) + (B-40), (A-77) + (B-41), (A-77) + (B-42), (A-77) + (B-43), (A-77) + (B-44), (A-77) + (B-45), (A-77) + (B-46), (A-77) + (B-47), (A-77) + (B-48), (A-77) + (B-49), (A-77) + (B-50), (A-77) + (B-51), (A-77) + (B-52), (A-77) + (B-53), (A-77) + (B-54), (A-77) + (B-55), (A-77) + (B-56), (A-77) + (B-57), (A-77) + (B-58), (A-77) + (B-59), (A-77) + (B-60), (A-77) + (B-61), (A-77) + (B-62), (A-77) + (B-63), (A-77) + (B-64), (A-77) + (B-65), (A-77) + (B-66), (A-77) + (B-67), (A-77) + (B-68), (A-77) + (B-69), (A-77) + (B-70), (A-77) + (B-71), (A-77) + (B-72), (A-77) + (B-73), (A-77) + (B-74), (A-77) + (B-75), (A-77) + (B-76), (A-77) + (B-77), (AI-1) + (B-78), (A-77) + (B-79), (A-77) + (B-80).
(A-78) + (B-1), (A-78) + (B-2), (A-78) + (B-3), (A-78) + (B-4), (A-78) + (B-5), (A-78) + (B-6), (A-78) + (B-7), (A-78) + (B-8), (A-78) + (B-9), (A-78) + (B-10), (A-78) + (B-11), (A-78) + (B-12), (A-78) + (B-13), (A-78) + (B-14), (A-78) + (B-15), (A-78) + (B-16), (A-78) + (B-17), (A-78) + (B-18), (A-78) + (B-19), (A-78) + (B-20), (A-78) + (B-21), (A-78) + (B-22), (A-78) + (B-23), (A-78) + (B-24), (A-78) + (B-25), (A-78) + (B-26), (A-78) + (B-27), (A-78) + (B-28), (A-78) + (B-29), (A-78) + (B-30), (A-78) + (B-31), (A-78) + (B-32), (A-78) + (B-33), (A-78) + (B-34), (A-78) + (B-35), (A-78) + (B-36), (A-78) + (B-37), (A-78) + (B-38), (A-78) + (B-39), (A-78) + (B-40), (A-78) + (B-41), (A-78) + (B-42), (A-78) + (B-43), (A-78) + (B-44), (A-78) + (B-45), (A-78) + (B-46), (A-78) + (B-47), (A-78) + (B-48), (A-78) + (B-49), (A-78) + (B-50), (A-78) + (B-51), (A-78) + (B-52), (A-78) + (B-53), (A-78) + (B-54), (A-78) + (B-55), (A-78) + (B-56), (A-78) + (B-57), (A-78) + (B-58), (A-78) + (B-59), (A-78) + (B-60), (A-78) + (B-61), (A-78) + (B-62), (A-78) + (B-63), (A-78) + (B-64), (A-78) + (B-65), (A-78) + (B-66), (A-78) + (B-67), (A-78) + (B-68), (A-78) + (B-69), (A-78) + (B-70), (A-78) + (B-71), (A-78) + (B-72), (A-78) + (B-73), (A-78) + (B-74), (A-78) + (B-75), (A-78) + (B-76), (A-78) + (B-77), (Al-1) + (B-78), (A-78) + (B-79), (A-78) + (B-80).
(A-79) + (B-1), (A-79) + (B-2), (A-79) + (B-3), (A-79) + (B-4), (A-79) + (B-5), (A-79) + (B-6), (A-79) + (B-7), (A-79) + (B-8), (A-79) + (B-9), (A-79) + (B-10), (A-79) + (B-11), (A-79) + (B-12), (A-79) + (B-13), (A-79) + (B-14), (A-79) + (B-15), (A-79) + (B-16), (A-79) + (B-17), (A-79) + (B-18), (A-79) + (B-19), (A-79) + (B-20), (A-79) + (B-21), (A-79) + (B-22), (A-79) + (B-23), (A-79) + (B-24), (A-79) + (B-25), (A-79) + (B-26), (A-79) + (B-27), (A-79) + (B-28), (A-79) + (B-29), (A-79) + (B-30), (A-79) + (B-31), (A-79) + (B-32), (A-79) + (B-33), (A-79) + (B-34), (A-79) + (B-35), (A-79) + (B-36), (A-79) + (B-37), (A-79) + (B-38), (A-79) + (B-39), (A-79) + (B-40), (A-79) + (B-41), (A-79) + (B-42), (A-79) + (B-43), (A-79) + (B-44), (A-79) + (B-45), (A-79) + (B-46), (A-79) + (B-47), (A-79) + (B-48), (A-79) + (B-49), (A-79) + (B-50), (A-79) + (B-51), (A-79) + (B-52), (A-79) + (B-53), (A-79) + (B-54), (A-79) + (B-55), (A-79) + (B-56), (A-79) + (B-57), (A-79) + (B-58), (A-79) + (B-59), (A-79) + (B-60), (A-79) + (B-61), (A-79) + (B-62), (A-79) + (B-63), (A-79) + (B-64), (A-79) + (B-65), (A-79) + (B-66), (A-79) + (B-67), (A-79) + (B-68), (A-79) + (B-69), (A-79) + (B-70), (A-79) + (B-71), (A-79) + (B-72), (A-79) + (B-73), (A-79) + (B-74), (A-79) + (B-75), (A-79) + (B-76), (A-79) + (B-77), (AI-1) + (B-78), (A-79) + (B-79), (A-79) + (B-80).
(A-80) + (B-1), (A-80) + (B-2), (A-80) + (B-3), (A-80) + (B-4), (A-80) + (B-5), (A-80) + (B-6), (A-80) + (B-7), (A-80) + (B-8), (A-80) + (B-9), (A-80) + (B-1 0), (A-80) + (B-11), (A-80) + (B-12), (A-80) + (B-13), (A-80) + (B-14), (A-80) + (B-15), (A-80) + (B-16), (A-80) + (B-17), (A-80) + (B-18), (A-80) + (B-19), (A-80) + (B-20), (A-80) + (B-21), (A-80) + (B-22), (A-80) + (B-23), (A-80) + (B-24), (A-80) + (B-25), (A-80) + (B-26), (A-80) + (B-27), (A-80) + (B-28), (A-80) + (B-29), (A-80) + (B-30), (A-80) + (B-31), (A-80) + (B-32), (A-80) + (B-33), (A-80) + (B-34), (A-80) + (B-35), (A-80) + (B-36), (A-80) + (B-37), (A-80) + (B-38), (A-80) + (B-39), (A-80) + (B-40), (A-80) + (B-41), (A-80) + (B-42), (A-80) + (B-43), (A-80) + (B-44), (A-80) + (B-45), (A-80) + (B-46), (A-80) + (B-47), (A-80) + (B-48), (A-80) + (B-49), (A-80) + (B-50), (A-80) + (B-51), (A-80) + (B-52), (A-80) + (B-53), (A-80) + (B-54), (A-80) + (B-55), (A-80) + (B-56), (A-80) + (B-57), (A-80) + (B-58), (A-80) + (B-59), (A-80) + (B-60), (A-80) + (B-61), (A-80) + (B-62), (A-80) + (B-63), (A-80) + (B-64), (A-80) + (B-65), (A-80) + (B-66), (A-80) + (B-67), (A-80) + (B-68), (A-80) + (B-69), (A-80) + (B-70), (A-80) + (B-71), (A-80) + (B-72), (A-80) + (B-73), (A-80) + (B-74), (A-80) + (B-75), (A-80) + (B-76), (A-80) + (B-77), (Al-1) + (B-78), (A-80) + (B-79), (A-80) + (B-80).
(A-81) + (B-1), (A-81) + (B-2), (A-81) + (B-3), (A-81) + (B-4), (A-81) + (B-5), (A-81) + (B-6), (A-81) + (B-7), (A-81) + (B-8), (A-81) + (B-9), (A-81) + (B-10), (A-81) + (B-11), (A-81) + (B-12), (A-81) + (B-13), (A-81) + (B-14), (A-81) + (B-15), (A-81) + (B-16), (A-81) + (B-17), (A-81) + (B-18), (A-81) + (B-19), (A-81) + (B-20), (A-81) + (B-21), (A-81) + (B-22), (A-81) + (B-23), (A-81) + (B-24), (A-81) + (B-25), (A-81) + (B-26), (A-81) + (B-27), (A-81) + (B-28), (A-81) + (B-29), (A-81) + (B-30), (A-81) + (B-31), (A-81) + (B-32), (A-81) + (B-33), (A-81) + (B-34), (A-81) + (B-35), (A-81) + (B-36), (A-81) + (B-37), (A-81) + (B-38), (A-81) + (B-39), (A-81) + (B-40), (A-81) + (B-41), (A-81) + (B-42), (A-81) + (B-43), (A-81) + (B-44), (A-81) + (B-45), (A-81) + (B-46), (A-81) + (B-47), (A-81) + (B-48), (A-81) + (B-49), (A-81) + (B-50), (A-81) + (B-51), (A-81) + (B-52), (A-81) + (B-53), (A-81) + (B-54), (A-81) + (B-55), (A-81) + (B-56), (A-81) + (B-57), (A-81) + (B-58), (A-81) + (B-59), (A-81) + (B-60), (A-81) + (B-61), (A-81) + (B-62), (A-81) + (B-63), (A-81) + (B-64), (A-81) + (B-65), (A-81) + (B-66), (A-81) + (B-67), (A-81) + (B-68), (A-81) + (B-69), (A-81) + (B-70), (A-81) + (B-71), (A-81) + (B-72), (A-81) + (B-73), (A-81) + (B-74), (A-81) + (B-75), (A-81) + (B-76), (A-81) + (B-77), (Al-1) + (B-78), (A-81) + (B-79), (A-81) + (B-80).
(A-82) + (B-1), (A-82) + (B-2), (A-82) + (B-3), (A-82) + (B-4), (A-82) + (B-5), (A-82) + (B-6), (A-82) + (B-7), (A-82) + (B-8), (A-82) + (B-9), (A-82) + (B-10), (A-82) + (B-11), (A-82) + (B-12), (A-82) + (B-13), (A-82) + (B-14), (A-82) + (B-15), (A-82) + (B-16), (A-82) + (B-17), (A-82) + (B-18), (A.82) + (B-1 9), (A-82) + (B-20), (A-82) + (B-21), (A-82) + (B-22), (A-82) + (B-23), (A-82) + (B-24), (A-82) + (B-25), (A-82) + (B-26), (A-82) + (B-27), (A-82) + (B-28), (A-82) + (B-29), (A-82) + (B-30), (A-82) + (B-31), (A-82) + (B-32), (A-82) + (B-33), (A-82) + (B-34), (A-82) + (B-35), (A-82) + (B-36), (A-82) + (B-37), (A-82) + (B-38), (A-82) + (B-39), (A-82) + (B-40), (A-82) + (B-41), (A-82) + (B-42), (A-82) + (B-43), (A-82) + (B-44), (A-82) + (B-45), (A-82) + (B-46), (A-82) + (B-47), (A-82) + (B-48), (A-82) + (B-49), (A-82) + (B-50), (A-82) + (B-51), (A-82) + (B-52), (A-82) + (B-53), (A-82) + (B-54), (A-82) + (B-55), (A-82) + (B-56), (A-82) + (B-67), (A-82) + (B-58), (A-82) + (B-59), (A-82) + (B-60), (A-82) + (8-61), (A-82) + (B-62), (A-82) + (B-63), (A-82) + (B-64), (A-82) + (B-65), (A-82) + (B-66), (A-82) + (B-67), (A-82) + (B-68), (A-82) + (B-69), (A-82) + (B-70), (A-82) + (B-71), (A-82) + (B-72), (A-82) + (B-73), (A-82) + (B-74), (A-82) + (B-75), (A-82) + (B-76), (A-82) + (B-77), (Al-1) + (B-78), (A-82) + (B-79), (A-82) + (B-80).
(A-83) + (B-1), (A-83) + (B-2), (A-83) + (B-3), (A-83) + (B-4), (A-83) + (B-5), (A-83) + (B-6), (A-83) + (B-7), (A-83) + (B-8), (A-83) + (B-9), (A-83) + (B-10), (A-83) + (B-11), (A-83) + (B-12), (A-83) + (B-13), (A-83) + (B-14), (A-83) + (B-15), (A-83) + (B-16), (A-83) + (B-17), (A-83) + (B-18), (A-83) + (B-19), (A-83) + (B-20), (A-83) + (B-21), (A-83) + (B-22), (A-83) + (B-23), (A-83) + (B-24), (A-83) + (B-25), (A-83) + (B-26), (A-83) + (B-27), (A-83) + (B-28), (A-83) + (B-29), (A-83) + (B-30), (A-83) + (B-31), (A-83) + (B-32), (A-83) + (B-33), (A-83) + (B-34), (A-83) + (B-35), (A-83) + (B-36), (A-83) + (B-37), (A-83) + (B-38), (A-83) + (B-39), (A-83) + (B-40), (A-83) + (B-41), (A-83) + (B-42), (A-83) + (B-43), (A-83) + (B-44), (A-83) + (B-45), (A-83) + (B-46), (A-83) + (B-47), (A-83) + (B-48), (A-83) + (B-49), (A-83) + (B-50), (A-83) + (B-51), (A-83) + (B-52), (A-83) + (B-53), (A-83) + (B-54), (A-83) + (B-55), (A-83) + (B-56), (A-83) + (B-57), (A-83) + (B-58), (A-83) + (B-59), (A-83) + (B-60), (A-83) + (B-61), (A-83) + (B-62), (A-83) + (B-63), (A-83) + (B-64), (A-83) + (B-65), (A-83) + (B-66), (A-83) + (B-67), (A-83) + (B-68), (A-83) + (B-69), (A-83) + (B-70), (A-83) + (B-71), (A-83) + (B-72), (A-83) + (B-73), (A-83) + (B-74), (A-83) + (B-75), (A-83) + (B-76), (A-83) + (B-77), (Al-1) + (B-78), (A-83) + (B-79), (A-83) + (B-80).
(A-84)+ (B-1), (A-84) + (B-2), (A-84) + (B-3), (A-84) + (B-4), (A-84) + (B-5), (A-84) + (B-6), (A-84) + (B-7), (A-84) + (B-8), (A-84) + (B-9), (A-84) + (B-10), (A-84) + (B-11), (A-84) + (B-12), (A-84) + (B-13), (A-84) + (B-14), (A-84) + (B-15), (A-84) + (B-16), (A-84) + (B-17), (A-84) + (B-18), (A-84) + (B-19), (A-84) + (B-20), (A-84) + (B-21). (A-84) + (B-22), (A-84) + (B-23), (A-84) + (B-24), (A-84) + (B-25), (A-84) + (B-26), (A-84) + (B-27), (A-84) + (B-28), (A-84) + (B-29), (A-84) + (8-30), (A-84) + (B-31), (A-84) + (B-32), (A-84) + (B-33), (A-84) + (B-34), (A-84) + (B-35), (A-84) + (B-36), (A-84) + (B-37), (A-84) + (B-38), (A-84) + (B-39), (A-84) + (B-40), (A-84) + (B-41), (A-84) + (B-42), (A-84) + (B-43), (A-84) + (B-44), (A-84) + (B-45), (A-84) + (B-46), (A-84) + (B-47), (A-84) + (B-48), (A-84) + (B-49), (A-84) + (B-50), (A-84) + (B-51), (A-84) + (B-52), (A-84) + (B-53), (A-84) + (B-54), (A-84) + (B-55), (A-84) + (B-56), (A-84) + (B-57), (A-84) + (B-58), (A-84) + (B-59), (A-84) + (B-60), (A-84) + (B-61), (A-84) + (B-62), (A-84) + (B-63), (A-84) + (B-64), (A-84) + (B-65), (A-84) + (B-66), (A-84) + (B-67), (A-84) + (B-68), (A-84) + (B-69), (A-84) + (B-70), (A-84) + (B-71), (A-84) + (B-72), (A-84) + (B-73), (A-84) + (B-74), (A-84) + (B-75), (A-84) + (B-76), (A-84) + (8-77), (Al-1) + (B-78), (A-84) + (B-79), (A-84) + (B-80),
(A-85) + (B-1), (A-85) + (B-2), (A-85) + (B-3), (A-85) + (B-4), (A-85) + (B-5), (A-85) + (B-6), (A-85) + (B-7), (A-85) + (B-8), (A-85) + (B-9), (A-85) + (B-10), (A-85) + (B-11), (A-85) + (B-12), (A-85) + (B-13), (A-85) + (B-14), (A-85) + (B-15), (A-85) + (B-16), (A-85) + (B-17), (A-85) + (B-18), (A-85) + (B-19), (A-85) + (B-20), (A-85) + (B-21), (A-85) + (B-22), (A-85) + (B-23), (A-85) + (B-24), (A-85) + (B-25), (A-85) + (B-26), (A-85) + (B-27), (A-85) + (B-28), (A-85) + (B-29), (A-85) + (B-30), (A-85) + (B-31), (A-85) + (B-32), (A-85) + (B-33), (A-85) + (B-34), (A-85) + (B-35), (A-85) + (B-36), (A-85) + (B-37), (A-85) + (B-38), (A-85) + (B-39), (A-85) + (B-40), (A-85) + (B-41), (A-85) + (B-42), (A-86) + (B-43), (A-85) + (B-44), (A-85) + (B-46), (A-85) + (B-46), (A-85) + (B-47), (A-85) + (B-48), (A-85) + (B-49), (A-85) + (B-50), (A-85) + (B-51), (A-85) + (B-52), (A-85) + (B-53), (A-85) + (B-54), (A-85) + (B-55), (A-86) + (B-56), (A-85) + (B-57), (A-85) + (B-58), (A-85) + (B-59), (A-85) + (B-60), (A-85) + (B-61). (A-85) + (B-62), (A-85) + (B-63), (A-85) + (B-64), (A-85) + (B-65), (A-85) + (B-66), (A-85) + (B-67), (A-85) + (B-68), (A-85) + (B-69), (A-85) + (B-70), (A-85) + (B-71), (A-85) + (B-72), (A-85) + (B-73), (A-85) + (B-74), (A-85) + (B-75), (A-85) + (B-76), (A-85) + (B-77), (Al-1) + (B-78), (A-85) + (B-79), (A-85) + (B-80).
(A-86) + (B-1), (A-86) + (B-2), (A-86) + (B-3), (A-86) + (B-4), (A-86) + (B-5), (A-86) + (B-6), (A-86) + (B-7), (A-86) + (B-8), (A-86) + (B-9), (A-86) + (B-10), (A-86) + (B-11), (A-86) + (B-12), (A-86) + (B-13), (A-86) + (B-14), (A-86) + (B-15), (A-86) + (B-16), (A-86) + (B-17), (A-86) + (B-18), (A-86) + (B-19), (A-86) + (B-20), (A-86) + (B-21), (A-86) + (B-22), (A-86) + (B-23), (A-86) + (B-24), (A-86) + (B-25), (A-86) + (B-26), (A-86) + (B-27), (A-86) + (B-28), (A-86) + (B-29), (A-86) + (B-30), (A-86) + (B-31), (A-86) + (B-32), (A-86) + (B-33), (A-86) + (B-34), (A-86) + (B-35), (A-86) + (B-36), (A-86) + (B-37), (A-86) + (B-38), (A-86) + (B-39), (A-86) + (B-40), (A-86) + (B-41), (A-86) + (B-42), (A-86) + (B-43), (A-86) + (B-44), (A-86) + (B-45), (A-86) + (B-46), (A-86) + (B-47), (A-86) + (B-48), (A-86) + (B-49), (A-86) + (B-50), (A-86) + (B-51), (A-86) + (B-52), (A-86) + (B-53), (A-86) + (B-54), (A-86) + (B-65), (A-86) + (B-56), (A-86) + (B-57), (A-86) + (B-68), (A-86) + (B-59), (A-86) + (B-60), (A-86) + (B-61), (A-86) + (B-62), (A-86) + (B-63), (A-86) + (B-64), (A-86) + (B-65), (A-86) + (B-66), (A-86) + (B-67), (A-86) + (B-68), (A-86) + (B-69), (A-86) + (B-70), (A-86) + (B-71), (A-86) + (B-72), (A-86) + (B-73), (A-86) + (B-74), (A-86) + (B-75), (A-86) + (B-76), (A-86) + (B-77), (AI-1) + (B-78), (A-86) + (B-79), (A-86) + (B-80).
(A-87) + (B-1), (A-87) + (B-2), (A-87) + (B-3), (A-87) + (B-4), (A-87) + (B-5), (A-87) + (B-6), (A-87) + (B-7), (A-87) + (B-8), (A-87) + (B-9), (A-87) + (B-10), (A-87) + (B-11), (A-87) + (B-12), (A-87) + (B-13), (A-87) + (B-14), (A-87) + (B-15), (A-87) + (B-16), (A-87) + (B-17), (A-87) + (B-18), (A-87) + (B-19), (A-87) + (B-20), (A-87) + (B-21), (A-87) + (B-22), (A-87) + (B-23), (A-87) + (B-24), (A-87) + (B-25), (A-87) + (B-26), (A-87) + (B-27), (A-87) + (B-28), (A-87) + (B-29), (A-87) + (B-30), (A-87) + (B-31), (A-87) + (B-32), (A-87) + (B-33), (A-87) + (B-34), (A-87) + (B-35), (A-87) + (B-36), (A-87) + (B-37), (A-87) + (B-38), (A-87) + (B-39), (A-87) + (B-40), (A-87) + (B-41), (A-87) + (B-42), (A-87) + (B-43), (A-87) + (B-44), (A-87) + (B-45), (A-87) + (B-46), (A-87) + (B-47), (A-87) + (B-48), (A-87) + (B-49), (A-87) + (B-50), (A-87) + (B-51), (A-87) + (B-52), (A-87) + (B-53), (A-87) + (B-54), (A-87) + (B-55), (A-87) + (B-56), (A-87) + (B-57), (A-87) + (B-58), (A-87) + (B-59), (A-87) + (B-60), (A-87) + (B-61), (A-87) + (B-62), (A-87) + (B-63), (A-87) + (B-64), (A-87) + (B-65), (A-87) + (B-66), (A-87) + (B-67), (A-87) + (B-68), (A-87) + (B-69), (A-87) + (B-70), (A-87) + (B-71), (A-87) + (B-72), (A-87) + (B-73), (A-87) + (B-74), (A-87) + (B-75), (A-87) + (B-76), (A-87) + (B-77), (A1-1) + (B-78), (A-87) + (B-79), (A-87) + (B-80).
(A-88) + (B-1), (A-88) + (B-2), (A-88) + (B-3), (A-88) + (B-4), (A-88) + (B-5), (A-88) + (B-6), (A-88) + (B-7), (A-88) + (B-8), (A-88) + (B-9), (A-88) + (B-1 0), (A-88) + (B-11), (A-88) + (B-12), (A-88) + (B-13), (A-88) + (B-14), (A-88) + (B-16), (A-88) + (B-16), (A-88) + (B-1 7), (A-88) + (B-18). (A-88) + (B-19), (A-88) + (B-20), (A-88) + (B-21), (A-88) + (B-22), (A-88) + (B-23), (A-88) + (B-24), (A-88) + (B-25), (A-88) + (B-26), (A-88) + (B-27), (A-88) + (B-28), (A-88) + (B-29), (A-88) + (B-30), (A-88) + (B-31), (A-88) + (B-32), (A-88) + (B-33), (A-88) + (B-34), (A-88) + (B-35), (A-88) + (B-36), (A-88) + (B-37), (A-88) + (B-38), (A-88) + (B-39), (A-88) + (B-40), (A-88) + (B-41), (A-88) + (B-42), (A-88) + (B-43), (A-88) + (B-44), (A-88) + (B-45), (A-88) + (B-46), (A-88) + (B-47), (A-88) + (B-48), (A-88) + (B-49), (A-88) + (B-50), (A-88) + (B-51), (A-88) + (B-52), (A-88) + (B-53), (A-88) + (B-54), (A-88) + (B-55), (A-88) + (B-56), (A-88) + (B-57), (A-88) + (B-58), (A-88) + (B-59), (A-88) + (B-60), (A-88) + (B-61), (A-88) + (B-62), (A-88) + (B-63), (A-88) + (B-64), (A-88) + (B-65), (A-88) + (B-66), (A-88) + (B-67), (A-88) + (B-68), (A-88) + (B-69), (A-88) + (B-70), (A-88) + (B-71), (A-88) + (B-72), (A-88) + (B-73), (A-88) + (B-74), (A-88) + (B-75), (A-88) + (B-76), (A-88) + (B-77), (Al-1) + (B-78), (A-88) + (B-79), (A-88) + (B-80).
(A-89) + (B-1), (A-89) + (B-2), (A-89) + (B-3), (A-89) + (B-4), (A-89) + (B-5), (A-89) + (B-6), (A-89) + (B-7), (A-89) + (B-8), (A-89) + (B-9), (A-89) + (B-10), (A-89) + (B-11), (A-89) + (B-12), (A-89) + (B-13), (A-89) + (B-14), (A-89) + (B-15), (A-89) + (B-16), (A-89) + (B-17), (A-89) + (B-18), (A-89) + (B-19), (A-89) + (B-20), (A-89) + (B-21), (A-89) + (B-22), (A-89) + (B-23), (A-89) + (B-24), (A-89) + (B-26), (A-89) + (B-26), (A-89) + (B-27), (A-89) + (B-28), (A-89) + (B-29), (A-89) + (B-30), (A-89) + (B-31), (A-89) + (B-32), (A-89) + (B-33), (A-89) + (B-34), (A-89) + (B-35), (A-89) + (B-36), (A-89) + (B-37), (A-89) + (8-38), (A-89) + (B-39), (A-89) + (B-40), (A-89) + (B-41), (A-89) + (B-42), (A-89) + (B-43), (A-89) + (B-44), (A-89) + (B-45), (A-89) + (B-46), (A-89) + (B-47), (A-89) + (B-48), (A-89) + (B-49), (A-89) + (B-50), (A-89) + (B-51), (A-89) + (B-52), (A-89) + (B-53), (A-89) + (B-54), (A-89) + (B-55), (A-89) + (B-56), (A-89) + (B-57), (A-89) + (B-58), (A-89) + (B-59), (A-89) + (B-60), (A-89) + (B-61). (A-89) + (B-62), (A-89) + (B-63), (A-89) + (B-64), (A-89) + (B-65), (A-89) + (B-66), (A-89) + (B-67), (A-89) + (B-68), (A-89) + (B-69), (A-89) + (B-70), (A-89) + (B-71), (A-89) + (B-72), (A-89) + (B-73), (A-89) + (B-74), (A-89) + (B-75), (A-89) + (B-76), (A-89) + (B-77), (Al-1) + (B-78), (A-89) + (B-79), (A-89) + (B-80).
(A-90) + (B-1), (A-90) + (B-2), (A-90) + (B-3), (A-90) + (B-4), (A-90) + (B-5), (A-90) + (B-6), (A-90) + (B-7), (A-90) + (B-8), (A-90) + (B-9), (A-90) + (B-10). (A-90) + (B-11), (A-90) + (B-12), (A-90) + (B-13), (A-90) + (B-14), (A-90) + (B-15), (A-90) + (B-16). (A-90) + (B-17), (A-90) + (B-18), (A-90) + (B-19), (A-90) + (B-20), (A-90) + (B-21), (A-90) + (B-22), (A-90) + (B-23), (A-90) + (B-24), (A-90) + (B-25), (A-90) + (B-26), (A-90) + (B-27), (A-90) + (B-28), (A-90) + (B-29), (A-90) + (B-30), (A-90) + (B-31), (A-90) + (B-32), (A-90) + (B-33), (A-90) + (B-34), (A-90) + (B-35), (A-90) + (B-36), (A-90) + (B-37), (A-90) + (B-38), (A-90) + (B-39), (A-90) + (B-40), (A-90) + (B-41), (A-90) + (B-42), (A-90) + (B-43), (A-90) + (B-44), (A-90) + (B-45), (A-90) + (B-46), (A-90) + (B-47), (A-90) + (B-48), (A-90) + (B-49), (A-90) + (B-50), (A-90) + (B-51), (A-90) + (B-52), (A-90) + (B-53), (A-90) + (B-54), (A-90) + (B-55), (A-90) + (B-56), (A-90) + (B-57), (A-90) + (B-58), (A-90) + (B-59), (A-90) + (B-60), (A-90) + (B-61), (A-90) + (B-62), (A-90) + (B-63), (A-90) + (B-64), (A-90) + (B-65), (A-90) + (B-66), (A-90) + (B-67), (A-90) + (B-68), (A-90) + (B-69), (A-90) + (B-70), (A-90) + (B-71), (A-90) + (B-72), (A-90) + (B-73), (A-90) + (B-74), (A-90) + (B-75), (A-90) + (B-76), (A-90) + (B-77), (Al-1) + (B-78), (A-90) + (B-79), (A-90) + (B-80).
(A-91) + (B-1), (A-91) + (B-2), (A-91) + (B-3), (A-91) + (B-4), (A-91) + (B-5), (A-91) + (B-6), (A-91) + (B-7), (A-91) + (B-8), (A-91) + (B-9), (A-91) + (B-10), (A-91) + (B-11), (A-91) + (B-12), (A-91) + (B-13), (A-91) + (B-14), (A-91) + (B-15), (A-91) + (B-16), (A-91) + (B-17), (A-91) + (B-18), (A-91) + (B-19), (A-91) + (B-20), (A-91) + (B-21), (A-91) + (B-22), (A-91) + (B-23), (A-91) + (B-24), (A-91) + (B-25), (A-91) + (B-26), (A-91) + (B-27), (A-91) + (B-28), (A-91) + (B-29), (A-91) + (B-30), (A-91) + (B-31), (A-91) + (B-32), (A-91) + (B-33), (A-91) + (B-34), (A-91) + (B-35), (A-91) + (B-36), (A-91) + (B-37), (A-91) + (B-38), (A-91) + (B-39), (A-91) + (B-40), (A-91) + (B-41), (A-91) + (B-42), (A-91) + (B-43), (A-91) + (B-44), (A-91) + (B-45), (A-91) + (B-46), (A-91) + (B-47), (A-91) + (B-48), (A-91) + (B-49), (A-91) + (B-50), (A-91) + (B-51), (A-91) + (B-52), (A-91) + (B-53), (A-91) + (B-54), (A-91) + (B-55), (A-91) + (B-56), (A-91) + (B-57), (A-91) + (B-58), (A-91) + (B-59), (A-91) + (B-60), (A-91) + (B-61), (A-91) + (B-62), (A-91) + (B-63), (A-91) + (B-64), (A-91) + (B-65), (A-91) + (B-66), (A-91) + (B-67), (A-91) + (B-68), (A-91) + (B-69), (A-91) + (B-70), (A-91) + (B-71), (A-91) + (B-72), (A-91) + (B-73), (A-91) + (B-74), (A-91) + (B-75), (A-91) + (B-76), (A-91) + (B-77), (AI-1) + (B-78), (A-91) + (B-79), (A-91) + (B-80).
(A-92) + (B-1), (A-92) + (B-2), (A-92) + (B-3), (A-92) + (B-4), (A-92) + (B-6), (A-92) + (B-6), (A-92) + (B-7), (A-92) + (B-8), (A-92) + (B-9), (A-92) + (B-1 0), (A-92) + (B-11), (A-92) + (B-12), (A-92) + (B-13), (A-92) + (B-14), (A-92) + (B-15), (A-92) + (B-16), (A-92) + (B-17), (A-92) + (B-18), (A-92) + (B-19), (A-92) + (B-20), (A-92) + (B-21), (A-92) + (B-22), (A-92) + (B-23), (A-92) + (B-24), (A-92) + (B-25), (A-92) + (B-26), (A-92) + (B-27), (A-92) + (B-28), (A-92) + (B-29), (A-92) + (B-30), (A-92) + (B-31), (A-92) + (B-32), (A-92) + (B-33), (A-92) + (B-34), (A-92) + (B-35), (A-92) + (B-36), (A-92) + (B-37), (A-92) + (B-38), (A-92) + (B-39), (A-92) + (B-40), (A-92) + (B-41), (A-92) + (B-42), (A-92) + (B-43), (A-92) + (B-44), (A-92) + (B-45), (A-92) + (B-46), (A-92) + (B-47), (A-92) + (B-48), (A-92) + (B-49), (A-92) + (B-50), (A-92) + (B-51), (A-92) + (B-52), (A-92) + (B-53), (A-92) + (B-54), (A-92) + (B-55), (A-92) + (B-56), (A-92) + (B-57), (A-92) + (B-58), (A-92) + (B-59), (A-92) + (B-60), (A-92) + (B-61), (A-92) + (B-62), (A-92) + (B-63), (A-92) + (B-64), (A-92) + (B-65), (A-92) + (B-66), (A-92) + (B-67), (A-92) + (B-68), (A-92) + (B-69), (A-92) + (B-70), (A-92) + (B-71), (A-92) + (B-72), (A-92) + (B-73), (A-92) + (B-74), (A-92) + (B-75), (A-92) + (B-76), (A-92) + (B-77), (AI-1) + (B-78), (A-92) + (B-79), (A-92) + (B-80).
(A-93) + (B-1), (A-93) + (B-2), (A-93) + (B-3), (A-93) + (B-4), (A-93) + (B-5), (A-93) + (B-6), (A-93) + (B-7), (A-93) + (B-8), (A-93) + (B-9), (A-93) + (B-10), (A-93) + (B-11), (A-93) + (B-12), (A-93) + (B-13), (A-93) + (B-14), (A-93) + (B-15), (A-93) + (B-16), (A-93) + (B-17), (A-93) + (B-18), (A-93) + (B-19), (A-93) + (B-20), (A-93) + (B-21), (A-93) + (B-22), (A-93) + (B-23), (A-93) + (B-24), (A-93) + (B-25), (A-93) + (B-26), (A-93) + (B-27), (A-93) + (B-28), (A-93) + (B-29), (A-93) + (B-30), (A-93) + (B-31), (A-93) + (B-32), (A-93) + (B-33), (A-93) + (B-34), (A-93) + (B-35), (A-93) + (B-36), (A-93) + (B-37), (A-93) + (B-38), (A-93) + (B-39), (A-93) + (B-40), (A-93) + (B-41), (A-93) + (B-42), (A-93) + (B-43), (A-93) + (B-44), (A-93) + (B-45), (A-93) + (B-46), (A-93) + (B-47), (A-93) + (B-48), (A-93) + (B-49), (A-93) + (B-50), (A-93) + (B-51), (A-93) + (B-52), (A-93) + (B-53), (A-93) + (B-54), (A-93) + (B-55), (A-93) + (B-56), (A-93) + (B-57), (A-93) + (B-58), (A-93) + (B-59), (A-93) + (B-60), (A-93) + (B-61), (A-93) + (B-62), (A-93) + (B-63), (A-93) + (B-64), (A-93) + (B-65), (A-93) + (B-66), (A-93) + (B-67), (A-93) + (B-68), (A-93) + (B-69), (A-93) + (B-70), (A-93) + (B-71), (A-93) + (B-72), (A-93) + (B-73), (A-93) + (B-74), (A-93) + (B-75), (A-93) + (B-76), (A-93) + (B-77), (Al-1) + (B-78), (A-93) + (B-79), (A-93) + (B-80).
(A-94) + (B-1), (A-94) + (B-2), (A-94) + (B-3), (A-94) + (B-4), (A-94) + (B-5), (A-94) + (B-6), (A-94) + (B-7), (A-94) + (B-8), (A-94) + (B-9), (A-94) + (B-10), (A-94) + (B-11), (A-94) + (B-12), (A-94) + (B-13), (A-94) + (B-14), (A-94) + (B-15), (A-94) + (B-16), (A-94) + (B-17), (A-94) + (B-18), (A-94) + (B-19), (A-94) + (B-20), (A-94) + (B-21), (A-94) + (B-22), (A-94) + (B-23), (A-94) + (B-24), (A-94) + (B-25), (A-94) + (B-26), (A-94) + (B-27), (A-94) + (B-28), (A-94) + (B-29), (A-94) + (B-30), (A-94) + (B-31), (A-94) + (B-32), (A-94) + (B-33), (A-94) + (B-34), (A-94) + (B-35), (A-94) + (B-36), (A-94) + (B-37), (A-94) + (B-38), (A-94) + (B-39), (A-94) + (B-40), (A-94) + (B-41), (A-94) + (B-42), (A-94) + (B-43), (A-94) + (B-44), (A-94) + (B-45), (A-94) + (B-46), (A-94) + (B-47), (A-94) + (B-48), (A-94) + (B-49), (A-94) + (B-50), (A-94) + (B-51), (A-94) + (B-52), (A-94) + (B-53), (A-94) + (B-54), (A-94) + (B-55), (A-94) + (B-56), (A-94) + (B-57), (A-94) + (B-58), (A-94) + (B-59), (A-94) + (B-60), (A-94) + (B-61), (A-94) + (B-62), (A-94) + (B-63), (A-94) + (B-64), (A-94) + (B-65), (A-94) + (B-66), (A-94) + (B-67), (A-94) + (B-68), (A-94) + (B-69), (A-94) + (B-70), (A-94) + (B-71), (A-94) + (B-72), (A-94) + (B-73), (A-94) + (B-74), (A-94) + (B-75), (A-94) + (B-76), (A-94) + (B-77), (AI-1) + (B-78), (A-94) + (B-79), (A-94) + (B-80).
(A-95) + (B-1), (A-95) + (B-2), (A-95) + (B-3), (A-95) + (B-4), (A-95) + (B-5), (A-95) + (B-6), (A-95) + (B-7), (A-96) + (B-8), (A-95) + (B-9), (A-95) + (B-10), (A-95) + (B-11), (A-95) + (B-12), (A-95) + (B-13), (A-95) + (B-14), (A-95) + (B-15), (A-95) + (B-16), (A-95) + (B-17), (A-95) + (B-18), (A-95) + (B-19), (A-95) + (B-20), (A-95) + (B-21), (A-95) + (B-22), (A-95) + (B-23), (A-95) + (B-24), (A-95) + (B-25), (A-95) + (B-26), (A-95) + (B-27), (A-95) + (B-28), (A-95) + (B-29), (A-95) + (B-30), (A-95) + (B-31), (A-95) + (B-32), (A-95) + (B-33), (A-95) + (B-34), (A-95) + (B-35), (A-95) + (B-36), (A-95) + (B-37), (A-95) + (B-38), (A-95) + (B-39), (A-95) + (B-40), (A-95) + (B-41), (A-95) + (B-42), (A-95) + (B-43), (A-95) + (B-44), (A-95) + (B-45), (A-95) + (B-46), (A-95) + (B-47), (A-95) + (B-48), (A-95) + (B-49), (A-95) + (B-50), (A-95) + (B-51), (A-95) + (B-52), (A-95) + (B-53), (A-95) + (B-54), (A-95) + (B-55), (A-95) + (B-56), (A-95) + (B-57), (A-95) + (B-58), (A-95) + (B-59), (A-95) + (B-60), (A-95) + (B-61), (A-95) + (B-62), (A-95) + (B-63), (A-95) + (B-64), (A-95) + (B-65), (A-95) + (B-66), (A-95) + (B-67), (A-95) + (B-68), (A-95) + (B-69), (A-95) + (B-70), (A-95) + (B-71), (A-95) + (B-72), (A-95) + (B-73), (A-95) + (B-74), (A-95) + (B-75), (A-95) + (B-76), (A-95) + (B-77), (Al-1) + (B-78), (A-95) + (B-79), (A-95) + (B-80).
(A-96) + (B-1), (A-96) + (B-2), (A-96) + (B-3), (A-96) + (B-4), (A-96) + (B-5), (A-96) + (B-6), (A-96) + (B-7), (A-96) + (B-8), (A-96) + (B-9), (A-96) + (B-10), (A-96) + (B-11), (A-96) + (B-12), (A-96) + (B-13), (A-96) + (B-14), (A-96) + (B-15), (A-96) + (B-16), (A-96) + (B-17), (A-96) + (B-18), (A-96) + (B-19), (A-96) + (B-20), (A-96) + (B-21), (A-96) + (B-22), (A-96) + (B-23), (A-96) + (B-24), (A-96) + (B-25), (A-96) + (B-26), (A-96) + (B-27), (A-96) + (B-28), (A-96) + (B-29), (A-96) + (B-30), (A-96) + (B-31), (A-96) + (B-32), (A-96) + (B-33), (A-96) + (B-34), (A-96) + (B-35), (A-96) + (B-36), (A-96) + (B-37), (A-96) + (B-38), (A-96) + (B-39), (A-96) + (B-40), (A-96) + (B-41), (A-96) + (B-42), (A-96) + (B-43), (A-96) + (B-44), (A-96) + (B-45), (A-96) + (B-46), (A-96) + (B-47), (A-96) + (B-48), (A-96) + (B-49), (A-96) + (B-50), (A-96) + (B-51), (A-96) + (B-52), (A-96) + (B-53), (A-96) + (B-54), (A-96) + (B-55), (A-96) + (B-56), (A-96) + (B-57), (A-96) + (B-58), (A-96) + (B-59), (A-96) + (B-60), (A-96) + (B-61), (A-96) + (B-62), (A-96) + (B-63), (A-96) + (B-64), (A-96) + (B-65), (A-96) + (B-66), (A-96) + (B-67), (A-96) + (B-68), (A-96) + (B-69), (A-96) + (B-70), (A-96) + (B-71), (A-96) + (B-72), (A-96) + (B-73), (A-96) + (B-74), (A-96) + (B-75), (A-96) + (B-76), (A-96) + (B-77), (Al-1) + (B-78), (A-96) + (B-79), (A-96) + (B-80).
(A-97) + (B-1), (A-97) + (B-2), (A-97) + (B-3), (A-97) + (B-4), (A-97) + (B-5), (A-97) + (B-6), (A-97) + (B-7), (A-97) + (B-8), (A-97) + (B-9), (A-97) + (B-10), (A-97) + (B-11), (A-97) + (B-12), (A-97) + (B-13), (A-97) + (B-14), (A-97) + (B-15), (A-97) + (B-16), (A-97) + (B-17), (A-97) + (B-18), (A-97) + (B-19), (A-97) + (B-20), (A-97) + (B-21), (A-97) + (B-22), (A-97) + (B-23), (A-97) + (B-24), (A-97) + (B-25), (A-97) + (B-26), (A-97) + (B-27), (A-97) + (B-28), (A-97) + (B-29), (A-97) + (B-30), (A-97) + (B-31), (A-97) + (B-32), (A-97) + (B-33), (A-97) + (B-34), (A-97) + (B-35), (A-97) + (B-36), (A-97) + (B-37), (A-97) + (B-38), (A-97) + (B-39), (A-97) + (B-40), (A-97) + (B-41), (A-97) + (B-42), (A-97) + (B-43), (A-97) + (B-44), (A-97) + (B-45), (A-97) + (B-46), (A-97) + (B-47), (A-97) + (B-48), (A-97) + (B-49), (A-97) + (B-50), (A-97) + (B-51), (A-97) + (B-52), (A-97) + (B-53), (A-97) + (B-54), (A-97) + (B-55), (A-97) + (B-56), (A-97) + (B-57), (A-97) + (B-58), (A-97) + (B-59), (A-97) + (B-60), (A-97) + (B-61), (A-97) + (B-62), (A-97) + (B-63), (A-97) + (B-64), (A-97) + (B-65), (A-97) + (B-66), (A-97) + (B-67), (A-97) + (B-68), (A-97) + (B-69), (A-97) + (B-70), (A-97) + (B-71), (A-97) + (B-72), (A-97) + (B-73), (A-97) + (B-74), (A-97) + (B-75), (A-97) + (B-76), (A-97) + (B-77), (Al-1) + (B-78), (A-97) + (B-79), (A-97) + (B-80).
(A-98) + (B-1), (A-98) + (B-2), (A-98) + (B-3), (A-98) + (B-4), (A-98) + (B-5), (A-98) + (B-6), (A-98) + (B-7), (A-98) + (B-8), (A-98) + (B-9), (A-98) + (B-10), (A-98) + (B-11), (A-98) + (B-12), (A-98) + (B-13), (A-98) + (B-14), (A-98) + (B-15), (A-98) + (B-16), (A-98) + (B-17), (A-98) + (B-18), (A-98) + (B-19), (A-98) + (B-20), (A-98) + (B-21). (A-98) + (B-22), (A-98) + (B-23), (A-98) + (B-24), (A-98) + (B-25), (A-98) + (B-26), (A-98) + (B-27), (A-98) + (B-28), (A-98) + (B-29), (A-98) + (B-30), (A-98) + (B-31), (A-98) + (B-32), (A-98) + (B-33), (A-98) + (B-34), (A-98) + (B-35), (A-98) + (B-36), (A-98) + (B-37), (A-98) + (B-38), (A-98) + (B-39), (A-98) + (B-40), (A-98) + (B-41), (A-98) + (B-42), (A-98) + (B-43), (A-98) + (B-44), (A-98) + (B-45), (A-98) + (B-46), (A-98) + (B-47), (A-98) + (B-48), (A-98) + (B-49), (A-98) + (B-50), (A-98) + (B-51), (A-98) + (B-52), (A-98) + (B-53), (A-98) + (B-54), (A-98) + (B-55), (A-98) + (B-56), (A-98) + (B-57), (A-98) + (B-58), (A-98) + (B-59), (A-98) + (B-60), (A-98) + (B-61), (A-98) + (B-62), (A-98) + (B-63), (A-98) + (B-64), (A-98) + (B-65), (A-98) + (B-66), (A-98) + (B-67), (A-98) + (B-68), (A-98) + (B-69), (A-98) + (B-70), (A-98) + (B-71), (A-98) + (B-72), (A-98) + (B-73), (A-98) + (B-74), (A-98) + (B-75), (A-98) + (B-76), (A-98) + (B-77), (Al-1) + (B-78), (A-98) + (B-79), (A-98) + (B-80).
(A-99) + (B-1), (A-99) + (B-2), (A-99) + (B-3), (A-99) + (B-4), (A-99) + (B-5), (A-99) + (B-6), (A-99) + (B-7), (A-99) + (B-8), (A-99) + (B-9), (A-99) + (B-10), (A-99) + (B-11), (A-99) + (B-12), (A-99) + (B-13), (A-99) + (B-14), (A-99) + (B-15), (A-99) + (B-16), (A-99) + (B-17), (A-99) + (B-18), (A-99) + (B-19), (A-99) + (B-20), (A-99) + (B-21), (A-99) + (B-22), (A-99) + (B-23), (A-99) + (B-24), (A-99) + (B-25), (A-99) + (B-26), (A-99) + (B-27), (A-99) + (B-28), (A-99) + (B-29), (A-99) + (B-30), (A-99) + (B-31), (A-99) + (B-32), (A-99) + (B-33), (A-99) + (B-34), (A-99) + (B-35), (A-99) + (B-36), (A-99) + (B-37), (A-99) + (B-38), (A-99) + (B-39), (A-99) + (B-40), (A-99) + (B-41), (A-99) + (B-42), (A-99) + (B-43), (A-99) + (B-44), (A-99) + (B-45), (A-99) + (B-46), (A-99) + (B-47), (A-99) + (B-48), (A-99) + (B-49), (A-99) + (B-50), (A-99) + (B-51), (A-99) + (B-52), (A-99) + (B-53), (A-99) + (B-54), (A-99) + (B-55), (A-99) + (B-56), (A-99) + (B-57), (A-99) + (B-58), (A-99) + (B-59), (A-99) + (B-60), (A-99) + (B-61), (A-99) + (B-62), (A-99) + (B-63), (A-99) + (B-64), (A-99) + (B-65), (A-99) + (B-66), (A-99) + (B-67), (A-99) + (B-68), (A-99) + (B-69), (A-99) + (B-70), (A-99) + (B-71), (A-99) + (B-72), (A-99) + (B-73), (A-99) + (B-74), (A-99) + (B-75), (A-99) + (B-76), (A-99) + (B-77), (Al-1) + (B-78), (A-99) + (B-79), (A-99) + (B-80).
(A-100) + (B-1), (A-100) + (B-2), (A-100) + (B-3), (A-100) + (B-4), (A-100) + (B-5), (A-100) + (B-6), (A-100) + (B-7), (A-100) + (B-8), (A-100) + (B-9), (A-100) + (B-10), (A-100) + (B-11), (A-100) + (B-12), (A-100) + (B-13), (A-100) + (B-14), (A-100) + (B-15), (A-100) + (B-16), (A-100) + (B-17), (A-100) + (B-18), (A-100) + (B-19), (A-100) + (B-20), (A-100) + (B-21), (A-100) + (B-22), (A-100) + (B-23), (A-100) + (B-24), (A-100) + (B-25), (A-100) + (B-26), (A-100) + (B-27), (A-100) + (B-28), (A-100) + (B-29), (A-100) + (B-30), (A-100) + (B-31), (A-100) + (B-32), (A-100) + (B-33), (A-100) + (B-34), (A-100) + (B-35), (A-100) + (B-36), (A-100) + (B-37), (A-100) + (B-38), (A-100) + (B-39), (A-100) + (B-40), (A-100) + (B-41), (A-100) + (B-42), (A-100) + (B-43), (A-100) + (B-44), (A-100) + (B-45), (A-100) + (B-46), (A-100) + (B-47), (A-100) + (B-48), (A-100) + (8-49), (A-100) + (B-50), (A-100) + (B-51), (A-100) + (B-52), (A-100) + (B-53), (A-100) + (B-54), (A-100) + (B-55), (A-100) + (B-56), (A-100) + (B-57), (A-100) + (B-58), (A-100) + (B-59), (A-100) + (B-60), (A-100) + (B-61), (A-100) + (B-62), (A-100) + (B-63), (A-100) + (B-64), (A-100) + (B-65), (A-100) + (B-66), (A-100) + (B-67), (A-100) + (B-68), (A-100) + (B-69), (A-100) + (B-70), (A-100) + (B-71), (A-100) + (B-72), (A-100) + (B-73), (A-100) + (B-74), (A-100) + (B-75), (A-100) + (B-76), (A-100) + (B-77), (Al-1) + (B-78), (A-100) + (B-79), (A-100) + (B-80).
(A-101) + (B-1), (A-101) + (B-2), (A-101) + (B-3), (A-101) + (B-4), (A-101) + (B-5), (A-101) + (B-6), (A-101) + (B-7), (A-101) + (B-8), (A-101) + (B-9), (A-101) + (B-10), (A-101) + (B-11), (A-101) + (B-12), (A-101) + (B-13), (A-101) + (B-14), (A-101) + (B-15), (A-101) + (B-16), (A-101) + (B-1 7), (A-101) + (B-18), (A-101) + (B-19), (A-101) + (B-20), (A-101) + (B-21), (A-101) + (B-22), (A-101) + (B-23), (A-101) + (B-24), (A-101) + (B-25), (A-101) + (B-26), (A-101) + (B-27), (A-101) + (B-28), (A-101) + (B-29), (A-101) + (B-30), (A-101) + (8-31), (A-101) + (B-32), (A-101) + (B-33), (A-101) + (B-34), (A-101) + (B-35), (A-101) + (B-36), (A-101) + (B-37), (A-101) + (B-38), (A-101) + (B-39), (A-101) + (B-40), (A-101) + (B-41), (A-101) + (B-42), (A-101) + (B-43), (A-101) + (B-44), (A-101) + (B-45), (A-101) + (B-46), (A-101) + (B-47), (A-101) + (B-48), (A-101) + (B-49), (A-101) + (B-50), (A-101) + (B-51), (A-101) + (B-52), (A-101) + (B-53), (A-101) + (B-54), (A-101) + (B-55), (A-101) + (B-56), (A-101) + (B-57), (A-101) + (B-58), (A-101) + (B-59), (A-101) + (B-60), (A-101) + (B-61), (A-101) + (B-62), (A-101) + (B-63), (A-101) + (B-64), (A-101) + (B-65), (A-101) + (B-66), (A-1 01) + (B-67), (A-101) + (B-68), (A-101) + (B-69), (A-101) + (B-70), (A-101) + (B-71), (A-101) + (B-72), (A-101) + (B-73), (A-101) + (B-74), (A-101) + (B-75), (A-101) + (B-76), (A-101) + (B-77), (Al-1) + (B-78), (A-101) + (B-79), (A-101) + (B-80).
(A-102) + (B-1), (A-102) + (B-2), (A-102) + (B-3), (A-102) + (B-4), (A-102) + (B-5), (A-102) + (B-6), (A-102) + (B-7), (A-102) + (B-8), (A-102) + (B-9), (A-102) + (B-10), (A-102) + (B-11), (A-102) + (B-12), (A-102) + (B-13), (A-102) + (B-14), (A-102) + (B-15), (A-102) + (B-16), (A-102) + (B-17), (A-102) + (B-18), (A-102) + (B-19), (A-102) + (B-20), (A-102) + (B-21), (A-102) + (B-22), (A-102) + (B-23), (A-102) + (B-24), (A-102) + (B-25), (A-102) + (B-26), (A-102) + (B-27), (A-102) + (B-28), (A-102) + (B-29), (A-102) + (B-30), (A-102) + (B-31), (A-102) + (B-32), (A-102) + (B-33), (A-102) + (B-34), (A-102) + (B-35), (A-102) + (B-36), (A-102) + (B-37), (A-102) + (B-38), (A-102) + (B-39), (A-102) + (B-40), (A-102) + (B-41), (A-102) + (B-42), (A-102) + (B-43), (A-102) + (B-44), (A-102) + (B-45), (A-102) + (B-46), (A-102) + (B-47), (A-102) + (B-48), (A-102) + (B-49), (A-102) + (B-50), (A-102) + (B-51), (A-102) + (B-52), (A-102) + (B-53), (A-102) + (B-54), (A-102) + (B-65), (A-102) + (B-56), (A-102) + (B-57), (A-102) + (B-58), (A-102) + (B-59), (A-102) + (B-60), (A-102) + (B-61), (A-102) + (B-62), (A-102) + (B-63), (A-102) + (B-64), (A-102) + (B-65), (A-102) + (B-66), (A-102) + (B-67), (A-102) + (B-68), (A-102) + (B-69), (A-102) + (B-70), (A-102) + (B-71), (A-102) + (B-72), (A-102) + (B-73), (A-102) + (B-74), (A-102) + (B-76), (A-102) + (B-76), (A-102) + (B-77), (AI-1) + (B-78), (A-102) + (B-79), (A-102) + (B-80).
(A-103) + (B-1), (A-103) + (B-2), (A-103) + (B-3), (A-103) + (B-4), (A-103) + (B-5), (A-103) + (B-6), (A-103) + (B-7), (A-103) + (B-8), (A-103) + (B-9), (A-103) + (B-10), (A-103) + (B-11), (A-103) + (B-12), (A-103) + (B-13), (A-103) + (B-14), (A-103) + (B-15), (A-103) + (B-16), (A-103) + (B-17), (A-103) + (B-18), (A-103) + (B-19), (A-103) + (B-20), (A-103) + (B-21), (A-103) + (B-22), (A-103) + (13-23), (A-103) + (B-24), (A-103) + (B-25), (A-103) + (B-26), (A-103) + (B-27), (A-103) + (B-28), (A-103) + (B-29), (A-103) + (B-30), (A-103) + (B-31), (A-103) + (B-32), (A-103) + (B-33), (A-103) + (B-34), (A-103) + (B-35), (A-103) + (B-36), (A-103) + (B-37), (A-103) + (B-38), (A-103) + (B-39), (A-103) + (B-40), (A-103) + (B-41), (A-103) + (B-42), (A-103) + (B-43), (A-103) + (B-44), (A-103) + (B-45), (A-103) + (B-46), (A-103) + (B-47), (A-103) + (B-48), (A-103) + (B-49), (A-103) + (B-50), (A-103) + (B-51), (A-103) + (B-52), (A-103) + (B-53), (A-103) + (B-54), (A-103) + (B-55), (A-103) + (B-66), (A-103) + (B-57), (A-103) + (B-58), (A-103) + (B-59), (A-103) + (B-60), (A-103) + (B-61), (A-103) + (B-62), (A-103) + (B-63), (A-103) + (B-64), (A-103) + (B-65), (A-103) + (8-66), (A-103) + (B-67), (A-103) + (B-68), (A-103) + (B-69), (A-103) + (B-70), (A-103) + (B-71), (A-103) + (B-72), (A-103) + (B-73), (A-103) + (B-74), (A-103) + (B-75), (A-103) + (B-76), (A-103) + (B-77), (Al-1) + (B-78), (A-103) + (B-79), (A-103) + (B-80).
(A-104) + (B-1), (A-104) + (B-2), (A-104) + (B-3), (A-104) + (B-4), (A-104) + (B-5), (A-104) + (B-6), (A-104) + (B-7), (A-104) + (B-8), (A-104) + (B-9), (A-104) + (B-10), (A-104) + (B-11), (A-104) + (B-12), (A-104) + (B-13), (A-104) + (B-14), (A-104) + (B-15), (A-104) + (B-16), (A-104) + (B-17), (A-104) + (B-18), (A-104) + (B-19), (A-104) + (B-20), (A-104) + (B-21), (A-104) + (B-22), (A-104) + (B-23), (A-104) + (B-24), (A-104) + (B-25), (A-104) + (B-26), (A-104) + (B-27), (A-104) + (B-28), (A-104) + (B-29), (A-104) + (B-30), (A-104) + (B-31), (A-104) + (B-32), (A-104) + (B-33), (A-104) + (B-34), (A-104) + (B-35), (A-104) + (B-36), (A-104) + (B-37), (A-104) + (B-38), (A-104) + (B-39), (A-104) + (B-40), (A-104) + (B-41), (A-104) + (B-42), (A-104) + (B-43), (A-104) + (B-44), (A-104) + (B-45), (A-104) + (B-46), (A-104) + (B-47), (A-104) + (B-48), (A-104) + (B-49), (A-104) + (B-50), (A-104) + (B-51), (A-104) + (B-52), (A-104) + (B-53), (A-104) + (B-54), (A-104) + (B-55), (A-104) + (B-56), (A-104) + (B-57), (A-104) + (B-58), (A-104) + (B-59), (A-104) + (B-60), (A-104) + (B-61), (A-104) + (B-62), (A-104) + (B-63), (A-104) + (B-64), (A-104) + (B-65), (A-104) + (B-66), (A-104) + (B-67), (A-104) + (B-68), (A-104) + (B-69), (A-104) + (B-70), (A-104) + (B-71), (A-104) + (B-72), (A-104) + (B-73), (A-104) + (B-74), (A-104) + (B-75), (A-104) + (B-76), (A-104) + (B-77), (Al-1) + (B-78), (A-104) + (B-79), (A-104) + (B-80).
(A-105) + (B-1), (A-1 05) + (B-2), (A-105) + (B-3), (A-105) + (B-4), (A-105) + (B-5), (A-105) + (B-6), (A-105) + (B-7), (A-105) + (B-8), (A-105) + (B-9), (A-105) + (B-10), (A-105) + (B-11), (A-105) + (B-12), (A-105) + (B-13), (A-105) + (B-14), (A-105) + (B-15), (A-105) + (B-16), (A-105) + (B-17), (A-105) + (B-18), (A-105) + (B-19), (A-105) + (B-20), (A-105) + (B-21), (A-105) + (B-22), (A-105) + (B-23), (A-105) + (B-24), (A-105) + (B-25), (A-105) + (B-26), (A-105) + (B-27), (A-105) + (B-28), (A-105) + (B-29), (A-105) + (B-30), (A-105) + (B-31), (A-105) + (B-32), (A-105) + (B-33), (A-105) + (B-34), (A-105) + (B-35), (A-105) + (B-36), (A-105) + (B-37), (A-105) + (B-38), (A-105) + (B-39), (A-105) + (B-40), (A-105) + (B-41), (A-105) + (B-42), (A-105) + (B-43), (A-105) + (B-44), (A-105) + (B-45), (A-105) + (B-46), (A-105) + (B-47), (A-105) + (B-48), (A-105) + (B-49), (A-105) + (B-50), (A-105) + (B-51), (A-105) + (B-52), (A-105) + (B-53), (A-105) + (B-54), (A-105) + (B-55), (A-105) + (B-56), (A-105) + (B-57), (A-105) + (B-68), (A-105) + (B-59), (A-105) + (B-60), (A-105) + (B-61), (A-105) + (B-62), (A-105) + (B-63), (A-105) + (B-64), (A-105) + (B-65), (A-105) + (B-66), (A-105) + (B-67), (A-105) + (B-68), (A-105) + (B-69), (A-105) + (B-70), (A-105) + (B-71), (A-105) + (B-72), (A-105) + (B-73), (A-105) + (B-74), (A-105) + (B-75), (A-105) + (B-76), (A-105) + (B-77), (Al-1) + (B-78), (A-105) + (B-79), (A-105) + (B-80).
(A-106) + (B-1), (A-1 06) + (B-2), (A-106) + (B-3), (A-1 06) + (B-4), (A-106) + (B-5), (A-106) + (B-6), (A-106) + (B-7), (A-106) + (B-8), (A-106) + (B-9), (A-106) + (B-10), (A-106) + (B-11), (A-106) + (B-12), (A-106) + (B-13), (A-106) + (B-14), (A-106) + (B-15), (A-106) + (B-16), (A-106) + (B-17), (A-1 06) + (B-18), (A-106) + (B-19), (A-106) + (B-20), (A-106) + (B-21), (A-106) + (B-22), (A-106) + (B-23), (A-106) + (B-24), (A-106) + (B-25), (A-106) + (B-26), (A-106) + (B-27), (A-106) + (B-28), (A-108) + (B-29), (A-106) + (B-30), (A-106) + (B-31), (A-106) + (B-32), (A-106) + (B-33), (A-106) + (B-34), (A-106) + (B-35), (A-106) + (B-36), (A-106) + (B-37), (A-106) + (B-38), (A-106) + (B-39), (A-106) + (B-40), (A-106) + (B-41), (A-106) + (B-42), (A-106) + (B-43), (A-106) + (B-44), (A-106) + (B-45), (A-106) + (B-46), (A-106) + (B-47), (A-106) + (B-48), (A-106) + (8-49), (A-106) + (B-50), (A-106) + (B-51), (A-106) + (B-52), (A-106) + (B-53), (A-106) + (B-64), (A-106) + (B-55), (A-106) + (B-56), (A-108) + (B-57), (A-106) + (B-58), (A-106) + (B-59), (A-106) + (B-60), (A-106) + (8-61), (A-106) + (B-62), (A-106) + (B-63), (A-106) + (B-64), (A-106) + (B-65), (A-106) + (B-66), (A-106) + (B-67), (A-106) + (B-68), (A-106) + (B-69), (A-106) + (B-70), (A-106) + (B-71), (A-106) + (B-72), (A-106) + (B-73), (A-106) + (B-74), (A-106) + (B-75), (A-106) + (B-76), (A-106) + (B-77), (Al-1) + (B-78), (A-106) + (B-79), (A-106) + (B-80).
(A-107) + (B-1), (A-107) + (B-2), (A-107) + (B-3), (A-107) + (B-4), (A-107) + (B-5), (A-107) + (B-6), (A-107) + (B-7), (A-107) + (B-8), (A-107) + (B-9), (A-107) + (B-10), (A-107) + (B-11), (A-107) + (B-12), (A-107) + (B-13), (A-107) + (B-14), (A-107) + (B-15), (A-107) + (B-16), (A-107) + (B-17), (A-107) + (B-18), (A-107) + (B-19), (A-107) + (B-20), (A-107) + (B-21), (A-107) + (B-22), (A-107) + (B-23), (A-107) + (B-24), (A-107) + (B-25), (A-1 07) + (B-26), (A-107) + (B-27), (A-107) + (B-28), (A-107) + (B-29), (A-107) + (B-30), (A-107) + (B-31), (A-107) + (B-32), (A-107) + (B-33), (A-107) + (B-34), (A-107) + (B-35), (A-107) + (B-36), (A-107) + (B-37), (A-107) + (B-38), (A-107) + (B-39), (A-107) + (B-40), (A-107) + (B-41), (A-107) + (B-42), (A-107) + (B-43), (A-107) + (B-44), (A-107) + (B-45), (A-107) + (B-46), (A-107) + (B-47), (A-107) + (B-48), (A-107) + (B-49), (A-107) + (B-50), (A-107) + (B-51), (A-107) + (B-52), (A-107) + (B-53), (A-107) + (B-54), (A-107) + (B-55), (A-107) + (B-56), (A-107) + (B-57), (A-107) + (B-58), (A-107) + (B-59), (A-107) + (B-60), (A-107) + (B-61), (A-107) + (B-62), (A-107) + (B-63), (A-107) + (B-64), (A-107) + (B-65), (A-107) + (B-66), (A-107) + (B-67), (A-107) + (B-68), (A-107) + (B-69), (A-107) + (B-70), (A-107) + (B-71), (A-107) + (B-72), (A-107) + (B-73), (A-107) + (B-74), (A-107) + (B-75), (A-107) + (B-76), (A-107) + (B-77), (Al-1) + (B-78), (A-107) + (B-79), (A-107) + (B-80),
(A-108) + (B-1), (A-108) + (8-2), (A-108) + (B-3), (A-108) + (B-4), (A-108) + (B-5), (A-108) + (B-6), (A-108) + (B-7), (A-108) + (B-8), (A-108) + (B-9), (A-108) + (B-10), (A-108) + (B-11), (A-108) + (B-12), (A-108) + (B-13), (A-108) + (B-14), (A-108) + (B-15), (A-108) + (B-16), (A-108) + (B-17), (A-108) + (B-18), (A-108) + (B-19), (A-108) + (B-20), (A-108) + (B-21), (A-108) + (B-22), (A-108) + (B-23), (A-108) + (B-24), (A-108) + (B-25), (A-108) + (B-26), (A-108) + (B-27), (A-108) + (B-28), (A-108) + (B-29), (A-108) + (B-30), (A-108) + (B-31), (A-108) + (B-32), (A-108) + (B-33), (A-108) + (B-34), (A-108) + (B-35), (A-108) + (B-36), (A-108) + (B-37), (A-108) + (B-38), (A-108) + (B-39), (A-108) + (B-40), (A-108) + (B-41), (A-108) + (B-42), (A-108) + (B-43), (A-108) + (B-44), (A-108) + (B-45), (A-108) + (B-46), (A-108) + (B-47), (A-108) + (B-48), (A-108) + (B-49), (A-108) + (B-50), (A-108) + (B-51), (A-108) + (B-52), (A-108) + (B-53), (A-108) + (B-54), (A-108) + (B-55), (A-108) + (B-56), (A-108) + (B-57), (A-108) + (B-58), (A-108) + (B-59), (A-108) + (B-60), (A-108) + (B-61), (A-108) + (B-62), (A-108) + (B-63), (A-108) + (B-64), (A-108) + (B-65), (A-108) + (B-66), (A-108) + (B-67), (A-108) + (B-68), (A-108) + (B-69), (A-108) + (B-70), (A-108) + (B-71), (A-108) + (B-72), (A-108) + (B-73), (A-108) + (B-74), (A-108) + (B-75), (A-108) + (B-76), (A-108) + (B-77), (Al-1) + (B-78), (A-108) + (B-79), (A-108) + (B-80).
(A-109) + (B-1), (A-109) + (B-2), (A-109) + (B-3), (A-109) + (B-4), (A-109) + (B-5), (A-109) + (B-6), (A-109) + (B-7), (A-109) + (B-8), (A-109)+ (B-9), (A-109) + (B-10), (A-109) + (B-11), (A-109) + (B-12), (A-109) + (B-13), (A-109) + (B-14), (A-109) + (B-15), (A-109) + (B-16), (A-109) + (B-17), (A-109) + (B-18), (A-109) + (B-19), (A-109) + (B-20), (A-109) + (B-21), (A-109) + (B-22), (A-109) + (B-23), (A-109) + (B-24), (A-109) + (B-25), (A-109) + (B-26), (A-109) + (B-27), (A-109) + (B-28), (A-109) + (B-29), (A-109) + (B-30), (A-109) + (B-31), (A-109) + (B-32), (A-109) + (B-33), (A-109) + (B-34), (A-109) + (B-35), (A-109) + (B-36), (A-109) + (B-37), (A-109) + (B-38), (A-109) + (B-39), (A-109) + (B-40), (A-109) + (B-41), (A-109) + (B-42), (A-109) + (B-43), (A-109) + (B-44), (A-109) + (B-45), (A-109) + (B-46), (A-109) + (B-47), (A-109) + (B-48), (A-109) + (B-49), (A-109) + (B-50), (A-109) + (B-51), (A-109) + (B-52), (A-109) + (B-53), (A-109) + (B-54), (A-109) + (B-55), (A-109) + (B-56), (A-109) + (B-57), (A-109) + (B-58), (A-109) + (B-59), (A-109) + (B-60), (A-109) + (B-61), (A-109) + (B-62), (A-109) + (B-63), (A-109) + (B-64), (A-109) + (B-65), (A-109) + (B-66), (A-109) + (B-67), (A-109) + (B-68), (A-109) + (B-69), (A-109) + (B-70), (A-109) + (B-71), (A-109) + (B-72), (A-109) + (B-73), (A-109) + (B-74), (A-109) + (B-75), (A-109) + (B-76), (A-109) + (B-77), (Al-1) + (B-78), (A-109) + (B-79), (A-109) + (B-80).
(A-110) + (B-1), (A-110) + (B-2), (A-110) + (B-3), (A-110) + (B-4), (A-110) + (B-5), (A-110) + (B-6), (A-110) + (B-7), (A-110) + (B-8), (A-110) + (B-9), (A-110) + (B-10), (A-110) + (B-11), (A-110) + (B-12), (A-110) + (B-13), (A-110) + (B-14), (A-110) + (B-15), (A-110) + (B-16), (A-110) + (B-17), (A-110) + (B-18), (A-110) + (B-19), (A-110) + (B-20), (A-110) + (B-21), (A-110) + (B-22), (A-110) + (B-23), (A-110) + (B-24), (A-110) + (B-25), (A-110) + (B-26), (A-110) + (B-27), (A-110) + (B-28), (A-110) + (B-29), (A-110) + (B-30), (A-110) + (B-31), (A-110) + (B-32), (A-110) + (B-33), (A-110) + (B-34), (A-110) + (B-35), (A-110) + (B-36), (A-110) + (B-37), (A-110) + (B-38), (A-110) + (B-39), (A-110) + (B-40), (A-110) + (B-41), (A-110) + (B-42), (A-110) + (B-43), (A-110) + (B-44), (A-110) + (B-45), (A-110) + (B-46), (A-110) + (B-47), (A-110) + (B-48), (A-110) + (B-49), (A-110) + (B-50), (A-110) + (B-51), (A-110) + (B-52), (A-110) + (B-53), (A-110) + (B-54), (A-110) + (B-55), (A-110) + (B-56), (A-110) + (B-57), (A-110) + (B-68), (A-110) + (B-59), (A-110) + (B-60), (A-110) + (B-61), (A-110) + (B-82), (A-110) + (B-63), (A-110) + (B-64), (A-110) + (B-65), (A-110) + (B-66), (A-110) + (B-67), (A-110) + (B-68), (A-110) + (B-69), (A-110) + (B-70), (A-110) + (B-71), (A-110) + (B-72), (A-110) + (B-73), (A-110) + (B-74), (A-110) + (B-75), (A-110) + (B-76), (A-110) + (B-77), (Al-1) + (B-78), (A-110) + (B-79), (A-110) + (B-80).
(A-111) + (B-1), (A-111) + (B-2), (A-111) + (B-3), (A-111) + (B-4), (A-111) + (B-5), (A-111) + (B-6), (A-111) + (B-7), (A-111) + (B-8), (A-111) + (B-9), (A-111) + (B-10), (A-111) + (B-11), (A-111) + (B-12), (A-111) + (B-13), (A-111) + (B-14), (A-1 11) + (8-15), (A-111) + (B-16), (A-111) + (B-17), (A-111) + (B-18), (A-111) + (B-19), (A-111) + (B-20), (A-111) + (B-21), (A-111) + (B-22), (A-111) + (B-23), (A-111) + (B-24), (A-111) + (B-25), (A-111) + (B-26), (A-111) + (B-27), (A-111) + (B-28), (A-111) + (B-29), (A-111)+ (B-30), (A-111) + (B-31), (A-111) + (B-32), (A-111) + (B-33), (A-111) + (B-34), (A-111) + (B-35), (A-111) + (B-36), (A-111) + (B-37), (A-111) + (B-38), (A-111) + (B-39), (A-111) + (B-40), (A-111) + (B-41), (A-111) + (B-42), (A-111) + (B-43), (A-111) + (B-44), (A-111) + (B-45), (A-111) + (B-46), (A-111) + (B-47), (A-111) + (B-48), (A-111) + (B-49), (A-111) + (B-50), (A-111) + (B-51), (A-111) + (B-52), (A-111) + (B-53), (A-111) + (B-54), (A-111) + (B-55), (A-111) + (B-56), (A-111) + (B-57), (A-111) + (B-58), (A-111) + (B-59), (A-111) + (B-60), (A-111) + (B-61), (A-111) + (B-62), (A-111) + (B-63), (A-111) + (B-64), (A-111) + (B-65), (A-111) + (B-66), (A-111) + (B-67), (A-111) + (B-68), (A-111) + (B-69), (A-111) + (B-70), (A-111) + (B-71), (A-111) + (B-72), (A-111) + (B-73), (A-111) + (B-74), (A-111) + (B-75), (A-111) + (B-76), (A-111) + (B-77), (Al-1) + (B-78), (A-111) + (B-79), (A-111) + (B-80).
(A-112) + (B-1), (A-112) + (B-2), (A-112) + (B-3), (A-112) + (B-4), (A-112) + (B-5), (A-112) + (B-6), (A-112) + (B-7), (A-112) + (B-8), (A-112) + (B-9), (A-112) + (B-1 0), (A-112) + (B-11), (A-112) + (B-12), (A-112) + (B-13), (A-112) + (B-14), (A-112) + (B-15), (A-112) + (B-16), (A-112) + (B-17), (A-112) + (B-18), (A-112) + (B-19), (A-112) + (B-20), (A-112) + (B-21), (A-112) + (B-22), (A-112) + (B-23), (A-112) + (B-24), (A-112) + (B-25), (A-112) + (B-26), (A-112) + (B-27), (A-112) + (B-28), (A-112) + (B-29), (A-112) + (B-30), (A-112) + (B-31), (A-112) + (B-32), (A-112) + (B-33), (A-112) + (B-34), (A-112) + (B-35), (A-112) + (B-36), (A-112) + (B-37), (A-112) + (B-38), (A-112) + (B-39), (A-112) + (B-40), (A-112) + (B-41), (A-112) + (B-42), (A-112) + (B-43), (A-112) + (B-44), (A-112) + (B-45), (A-112) + (B-46), (A-112) + (B-47), (A-112) + (B-48), (A-112) + (B-49), (A-112) + (B-50), (A-112) + (B-51), (A-112) + (B-52), (A-112) + (B-53), (A-112) + (B-54), (A-112) + (B-55), (A-112) + (B-56), (A-112) + (B-57), (A-112) + (B-58), (A-112) + (B-59), (A-112) + (B-60), (A-112) + (B-61), (A-112) + (B-62), (A-112) + (B-63), (A-112) + (B-64), (A-112) + (B-65), (A-112) + (B-66), (A-112) + (B-67), (A-112) + (B-68), (A-112) + (B-69), (A-112) + (B-70), (A-112) + (B-71), (A-112) + (B-72), (A-112) + (B-73), (A-112) + (B-74), (A-112) + (B-75), (A-112) + (B-76), (A-112) + (B-77), (Al-1) + (B-78), (A-112) + (B-79), (A-112) + (B-80).
(A-113) + (B-1), (A-113) + (B-2), (A-113) + (B-3), (A-113) + (B-4), (A-113) + (B-5), (A-113) + (B-6), (A-113) + (B-7), (A-113) + (B-8), (A-113) + (B-9), (A-113) + (B-10), (A-113) + (B-11), (A-113) + (B-12), (A-113) + (B-13), (A-113) + (B-14), (A-113) + (B-15), (A-113) + (B-16), (A-113) +(B-17), (A-113) + (B-18), (A-113) + (B-19), (A-113) + (B-20), (A-113) + (B-21), (A-113) + (B-22), (A-113) + (B-23), (A-113) + (B-24), (A-113) + (B-25), (A-113) + (B-26), (A-113) + (B-27), (A-113) + (B-28), (A-113) + (B-29), (A-113) + (B-30), (A-113) + (B-31), (A-113) + (B-32), (A-113) + (B-33), (A-113) + (B-34), (A-113) + (B-35), (A-113) + (B-36), (A-113) + (B-37), (A-113) + (B-38), (A-113) + (B-39), (A-113) + (B-40), (A-113) + (B-41), (A-113) + (B-42), (A-113) + (B-43), (A-113) + (B-44), (A-113) + (B-45), (A-113) + (B-46), (A-113) + (B-47), (A-113) + (B-48), (A-113) + (B-49), (A-113) + (B-50), (A-113) + (B-51), (A-113) + (B-52), (A-113) + (B-53), (A-113) + (B-54), (A-113) + (B-55), (A-113) + (B-56), (A-113) + (B-57), (A-113) + (B-58), (A-113) + (B-59), (A-113) + (B-60), (A-113) + (B-61), (A-113) + (B-62), (A-113) + (B-63), (A-113) + (B-64), (A-113) + (B-65), (A-113) + (B-66), (A-113) + (B-67), (A-113) + (B-68), (A-113) + (B-69), (A-113) + (B-70), (A-113) + (B-71), (A-113) + (B-72), (A-113) + (B-73), (A-113) + (B-74), (A-113) + (B-75), (A-113) + (B-76), (A-113) + (B-77), (A1-1)+ (B-78), (A-113) + (B-79), (A-113) + (B-80).
(A-114) + (B-1), (A-114) + (B-2), (A-114) + (B-3), (A-114) + (B-4), (A-114) + (B-5) (A-114)+ (B-6), (A-114) + (8-7), (A-114) + (B-8), (A-114)+ (B-9), (A-114)+ (B-10), (A-114) + (B-11), (A-114) + (B-12), (A-114) + (B-13), (A-114) + (B-14), (A-114) + (B-15), (A-114) + (B-16), (A-114) + (B-17), (A-114) + (B-18), (A-114) + (B-19), (A-114) + (B-20), (A-114) + (B-21), (A-114) + (B-22), (A-114) + (B-23), (A-114) + (B-24), (A-114) + (B-26), (A-114) + (B-26), (A-114) + (B-27), (A-114) + (B-28), (A-114) + (8-29), (A-114) + (B-30), (A-114) + (B-31), (A-114) + (B-32), (A-114) + (B-33), (A-114) + (B-34), (A-114) + (B-35), (A-114) + (B-36), (A-114) + (B-37), (A-114) + (B-38), (A-114) + (B-39), (A-114) + (B-40), (A-114) + (8-41), (A-114) + (B-42), (A-114) + (B-43), (A-114) + (B-44), (A-114) + (B-45), (A-114) + (B-46), (A-114) + (B-47), (A-114) + (B-48), (A-114) + (B-49), (A-114) + (B-50), (A-114) + (B-51), (A-114) + (B-52), (A-114) + (B-63), (A-114) + (B-54), (A-114) + (B-55), (A-114) + (B-56), (A-114) + (B-57), (A-114) + (B-58), (A-114) + (B-59), (A-114) + (B-60), (A-114) + (B-61), (A-114) + (B-62), (A-114) + (B-63), (A-114) + (B-64), (A-114) + (B-65), (A-114) + (B-66), (A-114) + (B-67), (A-114) + (B-68), (A-114) + (S-69), (A-114) + (B-70), (A-114) + (B-71), (A-114) + (B-72), (A-114) + (B-73), (A-114) + (B-74), (A-114) + (B-75), (A-114) + (B-76), (A-114) + (B-77), (Al-1) + (B-78), (A-114) + (B-79), (A-114) + (B-80).
(A-115) + (B-1), (A-115) + (B-2), (A-115) + (B-3), (A-115) + (B-4), (A-115) + (B-5), (A-115) + (B-6), (A-115) + (B-7), (A-115) + (B-8), (A-115) + (B-9), (A-115) + (B-10), (A-115) + (B-11), (A-115) + (B-12), (A-115) + (B-13), (A-115) + (B-14), (A-115) + (B-15), (A-115) + (B-16), (A-115) + (B-17), (A-115) + (B-18), (A-115) + (B-19), (A-115) + (B-20), (A-115) + (B-21), (A-115) + (B-22), (A-115) + (B-23), (A-115) + (B-24), (A-115) + (B-25), (A-115) + (B-26), (A-115) + (B-27), (A-115) + (B-28), (A-115) + (B-29), (A-115) + (B-30), (A-115) + (B-31), (A-115) + (B-32), (A-115) + (B-33), (A-115) + (B-34), (A-115) + (B-35), (A-115) + (B-36), (A-115) + (B-37), (A-115) + (B-38), (A-115) + (B-39), (A-115) + (B-40), (A-115) + (B-41), (A-115) + (B-42), (A-115) + (B-43), (A-115) + (B-44), (A-115) + (B-45), (A-115) + (B-46), (A-115) + (B-47), (A-115) + (B-48), (A-115) + (B-49), (A-115) + (B-50), (A-115) + (B-51), (A-115) + (B-52), (A-115) + (B-53), (A-115) + (B-54), (A-115) + (B-55), (A-115) + (B-56), (A-115) + (B-57), (A-115) + (B-58), (A-115) + (B-59), (A-115) + (B-60), (A-115) + (B-61), (A-115) + (B-62), (A-115) + (B-63), (A-115) + (B-64), (A-115) + (B-65), (A-115) + (B-66), (A-115) + (B-67), (A-115) + (B-68), (A-115) + (B-69), (A-115) + (B-70), (A-115) + (B-71), (A-115) + (B-72), (A-115) + (B-73), (A-115) + (B-74), (A-115) + (B-75), (A-115) + (B-76), (A-115) + (B-77), (Al-1) + (B-78), (A-115) + (B-79), (A-115) + (B-80).
(A-116) + (B-1), (A-116) + (B-2), (A-116) + (B-3), (A-116) + (B-4), (A-116) + (B-5), (A-116) + (B-6), (A-116) + (B-7), (A-116) + (B-8), (A-116) + (B-9), (A-116) + (B-10), (A-116) + (B-11), (A-116) + (B-12), (A-116) + (B-13), (A-116) + (B-14), (A-116) + (B-15), (A-116) + (B-16), (A-116) + (B-17), (A-116) + (B-18), (A-116) + (B-19), (A-116) + (B-20), (A-116) + (B-21), (A-116) + (B-22), (A-116) + (B-23), (A-116) + (B-24), (A-116) + (B-25), (A-116) + (B-26), (A-116) + (B-27), (A-116) + (B-28), (A-116) + (B-29), (A-116) + (B-30), (A-116) + (B-31), (A-116) + (B-32), (A-116) + (B-33), (A-116) + (B-34), (A-116) + (B-35), (A-116) + (B-36), (A-116) + (B-37), (A-116) + (B-38), (A-116) + (B-39), (A-116) + (B-40), (A-116) + (B-41), (A-116) + (B-42), (A-116) + (B-43), (A-116) + (B-44), (A-116) + (B-45), (A-116) + (B-46), (A-116) + (B-47), (A-116) + (B-48), (A-116) + (B-49), (A-116) + (B-50), (A-116) + (B-51), (A-116) + (B-52), (A-116) + (B-53), (A-116) + (B-54), (A-116) + (B-55), (A-116) + (B-56), (A-116) + (B-57), (A-116) + (B-58), (A-116) + (B-59), (A-116) + (B-60), (A-116) + (B-61), (A-116) + (B-62), (A-116) + (B-63), (A-116) + (B-64), (A-116) + (B-65), (A-116) + (B-66), (A-116) + (B-67), (A-116) + (B-68), (A-116) + (B-69), (A-116) + (B-70), (A-116) + (B-71), (A-116) + (B-72), (A-116) + (B-73), (A-116) + (B-74), (A-116) + (B-75), (A-116) + (B-76), (A-116) + (B-77), (Al-1) + (B-78), (A-116) + (B-79), (A-116) + (B-80).
(A-117) + (B-1), (A-117) + (B-2), (A-117) + (B-3), (A-117) + (B-4), (A-117) + (B-5), (A-117) + (B-6), (A-117) + (B-7), (A-117) + (B-8), (A-117)+ (B-9), (A-117) + (B-10), (A-117) + (B-11), (A-117) + (B-12), (A-117) + (B-13), (A-117) + (B-14), (A-117) + (B-15). (A-117) + (B-16), (A-117) + (B-17), (A-117) + (B-18), (A-117) + (B-19), (A-117) + (B-20), (A-117) + (B-21), (A-117) + (B-22), (A-117) + (B-23), (A-117) + (B-24), (A-117) + (B-25), (A-117) + (B-26), (A-117) + (B-27), (A-117) + (B-28), (A-117) + (B-29), (A-117) + (B-30), (A-117) + (B-31), (A-117) + (B-32), (A-117) + (B-33), (A-117) + (B-34), (A-117) + (B-35), (A-117) + (B-36), (A-117) + (B-37), (A-117) + (B-38), (A-117) + (B-39), (A-117) + (B-40), (A-117) + (B-41), (A-117) + (B-42), (A-117) + (B-43), (A-117) + (B-44), (A-117) + (B-45), (A-117) + (B-46), (A-117) + (B-47), (A-117) + (B-48), (A-117) + (B-49), (A-117) + (B-50), (A-117) + (B-51), (A-117) + (B-52), (A-117) + (B-53), (A-117) + (B-54), (A-117) + (B-55), (A-117) + (B-56), (A-117) + (B-57), (A-117) + (B-58), (A-117) + (B-59), (A-117) + (B-60), (A-117) + (B-61), (A-117) + (B-62), (A-117) + (B-63), (A-117) + (B-64), (A-117) + (B-65), (A-117) + (B-66), (A-117) + (B-67), (A-117) + (B-68), (A-117) + (B-69), (A-117) + (B-70), (A-117) + (B-71), (A-117) + (B-72), (A-117) + (B-73), (A-117) + (B-74), (A-117) + (B-75), (A-117) + (B-76), (A-117) + (B-77), (Al-1) + (B-78), (A-117) + (B-79), (A-117) + (B-80).
(A-118) + (B-1), (A-118) + (B-2), (A-118) + (B-3), (A-118) + (B-4), (A-118) + (B-5), (A-118) + (B-6), (A-118) + (B-7), (A-118) + (B-8), (A-118) + (B-9), (A-118) + (B-10), (A-118) + (B-11), (A-118) + (B-12), (A-118) + (B-13), (A-118) + (B-14), (A-118) + (B-15), (A-118) + (B-16), (A-118) + (B-17), (A-118) + (B-18), (A-118) + (B-19), (A-118) + (B-20), (A-118) + (B-21), (A-118) + (B-22), (A-118) + (B-23), (A-118) + (B-24), (A-118) + (B-25), (A-118) + (B-26), (A-118) + (B-27), (A-118) + (B-28), (A-118) + (B-29), (A-118) + (B-30), (A-118) + (B-31), (A-118) + (B-32), (A-118) + (B-33), (A-118) + (6-34), (A-118) + (B-35), (A-118) + (B-36), (A-118) + (B-37), (A-118) + (B-38), (A-118) + (B-39), (A-118) + (B-40), (A-118) + (B-41), (A-118) + (B-42), (A-118) + (B-43), (A-118) + (B-44), (A-118) + (B-45), (A-118) + (B-46), (A-118) + (B-47), (A-118) + (B-48), (A-118) + (B-49), (A-118) + (B-50), (A-118) + (B-51), (A-118) + (B-52), (A-118) + (B-53), (A-118) + (B-64), (A-118) + (B-55), (A-118) + (B-56), (A-118) + (B-57), (A-118) + (B-58), (A-118) + (B-59), (A-118) + (B-60), (A-118) + (B-61), (A-118) + (B-62), (A-118) + (B-63), (A-118) + (B-64), (A-118) + (B-65), (A-118) + (B-66), (A-118) + (B-67), (A-118) + (B-68), (A-118) + (8-69), (A-118) + (B-70), (A-118) + (B-71), (A-118) + (B-72), (A-118) + (B-73), (A-118) + (B-74), (A-118) + (B-75), (A-118) + (B-76), (A-118) + (B-77), (AI-1) + (B-78), (A-118) + (B-79), (A-118) + (B-80).
(A-119) + (B-1), (A-119) + (B-2), (A-119) + (B-3), (A-119) + (B-4), (A-119) + (B-5), (A-119) + (B-6), (A-119) + (B-7), (A-119) + (B-8), (A-119) + (B-9), (A-119) + (B-10), (A-119) + (B-11), (A-119) + (B-12), (A-119) + (B-13), (A-119) + (B-14), (A-119) + (B-15), (A-119) + (B-16), (A-119) + (B-17), (A-119) + (B-18), (A-119) + (B-19), (A-119) + (B-20), (A-119) + (B-21), (A-119) + (B-22), (A-119) + (B-23), (A-119) + (B-24), (A-119) + (B-25), (A-119) + (B-26), (A-119) + (B-27), (A-119) + (B-28), (A-119) + (B-29), (A-119) + (B-30), (A-119) + (B-31), (A-119) + (B-32), (A-119) + (B-33), (A-119) + (B-34), (A-119) + (B-35), (A-119) + (B-36), (A-119) + (B-37), (A-119) + (B-38), (A-119) + (B-39), (A-119) + (B-40), (A-119) + (B-41), (A-119) + (B-42), (A-119) + (B-43), (A-119) + (B-44), (A-119) + (B-45), (A-119) + (B-46), (A-119) + (B-47), (A-119) + (B-48), (A-119) + (B-49), (A-119) + (B-50), (A-119) + (B-51), (A-119) + (B-52), (A-119) + (B-53), (A-119) + (B-54), (A-119) + (B-65), (A-119) + (B-56), (A-119) + (B-57), (A-119) + (B-58), (A-119) + (B-59), (A-119) + (B-60), (A-119) + (B-61), (A-119) + (B-62), (A-119) + (B-63), (A-119) + (B-64), (A-119) + (B-65), (A-119) + (B-66), (A-119) + (B-67), (A-119) + (B-68), (A-119) + (B-69), (A-119) + (B-70), (A-119) + (B-71), (A-119) + (B-72), (A-119) + (B-73), (A-119) + (B-74), (A-119) + (B-75), (A-119) + (B-76), (A-119) + (B-77), (AI-1) + (B-78), (A-119) + (B-79), (A-119) + (B-80).
(A-120) + (B-1), (A-120) + (B-2), (A-120) + (B-3), (A-120) + (B-4), (A-120) + (B-5), (A-120) + (B-6), (A-120) + (B-7), (A-120) + (B-8), (A-120) + (B-9), (A-120) + (B-10), (A-120) + (B-11), (A-120) + (B-12), (A-120) + (B-13), (A-120) + (B-14), (A-120) + (B-15), (A-120) + (B-16), (A-120) + (B-17), (A-120) + (B-18), (A-120) + (B-19), (A-120) + (B-20), (A-120) + (B-21), (A-120) + (B-22), (A-120) + (B-23), (A-120) + (B-24), (A-120) + (B-25), (A-120) + (B-26), (A-120) + (B-27), (A-120) + (B-28), (A-120) + (B-29), (A-120) + (B-30), (A-120) + (B-31), (A-120) + (8-32), (A-120) + (B-33), (A-120) + (B-34), (A-120) + (B-35), (A-120) + (B-36), (,4-120) + (B-37), (A-120) + (B-38). (A-120) + (B-39), (A-120) + (B-40), (A-120) + (B-41), (A-120) + (B-42), (A-120) + (B-43), (A-120) + (B-44), (A-120) + (B-45), (A-120) + (B-46), (A-120) + (B-47), (A-120) + (B-48), (A-120) + (B-49), (A-120) + (B-50), (A-120) + (B-51), (A-120) + (B-52), (A-120) + (B-53), (A-120) + (B-54), (A-120) + (B-55). (A-120) + (B-56), (A-120) + (B.57). (A-120) + (B-58), (A-120) + (B-59), (A-120) + (B-60), (A-120) + (B-61), (A-120) + (B-62), (A-120) + (B-63), (A-120) + (B-64), (A-120) + (B-65), (A-120) + (B-66), (A-120) + (B-67), (A-120) + (B-68), (A-120) + (B-69), (A-120) + (B-70), (A-120) + (B-71), (A-120) + (B-72), (A-120) + (B-73), (A-120) + (B-74), (A-120) + (B-75), (A-120) + (B-76), (A-120) + (B-77), (Al-1) + (B-78), (A-120) + (B-79), (A-120) + (B-80).
(A-121) + (B-1), (A-121) + (B-2), (A-121) + (B-3), (A-121) + (B-4), (A-121) + (B-5), (A-121) + (B-6), (A-121) + (B-7), (A-121) + (B-8), (A-121) + (B-9), (A-121) + (B-10), (A-121) + (B-11), (A-121) + (B-12), (A-121) + (B-13), (A-121) + (B-14), (A-121) + (B-15), (A-121) + (B-16), (A-121) + (B-17), (A-121) + (B-18), (A-121) + (B-19), (A-121) + (B-20), (A-121) + (B-21), (A-121) + (B-22), (A-121) + (B-23), (A-121) + (B-24), (A-121) + (B-25), (A-121) + (B-26), (A-121) + (B-27), (A-121) + (B-28), (A-121) + (B-29), (A-121) + (B-30), (A-121) + (B-31), (A-121) + (B-32), (A-121) + (B-33), (A-121) + (B-34), (A-121) + (B-35), (A-121) + (B-36), (A-121) + (B-37), (A-121) + (B-38), (A-121) + (B-39), (A-121) + (B-40), (A-121) + (B-41), (A-121) + (B-42), (A-121) + (B-43), (A-121) + (B-44), (A-121) + (B-45), (A-121) + (B-46), (A-121) + (B-47), (A-121) + (B-48), (A-121) + (B-49), (A-121) + (B-50), (A-121) + (B-51), (A-121) + (B-52), (A-121) + (B-53), (A-121) + (B-54), (A-121) + (B-55), (A-121) + (B-56), (A-121) + (B-57), (A-121) + (B-58), (A-121) + (B-59), (A-121) + (B-60), (A-121) + (B-61), (A-121) + (B-62), (A-121) + (B-63), (A-121) + (B-64), (A-121) + (B-65), (A-121) + (B-66), (A-121) + (B-67), (A-121) + (B-68), (A-121) + (B-69), (A-121) + (B-70), (A-121) + (B-71), (A-121) + (B-72), (A-121) + (B-73), (A-121) + (B-74), (A-121) + (B-75), (A-121) + (B-76), (A-121) + (B-77), (Al-1) + (B-78), (A-121) + (B-79), (A-121) + (B-80).
(A-122) + (B-1), (A-122) + (B-2), (A-122) + (B-3), (A-122) + (B-4), (A-122) + (B-5), (A-122) + (B-6), (A-122) + (B-7), (A-122) + (B-8), (A-122) + (B-9), (A-122) + (B-10), (A-122) + (B-11), (A-122) + (B-12), (A-122) + (B-13), (A-122) + (B-14), (A-122) + (B-15), (A-122) + (B-16), (A-122) + (B-17), (A-122) + (B-18), (A-122) + (B-19), (A-122) + (B-20), (A-122) + (B-21), (A-122) + (B-22), (A-122) + (B-23), (A-122) + (B-24), (A-122) + (B-25), (A-122) + (B-26), (A-122) + (B-27), (A-122) + (B-28), (A-122) + (B-29), (A-122) + (B-30), (A-122) + (B-31), (A-122) + (B-32), (A-122) + (B-33), (A-122) + (B-34), (A-122) + (B-35), (A-122) + (B-36), (A-122) + (B-37), (A-122) + (B-38), (A-122) + (B-39), (A-122) + (B-40). (A-122) + (B-41), (A-122) + (B-42), (A-122) + (B-43). (A-122) + (B-44), (A-122) + (B-45), (A-122) + (B-46), (A-122) + (B-47), (A-122) + (B-48), (A-122) + (B-49), (A-122) + (B-50), (A-122) + (B-51), (A-122) + (B-52), (A-122) + (B-53), (A-122) + (B-54), (A-122) + (B-55), (A-122) + (B-56), (A-122) + (B-57), (A-122) + (B-58), (A-122) + (B-59), (A-122) + (B-60), (A-122) + (B-61), (A-122) + (B-62), (A-122) + (B-63), (A-122) + (B-64), (A-122) + (B-65), (A-122) + (B-66), (A-122) + (B-67), (A-122) + (B-68), (A-122) + (B-69), (A-122) + (B-70), (A-122) + (B-71), (A-122) + (B-72), (A-122) + (B-73), (A-122) + (B-74), (A-122) + (B-75), (A-122) + (B-76), (A-122) + (B-77), (Al-1) + (B-78), (A-122) + (B-79), (A-122) + (B-80).
(A-123) + (B-1), (A-123) + (B-2), (A-123) + (B-3), (A-123)+ (B-4), (A-123) + (B-5), (A-123) + (B-6), (A-123) + (B-7), (A-123) + (B-8), (A-123) + (B-9), (A-123) + (B-10), (A-123) + (B-11), (A-123) + (B-12), (A-123) + (B-13), (A-123) + (B-14), (A-123) + (B-15), (A-123) + (B-16), (A-123) + (B-17), (A-123) + (B-18), (A-123) + (B-19), (A-123) + (B-20), (A-123) + (B-21), (A-123) + (B-22), (A-123) + (B-23), (A-123) + (B-24), (A-123) + (B-25), (A-123) + (B-26), (A-123) + (B-27), (A-123) + (B-28), (A-123) + (B-29), (A-123) + (B-30), (A-123) + (B-31), (A-123) + (B-32), (A-123) + (B-33), (A-123) + (B-34), (A-123) + (B-35), (A-123) + (B-36), (A-123) + (B-37), (A-123) + (B-38), (A-123) + (B-39), (A-123) + (B-40), (A-123) + (B-41), (A-123) + (B-42), (A-123) + (B-43), (A-123) + (B-44), (A-123) + (B-45), (A-123) + (B-46), (A-123) + (B-47), (A-123) + (B-48), (A-1 23) + (B-49), (A-123) + (B-50), (A-123) + (B-51), (A-123) + (B-52), (A-123) + (B-53), (A-123) + (B-54), (A-123) + (B-55), (A-123) + (B-56), (A-123) + (B-67), (A-123) + (B-58), (A-123) + (B-59), (A-123) + (B-60), (A-1 23) + (B-61), (A-123) + (B-62), (A-123) + (B-63), (A-123) + (B-64), (A-123) + (B-65), (A-123) + (B-66), (A-123) + (B-67), (A-123) + (B-68), (A-123) + (B-69), (A-123) + (B-70), (A-123) + (B-71), (A-123) + (B-72), (A-123) + (B-73), (A-123) + (B-74), (A-123) + (B-75), (A-123) + (B-76), (A-123) + (B-77), (Al-1) + (B-78), (A-123) + (B-79), (A-123) + (B-80).
(A-124) + (B-1), (A-124) + (B-2), (A-124) + (B-3), (A-124) + (B-4), (A-124) + (B-6), (A-124) + (B-6), (A-124) + (B-7), (A-124) + (B-8), (A-124) + (B-9), (A-124) + (B-10), (A-124) + (B-11), (A-124) + (B-12), (A-124) + (B-13), (A-124) + (B-14), (A-124) + (B-15), (A-124) + (B-16), (A-124) + (B-17), (A-124) + (B-18), (A-124) + (B-19), (A-124) + (B-20), (A-124) + (B-21), (A-124) + (B-22), (A-124) + (B-23), (A-124) + (B-24), (A-124) + (B-25), (A-124) + (B-26), (A-124) + (B-27), (A-124) + (B-28), (A-124) + (B-29), (A-124) + (B-30), (A-124) + (B-31), (A-124) + (B-32), (A-1 24) + (B-33), (A-124) + (B-34), (A-124) + (B-35), (A-124) + (B-36), (A-124) + (B-37), (A-124) + (B-38), (A-124) + (B-39), (A-124) + (B-40), (A-124) + (B-41), (A-124) + (B-42), (A-124) + (B-43), (A-124) + (B-44), (A-124) + (B-45), (A-124) + (B-46), (A-124) + (B-47), (A-124) + (B-48), (A-124) + (B-49), (A-124) + (B-50), (A-124) + (B-51), (A-124) + (B-52), (A-124) + (B-53), (A-124) + (B-54), (A-124) + (B-55), (A-124) + (B-56), (A-124) + (B-57), (A-124) + (B-58), (A-124) + (B-59), (A-124) + (B-60), (A-124) + (B-61), (A-124) + (B-62), (A-124) + (B-63), (A-124) + (B-64), (A-124) + (B-65), (A-124) + (B-66), (A-124) + (B-67), (A-124) + (B-68), (A-124) + (B-69), (A-124) + (B-70), (A-124) + (B-71), (A-124) + (B-72), (A-124) + (B-73), (A-124) + (B-74), (A-124) + (B-75), (A-124) + (B-76), (A-124) + (B-77), (Al-1) + (B-78), (A-124) + (B-79), (A-124) + (B-80).
(A-125) + (B-1), (A-125) + (B-2), (A-125) + (B-3), (A-125) + (B-4), (A-125) + (B-5), (A-125) + (B-6), (A-125) + (B-7), (A-125) + (B-8), (A-125) + (B-9), (A-125) + (B-10), (A-125) + (B-11), (A-125) + (B-12), (A-125) + (B-13), (A-125) + (B-14), (A-125) + (B-15), (A-125) + (B-16), (A-125) + (B-17), (A-125) + (B-18), (A-125) + (B-19), (A-125) + (B-20), (A-125) + (B-21), (A-125) + (B-22), (A-125) + (B-23), (A-125) + (B-24), (A-125) + (B-25), (A-125) + (B-26), (A-125) + (B-27), (A-125) + (B-28), (A-125) + (B-29), (A-125) + (B-30), (A-125) + (B-31), (A-125) + (B-32), (A-125) + (B-33), (A-125) + (B-34), (A-125) + (B-35), (A-125) + (B-36), (A-125) + (B-37), (A-125) + (B-38), (A-125) + (B-39), (A-125) + (B-40), (A-125) + (B-41), (A-125) + (B-42), (A-125) + (B-43), (A-125) + (B-44), (A-125) + (B-45), (A-125) + (B-46), (A-125) + (B-47), (A-125) + (B-48), (A-125) + (B-49), (A-125) + (B-50), (A-125) + (B-51), (A-125) + (B-52), (A-125) + (B-53), (A-125) + (B-54), (A-125) + (B-55), (A-125) + (B-56), (A-125) + (B-57), (A-125) + (B-58), (A-125) + (B-59), (A-125) + (B-60), (A-125) + (B-61), (A-125) + (B-62), (A-125) + (B-63), (A-125) + (B-64), (A-125) + (B-65), (A-125) + (B-66), (A-125) + (B-67), (A-125) + (B-68), (A-125) + (B-69), (A-125) + (B-70), (A-125) + (B-71), (A-125) + (B-72), (A-125) + (B-73), (A-125) + (B-74), (A-125) + (B-75), (A-125) + (B-76), (A-125) + (B-77), (A1-1) + (B-78), (A-125) + (B-79), (A-125) + (B-80).
(A-126) + (B-1), (A-126) + (B-2), (A.126) + (B-3), (A-126) + (B-4), (A-126) + (B-6), (A-126) + (B-6), (A-126) + (B-7), (A-126) + (B-8), (A-126) + (B-9), (A-126) + (B-10), (A-126) + (B-11), (A-126) + (B-12), (A-126) + (B-13), (A-126) + (B-14), (A-126) + (B-15), (A-126) + (B-16), (A-126) + (B-17). (A-126) + (B-18), (A-126) + (B-19), (A-126) + (B-20), (A-126) + (B-21), (A-126) + (B-22), (A-126) + (B-23), (A-126) + (B-24), (A-126) + (B-25), (A-126) + (B-26), (A-126) + (B-27), (A-126) + (B-28), (A-126) + (B-29), (A-126) + (B-30), (A-126) + (B-31), (A-126) + (B-32), (A-126) + (B-33), (A-126) + (B-34), (A-126) + (B-35), (A-126) + (B-36), (A-126) + (B-37), (A-126) + (B-38), (A-126) + (B-39), (A-126) + (B-40), (A-126) + (B-41), (A-126) + (B-42), (A-126) + (B-43), (A-126) + (B-44), (A-126) + (B-45), (A-126) + (B-46), (A-126) + (B-47), (A-126) + (B-48), (A-126) + (B-49), (A-126) + (B-50), (A-126) + (B-51), (A-126) + (B-52), (A-126) + (B-53), (A-126) + (B-54), (A-126) + (B-55), (A-126) + (B-56), (A-126) + (B-57), (A-126) + (B-58), (A-126) + (B-59), (A-126) + (B-60), (A-126) + (B-61), (A-126) + (B-62), (A-126) + (B-63), (A-126) + (B-64), (A-126) + (B-65), (A-126) + (B-66), (A-126) + (B-67), (A-126) + (B-68), (A-126) + (B-69), (A-12B) + (B-70), (A-126) + (B-71), (A-126) + (B-72), (A-126) + (B-73), (A-126) + (B-74), (A-126) + (B-75), (A-126) + (B-76), (A-126) + (B-77), (AI-1) + (B-78), (A-126) + (B-79), (A-126) + (B-80).
(A-127) + (B-1), (A-1 27) + (B-2), (A-127) + (B-3), (A-127) + (B-4), (A-127) + (B-5), (A-127) + (B-6), (A-127) + (B-7), (A-127) + (B-8), (A-127) + (B-9), (A-127) + (B-10), (A-127) + (B-11), (A-127) + (B-12), (A-127) + (B-13), (A-127) + (B-14), (A-127) + (B-15), (A-127) + (B-16), (A-127) + (B-17), (A-127) + (B-18), (A-127) + (B-19), (A-127) + (B-20), (A-127) + (B-21), (A-127) + (B-22), (A-127) + (B-23), (A-127) + (B-24), (A-127) + (B-25), (A-127) + (B-26), (A-127) + (B-27), (A-127) + (B-28), (A-127) + (B-29), (A-127) + (B-30), (A-127) + (B-31), (A-127) + (B-32), (A-127) + (B-33), (A-127) + (B-34), (A-127) + (B-35), (A-127) + (B-36), (A-127) + (B-37), (A-127) + (B-38), (A-127) + (B-39), (A-127) + (B-40), (A-127) + (B-41), (A-127) + (B-42), (A-127) + (B-43), (A-127) + (B-44), (A-127) + (B-45), (A-127) + (B-46), (A-127) + (B-47), (A-127) + (B-48), (A-127) + (B-49), (A-127) + (B-50), (A-127) + (B-51), (A-127) + (B-52), (A-127) + (B-53), (A-127) + (B-54), (A-127) + (B-55), (A-127) + (B-56), (A-127) + (B-57), (A-127) + (B-58), (A-127) + (B-59), (A-127) + (B-60), (A-127) + (B-61), (A-127) + (B-62), (A-127) + (B-63), (A-127) + (B-64), (A-127) + (B-65), (A-127) + (B-66), (A-127) + (B-67), (A-127) + (B-68), (A-127) + (B-69), (A-127) + (B-70), (A-127) + (B-71), (A-127) + (B-72), (A-127) + (B-73), (A-127) + (B-74), (A-127) + (B-75), (A-127) + (B-76), (A-127) + (B-77), (AI-1) + (B-78), (A-127) + (B-79), (A-127) + (B-80).
(A-128) + (B-1), (A-128) + (B-2), (A-128) + (B-3), (A-128) + (B-4), (A-128) + (B-5), (A-128) + (B-6), (A-128) + (B-7), (A-128) + (B-8), (A-128) + (B-9), (A-128) + (B-10), (A-128) + (B-11), (A-128) + (B-12), (A-128) + (B-13), (A-128) + (B-14), (A-128) + (B-15), (A-128) + (B-16), (A-128) + (B-17), (A-128) + (B-18), (A-128) + (B-19), (A-128) + (B-20), (A-128) + (B-21), (A-128) + (B-22), (A-128) + (B-23), (A-128) + (B-24), (A-128) + (B-25), (A-128) + (B-26), (A-128) + (B-27), (A-128) + (B-28), (A-128) + (B-29), (A-128) + (B-30), (A-128) + (B-31), (A-128) + (B-32), (A-128) + (B-33), (A-128) + (B-34), (A-128) + (B-35), (A-128) + (B-36), (A-128) + (B-37), (A-128) + (B-38), (A-128) + (B-39), (A-128) + (B-40), (A-128) + (B-41), (A-128) + (B-42), (A-128) + (B-43), (A-128) + (B-44), (A-128) + (B-45), (A-128) + (B-46), (A-128) + (B-47), (A-128) + (B-48), (A-128) + (B-49), (A-128) + (B-50), (A-128) + (B-51), (A-128) + (B-52), (A-128) + (B-53), (A-128) + (B-54), (A-128) + (B-55), (A-128) + (B-56), (A-128) + (B-57), (A-128) + (B-58), (A-128) + (B-59), (A-128) + (B-60), (A-128) + (B-61), (A-128) + (B-62), (A-128) + (B-63), (A-1 28) + (B-64), (A-128) + (B-65), (A-128) + (B-66), (A-128) + (B-67), (A-128) + (B-68), (A-128) + (B-69), (A-128) + (B-70), (A-128) + (B-71), (A-128) + (B-72), (A-1 28) + (B-73), (A-128) + (B-74), (A-128) + (B-75), (A-128) + (B-76), (A-128) + (B-77), (AI-1) + (B-78), (A-128) + (B-79), (A-128) + (B-80).
(A-129) + (B-1), (A-129) + (B-2), (A-129) + (B-3), (A-129) + (B-4), (A-129) + (B-5), (A-129) + (B-6), (A-129) + (B-7), (A-129) + (B-8), (A-129) + (B-9), (A-129) + (B-10), (A-129) + (B-11), (A-129) + (B-12), (A-129) + (B-13), (A-129) + (B-14), (A-129) + (B-15), (A-129) + (B-16), (A-129) + (B,17), (A-129) + (B-18), (A-129) + (B-19), (A-129) + (B-20), (A-129) + (B-21), (A-129) + (B-22), (A-129) + (B-23), (A-129) + (B-24), (A-129) + (B-25), (A-129) + (B-26), (A-129) + (B-27), (A-129) + (B-28), (A-129) + (B-29), (A-129) + (B-30), (A-129) + (B-31), (A-129) + (B-32), (A-129) + (B-33), (A-129) + (B-34), (A-129) + (B-35), (A-129) + (B-36), (A-129) + (B-37), (A-129) + (B-38), (A-129) + (B-39), (A-129) + (B-40), (A-129) + (B-41), (A-129) + (B-42), (A-129) + (B-43), (A-129) + (B-44), (A-129) + (B-45), (A-129) + (B-46), (A-129) + (B-47), (A-129) + (B-48), (A-129) + (B-49), (A-129) + (B-50), (A-129) + (B-51), (A-129) + (B-52), (A-129) + (B-53), (A-129) + (B-54), (A-129) + (B-55), (A-129) + (B-56), (A-129) + (B-57), (A-129) + (B-58), (A-129) + (B-59), (A-129) + (B-60), (A-129) + (B-61), (A-129) + (B-62), (A-129) + (B-63), (A-129) + (B-64), (A-129) + (B-65), (A-129) + (B-66), (A-129) + (B-67), (A-129) + (B-68), (A-129) + (B-69), (A-129) + (B-70), (A-129) + (B-71), (A-129) + (B-72), (A-129) + (B-73), (A-129) + (B-74), (A-129) + (B-75), (A-129) + (B-76), (A-129) + (B-77), (Al-1) + (B-78), (A-129) + (B-79), (A-129) + (B-80).
(A-130) + (B-1), (A-130) + (B-2), (A-130) + (B-3), (A-130) + (B-4), (A-130) + (B-5), (A-130) + (B-6), (A-130) + (B-7), (A-130) + (B-8), (A-130) + (B-9), (A-130) + (B-10), (A-130) + (B-11), (A-130) + (B-12), (A-130) + (B-13), (A-130) + (B-14), (A-130) + (B-15), (A-130) + (B-16), (A-130) + (B-17), (A-130) + (B-18), (A-130) + (B-19), (A-130) + (B-20), (A-130) + (B-21), (A-130) + (B-22), (A-130) + (B-23), (A-130) + (B-24), (A-130) + (B-25), (A-130) + (B-26), (A-130) + (B-27), (A-130) + (B-28), (A-130) + (B-29), (A-130) + (B-30), (A-130) + (B-31), (A-130) + (B-32), (A-130) + (B-33), (A-130) + (B-34), (A-130) + (B-35), (A-130) + (B-36), (A-130) + (B-37), (A-130) + (B-38), (A-130) + (B-39), (A-130) + (B-40), (A-130) + (B-41), (A-130) + (B-42), (A-130) + (B-43), (A-130) + (B-44), (A-130) + (B-45), (A-130) + (B-46), (A-130) + (B-47), (A-130) + (B-48), (A-130) + (B-49), (A-130) + (B-50), (A-130) + (B-51), (A-130) + (B-52), (A-130) + (B-53), (A-130) + (B-54), (A-130) + (B-55), (A-130) + (B-56), (A-130) + (B-57), (A-130) + (B-58), (A-130) + (B-59), (A-130) + (B-60), (A-130) + (B-61), (A-130) + (B-62), (A-130) + (B-63), (A-130) + (B-64), (A-130) + (B-65), (A-130) + (B-66), (A-130) + (B-67), (A-130) + (B-68), (A-130) + (B-69), (A-130) + (B-70), (A-130) + (B-71), (A-130) + (B-72), (A-130) + (B-73), (A-130) + (B-74), (A-130) + (B-75), (A-130) + (B-76), (A-130) + (B-77), (AI-1) + (B-78), (A-130) + (B-79), (A-130) + (B-80).
(A-131) + (B-1), (A-131) + (B-2), (A-131) + (B-3), (A-131) + (B-4), (A-131) + (B-5), (A-131) + (B-6), (A-131) + (B-7), (A-131) + (B-8), (A-131) + (B-9), (A-131) + (B-10), (A-131) + (B-11), (A-131) + (B-12), (A-131) + (B-13), (A-131) + (B-14), (A-131) + (B-15), (A-131) + (B-16), (A-131) + (B-17), (A-131) + (B-18), (A-131) + (B-19), (A-131) + (B-20), (A-131) + (B-21), (A-131) + (B-22), (A-131) + (B-23), (A-131) + (B-24), (A-131) + (B-25), (A-131) + (B-26), (A-131) + (B-27), (A-131) + (B-28), (A-131) + (B-29), (A-131) + (B-30), (A-131) + (B-31), (A-131) + (B-32), (A-131) + (B-33), (A-131) + (B-34), (A-131) + (B-35), (A-131) + (B-36), (A-131) + (B-37), (A-131) + (B-38), (A-131) + (B-39), (A-131) + (B-40), (A-131) + (B-41), (A-131) + (B-42), (A-131) + (B-43), (A-131) + (B-44), (A-131) + (B-45), (A-131) + (B-46), (A-131) + (B-47), (A-131) + (B-48), (A-131) + (B-49), (A-131) + (B-50), (A-131) + (B-51), (A-131) + (B-52), (A-131) + (B-53), (A-131) + (B-54), (A-131) + (B-55), (A-131) + (B-56), (A-131) + (B-57), (A-131) + (B-58), (A-131) + (B-59), (A-131) + (B-60), (A-131) + (B-61), (A-131) + (B-62), (A-131) + (B-63), (A-131) + (B-64), (A-131) + (B-65), (A-131) + (B-66), (A-131) + (B-67), (A-131) + (B-68), (A-131) + (B-69), (A-131) + (B-70), (A-131) + (B-71), (A-131) + (B-72), (A-131) + (B-73), (A-131) + (B-74), (A-131) + (B-75), (A-131) + (B-76), (A-131) + (B-77), (AI-1) + (B-78), (A-131) + (B-79), (A-131) + (B-80).
(A-132) + (B-1), (A-132) + (B-2), (A-132) + (B-3), (A-132) + (B-4), (A-132) + (B-5), (A-132) + (B-6), (A-132) + (B-7), (A-132) + (B.8), (A-132) + (B-9), (A-132) + (B-10), (A-132) + (B-11), (A-132) + (B-12), (A-132) + (B-13), (A-132) + (B-14), (A-132) + (B-15), (A-132) + (B-16), (A-132) + (B-17), (A-132) + (B-18), (A-132) + (B-19), (A-132) + (B-20), (A-132) + (B-21), (A-132) + (B-22), (A-132) + (B-23), (A-132) + (B-24), (A-132) + (B-25), (A-132) + (B-26), (A-132) + (B-27), (A-132) + (B-28), (A-132) + (B-29), (A-132) + (B-30), (A-132) + (B-31), (A-132) + (B-32), (A-132) + (B-33), (A-132) + (B-34), (A-132) + (B-35), (A-132) + (B-36), (A-132) + (B-37), (A-132) + (B-38), (A-132) + (B-39), (A-132) + (B-40), (A-132) + (B-41), (A-132) + (B-42), (A-132) + (B-43), (A-132) + (B-44), (A-132) + (B-45), (A-132) + (B-46), (A-132) + (B-47), (A-132) + (B-48), (A-132) + (B-49), (A-132) + (B-50), (A-132) + (B-51), (A-132) + (B-52), (A-132) + (B-53), (A-132) + (B-54), (A-132) + (B-55), (A-132) + (B-56), (A-132) + (B-57), (A-132) + (B-58), (A-132) + (B-59), (A-132) + (B-60), (A-132) + (B-61), (A-132) + (B-62), (A-132) + (B-63), (A-132) + (8-64), (A-132) + (B-65), (A-132) + (B-66), (A-132) + (B-67), (A-132) + (B-68), (A-132) + (B-69), (A-132) + (B-70), (A-132) + (B-71), (A-132) + (B-72), (A-132) + (B-73), (A-132) + (B-74), (A-132) + (B-75), (A-132) + (B-76), (A-132) + (B-77), (Al-1) + (B-78), (A-132) + (B-79), (A-132) + (B-80).
(A-133) + (B-1), (A-133) + (B-2), (A-133) + (B-3), (A-133) + (B-4), (A-133) + (B-5), (A-133) + (B-6), (A-133) + (B-7), (A-133) + (B-8), (A-133) + (B-9), (A-133) + (B-10), (A-133) + (B-11), (A-133) + (B-12), (A-133) + (B-13), (A-133) + (B-14), (A-133) + (B-15), (A-133) + (B-16), (A-133) + (B-17), (A-133) + (B-18), (A-133) + (B-19), (A-133) + (B-20), (A-133) + (B-21), (A-133) + (B-22), (A-133) + (B-23), (A-133) + (B-24), (A-133) + (B-25), (A-133) + (B-26), (A-133) + (B-27), (A-133) + (B-28), (A-133) + (B-29), (A-133) + (B-30), (A-133) + (B-31), (A-133) + (B-32), (A-133) + (B-33), (A-133) + (B-34), (A-133) + (B-35), (A-133) + (B-36), (A-133) + (B-37), (A-133) + (B-38), (A-133) + (B-39), (A-133) + (B-40), (A-133) + (B-41), (A-133) + (B-42), (A-133) + (B-43), (A-133) + (B-44), (A-133) + (B-45), (A-133) + (B-46), (A-133) + (B-47), (A-133) + (B-48), (A-133) + (B-49), (A-133) + (B-50), (A-133) + (B-51), (A-133) + (B-52), (A-133) + (B-53), (A-133) + (B-54), (A-133) + (B-55), (A-133) + (B-56), (A-133) + (B-57), (A-133) + (B-58), (A-133) + (B-59), (A-133) + (B-60), (A-133) + (B-61), (A-133) + (B-62), (A-133) + (B-63), (A-133) + (B-64), (A-133) + (B-65), (A-133) + (B-66), (A-133) + (B-67), (A-133) + (B-68), (A-133) + (B-69), (A-133) + (B-70), (A-133) + (B-71), (A-133) + (B-72), (A-133) + (B-73), (A-133) + (B-74), (A-133) + (B-75), (A-133) + (B-76), (A-133) + (B-77), (Al-1) + (B-78), (A-133) + (B-79), (A-133) + (B-80).
(A-134) + (B-1), (A-134) + (B-2), (A-134) + (B-3), (A-134) + (B-4), (A-134) + (B-5), (A-134) + (B-6), (A-134) + (B-7), (A-134) + (B-8), (A-134) + (B-9), (A-134) + (B-10), (A-134) + (B-11), (A-134) + (B-12), (A-134) + (B-13), (A-134) + (B-14), (A-134) + (B-15), (A-134) + (B-16), (A-134) + (B-17), (A-134) + (B-18), (A-134) + (B-19), (A-134) + (B-20), (A-134) + (B-21), (A-134) + (B-22), (A-134) + (B-23), (A-134) + (B-24), (A-134) + (B-25), (A-134) + (B-26), (A-134) + (B-27), (A-134) + (B-28), (A-134) + (B-29), (A-134) + (B-30), (A-134) + (B-31), (A-134) + (B-32), (A-134) + (B-33), (A-134) + (B-34), (A-134) + (B-35), (A-134) + (B-36), (A-134) + (B-37), (A-134) + (B-38), (A-134) + (B-39), (A-134) + (B-40), (A-134) + (B-41), (A-134) + (B-42), (A-134) + (B-43), (A-134) + (B-44), (A-134) + (B-45), (A-134) + (B-46), (A-134) + (B-47), (A-134) + (B-48), (A-134) + (B-49), (A-134) + (B-50), (A-134) + (B-51), (A-134) + (B-52), (A-134) + (B-53), (A-134) + (B-54), (A-134) + (B-55), (A-134) + (B-56), (A-134) + (B-57), (A-134) + (B-58), (A-134) + (B-59), (A-134) + (B-60), (A-134) + (B-61), (A-134) + (B-62), (A-134) + (B-63), (A-134) + (B-64), (A-134) + (B-65), (A-134) + (B-66), (A-134) + (B-67), (A-134) + (B-68), (A-134) + (B-69), (A-134) + (B-70), (A-134) + (B-71), (A-134) + (B-72), (A-134) + (B-73), (A-134) + (B-74), (A-134) + (B-75), (A-134) + (B-76), (A-134) + (B-77), (Al-1) + (B-78), (A-134) + (B-79), (A-134) + (B-80).
(A-135) + (B-1), (A-135) + (B-2), (A-135) + (B-3), (A-135) + (B-4), (A-135) + (B-5), (A-135) + (B-6), (A-135) + (B-7), (A-135) + (B-8), (A-135) + (B-9), (A-135) + (B-10), (A-135) + (B-11), (A-135) + (B-12), (A-135) + (B-13), (A-135) + (B-14), (A-135) + (B-15), (A-135) + (B-16), (A-135) + (B-17), (A-135) + (B-18), (A-135) + (B-19), (A-135) + (B-20), (A-135) + (B-21), (A-135) + (B-22), (A-135) + (B-23), (A-135) + (B-24), (A-135) + (B-25), (A-135) + (B-26), (A-135) + (B-27), (A-135) + (B-28), (A-135) + (B-29), (A-135) + (B-30), (A-135) + (B-31), (A-135) + (B-32), (A-135) + (B-33), (A-135) + (B-34), (A-135) + (B-35), (A-135) + (B-36), (A-135) + (B-37), (A-135) + (B-38), (A-135) + (B-39), (A-135) + (B-40), (A-135) + (B-41), (A-135) + (B-42), (A-135) + (B-43), (A-135) + (B-44), (A-135) + (B-45), (A-135) + (B-46), (A-135) + (B-47), (A-135) + (B-48), (A-135) + (B-49), (A-135) + (B-50), (A-135) + (B-51), (A-135) + (B-52), (A-135) + (B-53), (A-135) + (B-54), (A-135) + (B-55), (A-135) + (B-56), (A-135) + (B-57), (A-135) + (B-58), (A-135) + (B-59), (A-135) + (B-60), (A-135) + (B-61), (A-135) + (B-62), (A-135) + (B-63), (A-135) + (B-64), (A-135) + (B-65), (A-135) + (B-66), (A-135) + (B-67), (A-135) + (B-68), (A-135) + (B-69), (A-135) + (B-70), (A-135) + (B-71), (A-135) + (B-72), (A-135) + (B-73), (A-135) + (B-74), (A-135) + (B-75), (A-135) + (B-76), (A-135) + (B-77), (Al-1) + (B-78), (A-135) + (B-79), (A-135) + (B-80).
(A-136) + (B-1), (A-136) + (B-2), (A-136) + (B-3), (A-136) + (B-4), (A-136) + (B-5), (A-136) + (B-6), (A-136) + (B-7), (A-136) + (B-8), (A-136) + (B-9), (A-136) + (B-10), (A-136) + (B-11), (A-136) + (B-12), (A-136) + (B-13), (A-136) + (B-14), (A-136) + (B-15), (A-136) + (B-16), (A-136) + (B-17), (A-136) + (B-18), (A-136) + (B-1 9), (A-136) + (B-20), (A-136) + (B-21), (A-136) + (B-22), (A-136) + (B-23), (A-136) + (B-24), (A-136) + (B-25), (A-136) + (B-26), (A-136) + (B-27), (A-136) + (B-28), (A-136) + (B-29), (A-136) + (B-30), (A-136) + (B-31), (A-136) + (B-32), (A-136) + (B-33), (A-136) + (B-34), (A-136) + (B-35), (A-136) + (B-36), (A-136) + (B-37), (A-136) + (B-38), (A-136) + (B-39), (A-136) + (B-40), (A-136) + (B-41), (A-136) + (B-42), (A-136) + (B-43), (A-136) + (B-44), (A-136) + (B-45), (A-1 36) + (B-46), (A-136) + (B-47), (A-136) + (B-48), (A-136) + (B-49), (A-136) + (B-50), (A-136) + (B-51), (A-136) + (B-52), (A-136) + (B-53), (A-136) + (B-54), (A-136) + (B-55), (A-136) + (B-56), (A-136) + (B-57), (A-136) + (B-58), (A-136) + (8-59), (A-1 36) + (B-60), (A-136) + (B-61), (A-1 36) + (8-62), (A-136) + (8-63), (A-136) + (B-64), (A-136) + (B-65), (A-136) + (B-66), (A-136) + (B-67), (A-136) + (B-68), (A-136) + (B-69), (A-136) + (B-70), (A-136) + (B-71), (A-136) + (B-72), (A-136) + (B-73), (A-136) + (B-74), (A-136) + (B-75), (A-136) + (B-76), (A-136) + (B-77), (AI-1) + (B-78), (A-136) + (B-79), (A-136) + (B-80).
(A-137) + (B-1), (A-137) + (B-2), (A-137) + (B-3), (A-1 37) + (B-4), (A-137) + (B-5), (A-137) + (B-6), (A-137) + (B-7), (A-137) + (B-8), (A-137) + (B-9), (A-137) + (B-10), (A-137) + (B-11), (A-137) + (B-12), (A-137) + (B-13), (A-137) + (B-1 4), (A-137) + (B-15), (A-137) + (B-16), (A-137) + (B-17), (A-137) + (B-18), (A-137) + (B-19), (A-137) + (B-20), (A-137) + (B-21), (A-137) + (B-22), (A-137) + (B-23), (A-137) + (B-24), (A-137) + (B-25), (A-1 37) + (B-26), (A-137) + (B-27), (A-137) + (B-28), (A-137) + (B-29), (A-137) + (B-30), (A-137) + (B-31), (A-137) + (B-32), (A-137) + (B-33), (A-137) + (B-34), (A-137) + (B-35), (A-137) + (B-36), (A-137) + (B-37), (A-137) + (B-38), (A-137) + (B-39), (A-137) + (B-40), (A-137) + (B-41), (A-137) + (B-42), (A-137) + (B-43), (A-137) + (B-44), (A-137) + (B-45), (A-137) + (B-46), (A-137) + (B-47), (A-137) + (B-48), (A-137) + (B-49), (A-137) + (B-50), (A-137) + (B-51), (A-137) + (B-52), (A-137) + (B-53), (A-137) + (B-54), (A-137) + (B-55), (A-137) + (B-56), (A-137) + (B-57), (A-137) + (B-58), (A-137) + (B-59), (A-137) + (B-60), (A-137) + (B-61), (A-137) + (B-62), (A-137) + (B-63), (A-137) + (B-64), (A-137) + (B-65), (A-137) + (B-66), (A-137) + (B-67), (A-137) + (B-68), (A-137) + (B-69), (A-137) + (B-70), (A-137) + (B-71), (A-137) + (B-72), (A-137) + (B-73), (A-137) + (B-74), (A-137) + (B-75), (A-137) + (B-76), (A-137) + (B-77), (Al-1) + (B-78), (A-137) + (B-79), (A-137) + (B-80).
(A-138) + (B-1), (A-138) + (B-2), (A-138) + (B-3), (A-138) + (B-4), (A-138) + (B-5), (A-138) + (B-6), (A-138) + (B-7), (A-138) + (B-8), (A-138) + (B-9), (A-138) + (B-10), (A-138) + (B-11), (A-138) + (B-12), (A-138) + (B-13), (A-138) + (B-14), (A-138) + (B-15), (A-138) + (B-16), (A-138) + (B-17), (A-138) + (B-18), (A-138) + (B-19), (A-138) + (B-20), (A-138) + (B-21), (A-138) + (B-22), (A-138) + (B-23), (A-138) + (B-24), (A-138) + (B-25), (A-138) + (B-26), (A-138) + (B-27), (A-138) + (B-28), (A-138) + (B-29), (A-138) + (B-30), (A-138) + (B-31), (A-138) + (B-32), (A-138) + (B-33), (A-138) + (B-34), (A-138) + (B-35), (A-138) + (B-36), (A-138) + (B-37), (A-138) + (B-38), (A-138) + (B-39), (A-138) + (B-40), (A-138) + (B-41), (A-138) + (B-42), (A-138) + (B-43), (A-138) + (B-44), (A-138) + (B-45), (A-138) + (B-46), (A-138) + (B-47), (A-138) + (B-48), (A-138) + (B-49), (A-138) + (B-50), (A-138) + (B-51), (A-138) + (B-52), (A-138) + (B-53), (A-138) + (B-54), (A-138) + (B-55), (A-138) + (B-56), (A-138) + (B-57), (A-138) + (B-58), (A-138) + (B-59), (A-138) + (B-60), (A-138) + (B-61), (A-138) + (B-62), (A-138) + (B-63), (A-138) + (B-64), (A-138) + (B-65), (A-138) + (B-66), (A-138) + (B-67), (A-138) + (B-68), (A-138) + (B-69), (A-138) + (B-70), (A-138) + (B-71), (A-138) + (B-72), (A-138) + (B-73), (A-138) + (B-74), (A-138) + (B-75), (A-138) + (B-76), (A-138) + (B-77), (Al-1) + (B-78), (A-138) + (B-79), (A-138) + (B-80).
(A-139) + (B-1), (A-139) + (B-2), (A-139) + (B-3), (A-139) + (B-4), (A-139) + (B-6), (A-139) + (B-6), (A-139) + (B-7), (A-139) + (B-8), (A-139) + (B-9), (A-139) + (B-10), (A-139) + (B-11), (A-139) + (B-12), (A-139) + (B-13), (A-139) + (B-14), (A-139) + (B-15), (A-139) + (B-16), (A-139) + (B-17), (A-139) + (B-18), (A-139) + (B-19), (A-139) + (B-20), (A-139) + (B-21), (A-139) + (B-22), (A-139) + (B-23), (A-139) + (B-24), (A-139) + (B-25), (A-139) + (B-26), (A-139) + (B-27), (A-139) + (B-28), (A-139) + (B-29), (A-139) + (B-30), (A-139) + (B-31), (A-139) + (B-32), (A-139) + (B-33), (A-139) + (B-34), (A-139) + (B-35), (A-139) + (B-36), (A-139) + (B-37), (A-139) + (B-38), (A-139) + (B-39), (A-139) + (B-40), (A-139) + (B-41), (A-139) + (B-42), (A-139) + (B-43), (A-139) + (B-44), (A-139) + (B-45), (A-139) + (B-46), (A-139) + (B-47), (A-139) + (B-48), (A-139) + (B-49), (A-139) + (B-50), (A-139) + (B-51), (A-139) + (B-52), (A-139) + (B-53), (A-139) + (B-54), (A-139) + (B-55), (A-139) + (B-56), (A-139) + (B-57), (A-139) + (B-58), (A-139) + (B-59), (A-139) + (B-60), (A-139) + (B-61), (A-139) + (B-62), (A-139) + (B-63), (A-139) + (B-64), (A-139) + (B-65), (A-139) + (B-66), (A-139) + (B-67), (A-139) + (B-68), (A-139) + (B-69), (A-139) + (B-70), (A-139) + (B-71), (A-139) + (B-72), (A-139) + (B-73), (A-139) + (B-74), (A-139) + (B-75), (A-139) + (B-76), (A-139) + (B-77), (AI-1) + (B-78), (A-139) + (B-79), (A-139) + (B-80).
(A-140) + (B-1), (A-140) + (B-2), (A-140) + (B-3), (A-140) + (B-4), (A-140) + (B-5), (A-140) + (B-6), (A-140) + (B-7), (A-140) + (B-8), (A-140) + (B-9), (A-140) + (B-10), (A-140) + (B-11), (A-140) + (B-12), (A-140) + (B-1 3), (A-140) + (B-14), (A-140) + (B-15), (A-140) + (B-16), (A-140) + (B-17), (A-140) + (B-18), (A-140) + (B-1 9), (A-140) + (B-20), (A-140) + (B-21), (A-140) + (B-22), (A-140) + (B-23), (A-140) + (B-24), (A-140) + (B-25), (A-140) + (B-26), (A-140) + (B-27), (A-140) + (B-28), (A-140) + (B-29), (A-140) + (B-30), (A-140) + (B-31), (A-140) + (B-32), (A-140) + (B-33), (A-140) + (B-34), (A-140) + (B-35), (A-140) + (B-36), (A-140) + (B-37), (A-140) + (B-38), (A-140) + (B-39), (A-140) + (B-40), (A-140) + (B-41), (A-140) + (B-42), (A-140) + (B-43), (A-140) + (B-44), (A-140) + (B-45), (A-140) + (B-46), (A-140) + (B-47), (A-140) + (B-48), (A-140) + (B-49), (A-140) + (B-50), (A-140) + (B-51), (A-140) + (B-52), (A-140) + (B-53), (A-140) + (B-54), (A-140) + (B-55), (A-140) + (B-56), (A-140) + (B-57), (A-140) + (B-58), (A-140) + (B-59), (A-140) + (B-60), (A-140) + (B-61), (A-140) + (B-62), (A-140) + (B-63), (A-140) + (B-64), (A-140) + (B-65), (A-140) + (B-66), (A-140) + (B-67), (A-140) + (B-68), (A-140) + (B-69), (A-140) + (B-70), (A-140) + (B-71), (A-140) + (B-72), (A-140) + (B-73), (A-140) + (B-74), (A-140) + (B-76), (A-140) + (B-76), (A-140) + (B-77), (AI-1) + (B-78), (A-140) + (B-79), (A-140) + (B-80).
(A-141) + (B-1), (A-141) + (B-2), (A-141) + (B-3), (A-141) + (B-4), (A-141) + (B-5), (A-141) + (B-6), (A-141) + (B-7), (A-141) + (B-8), (A-141) + (B-9), (A-141) + (B-10), (A-141) + (B-11), (A-141) + (B-12), (A-141) + (8-13), (A-141) + (B-14), (A-141) + (B-15), (A-141) + (B-16), (A-141) + (B-17), (A-141) + (B-18), (A-141) + (B-19), (A-141) + (B-20), (A-141) + (B-21), (A-141) + (B-22), (A-141) + (B-23), (A-141) + (B-24), (A-141) + (B-25), (A-141) + (B-26), (A-141) + (B-27), (A-141) + (B-28), (A-141) + (B-29), (A-141) + (B-30), (A-141) + (B-31), (A-141) + (B-32), (A-141) + (B-33), (A-141) + (B-34), (A-141) + (B-35), (A-141) + (B-36), (A-141) + (B-37), (A-141) + (B-38), (A-141) + (B-39), (A-141) + (B-40), (A-141) + (B-41), (A-141) + (B-42), (A-141) + (B-43), (A-141) + (B-44), (A-141) + (B-45), (A-141) + (B-46), (A-141) + (B-47), (A-141) + (B-48), (A-141) + (B-49), (A-141) + (B-60), (A-141) + (B-51), (A-141) + (B-52), (A-141) + (B-53), (A-141) + (B-54), (A-141) + (B-55), (A-141) + (B-56), (A-141) + (B-57), (A-141) + (B-58), (A-141) + (B-59), (A-141) + (B-60), (A-141) + (B-61), (A-141) + (B-62), (A-141) + (B-63), (A-141) + (B-64), (A-141) + (B-65), (A-141) + (B-66), (A-141) + (B-67), (A-141) + (B-68), (A-141) + (B-69), (A-141) + (B-70), (A-141) + (B-71), (A-141) + (B-72), (A-141) + (B-73), (A-141) + (B-74), (A-141) + (B-75), (A-141) + (B-76), (A-141) + (B-77), (AI-1) + (B-78), (A-141) + (B-79), (A-141) + (B-80).
(A-142) + (B-1), (A-142) + (B-2), (A-142) + (B-3), (A-142) + (B-4), (A-142) + (B-5), (A-142) + (B-6), (A-142) + (B-7), (A-142) + (B-8), (A-142) + (B-9), (A-142) + (B-10), (A-142) + (B-11), (A-142) + (B-12), (A-142) + (B-13), (A-142) + (B-14), (A-142) + (B-15), (A-142) + (B-16), (A-142) + (B-17), (A-142) + (B-18), (A-142) + (B-19), (A-142) + (B-20), (A-142) + (B-21), (A-142) + (B-22), (A-142) + (B-23), (A-142) + (B-24), (A-142) + (B-25), (A-142) + (B-26), (A-142) + (B-27), (A-142) + (B-28), (A-142) + (B-29), (A-142) + (B-30), (A-142) + (B-31), (A-142) + (B-32), (A-142) + (B-33), (A-142) + (B-34), (A-142) + (B-35), (A-142)+ (B-36), (A-142) + (B-37), (A-142) + (B-38), (A-142)+ (B-39), (A-142) + (B-40), (A-142) + (B-41), (A-142) + (B-42), (A-142) + (B-43), (A-142) + (B-44), (A-142) + (B-45), (A-142) + (B-46), (A-142) + (B-47), (A-142) + (B-48), (A-142) + (B-49), (A-142) + (B-50), (A-142) + (B-51), (A-142) + (B-52), (A-142) + (B-53), (A-142) + (B-54), (A-142) + (B-55), (A-142) + (B-56), (A-142) + (B-57), (A-142) + (B-58), (A-142) + (B-59), (A-142) + (B-60), (A-142) + (B-61), (A-142) + (B-62), (A-142) + (B-63), (A-142) + (B-64), (A-142) + (B-65), (A-142) + (B-66), (A-142) + (B-67), (A-142) + (B-68), (A-142) + (B-69), (A-142) + (B-70), (A-142) + (B-71), (A-142) + (B-72), (A-142) + (B-73), (A-142) + (B-74), (A-142) + (B-75), (A-142) + (B-76), (A-142) + (B-77), (Al-1) + (B-78), (A-142) + (B-79), (A-142) + (B-80).
(A-143) + (B-1), (A-143) + (B-2), (A-143) + (B-3), (A-143) + (B-4), (A-143) + (B-5), (A-143) + (B-6), (A-143) + (B-7), (A-143) + (B-8), (A-143) + (B-9), (A-143) + (B-1 0), (A-143) + (B-11), (A-143) + (B-12), (A-143) + (B-13), (A-143) + (B-14), (A-143) + (B-1 5), (A-143) + (B-16), (A-143) + (B-17), (A-143) + (B-18), (A-143) + (B-19), (A-143) + (B-20), (A-143) + (B-21), (A-143) + (B-22), (A-143) + (B-23), (A-143) + (B-24), (A-143) + (B-25), (A-143) + (B-26), (A-143) + (B-27), (A-143) + (B-28), (A-143) + (B-29), (A-143) + (B-30), (A-143) + (B-31), (A-143) + (B-32), (A-143) + (B-33), (A-143) + (B-34), (A-143) + (B-35), (A-143) + (B-36), (A-143) + (B-37), (A-143) + (B-38), (A-143) + (B-39), (A-143) + (B-40), (A-143) + (B-41), (A-1 43) + (B-42), (A-143) + (B-43), (A-143) + (B-44), (A-143) + (B-46), (A-1 43) + (B-46), (A-143) + (B-47), (A-143) + (B-48), (A-143) + (B-49), (A-143) + (B-50), (A-143) + (B-51), (A-143) + (B-52), (A-143) + (B-53), (A-143) + (B-54), (A-143) + (B-55), (A-143) + (B-56), (A-143) + (B-57), (A-1 43) + (8-58), (A-143) + (B-59), (A-143) + (B-60), (A-143) + (B-61), (A-143) + (B-62), (A-143) + (B-63), (A-143) + (B-64), (A-143) + (B-65), (A-143) + (B-66), (A-143) + (B-67), (A-143) + (B-68), (A-143) + (B-69), (A-143) + (B-70), (A-143) + (B-71), (A-143) + (B-72), (A-143) + (B-73), (A-143) + (B-74), (A-143) + (B-75), (A-143) + (B-76), (A-143) + (B-77), (Al-1) + (B-78), (A-143) + (B-79), (A-143) + (B-80).
(A-144) + (B-1), (A-144) + (B-2), (A-144) + (B-3), (A-144) + (B-4), (A-144) + (B-5), (A-944) + (B-6), (A-144) + (B-7), (A-144) + (B-8), (A-144) + (B-9), (A-144) + (B-10), (A-144) + (B-11), (A-144) + (B-12), (A-144) + (B-13), (A-144) + (B-14), (A-144) + (B-15), (A-144) + (B-16), (A-144) + (B-17), (A-144) + (B-18), (A-144) + (B-19), (A-144) + (B-20), (A-144) + (B-21), (A-144) + (B-22), (A-144) + (B-23), (A-144) + (B-24), (A-144) + (B-25), (A-144) + (B-26), (A-144) + (B-27), (A-144) + (B-28), (A-144) + (B-29), (A-144) + (B-30), (A-144) + (B-31), (A-144) + (B-32), (A-144) + (B-33), (A-144) + (B-34), (A-144) + (B-35), (A-144) + (B-36), (A-144) + (B-37), (A-144) + (B-38), (A-144) + (B-39), (A-144) + (B-40), (A-144) + (B-41), (A-144) + (B-42), (A-144) + (B-43), (A-144) + (B-44), (A-144) + (B-45), (A-144) + (B-46), (A-144) + (B-47), (A-144) + (B-48), (A-144) + (B-49), (A-144) + (B-50), (A-144) + (B-51), (A-144) + (B-52), (A-144) + (B-53), (A-144) + (B-54), (A-144) + (B-55), (A-144) + (B-56), (A-144) + (B-57), (A-144) + (B-58), (A-144) + (B-59), (A-144) + (B-60), (A-144) + (B-61), (A-144) + (B-62), (A-144) + (B-63), (A-144) + (B-64), (A-144) + (B-65), (A-144) + (B-66), (A-144) + (B-67), (A-144) + (B-68), (A-144) + (B-69), (A-144) + (B-70), (A-144) + (B-71), (A-144) + (B-72), (A-144) + (B-73), (A-1 44) + (B-74), (A-144) + (B-75), (A-144) + (B-76), (A-144) + (B-77), (AI-1) + (B-78), (A-144) + (B-79), (A-144) + (B-80).
(A-145) + (B-1), (A-145) + (B-2), (A-145) + (B-3), (A-145) + (B-4), (A-145) + (B-5), (A-145) + (B-6), (A-145) + (B-7), (A-145) + (B-8), (A-145) + (B-9), (A-145) + (B-10), (A-145) + (B-11), (A-145) + (B-12), (A-145) + (B-13), (A-145) + (B-14), (A-145) + (B-15), (A-145) + (B-16), (A-145) + (B-17), (A-145) + (B-18), (A-145) + (B-19), (A-145) + (B-20), (A-145) + (B-21), (A-145) + (B-22), (A-145) + (B-23), (A-145) + (B-24), (A-145) + (B-25), (A-145) + (B-26), (A-145) + (B-27), (A-145) + (B-28), (A-145) + (B-29), (A-145) + (B-30), (A-145) + (B-31), (A-145) + (B-32), (A-145) + (B-33), (A-145) + (B-34), (A-145) + (B-35), (A-145) + (B-36), (A-145) + (B-37), (A-145) + (B-38), (A-145) + (B-39), (A-145) + (B-40), (A-145) + (B-41), (A-145) + (B-42), (A-145) + (B-43), (A-145) + (B-44), (A-145) + (B-45), (A-145) + (B-46), (A-145) + (B-47), (A-145) + (B-48), (A-145) + (B-49), (A-145) + (B-50), (A-145) + (B-51), (A-145) + (B-52), (A-145) + (B-53), (A-145) + (B-54), (A-145) + (B-55), (A-145) + (B-56), (A-145) + (B-57), (A-145) + (B-58), (A-145) + (B-59), (A-145) + (B-60), (A-145) + (B-61), (A-145) + (B-62), (A-145) + (B-63), (A-145) + (B-64), (A-145) + (B-65), (A-145) + (B-66), (A-145) + (B-67), (A-145) + (B-68), (A-145) + (B-69), (A-145) + (B-70), (A-145) + (B-71), (A-145) + (B-72), (A-145) + (B-73), (A-145) + (B-74), (A-145) + (B-75), (A-145) + (B-76), (A-145) + (B-77), (AI-1) + (B-78), (A-145) + (B-79), (A-145) + (B-80).

Weiterhin können die erfindungsgemäßen Kombinationen von Herbiziden verschiedene agrochemische Wirkstoffe beispielsweise aus der Gruppe der Safener, Fungizide, Insektizide, sich strukturell von den Herbiziden (A) und (B) unterscheidenden Herbizide und Pflanzenwachstumsregulatoren oder aus der Gruppe der im Pflanzenschutz üblichen Zusatzstoffe und Formulierungshilfsmittel enthalten. Zusatzstoffe sind beispielsweise Düngemittel und Farbstoffe.

So kommen als weitere Herbizide beispielsweise folgende von den Herbiziden (A) und (B) verschiedene Herbizide in Frage wie sie z.B. in Weed Research 26, 441-445 (1986), oder "The Pesticide Manual", 13th edition, The British Crop Protection Council, 2003, und dort zitierter Literatur beschrieben sind. Die Herbizide sind dabei entweder mit dem "common name" nach der international Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt:
acetochlor; acifluorfen(-sodium); aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; acrolein; alachlor; alloxydim(-sodium); ametryn; amicarbazone, amidochlor, amidosulfuron; aminopyralid, amitrol; AMS, d.h. Ammoniumsulfamat; anilofos; asulam; atraton; atrazin; azafenidin, azimsulfuron (DPX-A8947); aziprotryn; barban; BAS 516 H, d.h. 5-Fluor-2-phenyl-4H-3,1-benzoxazin-4-on; BCPC; beflubutamid, benazolin(-ethyl); benfluralin; benfuresate; bensulfuron(-methyl); bensulide; bentazone; benzfendizone; benzobicyclon, benzofenap; benzofluor; benzoylprop(-ethyl); benzthiazuron; bifenox; bialaphos; bifenox; bispyribac(-sodium), borax; bromacil; bromobutide; bromofenoxim; bromoxynil; bromuron; buminafos; busoxinone; butachlor; butafenacil, butamifos; butenachlor; buthidazole; butralin; butroxydim, butylate; cacodylic acid; calcium chlorate; cafenstrole (CH-900); carbetamide; carfentrazone(-ethyl); caloxydim, CDAA, d.h. 2-Chlor-N,N-di-2-propenylacetamid; CDEC, d.h. Diethyldithiocarbaminsäure-2-chlorallylester; chlorflurenol (-methyl); chlomethoxyfen; clethodim; clomeprop; chloramben; chlorazifop-butyl, chlormesulon; chlorbromuron; chlorbufam; chlorfenac; chlorflurecol-methyl; chloridazon; chlorimuron(-ethyl); chloroacetic acid; chlomitrofen; chlorotoluron; chloroxuron; chlorpropham; chlorsulfuron; chlorthal(-dimethyl); chlorthiamid; chlortoluron, cinidon(-methyl und - ethyl), cinmethylin; cinosulfuron; cisanilide; clefoxydim, clethodim; clodinafop und dessen Esterderivate (z.B. clodinafop-propargyl); clomazone; clomeprop; cloproxydim; clopyralid; clopyrasulfuron(-methyl); cloransulam(-methyl), cresol; cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-D, 2,4-DB. 3,4-DA, 3,4-DB, 2,4-DEB, dalapon; dazomed; desmedipham; desmetryn; di-allate; dlcamba; dichlobenil; ortho-dichlorobenzene; para-dichlorobenzene; dichlorprop; dichlorprop-P; diclofop und dessen Ester wie diclofop-methyl; diclosulam, diethatyl(-ethyl); difenoxuron; difenzoquat; difenzoquat-methylsulphate; diflufenlcan; diflufenzopyr, dimefuron; dimepiperate, dimethachlor, dimethametryn; dimethenamid (SAN-582H); dimethenamid-P; dimethazone, dimexyflam, dimethipin; diemthylarsinic acid; dimetrasulfuron, dinitramine; dinoseb; dinoterb; diphenamid; dipropetryn; diquat: diquat-dibromide; dithiopyr; diuron; DNOC; 3,4-DP; DSMA; EBEP; eglinazine-ethyl; EL77, d.h. 5-Cyano-1-(1,1-dimethylethyl)-N-methyl-1H-pyrazole-4-carboxamid; endothal; epoprodan, EPTC; esprocarb; ethalfluralin; ethametsulfuron(-methyl); ethidimuron; ethiozin; ethofumesate; ethoxyfen und dessen Ester (z.B. Ethylester, HN-252); ethoxysulfuron, etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenoprop; fenoxan, fenoxaprop und fenoxaprop-P sowie deren Ester, z.B. fenoxaprop-P-ethyl und fenoxaprop-ethyl; fenoxydim; fentrazamide, fenuron; ferrous-sulphate; flamprop(-methyl oder -isopropyl oder -isopropyl-L); flazasulfuron; floazulate, florasulam, fluazifop und fluazifop-P und deren Ester, z.B. fluazifop-butyl und fluazifop-P-butyl; fluazolate; flucarbazone(-sodium), flucetosulfuron; fluchloralin; flufenacet; flufenpyr(-ethyl); flumetsulam; flumeturon; flumiclorac(-pentyl), flumioxazin (S-482); flumipropyn; fluometuron, fluorochloridone, fluorodifen; fluoroglycofen(-ethyl); flupoxam (KNW-739); flupropacil (UBIC-4243); flupropanate, flupyrsulfuron(-methyl oder -sodium), flurenol(-butyl), fluridone; flurochloridone; fluroxypyr(-meptyl); flurprimidol; flurtamone; fluthiacet(-methyl) (KIH-9201); fluthiamide; fomesafen; foramsulfuron; fosamine; furyloxyfen; glufosinate(-ammonium); glyphosate(-isopropylammonium); halosafen; halosulfuron(-methyl) und dessen Ester (z.B. Methylester, NC-319); haloxyfop und dessen Ester; haloxyfop-P (= R-haloxyfop) und dessen Ester; HC-252; hexazinone; imazamethabenz(-methyl); imazapyr; imazaquin und Salze wie das Ammoniumsalz; imazamethapyr, imazamox, imazapic, imazethamethapyr; imazethapyr; imazosulfuron; indanofan, iodomethane; iodosulfuron(methylsodium); ioxynil; isocarbamid; isopropalin; isoproturon; isouron; isoxaben; isoxachlortole, isoxaflutole, isoxapyrifop; karbutilate; lactofen; lenacil; linuron; MAA; MAMA; MCPA; MCPA-2-ethylhexyl; MCPA-thioethyl; MCPB; mecoprop; mecoprop-P; mefenacet; mefluidid; mesosulfuron(-methyl); mesotrione, metamifop; metamitron; metazachlor; methabenzthiazuron; metham; methazole; methoxyphenone; methylarsonic acid; methyldymron; methyl isothiocyanate; metabenzuron, metamifop; methobenzuron; metobromuron; (alpha-)metolachlor; S-metolachlor; metosulam (XRD 511); metoxuron; metribuzin; metsulfuron-methyl; MK-616; MH; molinate; monalide; monocarbamide dihydrogensulfate; monolinuron; monuron; MSMA; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4- (2,4-dichlorbenzoyl)-1-methyl-5-benzyloxypyrazol; neburon; nicosulfuron; nipyraclophen; nitralin; nitrofen; nitrofluorfen; nonanoic acid; norflurazon; oleic acid (fatty acid); orbencarb; orthosulfamuron; oryzalin; oxadiargyl (RP-020630); oxadiazon; oxasulfuron, oxaziclomefone, oxyfluorfen; paraquat; paraquat-dichloride; pebulate; pelargonic acid, pendimethalin; penoxsulam; pentachlorophenol; pentanochlor; pentoxazone, perfluidone; phenisopham; phenmedipham(ethyl); pethoxamid; picloram; picolinafen, pinoxaden, piperophos; piributicarb; pirifenop-butyl: pretilachlor; primisulfuron(-methyl); potassium arsenite; potassium azide; procarbazone-(sodium), procyazine; prodiamine; profluazol; profluralin; profoxydim; proglinazine(-ethyl); prometon; prometryn; propachlor; propanil; propaquizafop und dessen Ester; propazine; propham; proplsochlor; propoxycarbazone(-sodium) (BAY MKH 6561); propyzamide; prosulfalin; prosulfocarb; prosulfuron (CGA-152005); prynachlor; pyraclonil; pyraflufen(-ethyl), pyrasulfotole; pyrazolinate; pyrazon; pyrazosulfuron(-ethyl); pyrazoxyfen; pyribambenz-isopropyl; pyribenzoxim, pyributicarb, pyridafol, pyridate; pyriftalid; pyrimidobac(-methyl), pyrlmisulfan, pyrithiobac(-sodium) (KIH-2031); pyroxasulfone; pyroxofop und dessen Ester (z.B. Propargylester); pyroxsulam (triflosulam); quinclorac; quinmerac; quinoclamine, quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; SMA; sodium arsenite; sodium azide; sodium chlorate; sulcotrione, sulfentrazon (FMC-97285, F-6285); sulfazuron; sulfometuron(-methyl); sulfosate (ICI-A0224); sulfosulfuron, 2,3,6-TBA; TCA(sodium); tebutam (GCP-5544); tebuthiuron; tefuryltrione, tembotrione, tepraloxydim, terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thiencarbazone-methyl, thifensulfuron(-methyl); thiobencarb; tiocarbazil; tralkoxydim; tri-allate; triasulfuron; triaziflam, triazofenamide; tribenuron(-methyl); tricamba; triclopyr; tridiphane; trietazine; trifloxysulfuron(sodium); trifluralin; triflusulfuron und Ester (z.B. Methylester, DPX-66037); trihydroxytriazine; trimeturon; tritosulfuron; tropamezone; tsitodef; vernolate; [3-[2-chloro-4-fluoro-6-(1-methyl-6-trifluoromethyl-2,4-dioxo-1,2,3,4-tetrahydropyrimidin-3-yl)phenoxy]-2-pyridyloxy]acetic acid ethyl ester; WL 110547, d.h. 5-Phenoxy-1-[3-(trifluormethyl)-pheny)]-1H-tetrazol; UBH-509; D-489; LS 82-556; KPP-300; NC-324; NC-330; KH-218; DPX-N8189; SC-0774; DOWCO-535; DK-8910; V-53482; PP-600; MBH-001; ET-751; K!H-6127, KIH-2023 und SYP-249, SYN-523.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen wie Unkräuter auf, einschließlich Arten die resistent sind gegen herbizide Wirkstoffe wie Glyphosate, Glufosinate, Atrazin oder Imidazolinon-Herbizide. Auch schwer bekämpfbare perennierende Unkräuter, die aus Rhizomen, Wurzelstöcken oder anderen Dauerorganen austreiben, werden durch die Wirkstoffe gut erfaßt. Dabei können die Substanzen z.B. im Vorsaat-, Vorauflauf- oder Nachauflaufverfahren ausgebracht werden, z.B. gemeinsam oder getrennt. Bevorzugt ist z.B. die Anwendung im Nachauflaufverfahren, insbesondere auf die aufgelaufenen Schadpflanzen.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Aiopecurus spp., Brachiarla spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe In den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombinationen von Wirkstoffen wird eine erhebliche Reduzierung der nötigen Aufwandmenge der Wirkstoffe ermöglicht.

Bei gemeinsamer Anwendung von Herbiziden der Gruppe (A) und solchen der Gruppe (B) treten bevorzugt überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche/forstwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
   Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972),

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin ein Verfahren zur Bekämpfung von unerwünschten Pflanzen (z.B. zur nicht-selektiven Bekämpfung von Schadpflanzen), vorzugsweise in Pflanzenkulturen, das dadurch gekennzeichnet ist, daß die Herbizide (A) und (B) der erfindungsgemäßen Herbizid-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können eines oder mehrere Herbizide (A) vor, nach oder gleichzeitig mit dem oder den Herbizld(en) (B) auf die Pflanzen, das Saatgut oder die Fläche, auf der die Pflanzen wachsen (z.B. die Anbaufläche), appliziert werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Die erfindungsgemäßen Herbizid-Kombinationen werden nicht-selektiv zur Bekämpfung unerwünschten Pflanzenwuchses eingesetzt werden, z.B. in Dauer- und Plantagenkufturen (z.B. Kern- und Steinobst, Beerenobst, Wein, Hevea, Bananen, Zuckerrohr, Kaffee, Tee, Citrus, Nussplantagen, Rosen, Palmenkulturen und Forstkulturen), an Wegrändern, Plätzen, Industrieanlagen, Flugplätzen oder Eisenbahnanlagen, oder zur sogenannten Burn-Down-Anwendung, z.B. in Pflanzenkulturen wie Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel. Dabei erfolgt die Applikation bevorzugt auf die aufgelaufenen Schadpflanzen (z.B. Unkräuter oder unerwünschte Kulturpflanzen), insbesondere vor dem Auflaufen von (erwünschten) Kulturpflanzen.

Eine ebenfalls bevorzugte Verwendung im nicht-selektiven Bereich ist die Burn-down-Anwendung in Kulturpflanzen, wobei zumindest eine der Komponenten der erfindungsgemäßen Herbizid-Kombination, insbesondere die Herbizide (A), gegebenenfalls in Kombination mit den Herbiziden (B), vor dem Auflaufen der Kulturpflanzen auf die aufgelaufenen Schadpflanzen (z.B. Unkräuter oder unerwünschte Kulturpflanzen) appliziert werden, bevorzugt ist dabei die Applikation vor der Aussaat der Kulturpflanzen oder bei der Aussaat der Kulturpflanzen auf die aufgelaufenen Schadpflanzen.

Gegenstand der Erfindung ist auch die Verwendung der erfindungsgemäßen Herbizid-Kombinationen zur Bekämpfung von unerwünschtem Pflanzenwuchs, vorzugsweise in Pflanzenkulturen.

Die erfindungsgemäßen Herbizid-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Ebenfalls möglich ist die zeitlich versetzte Anwendung (Splitapplikation) der getrennt formulierten oder partiell getrennt formulierten Einzelkomponenten.
Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die Herbizide (A) und (B) können gemeinsam oder getrennt in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln,

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthallne, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gestelne wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formullerungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A) und (B) können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mlschungen mit anderen bekannten Wirkstoffen wie Funglziden, Insektiziden, Akariziden, Nematiziden, Safenern, Schutzstoffen gegen Vogelfraß, Pflanzennährstoffen und Bodenstrukturverbesserungsmitteln sind möglich.

Die Herbizide (A) und (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Anbaufläche (z.B. Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzehnrfrkstoffe gemeinsam im Tank mit Wasser gemischt werden und die erhaltene Spritzbrühe ausgebracht wird.

Eine gemeinsame herbizide Formulierung der erfindungsgemäßen Kombination an Herbiziden (A) und (B) hat den Vorteil der leichteren Anwendbarkeit, wobei die Mengen der Komponenten bereits im optimalen Verhältnis zueinander eingestellt werden können. Außerdem können die Hilfsmittel in der Formulierung aufeinander optimal abgestimmt werden.

### Biologische Beispiele

### 1. Unkrautwirkung im Vorauflauf

Samen beziehungsweise Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Wirkstoffe (A) und (B) wurden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert.

Nach der Behandlung wurden die Töpfe Im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Herbizid-Kombinationen eine gute herbizide Vorauflaufwirksamkeit gegen ein breites Spektrum von Ungräsern und Unkräutern auf. Die Herbizid-Kombinationen von Verbindungen der Tabelle A weisen mit Verbindungen der Tabelle B sehr gute synergistische herbizide Wirkung gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus und Panicum miliaceum im Vorauflaufverfahren bei einer Aufwandmenge von 100 g und weniger Aktivsubstanz pro Hektar.

### 2. Unkrautwirkung im Nachauflauf

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im 2-4 Blattstadium behandelt. Die als Spritzpulver bzw. als Emulsionskonzentrate formulierten erfindungsgemäßen Verbindungen wurden in verschiedenen Dosierungen mit einer Wasseraufwandmenge von umgerechnet 600 bis 800 I/ha auf die grünen Pflanzenteile gesprüht. Nach 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert.

Allgemein weisen die erfindungsgemäßen Herbizid-Kombinationen auch im Nachauflauf eine gute herbizide Wirksamkeit gegen ein breites Spektrum wirtschaftlich wichtiger Ungräser und Unkräuter auf. Die Herbizid-Kombinationen von Verbindungen der Tabelle A weisen mit Verbindungen der Tabelle B sehr gute synergistische herbizide Wirkung gegen Schadpflanzen wie Sinapis alba, Echinochloa crus-galli, Digitaria sanguinalis, Lolium multiflorum, Chrysanthemum segetum, Setaria viridls, Polygonum convolvulus, Abutilon theophrasti, Amaranthus retroflexus, Panicum miliaceum und Avena sativa im Nachauflaufverfahren bei einer Aufwandmenge von 100 g und weniger Aktivsubstanz pro Hektar.

## Patentansprüche

1. Herbizid-Kombination enthaltend Komponenten (A) und (B), wobei
(A) ein oder mehrere Herbizide aus der Gruppe Verbindungen der Formel (I) oder deren Salzen bedeutet, 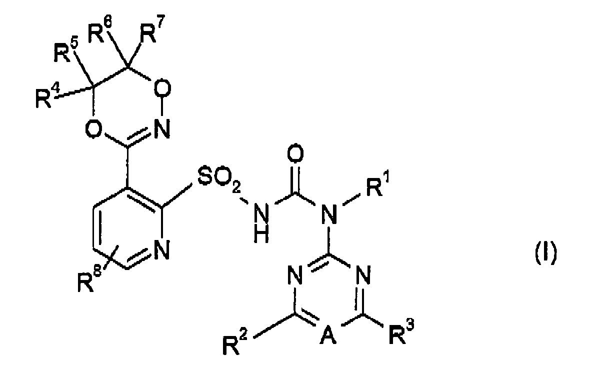 worin
A für Stickstoff oder eine CR¹¹-Gruppierung steht,
wobei
R¹¹ für Wasserstoff, Alkyl, Halogen und Haloalkyl steht,
R¹ für Wasserstoff oder einen gegebenenfalls substituierten Rest aus der Reihe Alkyl, Alkoxy, Alkoxyalkyl, Alkenyl, Alkinyl, Cycloalkyl, Cycloaikylalkyl, Aralkyl und Aryl steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴ - R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können; und
(B) ein oder mehrere Herbizide aus der Gruppe der 2,4-Diamino-s-triazine, welche an einer Aminogruppe mit einer (Hetero)aryl(hetero)alkylgruppe N-substituiert sind.

2. Herbizid-Kombination nach Anspruch 1, **dadurch gekennzeichnet, daß** als Komponente (A) ein oder mehrere Verbindungen der Formel (I) oder deren Salze,
worin
A für Stickstoff oder eine CH-Gruppierung steht,
R¹ für Wasserstoff, Methyl, Ethyl, Methoxy, Methoxymethyl oder Ethoxy steht,
R² für Wasserstoff, Chlor, Methyl, Ethyl, Trifluoromethyl, Methoxy, Ethoxy, Difluoromethoxy, Methylthio, Methylamino oder Dimethylamino steht,
R³ für Wasserstoff, Chlor, Methyl, Ethyl, Trifluoromethyl, Methoxy, Ethoxy, Difluoromethoxy, Methylthio, Methylamino oder Dimethylamino steht,
R⁴ - R⁷ unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise Wasserstoff,
R⁸ für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise Wasserstoff,
enthalten sind.

3. Herbizid-Kombination nach Anspruch 1 oder 2, **dadurch gekennzeichnet, daß** als Komponente (B) ein oder mehrere Herbizide aus der Gruppe der 2,4-Diamino-s-triazine bestehend aus Verbindungen mit den nachstehend genannten Formeln (II), (III), (IV) und (V), oder deren Salze, d.h.
1. Verbindungen der Formel (II) und deren Salze, 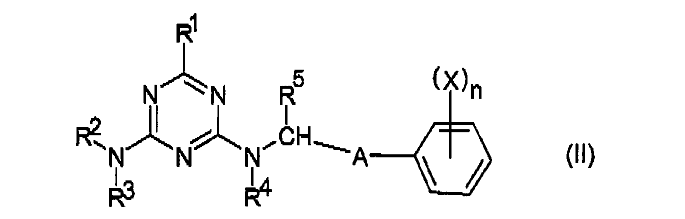 worin
R¹ (C₁-C₆)Alkyl, das unsubstituiert oder durch einen oder mehrere Reste aus der Gruppe Halogen, Cyano, Nitro, Thiocyanato, (C₁-C₄)Alkoxy, (C₁-C₄)Alkylthio, (C₁-C₄)Alkylsuiflnyl, (C₁-C₄)Alkylsulfonyl, (C₂-C₄)Alkenyl, (C₂-C₄)Alkinyl, Phenyl, das unsubstituiert oder substituiert ist, und Heterocyclyl mit 3 bis 6 Ringatomen und 1 bis 3 Heterorlngatomen aus der Gruppe N, O und S, wobei der Ring unsubstituiert oder substituiert ist, substituiert Ist,
R² und R³ jeweils unabhängig voneinander Wasserstoff, Amino oder Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Haterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest, oder
R² und R³ gemeinsam mit dem Stickstoffatom der Gruppe NR²R³ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
R⁴ Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
R⁵ Wasserstoff, Halogen, Nitro, Cyano, Thiocyanato oder einen Rest der Formel -B¹-Y¹, wobei B¹ und Y¹ wie unten definiert sind,
A einen Alkylenrest mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiocyanato und einen Rest der Formel -B²-Y² substituiert ist,
(X)ₙ n Substituenten X und dabei X jeweils unabhängig voneinander Halogen, (C₁-C₆)Alkyl, (C₂-C₆)Alkenyl, (C₂-C₆)Alkinyl, (C₁-C₆)Alkoxy, (C₂-C₆)Alkenyloxy, (C₂-C₆)Alkinyloxy, [(C₁-C₄)Alkyl]-carbonyl, ((C₁-C₄)Alkoxy]-carbonyl oder [(C₁-C₄)Alkylthio]-carbonyl, wobei die kohlenwasserstoffhaltigen Teile in den letztgenannten 9 Resten unsubstituiert oder substituiert sind, oder einen Rest der Formel -B^{o}-R^{o}, wobei B^{o} wie unten definiert und R^{o} einen aromatisahen, gesättigten oder teilgesättigten carbocyclischen oder heterocyclischen Rest bedeutet, wobei der cyclische Rest substituiert oder unsubstituiert ist,
oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
n 0,1,2,3,4 oder 5,
B^{o}, B¹, B² jeweils unabhängig voneinander eine direkte Bindung oder eine divalente Gruppe der Formel -O-, -S(O)ₚ-, -S(O)ₚ-O-, -O-S(O)ₚ-, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
Y¹, Y² jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N, O und S, wobei jeder der drei letztgenannten Reste unsubstituiert oder substituiert ist,
bedeuten;
2. Verbindungen der Formel (III) oder deren Salze, 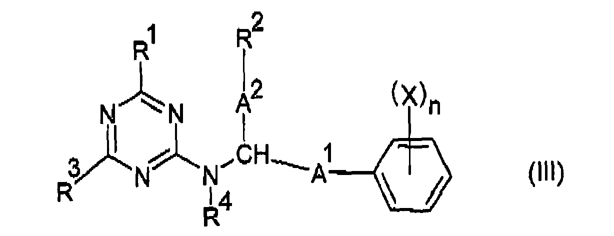 worin
R¹ Aryl, das unsubstituiert oder substituiert ist, oder (C₃-C₉)Cycloalkyl, das unsubstituiert oder substituiert ist, oder Heterocyclyl, das substituiert oder unsubstituiert ist, oder
(C₁-C₆)Alkyl, (C₂-C₆)Alkenyl oder (C₂-C₆)Alkinyl,
wobei jeder der letztgenannten 3 Reste unsubstituiert oder durch einen oder mehrere Reste aus der Gruppe Halogen, Hydroxy, Cyano, Nitro, Thiocyanato, (C₁-C₄)Alkoxy, (C₁-C₄)Haloalkoxy, (C₂-C₄)Alkenyloxy, (C₂-C₄)Haloalkenyloxy, (C₁-C₄)Alkylthio, (C₁-C₄)Alkylsulfinyl, (C₁-C₄)Alkylsulfonyl, (C₁-C₄)Haloalkylsulfinyl, (C₁-C₄)Haloalkylsulfonyl und (C₃-C₉)Cycloalkyl, das unsubstituiert oder substituiert ist, und Phenyl, das unsubstituiert oder substituiert ist, und Heterocyclyl, das unsubstituiert oder substituiert ist, und Reste der Formeln R'-C(=Z')-, R'-C(=Z')-Z-, R'-Z-C(=Z')-, R'R"N-C(=Z')-, R'-Z-C(=Z')-O-, R'R"N-C(=Z')-Z-, R'-C(=Z')-NR"- und R'R"N-C(=Z')-NR"'-, worin R', R" und R"', jeweils unabhängig voneinander (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, bedeuten und worin Z und Z' unabhängig voneinander jeweils ein Sauerstoff oder Schwefelatom sind, substituiert ist,
R² (C₃-C₉)Cycloalkyl, das unsubstituiert oder substituiert ist, (C₄-C₉)Cycloalkenyl, das unsubstituiert oder substituiert ist, Heterocyclyl, das unsubstituiert oder substituiert ist, oder Phenyl, das unsubstituiert oder substituiert ist, oder
R³ einen Rest der Formel -N(B¹-D¹)(B²-D²) oder -NR'-N(B¹-D¹)(B²-D²), worin jeweils B¹, B², D¹ und D² wie unten definiert sind und R' Wasserstoff, (C₁-C₆)Alkyl oder [(C₁C₄)Alkyl]-carbonyl bedeutet,
R⁴ einen Rest der Formel -B³-D³, wobei B³ und D³ wie unten definiert sind,
A¹ geradkettiges Alkylen mit 1 bis 5 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁴-D⁴ substituiert ist, wobei B⁴ und D⁴ wie unten definiert sind,
A² eine direkte Bindung oder geradkettiges Alkylen mit 1 bis 4 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁵-D⁵ substituiert ist, oder einen divalenten Rest der Formel VI¹, VI², VI³, VI⁴ oder VI⁵,
-CR⁶R⁷-W*-CR⁸R⁹- (VI¹)
-CR¹⁰R¹¹-W*-CR¹²R¹³-CR¹⁴R¹⁵- (VI²)
-CR¹⁶R¹⁷-CR¹⁸R¹⁹-W*-CR²⁰R²¹- (VI³)
-CR²²R²³-CR²⁴R²⁵ -W*- (VI⁴)
-CR²⁶R²⁷-W*- (VI⁵)
wobei jeder der Reste R⁶ bis R²⁷ jeweils unabhängig voneinander Wasserstoff, Halogen, Nitro, Cyano, Thiocyanato oder einen Rest der Formel -B⁶-D⁶ ist,
W* jeweils ein Sauerstoffatom, ein Schwefelatom oder eine Gruppe der Formel N(B⁷-D⁷) ist und
B⁵, B⁶, B⁷, D⁸, D⁶ und D⁷ wie unten definiert sind,
B¹, B², B³ und B⁷ jeweils unabhängig voneinander eine direkte Bindung oder eine divalente Gruppe der Formeln -C(=Z*)-, -C(=Z*)-Z**-, -C(=Z*)-NH- oder -C(=Z*)-NR*-, wobei Z* = ein Sauerstoff- oder Schwefelatom, Z** = ein Sauerstoff- oder Schwefelatom und R* = (C₁-C₆)Alkyl, Aryl, Aryl(C₁-C₆)alkyl, (C₃-C₉) Cycloalkyl oder (C₃-C₉)Cycloalkyl-(C₁-C₈)alkyl, wobei jeder der 5 letztgenannten Reste unsubstituiert oder substituiert ist,
B⁴, B⁵ und B⁶ jeweils unabhängig voneinander eine direkte Bindung oder eine divalente Gruppe der Formeln -O-, -S(O)ₚ-, -S(O)ₚ-O-, -O -S(O)ₚ-, -CO-, -O-CO-, -CO-O-, -S-CO-, -CO-S-, -S-CS-, -CS-S-, -O-CO-O-, -NR^{o} -, -O-NR^{o}-, -NR^{o}-O-, -NR^{o}-CO-, -CO-NR^{o}-, -O-CO-NR^{o}- oder -NR^{o}-CO-O-, wobei p die ganze Zahl 0, 1 oder 2 ist und R^{o} Wasserstoff, (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, bedeutet,
D¹, D², D³, D⁴, D⁵, D⁶ und D⁷ jeweils unabhängig voneinander Wasserstoff, (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, oder jeweils zwei Reste D⁵ von an einem C-Atom gebundenen zwei Gruppen -B⁶-D⁵ miteinander verbunden sind und eine Alkylengruppe mit 2 bis 4 C-Atomen ergeben, die unsubstituiert oder durch einen oder mehrere Reste aus der Gruppe (C₁-C₄)alkyl und (C₁-C₄)alkoxy substituiert ist,
(X)ₙ n Substituenten X und dabei X jeweils unabhängig voneinander Halogen, Hydroxy, Amino, Nitro, Formyl, Carboxy, Cyano, Thiocyanato, Aminocarbonyl oder (C₁-C₆)Alkyl, (C₁-C₆)Alkoxy, (C₁-C₆)Alkylthio, Mono(C₁-C₆)alkylamino, Di(C₁-C₄)alkylamino, (C₂-C₆)Alkenyl, (C₂-C₆)Alkinyl, [(C₁-C₆)Alkyl]carbonyl, [(C₁-C₆)Alkoxy]carbonyl, Mono(C₁-C₆)alkylamino-carbonyl Di(C₁-C₄)alkylamino-carbonyl, N-(C₁-C₆)Alkanoyl-amino oder N-(C₁-C₄)Alkanoyl-N-(C₁-C₄)alkyl-amino, wobei jeder der letztgenannten 13 Reste unsubstituiert oder substituiert ist, vorzugsweise unsubstituiert oder durch einen oder mehrere Reste aus der Gruppe Halogen, Hydroxy, Amino, Nitro, Formyl, Carboxy, Cyano, Thiocyanato, (C₁-C₄)Alkoxy, (C₁-C₄)Haloalkoxy, (C₁-C₄)Alkylthio, (C₁-C₄)Haloalkylthio, Mono(C₁-C₄)alkylamino, Di(C₁-C₄)alkylamino, (C₃-C₉)Cycloalkyl, (C₃-C₉)Cycloalkyl-amino, [(C₁-C₄)Alkyl]carbonyl, [(C₁-C₄)Alkoxy]carbonyl, Aminocarbonyl, Mono(C₁-C₄)alkylaminocarbonyl, Di(C₁-C₄)alkylamino-carbonyl, Phenyl, Phenoxy, Phenylthlo, Phonylcarbonyl, Heterocyclyl, Heterocyclyloxy, Heterocyclylthio und Heterocyclylamino, wobei jeder der letztgenannten 8 Reste unsubstituiert ist oder einen oder mehrere Substituenten aus der Gruppe Halogen, Nitro, Cyano, (C₁-C₄)Alkyl, (C₁-C₄)Alkoxy, (C₁-C₄)Alkylthio, (C₁-C₄)Haloalkyl, (C₁-C₄)Haloalkoxy, Formyl, (C₁-C₄)Alkyl-carbony und (C₁-C₄)Alkoxy-carbonyl aufweist, substituiert ist,
oder (C₃-C₉)Cycloalkyl, (C₃-C₉)Cycloalkoxy, (C₃-C₉)Cycloalkylamino, Phenyl, Phenoxy, Phenylthio, Phenylcarbonyl, Heterocyclyl, Heterocyclyloxy, Heterocyclylthio oder Heterocyclylamino, wobei jeder der letztgenannten 11 Reste unsubstituiert oder substituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
n 0, 1, 3, 4 oder 5 und
"Heterocyclyl" in den vorstehend genannten Resten unabhängig voneinander jeweils einen heterocyclischen Rest mit 3 bis 7 Ringatomen und 1 bis 3 Heteroatomen aus der Gruppe N, O und S
bedeuten, wobei vorzugsweise
a) die Gesamtsumme der C-Atome in den Resten A¹ und A²-R² mindestens 6 C-Atome beträgt oder
b) die Gesamtsumme der C-Atome in den Resten A¹ und A²-R² 5 C-Atome beträgt und A¹ = eine Gruppe der Formel -CH₂- oder -CH₂CH₂-bedeutet sowie R¹ = (C₁-C₄)Alkyl, (C₁-C₄)Haloalkyl, (C₂-C₆)Maloalkenyl oder (C₃-C₉)Cycloalkyl, das unsubstituiert oder substituiert ist, bedeutet;
3. Verbindungen der Formel (IV) oder deren Salze, 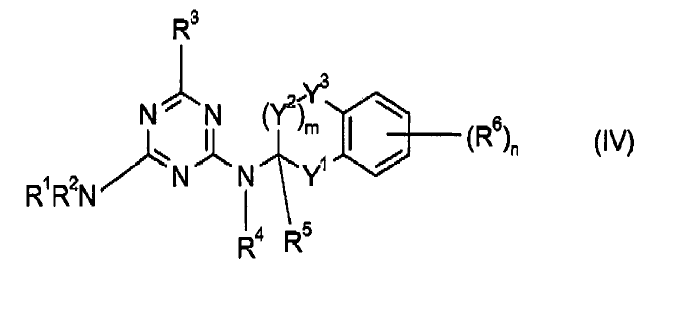 worin
R¹ und R² jeweils unabhängig voneinander Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest, Heterocyclylthiorest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
R¹ und R² gemeinsam mit dem Stickstoffatom der Gruppe NR¹R² einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
R³ Halogen, Cyano, Thiocyanato, Nitro oder einen Rest der Formel -Z¹-R⁷,
R⁴ Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
R⁵ Halogen, Cyano, Thiocyanato, Nitro oder einen Rest der Formel -Z²-R⁸,
R⁶, wenn n=1, oder die Reste R⁶ jeweils unabhängig voneinander, wenn n größer als 1 ist, Halogen, Cyano, Thiocyanato, Nitro oder eine Gruppe der Formel -Z³-R⁹,
R⁷, R⁸, R⁸ jeweils unabhängig voneinander
- Wasserstoff oder
- einen acyclischen Kohlenwasserstoffrest, wobei In der Kette Kohlenstoffatome durch Heteroatome aus der Gruppe N, O und S substituiert sein können, oder
- einen cyclischen Kohlenwasserstoffrest oder
- einen heterocyclischen Rest,
wobei jeder der letztgenannten 3 Reste unsubstituiert oder substituiert ist,
Z¹, Z², Z³ jeweils unabhängig voneinander
- eine direkte Bindung oder
- eine divalente Gruppe der Formel -O-, -S(O)ₚ-, -S(O)ₚ-O-, -O-S(O)ₚ-, -CO-, -CS-, -S-CO-, -CO-S-, -O-CS-, -CS-O-, -S-CS-, -CS-S-, -OCO-, -CO-O-, -NR'-, -O-NR'-, -NR'-O-, -NR'-CO- oder -CO-NR'-, wobei
p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
Y¹, Y², Y³ und weitere Gruppen Y², wenn m 2, 3 oder 4 ist, jeweils unabhängig voneinander
- eine divalente Gruppe der Formel CR^{a}R^{b}, wobei R^{a} und R^{b} gleich oder verschieden sind und jeweils einen Rest aus der Gruppe der für R⁷ bls R⁹ möglichen Reste bedeuten, oder
- eine divalente Gruppe der Formel -O-, -CO-, -C(=NR*)-, -S(O)_{q}-, -NR*- oder -N(O)-, wobei q = 0, 1 oder 2 ist und R* Wasserstoff oder Alkyl mit 1 bis 4 C-Atomen ist, oder
- Y¹ oder Y³ eine direkte Bindung,
wobei zwei Sauerstoffatome der Gruppen Y² und Y³ nicht benachbart sind,
m 1, 2, 3 oder 4,
n 0, 1, 2, 3 oder 4
bedeuten;
4. Substituierte 2,4-Diamino-1,3,5-triazine der allgemeinen Formel (V), 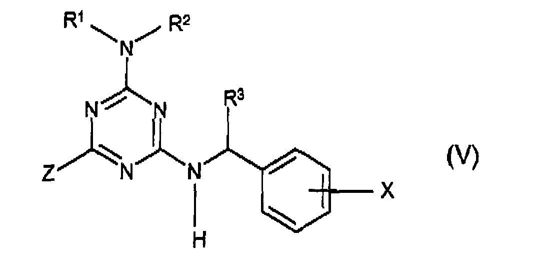 in welcher
R¹ für Wasserstoff oder für gegebenenfalls durch Hydroxy, Cyano, Halogen oder C₁-C₄-Alkoxy substituiertes Alkyl mit 1 bis 6 Kohlenstoffatomen steht,
R² für Wasserstoff, für Formyl, für jeweils gegebenenfalls durch Cyano, Halogen oder C₁-C₄-Alkoxy substituiertes Alkyl, Alkylcarbonyl, Alkoxycarbonyl oder Alkylsulfonyl mit jeweils 1 bis 6 Kohlenstoffatomen in den Alkylgruppen, oder für jeweils gegebenenfalls durch Cyano, Halogen-C₁-C₄-alkyl, C₁-C₄-Alkoxy, Halogen-C₁-C₄-alkoxy oder C₁-C₄-Alkoxy-carbonyl substituiertes Phenylcarbonyl, Naphthylcarbonyl, Phenylsulfonyl oder Naphthylsulfonyl steht,
R³ für gegebenenfalls durch Cyano, Halogen oder C₁-C₄-Alkoxy substituiertes Alkyl mit 1 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht,
X für einen Substituenten aus folgender Gruppe steht:
Hydroxy, Cyano, Nitro, Halogen, jeweils gegebenenfalls durch Hydroxy, Cyano oder Halogen substituiertes Alkyl oder Alkoxy mit jeweils 1 bis 6 Kohlenstoffatomen, jeweils gegebenenfalls durch Halogen substituiertes Alkylcarbonyl, Alkoxycarbonyl, Alkylthio, Alkylsulfinyl oder Alkylsulfonyl mit jeweils 1 bis 6 Kohlenstoffatomen in den Alkylgruppen, jeweils gegebenenfalls durch Hydroxy, Cyano, Nitro, Halogen, C₁-C₄-Alkyl, C₁-C₄-Halogenalkyl, C₁-C₄-Alkoxy oder C₁-C₄-Halogenalkoxy substituiertes Phenyl oder Phenoxy, und
Z für Wasserstoff, Hydroxy, Halogen, für jeweils gegebenenfalls durch Hydroxy, Cyano, Nitro, Halogen, C₁-C₄-Alkoxy, C₁-C₄-Alkylcarbonyl, C₁-C₄-Alkoxy-carbonyl, C₁-C₄-Alkylthio, C₁-C₄-Alkylsulfinyl oder C₁-C₄-Alkylsulfonyl substituiertes Alkyl, Alkoxy, Alkylcarbonyl, Alkoxycarbonyl, Alkylthio, Alkylsulfinyl oder Alkylsulfonyl, mit jeweils 1 bis 6 Kohlenstoffatomen in den Alkylgruppen, für jeweils gegebenenfalls durch Halogen substituiertes Alkenyl oder Alkinyl mit jeweils 2 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht,
enthalten sind.

4. Herbizid-Kombination nach einem der Ansprüche 1 bis 3, **dadurch gekennzeichnet, daß** als Komponente (B) ein oder mehrere Herbizide aus der Gruppe der 2,4-Diamino-s-triazine der Formeln (II) bis (V) enthalten sind, die in Position 6 am Triazinring mit Resten aus der Gruppe Wasserstoff, (C₁-C₆)-Alkyl, (C₁-C₆)-Haloalkyl, (C₃-C₆)-Cycloalkyl und (C₃-C₆)-Cycloalkyl-(C₁-C₄)-alkyl, vorzugsweise (C₁-C₄)-Alkyl und (C₁-C₄)-Haloalkyl substituiert sind.

5. Herbizid-Kombination nach einem der Ansprüche 1 bis 4, enthaltend einen wirksamen Gehalt an Komponenten (A) und (B) und/oder eine oder mehrere weitere Komponenten aus der Gruppe agrochemischer Wirkstoffe anderer Art, im Pflanzenschutz übüche Zusatzstoffe und Formulierungshilfsmittel.

6. Verfahren zur nicht-selektiven Bekämpfung von unerwünschtem Pflanzenwuchs, worin die Herbizide (A) und (B) der Herbizid-Kombination, definiert gemäß einem oder mehreren der Ansprüche 1 bis 4, gemeinsam oder getrennt appliziert werden, vorzugsweise auf die Fläche auf der die Pflanzen wachsen.

7. Verfahren nach Anspruch 6 zur nicht-selektiven Bekämpfung von unerwünschtem Pflanzenwuchs in Plantagenkulturen, in Forstpflanzungen, an Wegrändern, Plätzen, Industrieanlagen, Flugplätzen oder Eiseribahnanlagen, oder zur sogenannten Burn-Down-Anwendung.

8. Verwendung der nach einem der Ansprüche 1 bis 4 definierten Herbizid-Kombination zur nicht-selektiven Bekämpfung von unerwünschtem Pflanzenwuchs in Plantagenkulturen, in Forstpflanzungen, an Wegrändern, Plätzen, Industrieanlagen, Flugplätzen oder Eisenbahnanlagen, oder zur sogenannten Burn-Down-Anwendung.
